(19) Europäisches Patentamt
European Patent Office
Office européen des brevets

(11) EP 4 641 503 A1

(12) **EUROPEAN PATENT APPLICATION**
published in accordance with Art. 153(4) EPC

(43) Date of publication:
**29.10.2025 Bulletin 2025/44**

(21) Application number: **23906703.6**

(22) Date of filing: **05.12.2023**

(51) International Patent Classification (IPC):
***G06T 7/55*** *(2017.01)*

(52) Cooperative Patent Classification (CPC):
**G06T 7/55**

(86) International application number:
**PCT/JP2023/043394**

(87) International publication number:
**WO 2024/135337 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 JP 2022207260**

(71) Applicant: **Sony Group Corporation**
**Tokyo 108-0075 (JP)**

(72) Inventors:
- **UYAMA, Keisuke**
  **Tokyo 108-0075 (JP)**
- **YAMANE, Masahito**
  **Tokyo 108-0075 (JP)**

(74) Representative: **D Young & Co LLP**
**3 Noble Street**
**London EC2V 7BQ (GB)**

(54) **INFORMATION PROCESSING DEVICE AND METHOD**

(57) The present invention relates to an information processing apparatus and a method enabling a 3D modeling process with higher efficiency.

A preliminary 3D modeling process is executed prior to a main 3D modeling process that is a second 3D modeling process, and parameter information used in the main 3D modeling process is generated on the basis of information used in the preliminary 3D modeling process. The present disclosure, for example, can be applied to an information processing apparatus, an image capturing device, an imaging communication device, an electronic device, an information processing method, a program, an information processing system, or the like.

Fig. 4

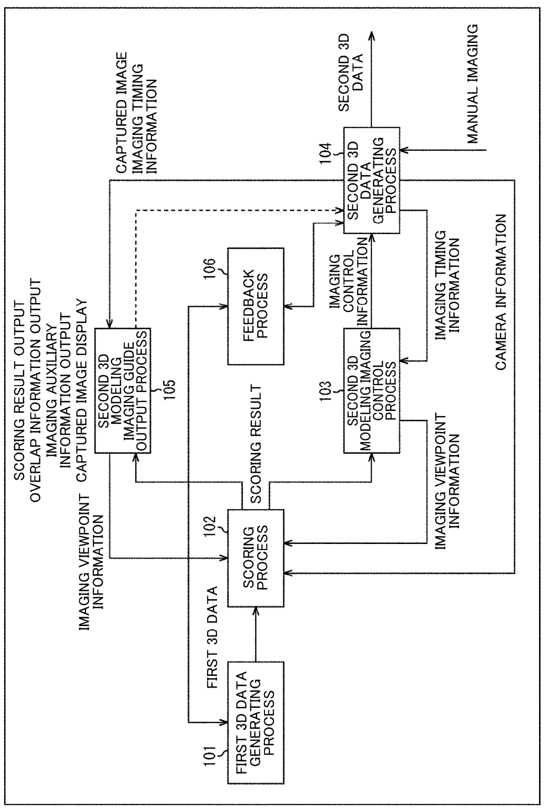


EP 4 641 503 A1

## Description

[Technical Field]

The present disclosure relates to an information processing apparatus and a method, and more particularly, to an information processing apparatus and a method enabling a 3D modeling process with higher efficiency.

[Background Art]

Conventionally, as a technique for 3D modeling of a 3D object having a three-dimensional shape, there is a technique called photogrammetry in which the 3D object is imaged from multiple directions, and 3D data is generated on the basis of a plurality of acquired captured images (for example, see PTL 1). In addition, there is a technique referred to as real-time 3D modeling in which 3D data is generated instantaneously (in real-time) on the basis of information such as captured images, posture information, depth, and the like. Furthermore, in recent years, techniques (for example, Neural Radiance Fields (NeRF)) and the like) collectively referred to as Neural Rendering in which neural fields are configured on the basis of postures of captured images and the captured images, and an image or a three-dimensional model at an arbitrary viewpoint is generated have been proposed.

[Citation List]

[Patent Literature]

[PTL 1]
JP 2018-63693A

[Summary]

[Technical Problem]

In a case in which 3D modeling is performed on the basis of captured images as in such techniques, in order to obtain higher-fineness 3D data, captured images having a high degree of contribution to 3D modeling are required. Thus, in a case in which preliminary 3D modeling is executed prior to main 3D modeling such that a 3D modeling result can be checked during an imaging operation, it is inefficient to independently perform the preliminary 3D modeling and the main 3D modeling.

The present disclosure is in view of such situations and enables execution of a 3D modeling process with higher efficiency.

[Solution to Problem]

An information processing apparatus according to one aspect of the present technology is an information processing apparatus including: a preliminary 3D modeling processing unit configured to execute a preliminary 3D modeling process prior to a main 3D modeling process; and a parameter information generating unit configured to generate parameter information used in the main 3D modeling process on the basis of information used in the preliminary 3D modeling process, in which the preliminary 3D modeling process and the main 3D modeling process are a second 3D modeling process configured to generate second three-dimensional shape information that represents a three-dimensional shape of a 3D object on the basis of a second captured image, the second captured image is generated using second imaging in which a second imaging unit images the 3D object on the basis of first three-dimensional shape information, the first three-dimensional shape information is information representing the three-dimensional shape of the 3D object generated on the basis of a first captured image using a first 3D modeling process, and the first captured image is generated using first imaging in which a first imaging unit images the 3D object.

An information processing method according to one aspect of the present technology is an information processing method including: executing a preliminary 3D modeling process prior to a main 3D modeling process; generating parameter information used in the main 3D modeling process on the basis of information used in the preliminary 3D modeling process; in which the preliminary 3D modeling process and the main 3D modeling process are a second 3D modeling process configured to generate second three-dimensional shape information that represents a three-dimensional shape of a 3D object on the basis of a second captured image, the second captured image is generated using second imaging in which a second imaging unit images the 3D object on the basis of first three-dimensional shape information, the first three-dimensional shape information is information representing the three-dimensional shape of the 3D object generated on the basis of a first captured image using a first 3D modeling process, and the first captured image is generated using first imaging in which a first imaging unit images the 3D object.

An information processing apparatus according to another aspect of the present technology is an information processing apparatus including: a preliminary image generating unit configured to generate a preliminary image used in a preliminary 3D modeling process executed prior to a main 3D modeling process on the basis of a second captured image and associating the preliminary image and the second captured image with each other, in which the preliminary 3D modeling process and the main 3D modeling process are a second 3D modeling process configured to generate second three-dimensional shape information that represents a three-dimensional shape of a 3D object on the basis of the second captured image, the second captured image is generated using second imaging in which a second imaging unit images the 3D object on the basis of first three-dimensional shape information, the first three-dimensional shape information is information representing the three-dimensional shape of the 3D object generated on the basis of a first captured image using a first 3D modeling process, and the first captured image is generated using first imaging in which a first imaging unit images the 3D object.

An information processing method according to another aspect of the present technology is an information processing method including: generating a preliminary image used in a preliminary 3D modeling process executed prior to a main 3D modeling process on the basis of a second captured image and associating the preliminary image and the second captured image with each other, in which the preliminary 3D modeling process and the main 3D modeling process are a second 3D modeling process configured to generate second three-dimensional shape information that represents a three-dimensional shape of a 3D object on the basis of the second captured image, the second captured image is generated using second imaging in which a second imaging unit images the 3D object on the basis of first three-dimensional shape information, the first three-dimensional shape information is information representing the three-dimensional shape of the 3D object generated on the basis of a first captured image using a first 3D modeling process, and the first captured image is generated using first imaging in which a first imaging unit images the 3D object.

An information processing apparatus according to yet another aspect of the present technology is an information processing apparatus including: an acquisition unit configured to acquire parameter information generated on the basis of information used in a preliminary 3D modeling process executed prior to a main 3D modeling process; and a main 3D modeling processing unit configured to execute the main 3D modeling process using the parameter information, in which the preliminary 3D modeling process and the main 3D modeling process are a second 3D modeling process configured to generate second three-dimensional shape information that represents a three-dimensional shape of a 3D object on the basis of a second captured image, the second captured image is generated using second imaging in which a second imaging unit images the 3D object on the basis of first three-dimensional shape information, the first three-dimensional shape information is information representing the three-dimensional shape of the 3D object generated on the basis of a first captured image using a first 3D modeling process, and the first captured image is generated using first imaging in which a first imaging unit images the 3D object.

An information processing method according to further another aspect of the present technology is an information processing method including: acquiring parameter information generated on the basis of information used in a preliminary 3D modeling process executed prior to a main 3D modeling process; and executing the main 3D modeling process using the parameter information, in which the preliminary 3D modeling process and the main 3D modeling process are a second 3D modeling process configured to generate second three-dimensional shape information that represents a three-dimensional shape of a 3D object on the basis of the second captured image, the second captured image is generated using second imaging in which a second imaging unit images the 3D object on the basis of first three-dimensional shape information, the first three-dimensional shape information is information representing the three-dimensional shape of the 3D object generated on the basis of a first captured image using a first 3D modeling process, and the first captured image is generated using first imaging in which a first imaging unit images the 3D object.

In the information processing apparatus and the method according to one aspect of the present technology, a preliminary 3D modeling process is executed prior to a main 3D modeling process, and parameter information used in the main 3D modeling process is generated on the basis of information used in the preliminary 3D modeling process.

In the information processing apparatus and the method according to another aspect of the present technology, a preliminary image used in a preliminary 3D modeling process executed prior to a main 3D modeling process is generated on the basis of a second captured image, and the preliminary image and the second captured image are associated with each other.

In the information processing apparatus and the method according to further another aspect of the present technology, parameter information generated on the basis of information used in a preliminary 3D modeling process executed prior to a main 3D modeling process is acquired, and the main 3D modeling process is executed using the parameter information.

[Brief Description of Drawings]

[Fig. 1]
Fig. 1 is a diagram for describing an overview of photogrammetry.
[Fig. 2]
Fig. 2 is a diagram for describing an overview of real-time 3D modeling.
[Fig. 3]
Fig. 3 is a diagram comparing photogrammetry and real-time 3D modeling.
[Fig. 4]
Fig. 4 is a diagram illustrating an example of a method for assisting imaging for 3D modeling.
[Fig. 5]
Fig. 5 is a diagram illustrating an example of a view of imaging control and imaging guide.
[Fig. 6]
Fig. 6 is a diagram illustrating an example of overlapping.

[Fig. 7]

Fig. 7 is a diagram illustrating an example of a view of imaging according to a distance from a subject.

[Fig. 8]

Fig. 8 is a diagram illustrating an example of a view of parallel processing.

[Fig. 9]

Fig. 9 is a diagram illustrating an example of a scoring process.

[Fig. 10]

Fig. 10 is a diagram illustrating an example of a scoring process.

[Fig. 11]

Fig. 11 is a diagram illustrating an example of a scoring process.

[Fig. 12]

Fig. 12 is a diagram illustrating an example of a scoring process.

[Fig. 13]

Fig. 13 is a diagram illustrating an example of a scoring process.

[Fig. 14]

Fig. 14 is a diagram illustrating an example of an output of a scoring result.

[Fig. 15]

Fig. 15 is a diagram illustrating an example of an output of overlapping information.

[Fig. 16]

Fig. 16 is a diagram illustrating a display example of guide information.

[Fig. 17]

Fig. 17 is a diagram illustrating a display example of guide information.

[Fig. 18]

Fig. 18 is a diagram illustrating a display example of guide information.

[Fig. 19]

Fig. 19 is a diagram illustrating a display example of guide information.

[Fig. 20]

Fig. 20 is a diagram illustrating a display example of guide information.

[Fig. 21]

Fig. 21 is a diagram illustrating a display example of guide information.

[Fig. 22]

Fig. 22 is a diagram illustrating a display example of guide information.

[Fig. 23]

Fig. 23 is a diagram illustrating a display example of guide information.

[Fig. 24]

Fig. 24 is a diagram illustrating a display example of guide information.

[Fig. 25]

Fig. 25 is a diagram illustrating a display example of guide information.

[Fig. 26]

Fig. 26 is a diagram illustrating an example of an overview of the flow of an operation.

[Fig. 27]

Fig. 27 is a diagram illustrating an example of an incremental process.

[Fig. 28]

Fig. 28 is a diagram illustrating an example of a process for photogrammetry.

[Fig. 29]

Fig. 29 is a block diagram illustrating a main configuration example of an image capturing device.

[Fig. 30]

Fig. 30 is a flowchart describing an example of the flow of a 3D modeling process.

[Fig. 31]

Fig. 31 is a flowchart describing an example of the flow of a real-time 3D modeling process.

[Fig. 32]

Fig. 32 is a flowchart describing an example of the flow of a photogrammetry process.

[Fig. 33]

Fig. 33 is a diagram illustrating a main configuration example of an information processing system.

[Fig. 34]

Fig. 34 is a block diagram illustrating a main configuration example of an imaging communication device.

[Fig. 35]

Fig. 35 is a block diagram illustrating a main configuration example of an image capturing device.

[Fig. 36]

Fig. 36 is a block diagram illustrating a main configuration example of a server.

[Fig. 37]

Fig. 37 is a flowchart describing an example of the flow of a 3D modeling process.

[Fig. 38]

Fig. 38 is a flowchart following Fig. 44 that describes the flow of a 3D modeling process.

[Fig. 39]

Fig. 39 is a block diagram illustrating a main configuration example of an imaging communication device.

[Fig. 40]

Fig. 40 is a block diagram illustrating a main configuration example of a server.

[Fig. 41]

Fig. 41 is a flowchart describing an example of the flow of a 3D modeling process.

[Fig. 42]

Fig. 42 is a flowchart following Fig. 48 that describes an example of the flow of a 3D modeling process.

[Fig. 43]

Fig. 43 is a block diagram illustrating a main configuration example of an information processing system.

[Fig. 44]

Fig. 44 is a block diagram illustrating a main configuration example of an imaging communication device.

[Fig. 45]

Fig. 45 is a block diagram illustrating a main configuration example of a server.

[Fig. 46]

Fig. 46 is a block diagram illustrating a main configuration example of an information processing apparatus.

[Fig. 47]

Fig. 47 is a flowchart describing an example of the flow of a 3D modeling process.

[Fig. 48]

Fig. 48 is a flowchart describing an example of the flow of a preliminary 3D modeling process.

[Fig. 49]

Fig. 49 is a flowchart describing an example of the flow of a display control process.

[Fig. 50]Fig. 50 is a flowchart describing an example of the flow of a main 3D modeling process.

[Fig. 51]

Fig. 51 is a block diagram illustrating a main configuration example of an imaging communication device.

[Fig. 52]

Fig. 52 is a block diagram illustrating a main configuration example of a server.

[Fig. 53]

Fig. 53 is a flowchart describing an example of the flow of a 3D modeling process.

[Fig. 54]

Fig. 54 is a flowchart describing an example of the flow of a preliminary 3D modeling process.

[Fig. 55]

Fig. 55 is a flowchart describing an example of the flow of the main 3D modeling process.

[Fig. 56]Fig. 56 is a block diagram illustrating a main configuration example of a server.

[Fig. 57]

Fig. 57 is a block diagram illustrating a main configuration example of an information processing apparatus.

[Fig. 58]

Fig. 58 is a flowchart describing an example of the flow of a preliminary 3D modeling process.

[Fig. 59]

Fig. 59 is a flowchart describing an example of the flow of the main 3D modeling process.

[Fig. 60]

Fig. 60 is a block diagram illustrating a main configuration example of an imaging communication device.

[Fig. 61]

Fig. 61 is a block diagram illustrating a main configuration example of a server.

[Fig. 62]

Fig. 62 is a block diagram illustrating a main configuration example of an information processing apparatus.

[Fig. 63]

Fig. 63 is a flowchart describing an example of the flow of a 3D modeling process.

[Fig. 64]

Fig. 64 is a flowchart describing an example of the flow of a preliminary 3D modeling process.

[Fig. 65]

Fig. 65 is a flowchart describing an example of the flow of the main 3D modeling process.

[Fig. 66]

Fig. 66 is a block diagram illustrating a main configuration example of an imaging communication device.

[Fig. 67]

Fig. 67 is a block diagram illustrating a main configuration example of a server.

[Fig. 68]

Fig. 68 is a block diagram illustrating a main configuration example of an information processing apparatus.

[Fig. 69]

Fig. 69 is a flowchart describing an example of the flow of a 3D modeling process.

[Fig. 70]

Fig. 70 is a flowchart describing an example of the flow of a preliminary 3D modeling process.

[Fig. 71]

Fig. 71 is a flowchart describing an example of the flow of the main 3D modeling process.

[Fig. 72]

Fig. 72 is a block diagram illustrating a main configuration example of an imaging communication device.

[Fig. 73]

Fig. 73 is a block diagram illustrating a main configuration example of a server.

[Fig. 74]

Fig. 74 is a block diagram illustrating a main configuration example of an information processing apparatus.

[Fig. 75]

Fig. 75 is a flowchart describing an example of the flow of a 3D modeling process.

[Fig. 76]

Fig. 76 is a flowchart describing an example of the flow of a preliminary 3D modeling process.

[Fig. 77]

Fig. 77 is a flowchart describing an example of the flow of the main 3D modeling process.

[Fig. 78]

Fig. 78 is a block diagram illustrating a main configuration example of an imaging communication device.

[Fig. 79]

Fig. 79 is a block diagram illustrating a main configuration example of a server.

[Fig. 80]

Fig. 80 is a block diagram illustrating a main configuration example of an information processing apparatus.

[Fig. 81]

Fig. 81 is a flowchart describing an example of the flow of a 3D modeling process.

[Fig. 82]

Fig. 82 is a flowchart describing an example of the flow of a preliminary 3D modeling process.

[Fig. 83]

Fig. 83 is a flowchart describing an example of the flow of the main 3D modeling process.

[Fig. 84]

Fig. 84 is a block diagram illustrating a main configuration example of an information processing system.

[Fig. 85]

Fig. 85 is a block diagram illustrating a main configuration example of a computer.

[Description of Embodiments]

Modes for carrying out the present disclosure (hereinafter referred to as embodiments) will be described below. The descriptions will be given in the following order.

1. 3D Modeling
2. Imaging Control
3. Imaging Guide Output
4. Combination
5. Reuse of Parameters
6. First Embodiment (Image Capturing Device)
7. Second Embodiment (Information Processing System)
8. Third Embodiment (Reuse of Parameter)
9. Supplementary Notes

<1. 3D Modeling>

<Photogrammetry>

Conventionally, as a technique for generating (reconfiguring) a model of a three-dimensional shape for an object having the three-dimensional shape (in this specification, also referred to as a 3D object), there is a technique referred to as photogrammetry in which the 3D object is imaged from multiple directions, and 3D data is generated on the basis of a plurality of acquired captured images. In this specification, generation of a model of a three-dimensional shape of a 3D object will be referred to also as 3D modeling.

Photogrammetry is a technique for reconfiguring a three-dimensional model having high accuracy using the principle of triangulation from a plurality of images captured at various viewpoints. In this specification "accuracy" of 3D data (3D model) may include not only reproducibility (precision, fineness, and the like) of a three-dimensional shape of a 3D object that becomes a target but also reproducibility (precision, fineness, and the like) of texture applied to the surface of the 3D model. For example, like cameras 11-1 to 11-5 illustrated in Fig. 1, a plurality of captured images are acquired by imaging a 3D object 10 from a plurality of viewpoints. Then, a process called Structure from Motion (SfM) and a process called Multi view Stereo (MVS) are performed using such captured images, and mesh generation and texturing are additionally performed as post processes, whereby 3D data 15 is generated.

In the SfM, for example, corresponding points are searched for between captured images, the position and the posture of a camera are derived using epipolar constraints, and the position of each corresponding point in a three-dimensional space is identified using triangulation based on the position and the posture of the camera. In this specification, this point on the three-dimensional space will be referred to also as a three-dimensional point. In other words, a three-dimensional point corresponding to each corresponding point is identified. Then, all the three-dimensional point groups identified as above are optimized through bundle adjustment.

In the MVS, for example, by using the three-dimensional point groups derived as above, a denser corresponding point search is additionally performed, whereby three-dimensional points are added.

As described above, in photogrammetry, a global optimization calculation for minimizing error called bundle adjustment is performed, and thus although high-accuracy results can be acquired, the calculation load is large. Moreover, since this is based on geometric calculations rather than physical measurements, in principle, by using higher-accuracy images, a more accurate model can be restored.

<Real-time 3D Modeling>

As a 3D modeling technique different from such photogrammetry, there has been a technique called real-time 3D modeling in which 3D data is generated instantaneously (in real time) on the basis of information such as captured images, posture information, a depth, and the like. In the case of this technique, for example, as illustrated in Fig. 2, a 3D object 10 is imaged while a camera 21 is moved along a dotted line 22 on the periphery of the 3D object 10. The camera 21 includes not only an image sensor but also a Light Detection And Ranging (Lidar) scanner (Direct Time of Flight (dToF) module) and detects a depth (a distance to a subject) together with acquiring a captured image.

In recent years, advances in science and technology have led to miniaturization and enhanced functionality of dToF modules, enabling precise measurement of depths at relatively long distances (for example, about 5 meters) either in an indoor environment or an outdoor environment. In accordance with this, experience of real-time modeling and capturing can be easily performed at a consumer level.

Furthermore, the camera 21 includes an inertial sensor and detects an acceleration and an angular velocity of the camera 21 (in this specification, referred to also as inertial information).

In the real-time 3D modeling, a process called Simultaneous Localization and Mapping (SLAM) is performed to generate posture information represented by the position and the posture of the camera 21. In addition, a Truncated Signed Distance Function (TSDF) is updated using the posture information and a depth, and 3D data 25 (meshes and textures) is generated using a process called Marching Cubes (MC).

In the SLAM, for example, the position and the posture of a camera are estimated on the basis of captured images and inertial information (self-position estimation). In update of the TSDF, by associating a depth and a voxel with each other, a volume is detected. In the MC, isosurfaces are calculated using adjacent voxels. When real-time posture information of the SLAM is present, by superimposing depths (an extent to which the ray has reached) over a plurality of frames, the volume of the voxel can be detected (not through a point group). By using a voxel representation, viewpoints (lacking viewpoints), at which imaging needs to be performed, that become a shadow can be estimated. In accordance with this, a hollow structure and a protrusion structure of a 3D object can be detected.

<Neural Rendering>

In addition, in recent years, a technique (for example, Neural Radiance Fields (NeRF) and the like) collectively referred to as neural rendering in which neural fields are configured on the basis of postures of captured images and the captured images, and an image and a three-dimensional model at an arbitrary viewpoint are generated has been proposed.

<Comparison>

The characteristics of such 3D modeling techniques differ from each other, and no one technique is superior to the other in all respects. Fig. 3 compares the characteristics of the photogrammetry and the real-time 3D modeling. As illustrated in Fig. 3, comparing the techniques, photogrammetry uses the SfM (including self-position estimation) and the MVS, the real-time 3D modeling uses self-position estimation (SLAM) and TSDF. In addition, comparing used data, while only image data is used in the case of the photogrammetry, depths and posture data are used in addition to image data in the case of the real-time 3D modeling. Furthermore, comparing the processing time, while a long time such as several minutes to several tens of hours is required in the case of the photogrammetry, approximately instantaneous (real-time) processing such as processing at 30 fps (frame/sec) can be performed in the case of the real-time 3D modeling.

In addition, comparing required arithmetic operation capability, a high-end CPU (Central Processing Unit) and GPU (Graphics Processing Unit) level arithmetic operation capability is required in the case of the photogrammetry, and an arithmetic operation capability of a mobile AP (Application Processor) level is required in the case of the real-time 3D modeling. Furthermore, comparing the fineness of generated models, the fineness of a generated model has relatively high fineness according to the resolution, the number, an imaging method, and the like of captured images in the case of the photogrammetry, and the fineness of a generated model has relatively low fineness according to depths, self-position estimation accuracy, and the like in the case of the real-time 3D modeling.

In addition, while the internal representation of generated three-dimensional data is point-group based in the case of photogrammetry, it is voxel based in the case of the real-time 3D modeling. While there are no constraints on the subject size and the resolution in the case of the photogrammetry, the constraints depend on a sensor in the case of the real-time 3D modeling. In addition, comparing the absolute accuracy of a model, the absolute accuracy is relatively high according to bundle adjustment in the case of the photogrammetry, and it is relatively low according to the sensor and the self-position estimation accuracy in the case of the real-time 3D modeling. Comparing the scale, the scale is indefinite (the size is unknown) in the case of the photogrammetry, it is unique (the absolute size is known) in the case of the real-time 3D modeling.

In the photogrammetry and the real-time 3D modeling, for example, such differences in characteristics are present. In other words, applying real-time 3D modeling can reduce the amount of operation and the amount of processing of 3D modeling compared with in a case in which photogrammetry or neural rendering is applied. However, in a case in which the photogrammetry or the neural rendering is applied, 3D data of higher accuracy than in a case in which the real-time 3D modeling is applied can be generated.

<Implementation of Easiness in 3D Modeling>

For example, in order to acquire higher-accuracy 3D data, as described above, the photogrammetry or the neural rendering may be applied. However, even also in such a case, the less the amount of operation and the amount of processing of 3D modeling, the more desirable it is. In order to reduce the amount of operation and the amount of processing of 3D modeling, it is required to generate 3D data of which an accuracy is as high as possible with as small a number of times of imaging as possible.

For example, in a case in which captured images required for 3D modeling cannot be acquired, there is concern that the accuracy of 3D data may be reduced. To the contrary, when captured images are to be acquired not insufficiently but excessively, the number of times of imaging unnecessarily increases, and there is concern that the amount of operation of a user may increase. In addition, in that case, since a 3D modeling process is performed using unnecessary captured images, there is concern that the amount of processing may unnecessarily increase.

In other words, in order to acquire 3D data of higher accuracy with smaller amounts of operation and processing, a 3D object needs to be imaged with a position and a posture that are more appropriate. However, in each of the conventional 3D modeling techniques, it is difficult for a photographer to perceive a position and a posture that are appropriate for imaging.

For example, in the case of the photogrammetry, since a time is required for a 3D modeling process, it is difficult for a photographer to instantaneously check 3D modeling results at the time of imaging. For this reason, it is difficult for a photographer to perceive an appropriate position and a posture that are appropriate for imaging at the time of imaging. As a result, for example, captured images with positions and postures that are appropriate become insufficient, and there is concern that the accuracy of 3D data acquired using the photogrammetry may be reduced. In addition, when imaging is excessively performed with all positions and postures without a plan such that images captured with positions and postures that are appropriate are not insufficient, not only does the amount of operation of a user increase, but also the number of captured images unnecessarily increases, and thus there is concern that the load (the amount of processing, a processing time, and the like) of the 3D modeling process may unnecessarily increase.

<2. Imaging Control>

<Imaging Control Based on Scoring Result>

Thus, by performing 3D modeling twice, imaging for 3D modeling of a second time is controlled using a 3D modeling result of a first time.

For example, second imaging for imaging a 3D object having a three-dimensional shape and a second 3D modeling process generating second 3D data (second three-dimensional shape information) representing the three-dimensional shape of the 3D object using a second captured image acquired using the second imaging are assumed to be performed (a second 3D data generating process 104 illustrated in Fig. 4). At that time, the second imaging is controlled (a second 3D modeling imaging control process 103 illustrated in Fig. 4) such that second imaging for this second 3D modeling process can be performed with a position and a posture that are more appropriate. In order to realize such control, the first 3D data generating process 101 and the scoring process 102 illustrated in Fig. 4 are executed.

The first 3D data generating process 101 is a process of generating first 3D data (first three-dimensional shape information) representing a three-dimensional shape of a 3D object. In other words, in the first 3D data generating process 101, first imaging for imaging a 3D object and a first 3D modeling process generating first 3D data using a first captured image acquired using the first imaging are performed.

The scoring process 102 is a process of evaluating (scoring) accuracy of second 3D data that can be generated using a second captured image generated using the second imaging that has been performed until now. This scoring is performed on the basis of the first 3D data generated using the first 3D modeling process. In the second 3D modeling imaging control process 103, the second imaging is controlled on the basis of this scoring result.

In other words, on the basis of the first 3D data generated on the basis of the first captured image acquired using the first imaging, accuracy of second 3D data that can be generated on the basis of the second captured image acquired using the second imaging up to the current time point is evaluated (scoring is performed). By performing as such, a scoring result can be generated more easily. In addition, the second imaging is controlled on the basis of the scoring result. By performing as such, the second imaging can be controlled such that it is performed with a position and a posture that are more appropriate. In other words, by using the second captured image captured with a position and a posture that are more appropriate, the second 3D modeling process can be executed. Thus, while an increase in the load (the amount of operation and the amount of processing) of 3D modeling is suppressed, 3D data of higher accuracy can be generated. In other words, 3D modeling can be performed more easily.

In this specification, unless otherwise mentioned, captured images represent all images acquired by image sensors and the like. For example, in an image capturing device and the like, generally, images as below are acquired. For example, a still image is acquired using an image sensor or the like at a timing at which a shutter button or the like is operated, and the still image is stored on a storage medium or the like as a result of the imaging. In addition, acquisition of a moving image is started using an image sensor or the like from a timing at which a shutter button or the like is operated, and the moving image is stored on a storage medium or the like as an imaging result. Furthermore, an image (referred to also as a captured image) is acquired using an image sensor or the like before a shutter button or the like is operated and is not stored on a storage medium as a result of imaging but is used for display or the like in a monitor or the like. In this specification, a captured image represents such an image. In other words, a captured image may be either a still image or a moving image. In addition, a captured image may be stored on a storage medium or the like as a result of imaging or may not be stored.

Furthermore, a captured image may be displayed in a monitor or the like or may not be displayed. In addition, a captured image may be acquired before an operation of a shutter button or the like, may be acquired at a timing at which an operation is performed, or may be acquired after the operation. Furthermore, a captured image may be data (so called RAW data) acquired by an image sensor or the like. In addition, a captured image may be an image for which a color separation process or a color converting process has been performed. Furthermore, a captured image may be an image for which signal processing such as defect correction, noise reduction, Automatic White Balance (AWB), gamma correction, or the like has been applied. In addition, a captured image may be an image for which other image processing has been performed.

<First Imaging>

In this specification, an imaging unit (an image sensor) performing first imaging will be referred also to as a first imaging unit. In addition, an imaging unit (an image sensor) performing second imaging will be referred also to as a second imaging unit.

As described above, first imaging is performed in the first 3D data generating process 101. In other words, a first captured image is generated using the first imaging unit. At that time, a distance (depth) from the first imaging unit to a subject (3D object) included in the first captured image may be detected from the first imaging unit using a depth sensor. A method for detecting a depth using this depth sensor may be any method. In addition, the depth sensor may be integrated with the first imaging unit or may be a sensor, which is different from the imaging sensor, disposed at a position different from that of the first imaging unit. Hereinafter, unless otherwise mentioned, this depth is assumed to be appropriately calibrated for the first captured image. In addition, when the first imaging is performed, inertial information (an angular velocity and an acceleration) of the first imaging unit may be detected using inertial information sensor. A method for detecting inertial information using this inertial information sensor may be an arbitrary method. In addition, the inertial information sensor may be integrated with the first imaging unit or may be a sensor, which is different from the first imaging unit, disposed at a position different from that of the first imaging unit.

The generated first captured image is used in the first 3D data generating process. In addition, in a case in which a depth and inertial information are generated, they are also used in the first 3D data generating process.

In addition, the number of respective first imaging units (image sensors), depth sensors, and inertial information sensors may be any and may be one or two or more. In other words, the number of first imaging units, the number of depth sensors, and the number of inertial information sensors may be the same, two thereof may be the same, or they may be different from each other.

<First 3D Modeling Process>

As described above, in the first 3D data generating process 101, the first 3D modeling process is performed. In the first 3D modeling process, on the basis of a first captured image generated using the first imaging that has imaged a 3D object, first 3D data (first three-dimensional shape information) representing a three-dimensional shape of the 3D object is generated.

This first 3D data may have a smaller amount of information and lower accuracy than those of the second 3D data (second three-dimensional shape information) generated using the second 3D data generating process 104.

By configuring as such, an increase in the load of the scoring process 102 and the second 3D modeling imaging control process 103 can be suppressed. In other words, by simplifying (decreasing the amount of information and lowering the accuracy) of the first 3D data, an increase in the load of scoring and imaging control performed using the first 3D data can be suppressed. In addition, generally, an increase in the load of generation (the first 3D modeling process) of the first 3D data can be suppressed as well. In other words, the second imaging can be controlled with a lower load.

In addition, a technique used for this first 3D modeling process may be an arbitrary technique. For example, in the first 3D modeling process, posture information corresponding to a field of view of the first captured image is derived, and, on the basis of the posture information, the first captured image, and a depth of a subject (3D object) of the first captured image, the first 3D data may be generated. For example, on the basis of such information, by performing update of the TSDF and the MC, the first 3D data may be generated.

This posture information is information representing a position and a posture of the first imaging unit in a three-dimensional space. A method for deriving this posture information may be an arbitrary method. For example, the posture information may be derived on the basis of the inertial information (an acceleration and an angular velocity) of the first imaging unit. For example, the SLAM may be applied.

In other words, as the first 3D modeling process, the real-time 3D modeling described above may be applied. By configuring as such, the first 3D modeling process can be performed instantaneously (in real time), and the first 3D data can be acquired instantaneously (in real time). Thus, the second 3D modeling imaging control process can be performed instantaneously (in real time). In other words, the 3D modeling can be performed more easily. In addition, by using a neural network having the first captured image, the inertial information of the first imaging unit, and the depth as its input, the posture information of the first imaging unit and the first 3D data may be generated.

In addition, the first 3D data may be any data as long as it represents the three-dimensional shape of a 3D object, and, for example, it may be a point cloud or may include a mesh that represents the three-dimensional shape of a 3D object using vertices and connections and texture applied to the surface of the mesh. This first 3D data is supplied to the scoring process 102.

<Scoring Process>

In the scoring process 102, as described above, accuracy of second 3D data that can be generated using second captured images generated using the second imaging that has been performed until now is evaluated. This scoring is performed on the basis of the first 3D data generated using the first 3D modeling process and the position and the posture of the above-described second imaging performed until now. In other words, the first 3D data is regarded as a 3D object modeled in the second 3D modeling process, and a score is calculated for each area of the first 3D data. For example, in a case in which the first 3D data includes a mesh that represents the three-dimensional shape of a 3D object using vertices and connections and a texture applied to the surface of the mesh, a scoring result is generated for each polygon of the mesh. In other words, a portion of the first 3D data from which second 3D data of higher accuracy is acquired is evaluated more highly (is set to a higher score).

For example, by using the first 3D data generating process 101 illustrated in Fig. 4, the first 3D data 120 illustrated in Fig. 5 is assumed to be generated. Until now, it is assumed that second imaging has been performed for a 3D object corresponding to the first 3D data 120 with positions and postures of cameras 121-1 to 121-3. In that case, by using the scoring process 102, an upper side of the first 3D data 120 in the drawing is evaluated to have a relatively high score, and a lower side (a gray portion) of the first 3D data 120 in the drawing is evaluated to have a relatively low score. An example of the scoring technique will be described below.

In Fig. 5, for the convenience of description, although only two kinds of scores including a high score and a low score are illustrated as scoring results. The number of kinds of scores (the number of classifications of clustering) may be any number. For example, the scoring results may be classified into three levels (for example, a low score, an intermediate score, and a high score), may be classified into 10 levels (for example, 0 points to 9 points), may be classified into 100 levels (for example, 0 points to 99 points), or may be classified into levels corresponding to any other number.

The scoring results generated using the scoring process 102 are supplied to the second 3D modeling imaging control process 103.

<Second 3D Modeling Imaging Control Process>

In the second 3D modeling imaging control process 103, the second imaging is controlled on the basis of the position and the posture of the second imaging unit and scoring results acquired using the scoring process 102. For example, the second imaging is controlled to be performed with a position and a posture for which better scoring results are acquired.

For example, a scoring result as illustrated in Fig. 5 is assumed to be acquired using the scoring process 102. From this scoring result, it is apparent that imaging of a lower side (for example, a gray part) of a 3D object corresponding to the first 3D data 120 in the drawing is insufficient.

Thus, in the second 3D modeling imaging control process 103, the second imaging is controlled to perform imaging from the lower side of the 3D object in the drawing such that a captured image of the gray part of which imaging is insufficient is acquired. For example, it is determined that the position and the posture of the camera 121-4 are more appropriate as a position and a posture with which the second imaging is performed, and the second imaging is controlled such that imaging is performed with the position and the posture of the camera 121-4.

By performing as such, a second captured image captured with a position and a posture that are more appropriate can be generated. In other words, it can be configured such that the second 3D modeling process is executed using the second captured image captured with the position and the posture that are more appropriate. Thus, 3D data having higher accuracy can be generated while an increase in the load (the amount of operation and the amount of processing) of 3D modeling is suppressed. In other words, 3D modeling can be performed more easily.

A method for obtaining a position and a posture with which such second imaging is to be performed may be any method. For example, in the second 3D modeling imaging control process 103, on the basis of a scoring result, (ranges of) a position and a posture that can improve a score of a part for which the second imaging is insufficient (a gray part) may be configured to be identified. In addition, current posture information (a position and a posture) of the second imaging unit is provided for the scoring process 102 as imaging viewpoint information, a scoring result of a case in which a second captured image acquired with the current position and the current posture is added is acquired, and, in a case in which the score is higher than a score before the addition of the second captured image by a predetermined threshold value or more, the current position and the posture may be determined to be a position and a posture with which the second imaging is to be performed.

In addition, if relations of positions and postures between the first imaging unit and the second imaging unit are known, instead of the posture information of the second imaging unit, posture information of the first imaging unit may be provided for the scoring process 102 as imaging viewpoint information. In that case, in the scoring process 102, posture information of the second imaging unit may be derived using the posture information of the first imaging unit, and a scoring result may be generated using the posture information of the second imaging unit. In addition, a scoring result may be generated using a neural network having the posture information of the first imaging unit included in input parameters.

In addition, in the second 3D modeling imaging control process 103, on the basis of an overlap ratio for an imaging range of the second imaging performed until now, it may be determined whether the position and the posture are a position and a posture with which the second imaging needs to be performed. The overlap ratio represents a degree (a ratio) of areas (overlap areas) of which imaging ranges overlap each other. In other words, in accordance with a degree of overlapping of the imaging range of second imaging performed from now on with an area shown in the second captured image acquired until now, it may be determined whether or not the position and the posture of the second imaging are a position and a posture that are more appropriate.

For example, a technique such as the photogrammetry in which 3D modeling is performed on the basis of corresponding points between a plurality of second captured images is applied as the second 3D modeling process, in order to obtain the corresponding points, at least parts of imaging ranges of the plurality of second captured images need to overlap each other (an overlapping area needs to be present). Thus, for second captured images acquired until now, a position and a posture from which a second captured image having an overlap ratio for which the second 3D modeling process can be easily performed (a more precise 3D modeling process can be performed) may be determined as a position and a posture that are more appropriate (a position and a posture with which the second imaging needs to be performed).

The value of the overlap ratio for which the second 3D modeling process (a more precise 3D modeling process) can be easily performed depends also on the three-dimensional shape of the 3D object and the like. For example, in the case of imaging from a so-called drone, as illustrated on the left side in Fig. 6, a subject can be regarded as a plane 130. For example, an imaging range of a case in which the plane 130 is imaged from the camera 131-1 is a range denoted by a double arrow 132-1. Similarly, an imaging range of a case in which the plane 130 is imaged from the camera 131-2 is a range denoted by a double arrow 132-2. Thus, an overlapping area between such captured images is a range denoted by a double arrow 133. In such a case, the method for overlapping captured images is simple, and when an overlap ratio that is a predetermined ratio or more is acquired, a more precise 3D modeling process can be performed.

However, in the case of the second imaging, the subject is a 3D object (first 3D data 135), and, in order to image the full scope thereof, the overlapping method becomes stereoscopic like a second captured image 136-1 and a second captured image 136-2 in the example of the right side in Fig. 6. For this reason, an overlap ratio of a certain degree enabling a sufficiently precise 3D modeling process depends on the three-dimensional shape of a 3D object and the like. Thus, in obtaining a position and a posture with which the second imaging needs to be performed, in a case in which an overlap ratio for second captured images acquired until now is considered, it is preferable to take the three-dimensional shape (the first 3D data) of the 3D object and the like into account (a position and a posture with which the second imaging needs to be performed can be obtained more precisely).

In addition, in obtaining a position and a posture with which the second imaging needs to be performed, a distance of the imaging position from a subject (3D object) may be controlled. In other words, not only a certain part of a 3D object to be imaged and a certain angle from which the part is imaged but also from which distance the part is imaged may be controlled.

As in the example illustrated on the left side in Fig. 7, when a 3D object 141 is imaged from a position far from the 3D object 141 (a position denoted by a black triangle in the drawing) as denoted by a dotted line 142, the entire 3D object 141 can be imaged with a small number of times of imaging. However, it may occur that a part of the 3D object 141 of which a three-dimensional shape is complex (for example, a shaded part 141A and the like) cannot be imaged. For this reason, there is a possibility that the precision of the second 3D modeling process (the accuracy of the second 3D data) is reduced.

In contrast to this, as in the example illustrated on the right side in Fig. 7, when a 3D object 141 is imaged from a position close to the 3D object 141 (a position denoted by a black triangle in the drawing) as denoted by a dotted line 143, the number of times of imaging required for imaging the entire 3D object 141 increases relative to the example of the left side in Fig. 7. However, a part of the 3D object 141 of which a three-dimensional shape is complex (for example, the shaded part 141A and the like) can be assuredly imaged relative to the example of the left side in Fig. 7. In other words, the entire 3D object 141 can be imaged assuredly relative to the example of the left side in Fig. 7. For this reason, a reduction in the precision of the second 3D modeling process (the accuracy of the second 3D data) can be suppressed.

In other words, an appropriate distance from a 3D object as a position of the second imaging depends on the three-dimensional shape of the 3D object. Thus, in the second 3D modeling imaging control process 103, a distance of the position of the second imaging from a 3D object (subject) may be controlled in accordance with (the complexity) of the three-dimensional shape of the 3D object. By configuring as such, as described above, an unnecessary increase in the number of times of imaging required for the second imaging can be suppressed while a reduction in the precision of the second 3D modeling process (the accuracy of the second 3D data) is suppressed. In other words, it can be controlled such that the second imaging is performed with a position and a posture that are more appropriate.

In addition, the method for deriving the complexity of the three-dimensional shape of a 3D object may be any method. For example, this complexity may be derived on the basis of the first 3D data. However, in that case, for example, the first 3D data is processed as a two-dimensional image, and the complexity of the three-dimensional shape of the 3D object may be derived from the pattern and the like thereof. By configuring as such, an increase in the processing load relating to deriving of the complexity of the three-dimensional shape of a 3D object can be suppressed.

In addition, by providing a detection frame, the complexity of the three-dimensional shape of a 3D object within the detection frame may be derived. This detection frame may have any shape and any size. For example, within this detection frame, how many polygons of the first 3D data are confronted with the imaging surface of the second imaging is obtained, a degree of deviation of the directions of normal lines thereof within the detection frame is represented as a numeral value, and the complexity of the three-dimensional shape of a 3D object within the detection frame may be derived on the basis of the degree of deviation. Generally, the greater the deviation, the more complex the shape, and, in a case in which the polygons are oriented in the same direction, the shape thereof can be considered closer to a planar shape. In addition, an average of the directions of the normal lines of the polygons within the detection frame may be set as a representative value of the degree of facing directly for the imaging surface, and the complexity of the three-dimensional shape of the 3D object may be derived on the basis of the representative value.

In addition, in a Marching Cubes method, the complexity of the three-dimensional shape of a 3D object may be determined to be low in a case in which there are many cases of an arrangement of vertexes that easily form a plane in the detection frame.

In other words, the complexity of the three-dimensional shape of a 3D object may be (a value based on) any parameter as long as it is a quantitative value that becomes a material used for estimating imaging with a direction, a frequency, and a distance of certain degrees is necessary from an approximate shape of a subject of a certain area. In addition, a method for controlling a distance from a 3D object in the second imaging that is based on the complexity of the three-dimensional shape of a 3D object may be any method. For example, the more complex the three-dimensional shape of this 3D object, from a position closer to the 3D object, the second imaging may be controlled to be performed. In addition, the simpler the three-dimensional shape of this 3D object, the second imaging may be controlled to be performed from a position farther from the 3D object.

In the second 3D modeling imaging control process 103, as described above, a position and a posture (a position and a posture that are more appropriate) with which the second imaging needs to be performed are obtained, and control information (imaging control information) for performing control such that the second imaging is performed with the position and the posture is generated. Then, the imaging control information is supplied to the second 3D data generating process 104. For example, a user or the like moves the second imaging unit, and, when the position and the posture of the second imaging unit match "the position and the posture with which the second imaging needs to be performed" that have been obtained, imaging control information instructing the second imaging may be generated and supplied to the second 3D data generating process 104 (in other words, the second imaging is performed with "a position and a posture with which the second imaging needs to be performed).

<Second Imaging>

The second imaging unit, in the second 3D data generating process 104, performs second imaging in accordance with control of the second 3D modeling imaging control process 103 and generates a second captured image. For example, the second imaging unit may perform the second imaging on the basis of the imaging control information generated in the second 3D modeling imaging control process 103. For example, the second imaging unit may perform the second imaging in a case in which imaging is instructed using the imaging control information (at a timing at which imaging is instructed). In addition, the control unit controlling the position and the posture of the second imaging unit may move the second imaging unit to a position designated using the imaging control information and set the posture to a posture designated using the imaging control information, and the second imaging unit may perform the second imaging with the position and the posture.

The number of second imaging units may be any and may be either one or two or more. In addition, the first imaging unit and the second imaging unit may be a common imaging unit (the same imaging unit) or may be imaging units, which are different from each other, disposed at mutually-different positions.

The specifications (for example, the number of pixels and the like) of the second imaging unit may be the same as or be different from the specifications of the first imaging unit. For example, the second captured image may have image quality higher than the first captured image. In addition, the second captured image may have resolution higher than the first captured image. Furthermore, the second captured image may have a dynamic range higher than the first captured image.

<Second 3D Modeling Process>

In addition, the technique for the second 3D modeling process executed by the second 3D data generating process 104 may be any technique. For example, the technique for the second 3D modeling process may be the same as or be different from the first 3D modeling process.

For example, the photogrammetry described above may be applied as the second 3D modeling process. In addition, in the second 3D modeling process, the SfM and the MVS are applied, and a point cloud may be generated from a plurality of second captured images. Furthermore, by performing meshing and texturing for the point cloud as post processing, the second 3D data may be generated. In other words, the second 3D data may be any data as long as it represents the three-dimensional shape of a 3D object. For example, the second 3D data may be a point cloud or may include meshes representing the three-dimensional shape of a 3D object using vertices and connections and textures applied to the surfaces of the meshes. In addition, the neural rendering described above may be applied as the second 3D modeling process.

For example, the second 3D data may be generated using posture information (posture information corresponding to the field of view of the second captured image acquired until now) of the second imaging unit performing the second imaging in addition to the second captured image. This posture information is information that represents a position and a posture of the second imaging unit in the three-dimensional space.

In addition, if the relations of positions and postures between the first imaging unit performing the first imaging and the second imaging unit are known, the second 3D data may be generated using posture information (a position and a posture in the three-dimensional space) of the first imaging unit. In other words, the second 3D data may be generated using the posture information derived in the first 3D modeling process. For example, the posture information of the second imaging unit may be derived using the posture information of the first imaging unit, and the second 3D data may be generated using the posture information of the second imaging unit. In addition, the second 3D data may be generated using the posture information of the first imaging unit and a neural network having the second captured image as an input.

Furthermore, the second 3D data may be encoded. This encoding method may be any method.

<Manual Imaging>

In addition, as illustrated in Fig. 4, in the second 3D data generating process 104, the second imaging may be performed not on the basis of the imaging control information (for example, manually). In this specification, such an imaging method will be referred to also as manual imaging. In a case in which the manual imaging is performed, imaging timing information representing the imaging timing thereof is generated in (the second imaging) of the second 3D data generating process 104 and is supplied to the second 3D modeling imaging control process 103. Then, in the second 3D modeling imaging control process 103, on the basis of the imaging timing information, the posture information of the second imaging unit is obtained at the imaging timing, and the posture information of the second imaging unit at the imaging timing is supplied to the scoring process 102 as imaging viewpoint information. Then, in the scoring process 102, a score is calculated on the basis of the imaging viewpoint information. In this way, the second captured image (the posture information of the second imaging unit corresponding to the field of view thereof) acquired using manual imaging may be reflected in the scoring process 102 (a scoring result derived thereby).

<Camera Information>

In addition, as illustrated in Fig. 4, in (the second imaging of) the second 3D data generating process 104, camera information relating to the second imaging unit may be generated and be supplied to the scoring process 102. Then, in the scoring process 102, a scoring result may be generated by performing scoring on the basis of this camera information. This camera information may include any information. For example, the camera information may include internal parameters of the imaging unit. In addition, the camera information may include external parameters of the imaging unit. Furthermore, the camera information may include a captured image. In addition, the camera information may include field of view information (focal distance information) of the second captured image. Furthermore, the camera information may include distortion correction information. In addition, the camera information may include shading correction information. In addition, the camera information may include breathing correction information. Furthermore, the camera information may include focus position information. In addition, the camera information may include image plane phase difference information. In other words, such information may be used for scoring (evaluation of the accuracy of the second three-dimensional shape information that can be generated).

<Real-time Processing>

In addition, the first 3D data generating process 101 (the first imaging and the first 3D modeling process), the scoring process 102, and the second 3D modeling imaging control process 103 illustrated in Fig. 4 may be executed in parallel with each other.

For example, in the first 3D data generating process 101, first 3D data of a part of a 3D object that is a subject for which the first imaging has been performed may be sequentially generated. For example, by applying real-time 3D modeling as the first 3D modeling process, 3D data can be generated instantaneously (in real time) on the basis of the captured image, the depth information, and the like. In other words, in this case, the first 3D modeling is performed while the first imaging is performed (while the first captured image is acquired), whereby the first 3D data can be generated. For example, as described with reference to Fig. 2, although, while a camera is moved on the periphery of a 3D object that is a subject, each part of the 3D object is imaged, before a captured image of the entire 3D object is acquired, 3D modeling can be performed on the basis of the acquired captured image and the depth. In other words, 3D data of the captured parts can be sequentially generated.

In addition, in the scoring process 102, scoring for the first 3D data corresponding to a part of the 3D object (evaluation of the accuracy of second three-dimensional shape information that can be generated using second captured images generated using the second imaging performed until now) may be performed. In other words, when first 3D data corresponding to parts of the 3D object is generated using the first 3D modeling process (before the first 3D data of the entire 3D object is generated), scoring of parts, of which the first 3D data (evaluation of the accuracy of second 3D data that can be generated) has been generated, of the 3D object thereof may be sequentially performed. By configuring as such, before the first 3D data generating process 101 ends (before the first 3D data of the entire 3D object is generated), the scoring process 102 can be started. In other words, the first 3D data generating process 101 and the scoring process 102 can be executed in parallel.

In addition, in the second 3D modeling imaging control process 103, every time a scoring result is acquired using the scoring process 102 (before scoring results of the entire 3D object are acquired), the second imaging may be controlled on the basis of the acquired scoring result (the scoring result for the first 3D data corresponding to a part of the 3D object). By configuring as such, before the scoring process 102 ends (before scoring results of the entire 3D object are acquired), the second 3D modeling imaging control process 103 can be started. In other words, the scoring process 102 and the second 3D modeling imaging control process 103 can be executed in parallel.

By combining the methods as described above, the first 3D data generating process 101, the scoring process 102, and the second 3D modeling imaging control process 103 can be executed in parallel with each other.

For example, in Fig. 8, as denoted by an arrow, it is assumed that the time axis is directed from the left side to the right side. In the first 3D data generating process 101, by executing the first imaging and the first 3D modeling process in parallel, like first 3D data 151-1, first 3D data 151-2, and first 3D data 151-3, the first 3D data of parts for which the first imaging has been performed can be sequentially generated. In addition, by executing the first 3D data generating process (the first 3D modeling process) and the scoring process 102 in parallel, like a scoring result 152-1, a scoring result 152-2, and a scoring result 152-3, scoring results for parts for which the first 3D data has been generated can be sequentially derived. Furthermore, by executing the scoring process 102 and the second 3D modeling imaging control process 103 in parallel, at each timing, second imaging can be controlled on the basis of scoring results acquired by that time (the scoring result 152-1, the scoring result 152-2, and the scoring result 152-3).

In other words, by executing the first 3D data generating process 101, the scoring process 102, and the second 3D modeling imaging control process 103 in parallel with each other, the second imaging can be controlled while the first imaging is performed. In other words, the first imaging and the second imaging can be performed in parallel (instantaneously).

<Scoring>

This scoring method will be described. As conditions for successful photogrammetry, for example, there are successful execution of the SfM, successful execution of the MVS, successful execution of texturing (texture mapping), and the like. As conditions for successful execution of the SfM, for example, there are being able to secure a baseline, being able to match feature points, and the like. In addition, as conditions for successful execution of the MVS, there are being able to securing a baseline and the like. As conditions for successful execution of texturing, for example, there are being able to acquiring a high-fineness texture in a captured image, imaging in front of a face to which a texture is attached as possibly, and the like. The baseline represents a distance between imaging viewpoint positions (positions of the camera at the time of imaging).

<Scoring of Polygon>

As conditions for determining whether a certain polygon surface can be restored using the SfM and the MVS, there are minimum visibility conditions (whether the polygon is visible from an imaging position), favorable conditions for accuracy (conditions that further improve the accuracy), and favorable conditions for matching (detection of corresponding points) (conditions enabling more easy matching).

As the visible minimum conditions, for example, there are the center of a target polygon being present within the field of view when seen from a viewpoint (imaging position) (within the field of view of imaging), an inner product of a normal line of a target polygon and a line of sight (a vector directed from the line of sight to the center of the target polygon) at least being positive, no presence of other polygons blocking the light of sight, presence of two or more (visible) lines of sights in which the target polygon is seen, and the like.

For example, in the case of Fig. 9, since a line of sight 162 directed from a certain viewpoint to the center of a target polygon 160 is present, the target polygon 160 is positioned within the field of view. In addition, an inner product of a normal line 161 of the target polygon 160 and the line of sight 162 is positive. Furthermore, the line of sight 162 reaches the target polygon 160 without being blocked by other polygons and is "a line of sight in which the target polygon 160 is seen". Thus, the line of sight 162 satisfies the minimum visible conditions.

In contrast to this, a line of sight 163 is blocked by a polygon 164 and is not "the line of sight in which the target polygon 160 is seen".

In addition, as favorable conditions for accuracy, for example, there are the baseline being sufficiently long, a ratio of the length of the baseline to a distance to the subject (the length of the baseline/the distance to the subject) being sufficiently long, the number of visible viewpoints being sufficiently large and dispersion of angles formed thereby being large, and the like.

For example, in the case of Fig. 10, a baseline 173 between a viewpoint 171 and a viewpoint 172 in which a target polygon 170 is seen being sufficiently large (the viewpoint 171 and the viewpoint 172 are sufficiently away from each other), the ratio of the length of the baseline 173 to a distance 174 to a subject being sufficiently large (a value of "the length of the baseline/the distance to the subject" being sufficiently large), and the like become conditions for further improving the accuracy.

In addition, in the case of the example of the left side in Fig. 11, viewpoints at which a target polygon 180 is seen are two points including a viewpoint 181 and a viewpoint 182. In contrast to this, in the case of the example of the right side in Fig. 11, viewpoints at which the target polygon 180 is seen are 6 points including viewpoints 181 to 186. In other words, the number of visible viewpoints in the example of the right side is larger than that in the example of the left side, and thus the dispersion of angles formed thereby is large. When there are many visible points, more robust triangulation can be performed from a plurality of pieces of information different from each other, whereby improvement of the accuracy can be expected. Thus, the example of the right side satisfies conditions for improving the accuracy more than the example of the left side.

In addition, as the favorable conditions for matching, for example, there are an angle formed by the normal line of a target polygon and a line of sight from the viewpoint to the center of a target polygon being sufficiently small, the ratio of a viewpoint and a distance to a subject, which form a pair, being sufficiently small, presence of a texture that can be matched, and the like.

In the case of the example of the left side in Fig. 12, an angle formed by a normal line 191 of a target polygon 190 and a viewpoint 192 is smaller than an angle formed by the normal line 191 and a viewpoint 193. Thus, it is easier to correctly detect feature points of the surface of the target polygon 190 from the viewpoint 192 than the viewpoint 193. In addition, in the case of the example of the right side in Fig. 12, a distance from the viewpoint 194 to a subject (the target polygon 190) is markedly longer than a distance from the viewpoint 195 to the subject (the target polygon 190). In other words, the ratio of the distance to the subject is large at the viewpoint 194 and the viewpoint 195. In such a case, since directions in which feature points of the surface of the target polygon 190 are seen from both viewpoints are greatly different even when the baseline is long, there is a possibility of the matching difficulty being increased. In other words, matching of viewpoints such as the viewpoint 192 and the viewpoint 193 of the example of the left side in Fig. 12 at which the ratio of a distance to the subject is small can be easily performed.

<Scoring of Texture>

As conditions for determining whether viewpoints sufficient for texturing are present on a certain polygon surface, for example, there are minimum conditions (whether or not it is visible) and favorable conditions for texturing (conditions for higher-quality texturing).

As the minimum conditions, for example, there are presence of a viewpoint satisfying the minimum visible conditions described above and the like.

In addition, as the favorable conditions for texturing, for example, there are an angle formed by a normal line of a target polygon and a line of sight directed to the center of the target polygon from a viewpoint being small, being able to acquire sufficient resolution with a distance from the viewpoint to a subject being a predetermined distance or less, and the like.

The conditions described above are examples. In scoring, any conditions may be applied. In addition, the details thereof may be arbitrary. For example, the condition described above may be omitted, and conditions other than the conditions described above may be added.

<Scoring of Second Captured Image>

Scoring of a second captured image acquired using second imaging may be performed. For example, scoring of a second captured image may be performed on the basis of camera information. For example, it may be evaluated whether or not a desired position is in-focused for a second captured image. In addition, it may be evaluated whether or not there is camera shake. Furthermore, it may be evaluated that the exposure is appropriate. In addition, it may be evaluated whether or not feature points can be easily acquired.

<Arithmetic Operation Example of Scoring>

For example, as illustrated in Fig. 13, a distance between the target captured image 201 and the target polygon 202 is denoted by d. In addition, an ideal distance to the subject is denoted by $d_{opt}$. Furthermore, $c_d$ represents a predetermined coefficient. A score $s_d$ of that case may be derived as in the following Equation (1).

$$s_d = \frac{1}{1 + c_d\left(d - d_{opt}\right)^2}$$

... (1)

In addition, the center of the target polygon 202 will be denoted by $c_p$. A line of sight from the target captured image 201 to the center $c_p$ will be denoted by $v_p$. In addition, a normal line of the target polygon 202 will be denoted by $n_p$. An angle formed by the line of sight $v_p$ and the normal line $n_p$ will be denoted by $\alpha$. The angle $\alpha$ formed in that case can be derived as in the following Equation (2). Then, a score $s_\alpha$ based on the formed angle $\alpha$ may be derived as in the following Equation (3). In addition, $c_\alpha$ is a predetermined coefficient.

$$\alpha = \cos^{-1} \frac{v_p \cdot n_p}{\left|v_p\right| \cdot \left|n_p\right|}.$$

... (2)

$$s_\alpha = \frac{2}{1 + \exp c_\alpha \alpha^2}$$

... (3)

An optical axis (a normal-line vector of a target captured image having the center of the target captured image 201 as a start point) of a camera will be denoted by $v_c$. In addition, an angle formed by this optical axis $v_c$ and the line of sight $v_p$ will be denoted by $\beta$. The angle $\beta$ formed in that case can be derived as in the following Equation (4). A score $s_\beta$ based on the formed angle $\beta$ may be derived as in the following Equation (5). In addition, $c_\beta$ is a predetermined coefficient.

$$\beta = \cos^{-1} \frac{v_c \cdot v_p}{\left|v_c\right| \cdot \left|v_p\right|}$$

... (4)

$$s_\beta = \frac{2}{1 + \exp c_\beta \beta^2}$$

... (5)

A total score $s_{total}$ may be derived as in the following Equation (6) using the scores $s_d$, $s_\alpha$, and $s_\beta$ derived as above.

$$s_{total} = s_d \cdot s_\alpha \cdot s_\beta$$

... (6)

Among total scores of respective viewpoints derived as above, a weighted added value of total scores of high-ranked two viewpoints may be regarded as a final score.

In addition, this arithmetic operation method is one example. The arithmetic operation method in the scoring process 102 may be any method and is not limited to this example.

<Example of Configuration for Executing Process>

Each of the above-described processes illustrated in Fig. 4 may be executed by an arbitrary apparatus. For example, the first 3D modeling process of the first 3D data generating process 101, the scoring process 102, and the second 3D modeling imaging control process 103 described above may be executed by an information processing apparatus.

In other words, the information processing apparatus may include a first 3D modeling processing unit that generates first three-dimensional shape information representing a three-dimensional shape of a 3D object on the basis of a first captured image generated using first imaging that has imaged the 3D object, a scoring processing unit that generates a scoring result by evaluating accuracy of second three-dimensional shape information that can be generated using a second captured image generated using second imaging, which has been performed until now, using the first three-dimensional shape information, and an imaging control unit that controls the second imaging for imaging a 3D object on the basis of the scoring result. In this section, this information processing apparatus will be referred to also as a first information processing apparatus.

In addition, in an information processing method executed by the first information processing apparatus, first three-dimensional shape information representing a three-dimensional shape of a 3D object may be generated, on the basis of a first captured image generated using first imaging that has imaged the 3D object, a scoring result may be generated by evaluating accuracy of second three-dimensional shape information that can be generated using a second captured image generated using second imaging, which has been performed until now, using the first three-dimensional shape information, and the second imaging for imaging a 3D object may be controlled on the basis of the scoring result.

By configuring as such, a 3D object is imaged (the second imaging is performed) with a position and a posture that are more appropriate, and a second 3D modeling process can be executed using the acquired second captured image. Therefore, higher-fineness 3D data can be generated while an increase in the load (the amount of operation and the amount of processing) of the 3D modeling is suppressed. In other words, 3D modeling can be performed more easily.

In addition, the first 3D modeling processing unit may include a posture information generating unit that generates posture information representing a position and a posture of the first imaging unit on the basis of a first captured image and an acceleration and an angular velocity of the first imaging unit and a three-dimensional shape generating unit that generates first three-dimensional shape information of a 3D object on the basis of the posture information and a depth of the 3D object.

In addition, the first information processing apparatus may further perform the first imaging of the first 3D data generating process 101 described above. For example, the first information processing apparatus may further include a first imaging unit. In addition, the first information processing apparatus including the first imaging unit may include a depth detecting unit that detects a depth, may include an inertial measurement unit that detects an acceleration and an angular velocity of the first imaging unit, or may include both thereof.

In addition, the first information processing apparatus may further perform second imaging of the second 3D data generating process 104 described above. For example, the first information processing apparatus may further include a second imaging unit.

In addition, a second captured image generated using this second imaging may be encoded. For example, the first information processing apparatus including the second imaging unit may include an encoding unit that encodes a second captured image generated using the second imaging unit. This encoded second captured image may be supplied to another information processing apparatus through communication or may be stored on a storage medium.

In addition, the first information processing apparatus may further perform the second 3D modeling process of the second 3D data generating process 104 described above. For example, the first information processing apparatus including the second imaging unit may further include a second 3D modeling processing unit that generates second three-dimensional shape information on the basis of a second captured image generated using the second imaging unit. For example, the second 3D modeling processing unit may include a corresponding point position deriving unit that derives three-dimensional positions of corresponding points between a plurality of second captured images and a three-dimensional point adding unit that adds three-dimensional points on the basis of the three-dimensional positions of the corresponding points. In the second 3D modeling process, meshing and texturing may be additionally performed as post processing. For example, the second three-dimensional shape information may include a mesh that represents the three-dimensional shape of a 3D object using vertices and connections and a texture applied to the surface of the mesh.

In addition, the second 3D data generated using this second 3D modeling process may be encoded. For example, the first information processing apparatus including the second imaging unit and the second 3D modeling processing unit may further include an encoding unit that encodes the second three-dimensional shape information generated by the second 3D modeling processing unit. This encoded second three-dimensional shape information (the second 3D data) may be supplied to another information processing apparatus through communication or may be stored on a storage medium.

In addition, the second imaging of the second 3D data generating process 104 described above may be performed by a second information processing apparatus different from the first information processing apparatus. For example, it may be configured such that the first information processing apparatus includes a communication unit that communicates with a second information processing apparatus (an image capturing device) including a second imaging unit, the imaging control unit generates imaging control information for controlling the second imaging, and the communication unit supplies the imaging control information to the second information processing apparatus.

In addition, in that case, the first information processing apparatus may acquire a second captured image generated by the second information processing apparatus. For example, the first information processing apparatus including a communication unit may acquire a second captured image supplied from the second information processing apparatus. This second captured image may be encoded. For example, the first information processing apparatus including a communication unit may include an encoding unit that encodes a second captured image acquired by the communication unit. This encoded second captured image may be supplied to another information processing apparatus through communication or may be stored on a storage medium.

In addition, the second captured image supplied from the second information processing apparatus may be encoded. In other words, the communication unit may acquire encoded data of the second captured image. Then, the encoded data may be supplied to another information processing apparatus through communication or may be stored on a storage medium. In addition, the first information processing apparatus may decode the encoded data acquired using the communication unit to generate (restore) the second captured image. For example, the first information processing apparatus including a communication unit may include a decoding unit that decodes encoded data of the second captured image acquired by the communication unit.

In this way, also in a case in which the second imaging is performed by the second information processing apparatus, the first information processing apparatus may additionally perform the second 3D modeling process of the second 3D data generating process 104 described above. For example, the first information processing apparatus

cessing apparatus including a communication unit may further include a second 3D modeling processing unit that generates second three-dimensional shape information on the basis of a second captured image acquired by the communication unit. For example, the second 3D modeling processing unit may include a corresponding point position deriving unit that derives three-dimensional positions of corresponding points between a plurality of second captured images and a three-dimensional point adding unit that adds three-dimensional points on the basis of the three-dimensional positions of the corresponding points. In the second 3D modeling process, meshing and texturing may be additionally performed as post processing. For example, the second three-dimensional shape information may include a mesh that represents the three-dimensional shape of a 3D object using vertices and connections and a texture applied to the surface of the mesh.

In addition, the second 3D data generated using this second 3D modeling process may be supplied to another information processing apparatus through communication or may be stored on a storage medium. In addition, this second 3D data may be encoded. For example, the first information processing apparatus including a communication unit and a second 3D modeling processing unit may further include an encoding unit that encodes the second three-dimensional shape information generated by the second 3D modeling processing unit. Then, encoded data of the generated second three-dimensional shape information (the second 3D data) may be supplied to another information processing apparatus through communication or may be stored on a storage medium.

As described above, the second imaging may be performed using manual imaging. In that case, a second captured image acquired using the manual imaging may be configured to be used in the second 3D modeling process. In the scoring process 102, as described above, the accuracy of second three-dimensional shape information that can be generated using second captured images acquired until now is evaluated. At that time, among the second captured images, a second captured image acquired using manual imaging may be configured to be included. In other words, posture information of manual imaging may be reflected in the scoring process 102. For example, a scoring processing unit of the first information processing apparatus may generate a scoring result on the basis of a position and a posture of the second information processing apparatus corresponding to a timing of the second imaging represented using imaging timing information representing a timing of the second imaging not based on the imaging control information. For example, the imaging control unit may acquire posture information of the second imaging unit at the imaging timing on the basis of the imaging timing information, and the scoring processing unit may calculate a score on the basis of the posture information. By configuring as such, the posture information of the manual imaging is reflected in the scoring result.

In addition, in this case, the second imaging (the manual imaging) may be performed by the first information processing apparatus or may be performed by the second information processing apparatus. In a case in which the first information processing apparatus includes a second imaging unit, for example, when the second imaging unit performs manual imaging, imaging timing information representing the timing thereof may be generated and be supplied to the imaging control unit. In addition, in a case in which the first information processing apparatus includes a communication unit, for example, the communication may acquire imaging timing information supplied from a second information processing apparatus and supply the imaging timing information to the imaging control unit.

By configuring as such, it can be controlled such that the second imaging is performed with a position and a posture that are more appropriate on the basis of the imaging timing information.

In the first information processing apparatus, as described above, camera information relating to the second imaging unit may be reflected in the scoring process 102. For example, the scoring processing unit of the first information processing apparatus may be configured to generate a scoring result on the basis of the camera information. In this case, the second imaging may be performed by the first information processing apparatus or may be performed by the second information processing apparatus. In a case in which the first information processing apparatus includes a second imaging unit, for example, the second imaging unit may generate camera information and supply the camera information to the scoring processing unit. In addition, in a case in which the first information processing apparatus includes a communication unit, for example, the communication unit may acquire camera information supplied from the second information processing apparatus and supply the camera information to the scoring processing unit.

By configuring as such, on the basis of the camera information, it can be controlled such that the second imaging is performed with a position and a posture that are more appropriate.

The second information processing apparatus may perform the second imaging of the second 3D data generating process 104 described above. For example, the second information processing apparatus may include a second imaging unit and a communication unit communicating with the first information processing apparatus, the communication unit may acquire imaging control information supplied from the first information processing apparatus, and the second imaging unit may generate a second captured image by imaging a 3D object on the basis of the imaging control information. This imaging control information is information for controlling the second imaging that is generated on the basis of a scoring result derived on the basis of the first 3D data.

In addition, in an information processing method executed by the second information processing apparatus, it may be configured such that imaging control information supplied from the first information processing apparatus is acquired, second imaging is performed on the basis of the imaging control information, and a second captured image for generating the second 3D data is generated.

By configuring as such, a 3D object is imaged (the second imaging is performed) with a position and a posture that are more appropriate, and a second 3D modeling process can be executed using the acquired second captured image. Therefore, higher-fineness 3D data can be generated while an increase in the load (the amount of operation and the amount of processing) of the 3D modeling is suppressed. In other words, 3D modeling can be performed more easily.

The generated second captured image may be supplied to the first information processing apparatus. For example, a communication unit may supply the second captured image generated by the second imaging unit to the first information processing apparatus. This second captured image is a captured image used for generating three-dimensional shape information representing the three-dimensional shape of a 3D object. In addition, the second captured image may be encoded. For example, the second information processing apparatus may include an encoding unit that encodes the second captured image generated by the second imaging unit. Then, the communication unit may supply encoded data of the second captured image generated by the encoding unit to the first information processing apparatus. In addition, the second captured image (or the encoded data of the second captured image) may be supplied to an information processing apparatus other than the first information processing apparatus. For example, a communication unit may supply the second captured image (or the encoded data of the second captured image) to another information processing apparatus. In addition, this second captured image (or the encoded data of the second captured image) may be stored on a storage medium. For example, the second information processing apparatus may include a storage unit that stores the encoded data of the second captured image generated by the encoding unit.

In addition, the second information processing apparatus may perform the second 3D modeling process described above. In other words, the second information processing apparatus may generate second 3D data by performing a second 3D modeling process using the second captured image generated using second imaging. For example, the second information processing apparatus may further include a second 3D modeling processing unit that generates second three-dimensional shape information (second 3D data) representing the three-dimensional shape of a 3D object on the basis of a second captured image generated by the second imaging unit. For example, the second 3D modeling processing unit may include a corresponding point position deriving unit that derives three-dimensional positions of corresponding points between a plurality of second captured images and a three-dimensional point adding unit that adds three-dimensional points on the basis of the three-dimensional positions of the corresponding points. In the second 3D modeling process, meshing and texturing may be additionally performed as post processing. For example, the second three-dimensional shape information may include a mesh that represents the three-dimensional shape of a 3D object using vertices and connections and a texture applied to the surface of the mesh.

In addition, the second 3D data generated by this second 3D modeling process may be supplied to another information processing apparatus through communication or may be stored on a storage medium. Furthermore, this second 3D data may be encoded. For example, the second information processing apparatus including a second 3D modeling processing unit may further include an encoding unit that encodes the second three-dimensional shape information generated by the second 3D modeling processing unit. Then, encoded data of the generated second three-dimensional shape information (the second 3D data) may be supplied to another information processing apparatus through communication or may be stored on a storage medium.

As described above, the second imaging may be performed using manual imaging. In that case, a second captured image acquired using the manual imaging may be configured to be used in the second 3D modeling process. In the scoring process 102, as described above, the accuracy of second three-dimensional shape information that can be generated using second captured images acquired until now is evaluated. At that time, among the second captured images, a second captured image acquired using manual imaging may be configured to be included. In other words, posture information of manual imaging may be reflected in the scoring process 102.

In that case, the second information processing apparatus may be configured to generate imaging timing information representing a timing of manual imaging and supply the imaging timing information to the first information processing apparatus. For example, a second imaging unit of the second information processing apparatus may be configured to generate imaging timing information representing a timing when manual imaging is performed, and a communication unit may supply the imaging timing information to the first information processing apparatus.

By configuring as such, the 3D object can be imaged (second imaging can be performed) with a position and a posture that are more appropriate on the basis of the imaging timing information.

As described above, camera information relating to the second imaging unit may be reflected in the scoring process 102. For example, a second imaging unit of the second information processing apparatus may generate camera information, and a communication unit may supply the camera information to the first information processing apparatus. In addition, in that case, the communication unit may acquire imaging control information generated on the basis of the camera information, and the second imaging unit may perform second imaging on the basis of the imaging control information. Furthermore, in an information processing method executed by the second information processing apparatus, camera information relating to the second imaging unit is generated, and the camera information may be supplied to the first information processing apparatus. In addition, imaging control information may be acquired on the basis of the camera information, and second imaging may be performed on the basis of the imaging control information.

By configurating as such, a 3D object can be imaged (second imaging can be performed) with a position and a posture that are more appropriate on the basis of the camera information.

<3. Imaging Guide Output>

<Second 3D Modeling Imaging Guide Output Process>

In addition, instead of controlling imaging for 3D modeling of the second time, guide information for assisting imaging for the 3D modeling of the second time may be output. For example, in Fig. 4, the first 3D data generating process 101 and the scoring process 102 are executed, and, additionally, a second 3D modeling imaging guide output process 105 may be executed. Also in this case, the first 3D data generating process 101 and the scoring process 102 are executed similarly to the case described above in <2. Imaging Control>. In the scoring process 102, a scoring result is supplied to the second 3D modeling imaging guide output process 105.

In the second 3D modeling imaging guide output process 105, guide information for second imaging is generated on the basis of a scoring result acquired using the scoring process 102, and output of the guide information is controlled and is output from an output device.

A user or the like manually performs second imaging with reference to such guide information. In other words, in this case, the second imaging is manual imaging (imaging not based on imaging control information). In this way, by performing the second imaging, a second captured image captured with a position and a posture that are more appropriate can be generated. Then, the second 3D data generating process 104 (the second imaging and the second 3D modeling process) is executed using the second captured image, and target second 3D data is generated. In other words, a second 3D modeling process can be configured to be executed using the second captured image captured with a position and a posture that are more appropriate. Thus, higher-accuracy 3D data can be generated while an increase in the load (the amount of operation and the amount of processing) of 3D modeling is suppressed. In other words, 3D modeling can be performed more easily.

<Generation of Guide Information>

In order to generate this guide information, in the second 3D modeling imaging guide output process 105, a position and a posture with which the second imaging needs to be performed (a position and a posture that are more appropriate as a position and a posture with which the second imaging is performed) are obtained on the basis of a scoring result. The method of obtaining a position and a posture with which this second imaging needs to be performed may be an arbitrary method. For example, it may be a method similar to that of the case of the second 3D modeling imaging control process 103 described above. For example, (ranges of) a position and a posture with which the score of a part (a gray part) for which the second imaging is insufficient can be improved may be identified on the basis of a scoring result.

In addition, in the second 3D modeling imaging guide output process 105, on the basis of variations of the scoring result according to current posture information (a position and a posture) of the second imaging unit, it may be determined whether or not the current position and the current posture are a position and a posture with which the second imaging needs to be performed. For example, in a case in which, as a result of reflection of (the posture information of) a second captured image acquired in a case in which the second imaging unit performs second imaging with the current position and the current posture in the scoring, the score becomes higher than a score before addition of the second captured image by a predetermined threshold value or more, it may be determined that the current position and the current posture are a position and a posture with which the second imaging needs to be performed. In other words, in this case, in the scoring process 102, a scoring result is derived in each of a case in which second imaging performed with the current position and the current posture by the second imaging unit is included in "the second imaging performed until now" and a case in which the second imaging is not included therein, and the scoring results are compared with each other. Thus, in this case, in the scoring process 102, scoring is performed on the basis of the current posture information (imaging viewpoint information) of the second imaging unit.

This imaging viewpoint information may be supplied using the second 3D modeling imaging guide output process 105. As described above, in this case, the second 3D modeling imaging guide output process 105 is executed, and the second imaging is manually performed. For this reason, in <2. Imaging Control>, similarly to the case described above, imaging timing information representing an imaging timing may be generated in (the second imaging of) the second 3D data generating process 104 and be supplied to the second 3D modeling imaging guide output process 105. Then, in the second 3D modeling imaging guide output process 105, on the basis of the imaging timing information, posture information of the second imaging unit at the imaging timing is obtained, and the posture information of the second imaging unit at the imaging timing may be supplied to the scoring process 102 as imaging viewpoint information.

In addition, if relations of positions and postures between the first imaging unit and the second imaging unit are known, instead of the posture information of the second imaging unit, the posture information of the first imaging unit may be supplied to the scoring process 102 as imaging viewpoint information.

In addition, in the second 3D modeling imaging guide output process 105, on the basis of an overlap ratio for an imaging range of the second imaging performed until now, it may be determined whether the position and the posture are a position and a posture with which the second imaging needs to be performed.

In addition, as described above with reference to Fig. 6, a value of the overlap ratio for which the second 3D modeling process can be easily performed (a more precise 3D modeling process can be performed) depends also on the three-dimensional shape of a 3D object and the like. Thus, when a position and a posture with which the second imaging needs to be performed are to be obtained, in a case in which an overlap ratio for the second captured image acquired until now is taken into account, it is preferable to consider the three-dimensional shape (the first 3D data) of the 3D object and the like as well (a position and a posture with which the second imaging needs to be performed can be acquired more precisely).

In addition, as described above with reference to Fig. 7, when a position and a posture with which second imaging needs to be performed are to be obtained, a distance of the imaging position thereof from a subject (3D object) may be controlled. At that time, the distance may be controlled in accordance with (the complexity of) the three-dimensional shape of the 3D object. By configuring as such, an unnecessary increase in the number of times of imaging required for the second imaging can be suppressed while a reduction in the precision of the second 3D modeling process (the accuracy of the second 3D data) is suppressed. In other words, it can be controlled such that the second imaging is performed with a position and a posture that are more appropriate.

Then, in the second 3D modeling imaging guide output process 105, guide information is generated on the basis of the position and the posture with which the second imaging needs to be performed which have been obtained as above. This guide information may be information of any type and, for example, may include image information or may include voice information.

In addition, the output of this guide information, for example, is performed such that details of the guide information are presented to a user or the like performing the second imaging. The output device may be any apparatus and, for example, may include a monitor that displays image information or may include a speaker that outputs voice information.

<Guide Information>

Next, details of the guide information will be described. The details of this guide information may be arbitrary. For example, information representing a position and a posture that are more appropriate to a user as second imaging may be included in this guide information.

For example, first 3D data 120 illustrated in Fig. 5 is assumed to be generated using the first 3D data generating process 101 illustrated in Fig. 4. Then, until now, it is assumed that the second imaging has been performed with positions and postures of the camera 121-1 to the camera 121-3 for a 3D object corresponding to the first 3D data 120. In that case, by using the scoring process 102, an upper side of the first 3D data 120 in the drawing is evaluated to have a relatively high score, and a lower side (a gray part) of the first 3D data 120 in the drawing is evaluated to have a relatively low score. From this scoring results, it is apparent that the imaging of the lower side (for example, the gray part) of the 3D object in the drawing that corresponds to the first 3D data 120 is insufficient.

Thus, in the second 3D modeling imaging guide output process 105, guide information guiding second imaging is generated and output such that a captured image of the gray part of which the imaging is insufficient is acquired. In other words, in this guide information, the second imaging is guided such that the imaging is performed from the lower side of the 3D object in the drawing. For example, it is determined that the position and the posture of the camera 121-4 are more appropriate as a position and a posture with which the second imaging is performed, and an indication thereof is notified to a user or the like.

By configuring as such, a user can image a 3D object with a position and a posture that are more appropriate by performing the second imaging in accordance with the guide information. In other words, 3D modeling (the second 3D data generating process 104) can be executed using the captured image. Thus, higher-accuracy 3D data can be generated while an increase in the load of 3D modeling is suppressed. In other words, 3D modeling can be performed more easily.

<Display of Scoring Result>

In addition, information representing scoring results may be included in the guide information. In other words, in the second 3D modeling imaging guide output process 105, guide information including information that represents scoring results may be generated, and an image representing the scoring results may be displayed on a monitor as guide information. In addition, information representing scoring results within the current field of view of the second imaging unit may be included in the guide information. In other words, in the second 3D modeling imaging guide output process 105, on the basis of the current position and the current posture of the second imaging unit, guide information including information that represents scoring results within the field of view of the second imaging unit may be generated, and an image representing the scoring results may be displayed in a monitor as guide information.

For example, as illustrated in Fig. 14, it is assumed that the second imaging unit is present at the position of a camera 211 and is in a posture for imaging the inside of a dotted-line range 212 for scored first 3D data 210. In that case, in the second 3D modeling imaging guide output process 105, like an image 213, an image representing a scoring result within the current field of view (an imaging range) of the second imaging unit, that is, an image representing a part of the first 3D data 210 within the dotted-line range 212 may be displayed in a monitor as guide information. By configuring as such, a scoring result can be displayed in a state corresponding to the current position and the current posture of the second imaging unit. For this reason, a user can perceive a position and a posture that are appropriate for the second imaging more easily.

In addition, this guide information (an image representing a scoring result within the current field of view of the second imaging unit) may be displayed to overlap a captured image generated by the second imaging unit. For example, the image 213 (an image representing a scoring result within the current field of view of the second imaging unit) illustrated in Fig. 14 may be displayed to overlap a captured image generated by the second imaging unit of the current field of view. By configuring as such, captured images of which the fields of views are the same and guide information (an image representing a scoring result) can be displayed in a monitor with overlapping each other. On the basis of such display, a user can associate a 3D object of the actual space with a scoring result more easily. Thus, the user can perceive a position and a posture that are more appropriate for the second imaging more easily. In addition, an overhead image representing scoring results of the entire 3D object may be displayed. By displaying such an overhead image, a user can more easily perceive which part of the entire 3D object a part included in the currently-displayed captured image of the 3D object is.

<Display of Overlap Area>

In addition, between a plurality of second captured images, information representing an overlap area in which imaging ranges thereof overlap each other may be included in the guide information. For example, in the second 3D modeling imaging guide output process 105, guide information including information representing an overlap area in which imaging ranges overlap each other between a plurality of times of second imaging may be generated, and an image representing the overlap area may be displayed as guide information.

For example, on the left side in Fig. 15, in a case in which the second imaging unit has the position and the posture of a camera 221-1, the imaging range is assumed to be an imaging range 222-1. In addition, in a case in which the second imaging unit has the position and the posture of a camera 221-2, the imaging range thereof is assumed to be an imaging range 222-2. In this case, the imaging range 222-1 and the imaging range 222-2 overlap each other in a part. In this way, in accordance with presence of an area in which the imaging ranges overlap each other between a plurality of second captured images, corresponding points between both the images can be detected. In other words, in accordance with presence of an appropriate overlap area between a plurality of second captured images, in the second 3D modeling process, second 3D data having high accuracy can be generated (a reduction of the accuracy of the second 3D data can be suppressed).

For this reason, it is preferable to generate second captured images (perform second imaging) such that an appropriate overlap area is present between a plurality of the second captured images. As described above, by displaying an image representing such an overlap area in a monitor as the guide information, a user or the like operating the second imaging unit, on the basis of the guide information, can determine a position and a posture of the second imaging with the overlap area taken into account. In other words, the user or the like can perform second imaging with such a position and a posture that an appropriate overlap area is present between a plurality of second captured images more easily. In other words, the user or the like can perform second imaging with a position and a posture that are appropriate more easily.

In addition, an image representing this overlap area may represent the overlap area using any method. For example, the overlap area may be represented using a color, a density, a pattern, a design, a text, a symbol, a figure, and the like. For example, the overlap area may be highlighted with respect to other areas (in a representation that subjectively makes the overlap area stand out more than other areas).

In addition, this overlap area may be an overlap area between a current field of view of the second imaging unit and an imaging range of the second captured images acquired until now. In other words, an image representing an overlap area between a second captured image acquired until now and a second captured image to be generated from now on may be displayed as the guide information. For example, in the second 3D modeling imaging guide output process 105, on the basis of the current position and the current posture of a second imaging unit, guide information including information that represents an overlap area between the field of view of the second imaging unit and the imaging range of a second captured image acquired until now is generated, and an image representing the overlap area may be displayed in a monitor as guide information. For example, in Fig. 15, the second imaging unit is present at the position of a camera 221-2 and is in a posture for imaging the imaging range 222-2. In this case, an image 223 representing an overlap area 224 within the imaging range 222-2 may be generated and be displayed as guide information.

By configuring as such, the overlap area can be displayed in a state according to the current position and the current posture of the second imaging unit. For this reason, a user or the like operating the second imaging unit can more easily perceive how the imaging range of a second captured image acquired until now overlaps the imaging range of a second captured image acquired by performing second imaging with the current position and the current posture on the basis of this guide information. In other words, the user or the like can perform second imaging more easily to overlap the imaging range of the second captured image acquired until now. In other words, the user or the like can perform second imaging with a position and a posture that are appropriate more easily.

In addition, this guide information (an overlap area in which imaging ranges overlap between second captured images or an image representing an overlap area between the current field of view of the second imaging unit and the imaging range of a second captured image acquired until now) may be disposed to overlap a captured image generated by the second imaging unit. For example, the image 223 illustrated in Fig. 15 (an image representing an overlap area between the current field of view of the second imaging unit and the imaging range of a second captured image acquired until now) may be displayed to overlap the captured image generated by the second imaging unit of the current field of view.

By configuring as such, captured images of which fields of view are the same and guide information (an image representing an overlap area between the current field of view of the second imaging unit and the imaging range of the second captured image acquired until now) can be displayed in a monitor to overlap each other. On the basis of such display, a user can associate a 3D object of the actual space with an overlap area more easily. Thus, the user can perceive a position and a posture that are appropriate for second imaging more easily.

In addition, an image representing an overlap ratio representing a ratio of the overlap area occupied within the field of view may be further displayed. This overlap ratio, for example, may be represented using a numerical value or, for example, may be represented using a color, a density, a pattern, or the like. In accordance with such display, a user can perceive a degree of overlapping more intuitively.

<Display of Captured Auxiliary Image>

In addition, a captured auxiliary image for assisting second imaging may be included in the guide information. For example, in the second 3D modeling imaging guide output process 105, guide information including a captured auxiliary image for assisting second imaging is generated, and the captured auxiliary image may be displayed as the guide information. Details of this captured auxiliary image may be arbitrary.

For example, a recommended imaging position/posture guide representing a recommended imaging position/posture that are a position and a posture of second imaging to be recommended may be included in a captured auxiliary image. For example, in the second 3D modeling imaging guide output process 105, recommended imaging position/posture that are a position and a posture of second imaging to be recommended are derived on the basis of a scoring result, and a recommended imaging position/posture guide representing the recommended imaging position/posture may be displayed as the guide information (a captured auxiliary image).

For example, in a case in which the current position and the current posture of the second imaging unit are the same as the recommended imaging position/posture, an image representing an indication thereof may be displayed as a recommended imaging position/-posture guide. In other words, for example, in a case in which the current position and the current posture match the recommended imaging position/posture in accordance with a user or the like moving the second imaging unit, an indication thereof may be notified to the user or the like. A method for this notification may be any method. For example, when the current position and the current posture of the second imaging unit match the recommended imaging position/posture, a completely different image such as a blank image may be displayed. In addition, instead of such an image, it may be represented using text, a pattern, a symbol, and the like that the current position and the current posture of the second imaging unit are the recommended imaging position/-posture. A user or the like operating the second imaging unit can easily perceive that the current position and the current posture of the second imaging unit are the recommended imaging position/posture on the basis of such display (the recommended imaging position/posture guide). In accordance with this, the user or the like can perform second imaging with a position and a posture that are appropriate more easily.

In addition, an image representing a relative position and a relative posture of the recommended imaging position/posture with reference to the second imaging unit may be displayed as a recommended imaging position/posture guide. For example, a direction of the recommended imaging position/posture with respect to the current position and the current posture of the second imaging unit, a degree of the recommended imaging position/posture being away therefrom, and the like, for example, may be represented using text, a pattern, a symbol, and the like. On the basis of such display, even when the current position and the current posture of the second imaging unit are not the recommended imaging position/posture, a user or the like operating the second imaging unit can more easily move the second imaging unit to approach the recommended imaging position/posture. In accordance with this, the user or the like can more easily perform second imaging with a position and a posture that are appropriate.

In addition, this recommended imaging position/posture guide may be displayed to overlap a captured image generated by the second imaging unit. In accordance with such display, a user can associate a 3D object of the actual space with the recommended imaging position/posture guide more easily. Thus, the user can perceive a position and a posture that are appropriate for second imaging more easily.

<Imaging Guide Based on Complexity of Subject>

As described above with reference to Fig. 7, as the position of second imaging, an appropriate distance from a 3D object depends on the three-dimensional shape of the 3D object. Thus, a distance from the 3D object (a subject) may be included in the recommended imaging position/posture of the second imaging derived in the second 3D modeling imaging guide output process 105. Then, when the recommended imaging position/posture of the second imaging are derived in the second 3D modeling imaging guide output process 105, the distance from the 3D object may be derived in accordance with the complexity of the three-dimensional shape of the 3D object.

A method for deriving the complexity of the three-dimensional shape of this 3D object may be any method. For example, the method may be the method described above in <2. Imaging Control>. In addition, the method for deriving a distance (a recommended imaging position/posture) from a 3D object based on the complexity of the three-dimensional shape of the 3D object may be any method. For example, the more complex the three-dimensional shape of this 3D object, a position closer to the 3D object may be set as the recommended imaging position/posture. In addition, the simpler the three-dimensional shape of this 3D object, a position farther from the 3D object may be set as recommended imaging position/posture.

In addition, in the guide information displayed in the monitor, as illustrated in Fig. 16, a detection frame may be configured to be displayed as well. In Fig. 16, a display image 230 is guide information displayed in the monitor using the second 3D modeling imaging guide output process 105. In this display image 230, scored first 3D data 231 and a detection frame 232 are illustrated. By displaying the detection frame 232 in this way, for a part of interest of a subject, a user can easily perform an operation of causing the second imaging unit to approach a 3D object (subject) or to be separated away from the 3D object in accordance with the complexity of the three-dimensional shape of the 3D object. It is apparent that the detection frame may be configured not to be displayed.

For example, a captured image generated by the second imaging unit is displayed in the monitor, a detection frame and first 3D data corresponding to a 3D object (subject) are additionally displayed to overlap the captured image as guide information, and a part to be imaged in the first 3D data (3D object) may be represented. Then, by a user moving the second imaging unit such that a part of the first 3D data to be imaged is aligned to the detection frame in the display, the second imaging unit may be configured to be in a position and a posture that are appropriate for second imaging.

For example, as illustrated in Figs. 17 to 19, a display image 240 is displayed in the monitor, and, in the display image 240, a detection frame 241 and a part 242 of the 3D object, which has been derived on the basis of the first 3D data, to be imaged may be configured to be displayed. Then, by a user moving the second imaging unit such that the part 242 to be imaged in this display image 240 becomes close to (ideally, matches) the detection frame 241, the second imaging unit may be configured to be in a position and a posture that are more appropriate for performing second imaging.

For example, in case of the left side in Fig. 17, a part 242 to be imaged is displayed smaller than a detection frame 241. In that case, a user adjusts the display of this part 242 to be imaged to match (or approximate) the detection frame 241 as illustrated on the right side in Fig. 17 by causing the second imaging unit to approach a 3D object such that this part 242 to be imaged is displayed larger or the like. In this way, by moving the second imaging unit, the second imaging unit becomes in a position and a posture that are more appropriate for performing second imaging.

In addition, in case of the example of the left side in Fig. 18, an imaging direction and a normal-line direction of the part 242 to be imaged deviate from each other (the part 242 to be imaged and the detection frame 241 (the imaging surface) do not directly face each other). In that case, a user causes this part 242 to be imaged to directly face (to face more directly) the detection frame 241 as illustrated on the right side in Fig. 18 by changing the direction (that is, the imaging direction) of the second imaging unit or the like. By moving the second imaging unit in this way, the second imaging unit becomes in a position and a posture that are more appropriate for performing second imaging.

In addition, in case of the example of the left side in Fig. 19, a height of a part 242 to be imaged is different from a detection frame 241. In that case, a user adjusts the height of this part 242 to be imaged to match (or approximate) the height of the detection frame 241 as illustrated on the right side in Fig. 19 by changing a distance between the second imaging unit and a 3D object or the like. By moving the second imaging unit in this way, the second imaging unit becomes in a position and a posture that are more appropriate for performing second imaging.

In addition, as in an example of Fig. 20, an arrow representing a recommended movement direction (a movement direction in which it becomes close to the recommended imaging position/posture) of the second imaging unit may be displayed as a guide display. For example, in case of the left side in Fig. 20, a display image 250 displaying a guide display in the monitor is displayed, and, in the display image 250, an arrow 251 is displayed as a guide display. The arrow 251 is an arrow toward a depth side (front side) in the drawing and guides to move the second imaging unit to the front side (to approach the 3D object (subject)). In addition, in case of the example of the right side in Fig. 20, in a display image 250 displayed in the monitor, an arrow 252 is displayed as a guide display. The arrow 252 is an arrow toward a near side (rear side) in the drawing and guides to move the second imaging unit to the rear side (to be separated away from the 3D object (subject)). In accordance with the user moving the second imaging unit along such an arrow, the second imaging unit can be configured to be close in accordance with the recommended imaging position/-posture.

In addition, as in the example of Fig. 21, an indicator representing a positional relation in the depth direction between the current position of the second imaging unit and the recommended imaging position/-posture may be displayed. For example, in case of the left side in Fig. 21, a display image 260 displaying a guide display in the monitor is displayed, and, in the display image 260, an indicator 261 is displayed as a guide display. The indicator 261 represents a positional relation in the depth direction between the current position of the second imaging unit and the recommended imaging position/posture. In case of the example of the left side in Fig. 21, the indicator 261 represents that the position of the recommended imaging position/posture deviates from (is present on the front side of) the current position of the second imaging unit and guides such that the second imaging unit is moved to the front side (approaches the 3D object (subject)). In addition, in case of the right side in Fig. 21, an indicator 261 represents that the current position of the second imaging unit and the position of the recommended imaging position/posture approximately match each other (approximate). In other words, in this case, the indicator 261 guides such that the second imaging unit may not be approximately moved. By a user moving the second imaging unit in accordance with this indicator 261, the second imaging unit can be caused to be close in accordance with the recommended imaging position/posture.

In addition, the indicator 261 may have any design and is not limited to the example of Fig. 21. For example, the indicator may have a design as illustrated in Fig. 22. In case of this example, in accordance with the positional relation in the depth direction between the current position of the second imaging unit and the recommended imaging position/posture, the display is changed as illustrated on the upper side in the drawing.

In addition, as in the example of Fig. 23, a distance and a degree of directly facing (an orientation relation) between a part of the first 3D data (a 3D object) to be imaged and the second imaging unit may be displayed as guide information. For example, in case of Fig. 23, a display image 270 displaying a guide display in a monitor is displayed, and, in the display image 270, scored first 3D data 271 is displayed. In addition, in the display image 270, a line (or a similar line) 272 joining an optical axis of the second imaging unit (the center of a pixel area of the second imaging unit) and the center of the part of the first 3D data (the 3D object) 271 to be imaged is displayed as a guide display. Furthermore, in the display image 270, an arrow 273 representing a direction of the subject surface in the center area of the part of the first 3D data (the 3D object) 271 to be imaged is displayed as a guide display.

In the display image 270, by using this line 272 and the arrow 273, a positional relation between the current position of the second imaging unit and the recommended imaging position/posture and a distance and a degree of directly facing (an orientation relation) between the part of the first 3D data (the 3D object) to be imaged and the second imaging unit are represented.

For example, as illustrated on the left side of an upper stage of Fig. 24, in a case in which directions of a line 272 and an arrow 273 are different from each other, (a normal-line direction of) a plane of a part of the first 3D data (a 3D object) to be imaged deviates from (is not confronted with) the imaging surface (the direction of the second imaging unit) by an amount corresponding to the difference (the angle).

In contrast to this, as illustrated at the center of the upper stage of Fig. 24, in a case in which directions of a line 272 and an arrow 273 match each other, it is illustrated that (a normal-line direction of) of a plane of a part of the first 3D data (3D object) to be imaged directly faces the imaging surface (the direction of the second imaging unit).

In addition, as illustrated on the right side of the upper stage of Fig. 24, in a case in which a line 272 and an arrow 273 are separated away from each other, it is illustrated that a distance between a part of the first 3D data (a 3D object) to be imaged and the second imaging unit is longer than an appropriate distance in second imaging. In other words, in this case, it is guided to move the second imaging unit to approach the first 3D data (the 3D object).

In addition, as illustrated on the left side of a lower stage of Fig. 24, in a case in which a line 272 is short with respect to an arrow 273, it is illustrated that a distance between a part of the first 3D data (a 3D object) to be imaged and the second imaging unit is shorter than an appropriate distance in second imaging. In other words, in this case, it is guided to move the second imaging unit to be separated away from the first 3D data (the 3D object).

In addition, as illustrated at the center of a lower stage of Fig. 24, in a case in which a circle 274 is displayed in a connection part of a line 272 and an arrow 273, it is illustrated that a distance between a part of first 3D data (a 3D object) to be imaged and a second imaging unit is approximately an appropriate distance in second imaging. In other words, in this case, it is guided not to move the second imaging unit in the depth direction.

In addition, as illustrated on the right side of the lower stage of Fig. 24, in a case in which a circle 274 is displayed in a connection part of a line 272 and an arrow 273, and directions of the line 272 and the arrow 273 match each other, it is illustrated that a distance between a part of first 3D data (a 3D object) to be imaged and a second imaging unit is approximately an appropriate distance in second imaging, and (a normal-line direction of) a plane of a part of the first 3D data (the 3D object) to be imaged directly faces the imaging surface (the direction of the second imaging unit). In other words, in this case, it is guided that the current position and the current posture of the second imaging unit match or approximate the recommended imaging position/posture.

By moving the second imaging unit in accordance with such guide information, a user can more easily cause the second imaging unit to be close using the recommended imaging position/posture.

In addition, since the posture information of the second imaging unit (the first imaging unit) is derived using the SLAM or the like, a user can easily derive a distance between the second imaging unit and a subject. Thus, the display example described above can be updated in real time (instantaneously).

<Real-time Processing>

In addition, the first 3D data generating process 101 (the first imaging and the first 3D modeling process), the scoring process 102, and the second 3D modeling imaging guide output process 105 illustrated in Fig. 4 may be executed in parallel with each other. As described above in <2. Imaging Control>, by using the first 3D modeling process, 3D data of a part of a 3D object for which first imaging has been performed can be sequentially generated. In addition, the first 3D data generating process 101 and the scoring process 102 can be executed in parallel with each other.

In addition, in the second 3D modeling imaging guide output process 105, every time a scoring result is acquired using the scoring process 102 (before scoring results of the entire 3D object are acquired), on the basis of the acquired scoring result (a scoring result for the first 3D data corresponding to a part of the 3D object), guide information for second imaging may be generated and output. By configuring as such, before the scoring process 102 ends (before scoring results of the entire 3D object are acquired), the second 3D modeling imaging guide output process 105 can be started. In other words, the scoring process 102 and the second 3D modeling imaging guide output process 105 can be executed in parallel with each other.

By combining the methods described as above, the first 3D data generating process 101, the scoring process 102, and the second 3D modeling imaging guide output process 105 can be executed in parallel with each other.

For example, as illustrated in Fig. 25, it is assumed that a display image 280 is displayed in a monitor, and, in the display image 280, a captured image of a second imaging unit is displayed. In the captured image, a 3D object 281 is drawn as a subject. As described above, by executing the first 3D data generating process 101, the scoring process 102, and the second 3D modeling imaging guide output process 105 in parallel with each other, before generation of first 3D data and scoring end for the entire 3D object 281, guide information can be displayed in the display image 280. In the display image 280 illustrated in Fig. 25, a hashed-pattern display 282 represents a part for which first 3D data of the 3D object 281 has been generated. In addition, a gray ground display 283 represents a part for which a second captured image is insufficient as a result of scoring. By executing the first 3D data generating process 101, the scoring process 102, and the second 3D modeling imaging guide output process 105 in parallel with each other, an imaging guide can be displayed while the first imaging is performed in this way. Thus, a user can perform the second imaging in parallel with the first imaging (instantaneously).

<Camera Information>

In addition, also in a case in which this second 3D modeling imaging guide output process 105 is executed, similarly to the case described above in <2. Imaging Control>, in (the second imaging of) the second 3D data generating process 104, camera information relating to the second imaging unit may be generated and supplied to the scoring process 102. Then, in the scoring process 102, a scoring result may be generated by performing scoring on the basis of this camera information. Similarly to the case described above in <2. Imaging Control>, this camera information may include any information.

<Example of Configuration Executing Process>

Each of the above-described processes illustrated in Fig. 4 may be executed using any apparatus. For example, in an information processing apparatus, the first 3D modeling process of the first 3D data generating process 101, the scoring process 102, and the second 3D modeling imaging guide output process 105 described above may be executed.

In other words, an information processing apparatus may include a first 3D modeling processing unit that generates first three-dimensional shape information representing a three-dimensional shape of a 3D object on the basis of a first captured image generated using first imaging that has imaged the 3D object, a scoring processing unit that evaluates accuracy of second three-dimensional shape information that can be generated using a second captured image generated using second imaging performed until now using the first three-dimensional shape information and generates a scoring result, and a guide information output control unit that generates guide information for second imaging for imaging a 3D object on the basis of the scoring result and controls output of the guide information. In this section, this information processing apparatus will be referred to also as a first information processing apparatus.

In addition, in an information processing method executed by the first information processing apparatus, first three-dimensional shape information representing a three-dimensional shape of a 3D object is generated on the basis of a first captured image generated using first imaging that has imaged the 3D object, accuracy of second three-dimensional shape information that can be generated using a second captured image generated using second imaging performed until now is evaluated using the first three-dimensional shape information, a scoring result is generated, and guide information for second imaging for imaging a 3D object is generated on the basis of the scoring result, and output of the guide information may be controlled.

By configuring as such, a user can image a 3D object in a position and a posture that are more appropriate by performing second imaging in accordance with the guide information. In other words, 3D modeling (a second 3D modeling process) can be executed using the captured image. Thus, higher-fineness 3D data can be generated while an increase in the load of 3D modeling is suppressed. In other words, 3D modeling can be performed more easily.

In addition, this guide information output control unit may generate an image representing a scoring result as guide information and display the image. Furthermore, this guide information output control unit may generate an image representing a scoring result within the field of view of the second imaging unit on the basis of the position and the posture of the second imaging unit and display the image. In addition, this guide information output control unit may display a captured image generated by the second imaging unit to overlap an image representing a scoring result within the field of view of the second imaging unit. Furthermore, this guide information output control unit may further display an overhead image illustrating scoring results for the entire 3D object.

In addition, this guide information output control unit may generate an image representing an overlap area in which imaging ranges overlap each other between a plurality of second captured images as guide information and display the image. Furthermore, this guide information output control unit may generate an image representing an overlap area between a current field of view of the second imaging unit and an imaging range of the second captured image acquired until now on the basis of the position and the posture of the second imaging unit and display the image. In addition, this guide information output control unit may display the captured image generated by the second imaging unit to overlap the image. Furthermore, this guide information output control unit may further display an image representing an overlap ratio that represents a ratio of the overlap area occupied within the current field of view of the second imaging unit.

In addition, this guide information output control unit may generate a captured auxiliary image for assisting the second imaging as guide information and display the captured auxiliary image. In addition, this guide information output control unit may derive recommended imaging position/posture that are a position and a posture of second imaging that are recommended on the basis of a scoring result and display a recommended imaging position/posture guide representing the recommended imaging position/posture as guide information. Furthermore, in a case in which the position and the posture of the second imaging unit are the same as the recommended imaging position/posture as the recommended imaging position/posture guide, this guide information output control unit may display an image representing that the current position and the current posture of the second imaging unit are the recommended imaging position/posture. In addition, this guide information output control unit may display an image representing a relative position and a relative posture of the recommended imaging position/posture with reference to the second imaging unit as the recommended imaging position/posture guide. Furthermore, this guide information output control unit may display a captured image generated by an imaging unit performing second imaging to overlap the recommended imaging position/posture guide.

In the first information processing apparatus described above, the first three-dimensional shape information may have a smaller amount of information and lower fineness than the second three-dimensional shape information. In addition, the first 3D modeling processing unit of the first information processing apparatus may include a posture information generating unit that generates posture information representing a position and a posture of the first imaging unit on the basis of a first captured image and an acceleration and an angular velocity of the first imaging unit and a three-dimensional shape generating unit that generates first three-dimensional shape information on the basis of the posture information and a depth of a 3D object. Furthermore, the first three-dimensional shape information of this case may include a mesh that represents the three-dimensional shape of a 3D object using vertices and connections and a texture applied to the surface of the mesh.

Furthermore, in the first information processing apparatus described above, the scoring processing unit may generate a scoring result for each local area of the first three-dimensional shape information on the basis of the first three-dimensional shape information and the position and the posture of second imaging performed until now. In addition, the first three-dimensional shape information may include a mesh that represents the three-dimensional shape of a 3D object using vertices and connections and a texture applied to the surface of the mesh, and the scoring processing unit may generate a scoring result for each polygon of the mesh.

Furthermore, the first information processing apparatus may further perform second imaging of the second 3D data generating process 104 described above. The configuration of the first information processing apparatus in that case is similar to that of the case described above in <2. Imaging Control>. In addition, the first information processing apparatus may further perform the second 3D modeling process of the second 3D data generating process 104 described above. The configuration of the first information processing apparatus is also similar to the case described above in <2. Imaging Control>.

In addition, as described above, the second imaging is performed using manual imaging. For this reason, the scoring processing unit of the first information processing apparatus may generate a scoring result on the basis of the position and the posture of the second information processing apparatus corresponding to a timing of the second imaging represented by imaging timing information representing the timing of the second imaging. For example, the guide information output control unit may obtain posture information of the second imaging unit at the imaging timing on the basis of the imaging timing information, and the scoring processing unit may calculate a score on the basis of the posture information. By configuring as such, the posture information of the manual imaging is reflected in the scoring result. The configuration of the first information processing apparatus of this case is also similar to the case described above in <2. Imaging Control>. Here, the imaging timing information generated by the second imaging unit or the imaging timing information acquired by a communication unit is supplied to the guide information output control unit. By configuring as such, on the basis of the imaging timing information, the second imaging can be controlled to be performed with a position and a posture that are more appropriate.

In addition, in the first information processing apparatus, as described above, the camera information relating to the second imaging unit may be reflected in the scoring process 102. For example, the scoring processing unit of the first information processing apparatus may generate a scoring result on the basis of the camera information. The configuration of the first information processing apparatus of this case is also similar to the case described above in <2. Imaging Control>. By configuring as such, on the basis of the camera information, the second imaging can be controlled to be performed with a position and a posture that are more appropriate.

Also in a case in which the first information processing apparatus executes the second 3D modeling imaging guide output process 105, the second information processing apparatus may perform the second imaging of the second 3D data generating process 104 described above. The configuration of the second information processing apparatus of that case is also similar to the case described above in <2. Imaging Control>. Then, the second information processing apparatus may also further perform the second 3D modeling process described above. The configuration of the second information processing apparatus of that case is also similar to the case described above in <2. Imaging Control>.

In addition, imaging timing information representing a timing of manual imaging may be generated in the second information processing apparatus and be supplied to the first information processing apparatus. The configuration of the second information processing apparatus of that case is also similar to the case described above in <2. Imaging Control>.

In addition, the camera information relating to the second imaging unit may be reflected in the scoring process 102. The configuration of the second information processing apparatus of that case is also similar to the case described above in <2. Imaging Control>.

## <4. Combination>

### <Combination of Imaging Control and Guide Information Output>

In Fig. 4, both the second 3D modeling imaging control process 103 and the second 3D modeling imaging guide output process 105 may be executed. By performing the imaging control and the output of guide information, a user can perform the second imaging with a position and a posture that are appropriate more easily.

For example, in <2. Imaging Control>, the first information processing apparatus described above may further include a guide information output control unit that generates guide information for second imaging for imaging a 3D object on the basis of the scoring result. In this case, the guide information output control unit performs a process similar to that of the case described above in <3. Imaging Guide Output>.

In <3. Imaging Guide Output>, the first information processing apparatus described above may further include an imaging control unit that controls second imaging for imaging a 3D object on the basis of the scoring result. In this case, the imaging control unit performs a process similar to that of the case described above in <2. Imaging Control>.

## <5. Reuse of Parameters>

<Imaging Operation for 3D Modeling>

As described above, in a case in which 3D modeling is performed on the basis of captured images, in order to acquire higher-fineness 3D data, captured images having a high degree of contribution to 3D modeling are required. If an imaging operation is performed without any plan, unnecessary imaging having a low degree of contribution to 3D modeling is repeated, and there is concern that the load of the operation unnecessarily increases. In order to reduce the load of the imaging operation, it is required to acquire captured images having a higher-degree of contribution to 3D modeling with higher efficiency.

Thus, in the example described above, imaging and 3D modeling are performed a plurality of times, and, on the basis of 3D data acquired by 3D modeling of the first time, imaging for 3D modeling of the second time is controlled or guided. In other words, navigation (imaging control, imaging guide, and the like) for performing high-quality 3D modeling is performed on the basis of a simple 3D model.

However, 3D modeling for acquiring higher-fineness 3D data, generally, has a large load and a long processing time. For example, a photogrammetry process, as illustrated in Fig. 3, can acquire higher-accuracy 3D data than a real-time modeling process and has a longer processing time than the real-time modeling process. For this reason, even in a case in which the navigation as described above is applied, it is difficult for a user to check a result of 3D modeling during an imaging operation.

Thus, an operation of such a case, generally, is performed to flow like a flow 301 illustrated in Fig. 26. In other words, in this case, after an imaging operation ends, a user moves to a home, an office, or the like and performs synthesis and editing of a 3D model using a maintained high-specification computer. If an imaging missing occurs (for example, in a case in which valid captured images are insufficient, and there are parts for which a high-accuracy 3D model cannot be acquired), the user needs to go back to the site and resume the imaging operation, and complex operations are necessary.

<Feedback Process>

Thus, as illustrated in Fig. 4, a feedback process 106 for feeding back a 3D modeling result is executed. By performing this process, a 3D modeling result (3D model) can be used in the navigation and the like during an imaging operation, and the user can perform imaging for 3D modeling more easily.

<3D Modeling for Feedback>

As this feedback process 106, for example, 3D modeling for feedback may be performed separated from final 3D modeling (the 3D model synthesis and the like of the flow 301). In other words, as illustrated in a flow 302 illustrated in Fig. 26, 3D modeling (3D model synthesis) may be performed in parallel with an imaging operation. It is apparent that, since it is during an imaging operation, a state in which all the captured images have been acquired is not formed. Although captured images required for building the entire 3D model have not been sufficiently acquired, by using captured images acquired until that time point, 3D modeling is sequentially performed. By configuring as such, a 3D modeling result (3D model) can be acquired during an imaging operation, and thus the 3D model can be used in the navigation and the like of the imaging operation. Thus, a user can more easily perform imaging for 3D modeling.

In other words, this 3D modeling can be performed a plurality of times during an imaging operation. As the imaging operation progresses, and the number of captured images increases, a broader-range 3D model can be acquired, or a higher-fineness 3D model can be acquired. For example, as illustrated in Fig. 27, while a 3D model 321 from which only a range represented inside of a rectangle 311 could be acquired in the process of the first time, when the process is repeated the second time, the third time, and the fourth time, the number of used captured images increases, and as represented inside of rectangles 312, 313, and 314, a larger 3D model 321 is generated. Such 3D modeling is also referred to as an increment process.

For example, by displaying the 3D model 321 represented inside of the rectangle 311, a user can check a 3D modeling result of this displayed part. For example, the user can check whether an imaging missing has occurred or the like for this part. In other words, while an incomplete 3D model is fed back, the 3D model can be used although it is incomplete. In this way, by sequentially feeding back the 3D model 321 acquired using the increment process, a user can check a 3D modeling result before completion of the 3D model. Thus, typically, a user can (sequentially) check a 3D modeling result on a site on which an imaging operation is performed before the imaging operation ends. For this reason, the user, as in the flow 301, can perform imaging for 3D modeling more easily than a case in which no 3D modeling result can be referred to at all during an imaging operation (in other words, a case in which the user goes back to the house or the office and checks a 3D modeling result).

The method of this 3D modeling may be the same as that of final 3D modeling (3D model synthesis and the like of the flow 301). For example, the photogrammetry process may be applied. By applying a technique similar to that of the final 3D modeling, a 3D model that is approximately similar to a process result of the final 3D modeling can be fed back. In addition, a process that is completely the same as that of the case of the final 3D modeling may be performed, and in order to shorten the processing time, a part of the process may be omitted, or the process may be simplified.

<Reuse of Parameters>

The 3D modeling for feedback as described above (referred to also as a preliminary 3D modeling process) is executed prior to final 3D modeling (referred to also as a main 3D modeling process. However, although this preliminary 3D modeling process and the main 3D modeling process are basically the same processes, it is redundant and inefficient to independently perform such processes.

Thus, parameters acquired in the preliminary 3D modeling process are configured to be reused in the main 3D modeling process.

For example, as illustrated in Fig. 28, a main photogrammetry process 334 is executed using a process result of a navigation-assisted imaging process 331. In the main photogrammetry process 334, by using a main process image (a second captured image), a second 3D modeling process (referred to also as a main 3D modeling process) is performed, whereby second 3D data (referred to also as main process 3D data) as a content is generated. For example, as this main 3D modeling process, photogrammetry is applied. In the navigation-assisted imaging process 331, a process used for acquiring a main process image used in the main 3D modeling process is performed. For example, the first imaging is performed, whereby a first captured image is generated. Then, real-time 3D modeling is performed as a first 3D modeling process using the first captured image, whereby first 3D data is generated. For example, real-time 3D modeling is applied as this first 3D modeling process. Then, by using the first 3D data, navigation for second imaging such as scoring, imaging control, imaging guide, and the like are performed. Then, the second imaging is performed in accordance with the navigation, whereby a second captured image is generated. The second captured image is provided for the main photogrammetry process 334 as a main process image.

In parallel with this navigation-assisted imaging process 331, the preliminary photogrammetry process 332 is configured to be executed. In the preliminary photogrammetry process 332, for example, by using a preliminary process image (a second captured image), a second 3D modeling process (referred to also as a preliminary 3D modeling process) is performed, whereby second 3D data (referred to also as preliminary process 3D data) fed back to the navigation-assisted imaging process 331 is generated. For example, as this preliminary 3D modeling process, photogrammetry is applied.

In other words, the preliminary photogrammetry process 332 is executed prior to the main photogrammetry process 334. Thus, in order to be able to reuse information acquired in the preliminary photogrammetry process 332 in the main photogrammetry process 334, a parameter generating process 333 is executed. In this parameter generating process 333, for example, intermediate data and the like of the preliminary photogrammetry process 332 are acquired, and, on the basis of the intermediate data and the like, parameter information that can be used in the main 3D modeling process is generated. Then, the parameter information is provided for the main photogrammetry process 334 as metadata. In the main photogrammetry process 334, the main 3D modeling process is performed using the parameter information.

By reusing the parameter information in this way, the main 3D modeling process can be performed with higher efficiency. For example, by using the parameter information, a part of the main 3D modeling process is omitted, and high-speed processing can be achieved. In addition, by adding information using the parameter information, higher-quality main process 3D data can be generated. Furthermore, in a case in which RAW data before a developing process is provided for the main photogrammetry process 334 as a main process image, a developing process for the main process image can be also executed using the parameter information as pre-processing of the main 3D modeling process.

In addition, the preliminary photogrammetry process 332, the parameter generating process 333, and the main photogrammetry process 334 may be performed by any apparatus. For example, the preliminary photogrammetry process 332 and the parameter generating process 333 may be executed by a server.

For example, an information processing apparatus may include a preliminary 3D modeling processing unit that executes a preliminary 3D modeling process prior to the main 3D modeling process and a parameter information generating unit that generates parameter information used in the main 3D modeling process on the basis of information used in the preliminary 3D modeling process. In addition, in an information processing method, a preliminary 3D modeling process is executed prior to the main 3D modeling process, and parameter information used in the main 3D modeling process may be generated on the basis of information used in the preliminary 3D modeling process. The preliminary 3D modeling process and the main 3D modeling process represent a second 3D modeling process generating second three-dimensional shape information representing the three-dimensional shape of a 3D object on the basis of second captured images. In addition, the second captured images are generated using second imaging for imaging a 3D object on the basis of the first three-dimensional shape information by the second imaging unit. The first three-dimensional shape information is information that represents the three-dimensional shape of a 3D object generated on the basis of first captured images using the first 3D modeling process. In addition, the first captured images are generated using first imaging for imaging the 3D object described above using the first imaging unit.

As described above, this preliminary 3D modeling process may be a photogrammetry process.

Each of a size, a format, and the like of this main process image may be any. For example, it may be RAW data. In addition, each of a size, a format, and the like of a second captured image (referred to also as a preliminary process image) used in the preliminary photogrammetry process 332 may be any. For example, it may be a low-capacity image acquired by lowering the capacity of the second captured image. For example, it may be a reduced image acquired by reducing an image size of the main process image, or a compressed image (for example, Joint Photographic Experts Group (JPEG) data or the like) acquired by compressing the main process image may be used.

The main photogrammetry process 334 may be executed using an apparatus different from an apparatus executing the preliminary photogrammetry process 332. For example, the preliminary photogrammetry process 332 may be executed by a server as described above, and the main photogrammetry process 334 may be executed by an information processing apparatus that displays an image of 3D data that has been finally generated. In that case, parameter information generated from intermediate data and the like of the preliminary photogrammetry process 332 is supplied from the server to the information processing apparatus. In other words, an information processing apparatus including the preliminary 3D modeling processing unit and the parameter information generating unit described above may further include a communication unit that communicates with another apparatus executing the main 3D modeling process and supplies the parameter information.

In addition, the main photogrammetry process 334 may be executed by an apparatus executing the preliminary photogrammetry process 332. For example, a server may execute the preliminary photogrammetry process 332, the parameter generating process 333, and the main photogrammetry process 334. In other words, an information processing apparatus including the preliminary 3D modeling processing unit and the parameter information generating unit described above may further include a main 3D modeling processing unit that executes a main 3D modeling process using parameter information generated by the parameter information generating unit.

The parameter information generated using the parameter generating process 333 may be arbitrary information as long as it can be used in the main photogrammetry process 334.

For example, the parameter information may include posture information that represents the position of a viewpoint and a posture of a second captured image. In other words, the parameter information generating unit may include posture information generated in the preliminary 3D modeling process in the parameter information.

In addition, the parameter information may include absolute-scale posture information representing a position of a viewpoint and a posture of a second captured image on the basis of an absolute scale. In other words, the parameter information generating unit may include the absolute-scale posture information generated in the preliminary 3D modeling process in the parameter information.

In addition, the parameter information may include an unnecessary image list that is a list of second captured images that are not used in the preliminary 3D modeling process. In other words, the parameter information generating unit may include the unnecessary image list in the parameter information. In addition, the parameter information generating unit may generate the unnecessary image list.

In addition, the parameter information may include a recommended input image sequence list representing a recommended input sequence of second captured images in the preliminary 3D modeling process. In other words, the parameter information generating unit may include the recommended input image sequence list in the parameter information. In addition, the parameter information generating unit may generate the recommended input image sequence list.

In addition, the parameter information may include depth image information that represents a depth image associated with a second captured image. In other words, the parameter information generating unit may include the depth image information in the parameter information. In addition, the parameter information generating unit may generate the depth image information.

In addition, the parameter information may include region of interest information (ROI information) that represents a region of interest of the second three-dimensional shape information. In other words, the parameter information generating unit may include the ROI information in the parameter information. In addition, the parameter information generating unit may generate the ROI information.

In addition, the parameter information may include mask information used for removing an unnecessary part of the second three-dimensional shape information. In other words, the parameter information generating unit may include the mask information in the parameter information. In addition, the parameter information generating unit may generate the mask information.

In addition, the parameter information may include development parameters used in a developing process for a second captured image. In other words, the parameter information generating unit may include the development parameters in the parameter information. For example, the parameter information generating unit may include parameters relating to white balance and exposure in the parameter information as the development parameters.

A preliminary process image is generated in the navigation-assisted imaging process 331 using the main process image. This preliminary process image and the main process image are managed by being associated with each other. In accordance with this, the preliminary photogrammetry process 332 and the main photogrammetry process 334 can share parameters.

For example, an information processing apparatus may include a preliminary image generating unit that generates a preliminary image used in a preliminary 3D modeling process executed prior to the main 3D modeling process on the basis of a second captured image and associates the preliminary image with the second captured image. In addition, in an information processing method, a preliminary image used in a preliminary 3D modeling process executed prior to the main 3D modeling process is generated on the basis of a second captured image, and the preliminary image may be associated with the second captured image. Furthermore, the preliminary 3D modeling process and the main 3D modeling process represent a second 3D modeling process generating second three-dimensional shape information representing the three-dimensional shape of a 3D object on the basis of a second captured image. In addition, the second captured image is generated by the second imaging unit using second imaging for imaging a 3D object on the basis of the first three-dimensional shape information. Furthermore, the first three-dimensional shape information is information that represents the three-dimensional shape of a 3D object generated on the basis of the first captured image using the first 3D modeling process. In addition, the first captured image is generated by the first imaging unit using the first imaging for imaging a 3D object.

In addition, in a case in which the main photogrammetry process 334 using parameters is executed by an apparatus (for example, an information processing apparatus) different from an apparatus (for example, a server) executing the preliminary photogrammetry process 332, the information processing apparatus may include an acquisition unit that acquires parameter information generated on the basis of information used in the preliminary 3D modeling process executed prior to the main 3D modeling process and a main 3D modeling processing unit that executes a main 3D modeling process using the parameter information. Furthermore, in an information processing method, parameter information generated on the basis of information used in the preliminary 3D modeling process executed prior to the main 3D modeling process is acquired, and the main 3D modeling process may be executed using the parameter information. In addition, the preliminary 3D modeling process and the main 3D modeling process represent a second 3D modeling process generating second three-dimensional shape information representing the three-dimensional shape of a 3D object on the basis of a second captured image. Furthermore, the second captured image is generated by the second imaging unit using second imaging for imaging a 3D object on the basis of the first three-dimensional shape information. In addition, the first three-dimensional shape information is information that represents the three-dimensional shape of a 3D object generated on the basis of a first captured image using the first 3D modeling process. Furthermore, the first captured image is generated by the first imaging unit using first imaging for imaging a 3D object.

By configuring as such, as described above, parameters can be reused, and a 3D modeling process can be performed more efficiently.

<6. First Embodiment>

<Image Capturing Device>

Fig. 29 is a block diagram illustrating an example of the configuration of an image capturing device serving as one aspect of an information processing apparatus in which the present technology is applied. The image capturing device 1300 illustrated in Fig. 29 is a device that images a 3D object and performs 3D modeling using a captured image thereof. Fig. 29 illustrates main processing units and data flows, and the present disclosure is not limited to those illustrated in Fig. 29. In other words, the image capturing device 1300 may include apparatuses and processing units not illustrated in Fig. 29 as blocks. Moreover, the system may include data flows and processing that are not indicated as arrows or the like in Fig. 29.

As illustrated in Fig. 29, an image capturing device 1300 includes a first 3D data generating unit 1301, a scoring processing unit 1302, an imaging control unit 1303, a second 3D data generating unit 1304, an encoding unit 1305, a storage unit 1306, a communication unit 1307, an imaging guide output control unit 1308, and an output unit 1309. In addition, the first 3D data generating unit 1301 has a depth sensor 1311, an imaging unit 1312, an inertial measurement unit (IMU) 1313, and a real-time 3D modeling processing unit 1314. Furthermore, the real-time 3D modeling processing unit 1314 has a simultaneous localization and mapping (SLAM) 1321, a truncated signed distance function (TSDF) updating unit 1322, and a mesh generating unit 1323. In addition, the second 3D data generating unit 1304 has an operation unit 1331, an imaging unit 1332, an image processing unit 1333, and a photogrammetry processing unit 1334. Furthermore, the photogrammetry processing unit 1334 has a structure from motion (SfM) 1341 and a multi-view stereo (MVS) 1342.

The first 3D data generating unit 1301 performs a process relating to generation of first 3D data. For example, the first 3D data generating unit 1301 executes the first 3D data generating process 101 illustrated in Fig. 4. The depth sensor 1311 has a Lidar sensor (a dToF module) and the like, detects a depth to a subject, and supplies the detected depth to the TSDF updating unit 1322. The imaging unit 1312 has an image sensor and generates a captured image by imaging a subject. The imaging unit 1312 performs first imaging (that is, imaging for first 3D modeling (real-time 3D modeling)) of the first 3D data generating process 101 illustrated in Fig. 4. The imaging unit 1312 supplies the generated captured image to the SLAM 1321. The IMU 1313 detects inertial information (an acceleration and an angular velocity) of the image capturing device and supplies the inertial information to the SLAM 1321.

The real-time 3D modeling processing unit 1314 performs a process relating to real-time 3D modeling. For example, the real-time 3D modeling processing unit 1314 executes a first 3D modeling process (real-time 3D modeling) of the first 3D data generating process 101 illustrated in Fig. 4. In other words, the real-time 3D modeling processing unit 1314 generates first three-dimensional shape information representing the three-dimensional shape of a 3D object on the basis of a first captured image generated using first imaging that has imaged the 3D object.

The SLAM 1321 performs self-position estimation on the basis of the first captured image and the inertial information that have been supplied and generates posture information representing a position and a posture of the image capturing device 1300. The SLAM 1321 supplies the generated posture information to the TSDF updating unit 1322, the imaging control unit 1303, and the imaging guide output control unit 1308. The TSDF updating unit 1322 updates the TSDF on the basis of the posture information and the depth and supplies the updated TSDF to the mesh generating unit 1323. The mesh generating unit 1323 generates a mesh (and a texture) using the updated TSDF. The mesh generating unit 1323 supplies the mesh and the texture to the scoring processing unit 1302 as first 3D data (first three-dimensional shape information).

The scoring processing unit 1302 performs a process relating to scoring. For example, the scoring processing unit 1302 performs the scoring process 102 illustrated in Fig. 4 on the basis of the supplied first 3D data and the imaging viewpoint information (information representing a position and a posture with which second imaging has been performed) supplied from the imaging control unit 1303. In other words, by using the first three-dimensional shape information, the scoring processing unit 1302 evaluates accuracy of the second three-dimensional shape information that can be generated using a second captured image generated using second imaging performed until now and generates a scoring result. For example, the scoring processing unit 1302 may generate a scoring result for each local area of the first three-dimensional shape information on the basis of the first three-dimensional shape information and the position and the posture of the second imaging performed until now. For example, the scoring processing unit 1302 may generate a scoring result for each polygon of the mesh. The scoring processing unit 1302 supplies the scoring result to the imaging control unit 1303 and the imaging guide output control unit 1308.

In addition, the scoring processing unit 1302 may acquire camera information relating to the imaging unit 1332 and generate a scoring result on the basis of the camera information. Furthermore, the scoring processing unit 1302 may generate a scoring result on the basis of a position and a posture of the image capturing device 1300 corresponding to a timing of second imaging that is not based on the imaging control information according to the imaging unit 1332.

The imaging control unit 1303 performs a process relating to control of the second imaging. For example, the imaging control unit 1303 executes the second 3D modeling imaging control process 103 illustrated in Fig. 4. In other words, the imaging control unit 1303 generates imaging control information for controlling the second imaging on the basis of the scoring result and the posture information that have been supplied and supplies the generated imaging control information to the imaging unit 1332. This imaging control information, for example, is control information for causing the imaging unit 1332 to execute the second imaging (generate a second captured image). In other words, the imaging control unit 1303 obtains a position and a posture that are appropriate as second imaging on the basis of the scoring result and causes the imaging unit 1332 to execute second imaging with the position and the posture. In addition, the imaging control unit 1303 supplies imaging viewpoint information representing a position and a posture of the executed second imaging to the scoring processing unit 1302.

In addition, the imaging control unit 1303 may acquire imaging timing information representing a timing of second imaging that is not based on the imaging control information according to the imaging unit 1332 and supply posture information of the image capturing device 1300 corresponding to the imaging timing to the scoring processing unit 1302 as imaging viewpoint information.

The second 3D data generating unit 1304 performs a process relating to generation of second 3D data. For example, the second 3D data generating unit 1304 executes the second 3D data generating process 104 illustrated in Fig. 4. The operation unit 1331 receives an instruction for the imaging unit 1332 from a user or the like and supplies the instruction to the imaging unit 1332.

The imaging unit 1332 has an image sensor and generates a captured image by imaging a subject. The imaging unit 1332 performs second imaging (that is, imaging for second 3D modeling (photogrammetry)) of the second 3D data generating process 104 illustrated in Fig. 4. The imaging unit 1332 supplies the generated captured image to the image processing unit 1333.

The imaging unit 1332, for example, may perform second imaging in accordance with control of the imaging control unit 1303 (on the basis of imaging control information supplied from the imaging control unit 1303) and generate a second captured image. In addition, the imaging unit 1332 may perform second imaging in accordance with an instruction supplied from the operation unit 1331 and generate a second captured image. Furthermore, the imaging unit 1332 may supply camera information (internal parameters, external parameters, field of view information, and the like of the imaging unit 1332) to the scoring processing unit 1302. In addition, the imaging unit 1332 may supply imaging timing information representing a timing of second imaging that is not based on the imaging control information to the imaging control unit 1303 and the imaging guide output control unit 1308.

The image processing unit 1333 performs predetermined image processing on a captured image (a second captured image) generated by the imaging unit 1332. The image processing may be any type of image processing. The image processing unit 1333 supplies the captured image to the SfM 1341. In addition, the image processing unit 1333 may supply the captured image to the encoding unit 1305 and the imaging guide output control unit 1308.

The photogrammetry processing unit 1334 performs a process relating to photogrammetry for a second captured image. For example, the photogrammetry processing unit 1334 executes the second 3D modeling process of the second 3D data generating process 104 illustrated in Fig. 4. In other words, the photogrammetry processing unit 1334 generates second three-dimensional shape information on the basis of a second captured image generated by the imaging unit 1332.

The SfM 1341, for example, searches for corresponding points between second captured images, derives a position and a posture of the camera using epipolar constraints, identifies a position of each corresponding point in a three-dimensional space through triangulation based on the position and the posture of the camera that have been derived, optimizes the entire identified three-dimensional point group through bundle adjustment, and then supplies the optimized three-dimensional point group to the MVS 1342. The MVS 1342, for example, additionally performs a denser corresponding point search using the three-dimensional point group, adds a three-dimensional point, further performs meshing and texturing as post processing, and generates second 3D data. The MVS 1342 supplies the generated second 3D data to the encoding unit 1305.

The encoding unit 1305 encodes the supplied second 3D data and supplies the encoded data to the storage unit 1306 and the communication unit 1307. In addition, the encoding unit 1305 may encode the supplied second captured image and supply the encoded data to the storage unit 1306 and the communication unit 1307.

The storage unit 1306 stores the supplied encoded data. The communication unit 1307 transmits the supplied encoded data to other information processing apparatuses (for example, a server and the like).

The imaging guide output control unit 1308 performs a process relating to guide for second imaging. For example, the imaging guide output control unit 1308 executes the second 3D modeling imaging guide output process 105 illustrated in Fig. 4. In other words, the imaging guide output control unit 1308 generates guide information for second imaging and controls output of the guide information. For example, the imaging guide output control unit 1308 generates the guide information described above on the basis of the supplied scoring result and the posture information of the image capturing device 1300. In addition, the imaging guide output control unit 1308 may generate guide information on the basis of the supplied imaging timing information. The imaging guide output control unit 1308 supplies the generated guide information to the output unit 1309 and, for example, causes the guide information to be output as an image, a voice, or the like. In addition, the imaging guide output control unit 1308 may cause a supplied captured image to be displayed to overlap the guide information (an image).

The output unit 1309 outputs guide information as an image, a voice, or the like in accordance with control of the imaging guide output control unit 1308.

By employing such a configuration, the image capturing device 1300 can image a 3D object with a position and a posture that are more appropriate and execute 3D modeling (a second 3D modeling process) using the captured image. Thus, the image capturing device 1300 can generate higher-accuracy 3D data while suppressing an increase in the load of 3D modeling. In addition, the image capturing device 1300 can output guide information such that a user can perform second imaging with a position a posture that are more appropriate. In other words, the image capturing device 1300 can execute 3D modeling (a second 3D modeling process) using the captured image. Thus, the image capturing device 1300 can generate higher-accuracy 3D data while suppressing an increase in the load of 3D modeling. In other words, a user can perform 3D modeling more easily.

<Flow of 3D Modeling Process>

An example of the flow of the 3D modeling process executed by this image capturing device 1300 will be described with reference to a flowchart illustrated in Fig. 30.

When the 3D modeling process starts, in Step S301, the depth sensor 1311, the imaging unit 1312, and the IMU 1313 respectively acquire a depth, a captured image, and inertial information.

In Step S302, the real-time 3D modeling processing unit 1314 executes a real-time 3D modeling process and generates first 3D data.

In Step S303, the scoring processing unit 1302 performs scoring of first 3D data on the basis of second imaging performed until now.

In Step S304, the imaging guide output control unit 1308 generates an imaging guide (guide information) for second imaging on the basis of the scoring result, the posture information, and the like. The output unit 1309 outputs the imaging guide (guide information).

In Step S305, the imaging control unit 1303 controls photogrammetry imaging (second imaging) on the basis of the scoring result, the posture information, and the like.

In Step S306, the imaging unit 1332 performs imaging in accordance with the control (performs second imaging).

In Step S307, the imaging control unit 1303 and the imaging guide output control unit 1308 acquire camera information from the imaging unit 1332. In addition, the scoring processing unit 1302 acquires imaging timing information from the imaging unit 1332.

In Step S308, the imaging control unit 1303 determines whether or not photogrammetry imaging (second imaging) is to be ended. In a case in which it is determined that photogrammetry imaging is not to be ended, the process returns to Step S303. In addition, in a case in which it is determined that photogrammetry imaging is to be ended in Step S308, the process proceeds to Step S309.

In Step S309, the photogrammetry processing unit 1334 executes a photogrammetry process and generates second 3D data.

In Step S310, the encoding unit 1305 encodes the second 3D data.

In Step S311, the storage unit 1306 stores the encoded data. In addition, the communication unit 1307 transmits the encoded data to other apparatuses (for example, a server and the like).

When the process of Step S311 ends, the 3D modeling process ends.

<Flow of Real-time 3D Modeling Process>

An example of the flow of the real-time 3D modeling process executed in Step S302 illustrated in Fig. 30 will be described with reference to a flowchart illustrated in Fig. 31.

When the real-time 3D modeling process starts, the SLAM 1321 derives posture information representing a three-dimensional posture of the image capturing device 1300 on the basis of a captured image and inertial information in Step S331.

In Step S332, the TSDF updating unit 1322 updates the TSDF on the basis of the captured image, the posture information, and the depth.

In Step S333, the mesh generating unit 1323 generates first 3D data on the basis of the updated TSDF.

When the process of Step S333 ends, the real-time 3D modeling process ends, and the process returns to Fig. 30.

<Flow of Photogrammetry Process>

An example of the flow of the photogrammetry process executed in Step S309 illustrated in Fig. 30 will be described with reference to a flowchart illustrated in Fig. 32.

When the photogrammetry process starts, the SfM 1341 detects corresponding points between captured images in Step S351.

In Step S352, the SfM 1341 derives a three-dimensional posture of the camera using epipolar constraints.

In Step S353, the SfM 1341 derives three-dimensional points using triangulation.

In Step S354, the SfM 1341 optimizes all the three-dimensional points through bundle adjustment.

In Step S355, the MVS 1342 derives three-dimensional points using a dense corresponding point search and generates second 3D data.

When the process of Step S355 ends, the photogrammetry process ends, and the process returns to Fig. 30.

By executing each process as above, the image capturing device 1300 images a 3D object with a position and a posture that are more appropriate and can execute 3D modeling (a second 3D modeling process) using the captured image. Thus, the image capturing device 1300 can generate higher-accuracy 3D data while suppressing an increase in the load of the 3D modeling. In addition, the image capturing device 1300 can output guide information such that a user can perform second imaging with a position and a posture that are more appropriate. In other words, the image capturing device 1300 can execute 3D modeling (a second 3D modeling process) using the captured image. Thus, the image capturing device 1300 can generate higher-accuracy 3D data while suppressing an increase in the load of the 3D modeling. In other words, a user can perform 3D modeling more easily.

<7. Second Embodiment>

<Information Processing System 1>

The present technology is not limited to the example described above and can be applied to an arbitrary configuration. For example, the present technology can be applied to an information processing system that performs 3D modeling.

For example, in an information processing system including an information processing apparatus and an image capturing device, the information processing apparatus may include a first 3D modeling processing unit that generates first three-dimensional shape information representing the three-dimensional shape of a 3D object on the basis of a first captured image generated using first imaging for imaging the 3D object, a scoring processing unit that evaluates accuracy of second three-dimensional shape information that can be generated using a second captured image generated using second imaging performed until now using the first three-dimensional shape information and generates a scoring result, an imaging control unit that generates imaging control information for controlling the second imaging for imaging a 3D object on the basis of a position and a posture of the image capturing device and the scoring result, and a first communication unit that supplies the imaging control information to the image capturing device. In addition, the image capturing device may include a second communication unit that acquires the imaging control information supplied from the information processing apparatus and an imaging unit that images a 3D object on the basis of the imaging control information and generates a second captured image.

Fig. 33 is a diagram illustrating a configuration example of one aspect of an information processing system to which the present technology is applied. The information processing system 1400 illustrated in Fig. 33 is a system that images a 3D object and performs 3D modeling using the captured image. As illustrated in Fig. 33, the information processing system 1400 has an imaging communication device 1401, an image capturing device 1402, and a server 1403. The imaging communication device 1401 and the server 1403 are connected to be able to communicate with each other through a network 1404. The network 1404, for example, is a communication path configured using an arbitrary communication medium such as the Internet, a local area network (LAN), a wireless LAN, or the like.

The imaging communication device 1401, for example, is an information processing apparatus having a communication function for being able to communicate with an arbitrary apparatus through the network 1404 such as a smartphone or the like and an imaging function. The image capturing device 1402, for example, is an information processing apparatus having an imaging function such as a digital camera. The image capturing device 1402 can communicate only with the imaging communication device 1401. The imaging communication device 1401 and the image capturing device 1402 are fixedly connected to each other and are used as a terminal device 1410 by a user. The server 1403 acquires a second captured image generated by the terminal device 1410 (the image capturing device 1402), performs second 3D modeling (a photogrammetry process) using the second captured image, generates second 3D data, and stores (manages) the second 3D data.

Fig. 34 is a block diagram illustrating a main configuration example of the imaging communication device 1401. Fig. 34 illustrates main processing units and data flows. The present disclosure is not limited to those illustrated in Fig. 34. In other words, the imaging communication device 1401 may have apparatuses and processing units not illustrated as blocks in Fig. 34. Moreover, the system may include data flows and processing that are not indicated as arrows or the like in Fig. 34.

As illustrated in Fig. 34, the imaging communication device 1401 has a communication unit 1421 in place of the second 3D data generating unit 1304 of the configuration of the image capturing device 1300 (Fig. 29). In other words, the other components are similar to those of the image capturing device 1300.

The communication unit 1421 is connected to the image capturing device 1402 to be able to communicate with each other and transmits/receives information by communicating with the image capturing device 1402. For example, the communication unit 1421 may supply imaging control information supplied from the imaging control unit 1303 to the image capturing device 1402. In addition, the communication unit 1421 may acquire a second captured image generated by the image capturing device 1402 and supply the acquired second captured image to the encoding unit 1305 and the imaging guide output control unit 1308. In addition, the communication unit 1421 may acquire camera information supplied from the image capturing device 1402 and supply the acquired camera information to the scoring processing unit 1302. This camera information may include internal parameters, external parameters, field of view information, and the like (of the imaging unit 1332) of the image capturing device 1402. In addition, the communication unit 1421 may acquire imaging timing information supplied from the image capturing device 1402 and supply the acquired imaging timing information to the imaging control unit 1303 and the imaging guide output control unit 1308. This imaging timing information represents a timing of imaging performed by (the imaging unit 1332 of) the image capturing device 1402 not on the basis of the imaging control information.

In addition, the communication unit 1307 is connected to the server 1403 to be able to communicate with each other through the network 1404 and transmits/-receives information by communicating with the server 1403. For example, the encoding unit 1305 encodes the second captured image supplied from the communication unit 1421 and supplies the encoded data to the storage unit 1306 and the communication unit 1307. The storage unit 1306 stores the encoded data of the second captured image. The communication unit 1307 supplies the encoded data of the second captured image to the server 1403 through the network 1404.

Fig. 35 is a block diagram illustrating a main configuration example of the image capturing device 1402. Fig. 35 illustrates main processing units and data flows. The present disclosure is not limited to those illustrated in Fig. 35. In other words, the image capturing device 1402 may have apparatuses and processing units not illustrated in Fig. 35 as blocks. Moreover, the system may include data flows and processing that are not indicated as arrows or the like in Fig. 35.

As illustrated in Fig. 35, the image capturing device 1402 has an operation unit 1331, an imaging unit 1332, an image processing unit 1333, a communication unit 1431, an encoding unit 1432, and a storage unit 1433. The operation unit 1331, the imaging unit 1332, and the image processing unit 1333 perform processes similar to those of the image capturing device 1300 illustrated in Fig. 29.

The communication unit 1431 is connected to the imaging communication device 1401 to be able to communicate with each other and transmits/receives information by communicating with the imaging communication device 1401. For example, the communication unit 1431 may acquire imaging control information supplied from the imaging communication device 1401 and supply the imaging control information to the imaging unit 1332. In addition, the communication unit 1431 may acquire camera information supplied from the imaging unit 1332 and supply the camera information to the imaging communication device 1401. This camera information may include internal parameters, external parameters, field of view information, and the like of the imaging unit 1332. In addition, the communication unit 1431 may acquire imaging timing information supplied from the imaging unit 1332 and supply the imaging timing information to the imaging communication device 1401. This imaging timing information represents a timing of imaging performed by the imaging unit 1332 not on the basis of the imaging control information. In addition, the communication unit 1431 may acquire a second captured image supplied from the image processing unit 1333 and supply the second captured image to the imaging communication device 1401.

The encoding unit 1432 encodes a second captured image supplied from the image processing unit 1333 and supplies the encoded data to the storage unit 1433. The storage unit 1433 stores the encoded data.

Fig. 36 is a block diagram illustrating a main configuration example of the server 1403. Fig. 36 illustrates main processing units and data flows. The present disclosure is not limited to those illustrated in Fig. 36. In other words, the server 1403 may have apparatuses and processing units not illustrated in Fig. 36 as blocks. Moreover, the system may include data flows and processing that are not indicated as arrows or the like in Fig. 36.

As illustrated in Fig. 36, the server 1403 has a communication unit 1441, a decoding unit 1442, a photogrammetry processing unit 1334, an encoding unit 1444, and a storage unit 1445. The photogrammetry processing unit 1334 has a configuration similar to that of the case of the image capturing device 1300 illustrated in Fig. 29 and performs a similar process.

The communication unit 1441 is connected to the imaging communication device 1401 to be able to communicate with each other through a network 1404 and transmits/receives information by communicating with other apparatuses such as the imaging communication device 1401 and the like. For example, the communication unit 1441 acquires encoded data of a second captured image supplied from the imaging communication device 1401 and supplies the encoded data to the decoding unit 1442. In addition, the communication unit 1441 may supply encoded data of the second 3D data supplied from the encoding unit 1444 to another apparatus (for example, the imaging communication device 1401) through the network 1404.

The decoding unit 1442 decodes the encoded data of the second captured image supplied from the communication unit 1441 and generates (restores) the second captured image. The decoding unit 1442 supplies the second captured image to the photogrammetry processing unit 1334 (the SfM 1341). The photogrammetry processing unit 1334 executes second 3D modeling (a photogrammetry process) using the second captured image and generates second 3D data. The photogrammetry processing unit 1334 (the MVS 1342) supplies the generated second 3D data to the encoding unit 1444.

The encoding unit 1444 encodes the supplied second 3D data and supplies the encoded data to the storage unit 1445. In addition, the encoding unit 1444 may supply the encoded data of the second 3D data to the communication unit 1441. The storage unit 1445 stores the supplied encoded data of the second 3D data.

In accordance with each apparatus having such a configuration, the information processing system 1400 can image a 3D object with a position and a posture that are more appropriate and execute 3D modeling (a second 3D modeling process) using the captured image. Therefore, the information processing system 1400 can generate higher-accuracy 3D data while suppressing an increase in the load of the 3D modeling. In addition, the information processing system 1400 can output guide information such that a user can perform second imaging with a position and a posture that are more appropriate. In other words, the information processing system 1400 can execute 3D modeling (a second 3D modeling process) using the captured image. Therefore, the information processing system 1400 can generate higher-accuracy 3D data while suppressing an increase in the load of the 3D modeling. In other words, a user can perform the 3D modeling more easily.

<Flow of 3D Modeling Process>

An example of the flow of the 3D modeling process executed by this information processing system 1400 will be described with reference to flowcharts illustrated in Figs. 37 and 38.

When the 3D modeling process starts, in Step S401 illustrated in Fig. 37, the depth sensor 1311, the imaging unit 1312, and the IMU 1313 of the imaging communication device 1401 respectively acquire a depth, a captured image, and inertial information.

In Step S402, the real-time 3D modeling processing unit 1314 of the imaging communication device 1401 executes a real-time 3D modeling process and generates first 3D data. This real-time 3D modeling process is executed similar to the example illustrated in Fig. 31.

In Step S403, the scoring processing unit 1302 of the imaging communication device 1401 performs scoring of the first 3D data on the basis of the second imaging performed until now.

In Step S404, the imaging guide output control unit 1308 of the imaging communication device 1401 generates an imaging guide (guide information) for second imaging on the basis of a scoring result, posture information, and the like. The output unit 1309 outputs the imaging guide (guide information).

In Step S405, the imaging control unit 1303 of the imaging communication device 1401 generates imaging control information for controlling photogrammetry imaging (second imaging) on the basis of a scoring result, posture information, and the like. The communication unit 1421 supplies the imaging control information to the image capturing device 1402. The communication unit 1431 of the image capturing device 1402 acquires the imaging control information in Step S411.

In Step S412, the imaging unit 1332 of the image capturing device 1402 performs imaging (performs second imaging) in accordance with the control and generates a second captured image. The image processing unit 1333 performs predetermined image processing for the second captured image.

In Step S413, the communication unit 1431 of the image capturing device 1402 supplies the second captured image to the imaging communication device 1401. The communication unit 1421 of the imaging communication device 1401 acquires the second captured image in Step S406.

In addition, in Step S414, the communication unit 1431 of the image capturing device 1402 supplies camera information and imaging timing information of the imaging unit 1332 to the imaging communication device 1401. The communication unit 1421 of the imaging communication device 1401 acquires the camera information and the imaging timing information in Step S407.

In Step S441 illustrated in Fig. 38, the encoding unit 1432 of the image capturing device 1402 encodes a second captured image. The storage unit 1433 stores encoded data of the second captured image.

In Step S431, the encoding unit 1305 of the imaging communication device 1401 encodes the second captured image. The communication unit 1307 supplies encoded data of the second captured image to the server 1403. The communication unit 1441 of the server 1403 acquires the encoded data of the second captured image in Step S451. The decoding unit 1442 generates (restores) the second captured image by decoding the encoded data.

In Step S452, the photogrammetry processing unit 1334 of the server 1403 executes a photogrammetry process and generates second 3D data. This photogrammetry process is executed similarly to the example illustrated in Fig. 32.

In Step S453, the encoding unit 1444 of the server 1403 encodes the second 3D data.

In Step S454, the storage unit 1445 of the server 1403 stores the encoded data. In addition, the communication unit 1441 transmits the encoded data to other apparatuses (for example, the imaging communication device 1401 and the like).

In addition, in Step S432, the imaging control unit 1303 of the imaging communication device 1401 determines whether or not the photogrammetry imaging (the second imaging) is to be ended. In a case in which it is determined that the photogrammetry imaging is not to be ended, the process returns to Step S403 illustrated in Fig. 37. In addition, in a case in which it is determined that the photogrammetry imaging is to be ended in Step S432 illustrated in Fig. 38, the 3D modeling process ends.

By executing each process in this way, the information processing system 1400 can image a 3D object with a position and a posture that are more appropriate and execute 3D modeling (a second 3D modeling process) using the captured image. Therefore, the information processing system 1400 can generate higher-accuracy 3D data while suppressing an increase in the load of the 3D modeling. In addition, the information processing system 1400 can output guide information such that a user can perform the second imaging with a position and a posture that are more appropriate. In other words, the information processing system 1400 can execute 3D modeling (a second 3D modeling process) using the captured image. Thus, the information processing system 1400 can generate higher-accuracy 3D data while suppressing an increase in the load of the 3D modeling. In other words, a user can perform 3D modeling more easily.

<Information Processing System 2>

In addition, in the information processing system 1400, the scoring process may be performed by the server 1403.

A main configuration example of the imaging communication device 1401 in that case is illustrated in Fig. 39. Fig. 39 illustrates main processing units and data flows. The present disclosure is not limited to those illustrated in Fig. 39. In other words, the imaging communication device 1401 may have apparatuses and processing units not illustrated in Fig. 39 as blocks. Moreover, the system may include data flows and processing that are not indicated as arrows or the like in Fig. 39.

As illustrated in Fig. 39, in the imaging communication device 1401 of this case, the scoring processing unit 1302 is omitted from the configuration illustrated in Fig. 34. In this case, the communication unit 1307 supplies imaging viewpoint information supplied from the imaging control unit 1303 to the server 1403.

In addition, in this case, the real-time 3D modeling processing unit 1314 (the mesh generating unit 1323) supplies the generated first 3D data to the encoding unit 1305. The encoding unit 1305 encodes the first 3D data and supplies the encoded data to the communication unit 1307. The communication unit 1307 supplies the encoded data of the first 3D data supplied from the encoding unit 1305 to the server 1403.

In addition, the communication unit 1307 acquires a scoring result derived by (the scoring processing unit 1302 of) the server 1403 and supplies the scoring result to the imaging control unit 1303 and the imaging guide output control unit 1308.

Furthermore, the communication unit 1307, similarly to the case illustrated in Fig. 35, supplies the encoded data of the second captured image supplied from the encoding unit 1305 to the server 1403.

In addition, in this case, the communication unit 1421 acquires camera information (of the imaging unit 1332) supplied from the image capturing device 1402 and supplies the camera information to the encoding unit 1305. The encoding unit 1305 encodes the camera information and supplies the encoded camera information to the communication unit 1307. The communication unit 1307 supplies the encoded data of the camera information to the server 1403.

Fig. 40 is a block diagram illustrating a main configuration example of the server 1403 in this case. Fig. 40 illustrates main processing units and data flows. The present disclosure is not limited to those illustrated in Fig. 40. In other words, the server 1403 may have apparatuses and processing units not illustrated in Fig. 40 as blocks. Moreover, the system may include data flows and processing that are not indicated as arrows or the like in Fig. 40.

As illustrated in Fig. 40, in this case, the server 1403 has a scoring processing unit 1302 in addition to the components illustrated in Fig. 36. In this case, the communication unit 1441 acquires encoded data of the first 3D data supplied from the imaging communication device 1401 and supplies the encoded data of the first 3D data to the decoding unit 1442. The decoding unit 1442 decodes the encoded data and generates (restores) the first 3D data. The decoding unit 1442 supplies the first 3D data to the scoring processing unit 1302.

In addition, the communication unit 1441 acquires imaging viewpoint information supplied from the imaging communication device 1401 and supplies the imaging viewpoint information to the decoding unit 1442. The decoding unit 1442 supplies the imaging control information to the scoring processing unit 1302.

In addition, the communication unit 1441 acquires the encoded data of the camera information supplied from the imaging communication device 1401 and supplies the encoded data of the camera information to the decoding unit 1442. The decoding unit 1442 generates (restores) the camera information by decoding the encoded data. The decoding unit 1442 supplies the camera information to the scoring processing unit 1302.

In addition, the communication unit 1441, similarly to the case illustrated in Fig. 36, acquires encoded data of the second captured image supplied from the imaging communication device 1401 and supplies the encoded data of the second captured image to the decoding unit 1442. The decoding unit 1442 decodes the encoded data and generates (restores) the second captured image. The decoding unit 1442 supplies the second captured image to the photogrammetry processing unit 1334.

Also in this case, the scoring processing unit 1302 performs the scoring process 102 illustrated in Fig. 4 on the basis of the first 3D data and the imaging viewpoint information that has been supplied and derives a scoring result. In addition, the scoring processing unit 1302 may perform the scoring process 102 on the basis of the camera information. The scoring processing unit 1302 supplies the scoring result to the encoding unit 1444. The encoding unit 1444 supplies the scoring result to the communication unit 1441. The communication unit 1441 supplies the scoring result to the imaging communication device 1401.

The other processes are similar to the case illustrated in Fig. 36.

In accordance with each apparatus having such a configuration, the information processing system 1400, also in this case, can image a 3D object with a position and a posture that are more appropriate and execute 3D modeling (a second 3D modeling process) using the captured image. Therefore, the information processing system 1400 can generate higher-accuracy 3D data while suppressing an increase in the load of the 3D modeling. In addition, the information processing system 1400 can output guide information such that a user can perform second imaging with a position and a posture that are more appropriate. In other words, the information processing system 1400 can execute 3D modeling (the second 3D modeling process) using the captured image. Therefore, the information processing system 1400 can generate higher-accuracy 3D data while suppressing an increase in the load of the 3D modeling. In other words, a user can perform 3D modeling more easily.

<Flow of 3D Modeling Process>

An example of the flow of a 3D modeling process executed by the information processing system 1400 of this case will be described with reference to flowcharts illustrated in Figs. 41 and 42.

When the 3D modeling process starts, in Step S501 illustrated in Fig. 41, the depth sensor 1311, the imaging unit 1312, and the IMU 1313 of the imaging communication device 1401 respectively acquire a depth, a captured image, and inertial information.

In Step S502, the real-time 3D modeling processing unit 1314 of the imaging communication device 1401 generates first 3D data by executing a real-time 3D modeling process. This real-time 3D modeling process is executed similar to the example illustrated in Fig. 31.

In Step S503, the communication unit 1307 of the imaging communication device 1401 supplies the generated first 3D data to the server 1403. The communication unit 1441 of the server 1403 acquires the first 3D data in Step S521.

In Step S522, the scoring processing unit 1302 of the server 1403 performs scoring of the first 3D data on the basis of the second imaging performed until now.

In Step S523, the communication unit 1441 of the server 1403 supplies the scoring result to the imaging communication device 1401. The communication unit 1307 of the imaging communication device 1401 acquires the scoring result in Step S504.

In Step S505, the imaging guide output control unit 1308 of the imaging communication device 1401 generates an imaging guide (guide information) for second imaging on the basis of the scoring result, the posture information, and the like. The output unit 1309 outputs the imaging guide (the guide information).

In Step S506, the imaging control unit 1303 of the imaging communication device 1401 generates imaging control information for controlling photogrammetry imaging (second imaging) on the basis of the scoring result, the posture information, and the like. The communication unit 1421 supplies the imaging control information to the image capturing device 1402. The communication unit 1431 of the image capturing device 1402 acquires the imaging control information in Step S511.

In addition, the communication unit 1307 of the imaging communication device 1401, in Step S507, supplies the imaging viewpoint information to the server 1403. The communication unit 1441 of the server 1403 acquires the imaging viewpoint information in Step S524.

In Step S541 illustrated in Fig. 42, the imaging unit 1332 of the image capturing device 1402 performs imaging (performs second imaging) in accordance with imaging control information and generates a second captured image. The image processing unit 1333 performs predetermined image processing for the second captured image.

In Step S542, the communication unit 1431 of the image capturing device 1402 supplies the second captured image to the imaging communication device 1401. The communication unit 1421 of the imaging communication device 1401 acquires the second captured image in Step S531.

In addition, in Step S543, the communication unit 1431 of the image capturing device 1402 supplies the camera information and the imaging timing information of the imaging unit 1332 to the imaging communication device 1401. The communication unit 1421 of the imaging communication device 1401 acquires the camera information and the imaging timing information in Step S532.

In Step S544, the encoding unit 1432 of the image capturing device 1402 encodes the second captured image. The storage unit 1433 stores the encoded data of the second captured image.

In Step S533, the encoding unit 1305 of the imaging communication device 1401 encodes the second captured image. The communication unit 1307 supplies the encoded data of the second captured image to the server 1403. The communication unit 1441 of the server 1403 acquires the encoded data of the second captured image in Step S551. The decoding unit 1442 generates (restores) the second captured image by decoding the encoded data.

In Step S552, the photogrammetry processing unit 1334 of the server 1403 executes a photogrammetry process and generates second 3D data. This photogrammetry process is executed similarly to the example illustrated in Fig. 32.

In Step S553, the encoding unit 1444 of the server 1403 encodes the second 3D data.

In Step S554, the storage unit 1445 of the server 1403 stores the encoded data. In addition, the communication unit 1441 transmits the encoded data to other apparatuses (for example, the imaging communication device 1401 and the like).

In addition, in Step S534, the imaging control unit 1303 of the imaging communication device 1401 determines whether or not the photogrammetry imaging (the second imaging) is to be ended. In a case in which it is determined that the photogrammetry imaging is not to be ended, the process returns to Step S522 illustrated in Fig. 41. In addition, in a case in which it is determined that the photogrammetry imaging is to be ended in Step S534 illustrated in Fig. 42, the 3D modeling process ends.

By executing each process in this way, the information processing system 1400, also in this case, can image a 3D object with a position and a posture that are more appropriate and execute 3D modeling (a second 3D modeling process) using the captured image. Therefore, the information processing system 1400 can generate higher-accuracy 3D data while suppressing an increase in the load of the 3D modeling. In addition, the information processing system 1400 can output guide information such that a user can perform second imaging with a position and a posture that are more appropriate. In other words, the information processing system 1400 can execute 3D modeling (the second 3D modeling process) using the captured image. Therefore, the information processing system 1400 can generate higher-accuracy 3D data while suppressing an increase in the load of the 3D modeling. In other words, a user can perform 3D modeling more easily.

<8. Third Embodiment>

<Reuse of Parameter>

The present technology described above in <5. Reuse of Parameter> can be applied to an arbitrary information processing apparatus. For example, the present technology can be applied to any one of systems and apparatuses described in the first embodiment and the second embodiment. In addition, the present technology can be applied also to apparatuses and systems other than those described above.

<Information Processing System>

For example, the present technology described above in <5. Reuse of Parameter> may be applied to an information processing system 1600 illustrated in Fig. 43. Hereinafter, that case will be described.

The information processing system 1600 illustrated in Fig. 43 has an imaging communication device 1601, a server 1602, and an information processing apparatus 1603. The imaging communication device 1601, the server 1602, and the information processing apparatus 1603 are connected to be able to communicate with each other through a network 1404.

The imaging communication device 1601, for example, is an information processing apparatus such as a smartphone having a communication function capable of communicating with an arbitrary apparatus through the network 1404 and an imaging function. The imaging communication device 1601 can perform the navigation-assisted imaging process 331 illustrated in Fig. 28. For example, the imaging communication device 1601 can perform first imaging, first 3D modeling, scoring, imaging control, imaging guide, second imaging, and the like. In addition, the imaging communication device 1601 can perform processes such as imaging assistance such as displaying preliminary process 3D data generated by a preliminary 3D modeling process, coordinate setting such as taking correspondence of a coordinate system, and the like. In other words, the imaging communication device 1601 can perform processes such as the first 3D data generating process 101, the scoring processing unit 102, the second 3D modeling imaging control process 103, the second 3D modeling imaging guide output process 105, the second imaging of the second 3D data generating process 104, the feedback process 106, and the like illustrated in Fig. 4.

The server 1602, for example, is a high-performance computer and is an information processing apparatus having a communication function capable of communicating with an arbitrary apparatus through the network 1404 and an information processing function performing advanced information processing. The server 1602 can perform the preliminary photogrammetry process 332 illustrated in Fig. 28 and the parameter generating process 333. For example, the server 1602 can acquire a preliminary process image from the imaging communication device 1601, perform a preliminary 3D modeling process using the preliminary process captured image, and supply preliminary process 3D data and the like to the imaging communication device 1601 as a result thereof. In addition, the server 1602, by using intermediate data and the like of the preliminary 3D modeling process, can generate parameter information used in the main 3D modeling process. In other words, the server 1602 can execute the feedback process 106 illustrated in Fig. 4.

In addition, by transmitting/receiving coordinate setting information, the imaging communication device 1601 and the server 1602 can associate coordinate systems of 3D modeling performed thereby with each other.

The information processing apparatus 1603 is an information processing apparatus, for example, such as a personal computer that has a communication function capable of performing communication with an arbitrary apparatus through the network 1404 and an information processing function performing advanced information processing. The information processing apparatus 1603 can perform the main photogrammetry process 334 illustrated in Fig. 28. For example, the information processing apparatus 1603 can acquire a main process image from the imaging communication device 1601 through a removable medium or the like. In addition, the information processing apparatus 1603 can acquire parameter information generated on the basis of the preliminary 3D modeling process from the server 1602. Then, the information processing apparatus 1603 performs the main 3D modeling process using the main process image and the parameter information and can generate main process 3D data and the like as a result thereof. In addition, the information processing apparatus 1603 can perform display of an image of the main process 3D data as well. By executing the main 3D modeling process in this way, the information processing apparatus 1603 can execute the main photogrammetry process 334 more efficiently. For example, by using this parameter information, the information processing apparatus 1603 can perform the main 3D modeling process at a high speed. In addition, by using this parameter information, the information processing apparatus 1603 can generate higher-quality 3D data. Furthermore, by using this parameter information, the information processing apparatus 1603 can execute a developing process for the main process captured image as well.

The parameter information reused in the main photogrammetry process 334 may be any information. The parameter information may be composed of a single parameter or may include a plurality of parameters. In addition, information other than a parameter may be included therein. Hereinafter, each example of the parameter information will be described.

<SfM Posture Information>

For example, SfM posture information generated in the SfM of the preliminary photogrammetry process 332 may be included in this parameter information. Fig. 44 is a block diagram illustrating a main configuration example of the imaging communication device 1601 in this case. As illustrated in Fig. 44, similar to the image capturing device 1300 (Fig. 29), the imaging communication device 1601 has a first 3D data generating unit 1301, a scoring processing unit 1302, an imaging control unit 1303, a storage unit 1306, a communication unit 1307, an imaging guide output control unit 1308, and an output unit 1309. Similarly to the case illustrated in Fig. 29, the first 3D data generating unit 1301 has a depth sensor 1311, an imaging unit 1312, an IMU 1313, and a real-time 3D modeling processing unit 1314. In addition, this real-time 3D modeling processing unit 1314 has a SLAM 1321, a TSDF updating unit 1322, and a mesh generating unit 1323. Similar to the image capturing device 1300 (Fig. 29), the imaging communication device 1601 has an operation unit 1331 and an imaging unit 1332. Such processing units perform processes similar to those of the case illustrated in Fig. 29.

In the case of the example illustrated in Fig. 44, the imaging communication device 1601 has a low-capacity image generating unit 1611, a display control unit 1612, and a drive 1613.

The low-capacity image generating unit 1611 acquires a second captured image generated by the imaging unit 1332. This second captured image is handled as a high-quality image. The low-capacity image generating unit 1611 generates a low-capacity image by lowering the capacity of the high-quality image (a second captured image). In other words, the low-capacity image is an image of which the capacity is smaller (the data size is smaller) than that of the high-quality image. In other words, the high-quality image is an image of which the quality is higher than that of the low-capacity image. This low-capacity image, as described above in <5. Reuse of Parameter>, for example, is generated by reducing the size of a second captured image or compressing the second captured image. The low-capacity image generating unit 1611 supplies the generated low-capacity image to the communication unit 1307 through the storage unit 1306. The communication unit 1307 transmits the low-capacity image to the server 1602 as a preliminary process image. In other words, this low-capacity image is used in the preliminary photogrammetry process in the server 1602.

In addition, the low-capacity image generating unit 1611 supplies the high-quality image (the second captured image generated by the imaging unit 1332) to the drive 1613. The drive 1613 can load or unload a removable medium 1604. The drive 1613 records the high-quality image on the removable medium 1604 loaded therein. In other words, the high-quality image is supplied to the information processing apparatus 1603 through the removable medium 1604 as a main process image. In other words, this high-quality image is used in the main photogrammetry process.

The display control unit 1612 acquires preliminary process 3D data supplied from the server 1602 through the communication unit 1307 and causes the output unit 1309 to display an image of the preliminary process 3D data as an imaging assistance. In addition, the display control unit 1612 may acquire a scoring result, first 3D data, posture information, and the like from the scoring processing unit 1302 and reflect them in the display of the image of the preliminary process 3D data.

Fig. 45 is a block diagram illustrating a main configuration example of the server 1602 in this case. In this case, the server 1602 has a communication unit 1621, a storage unit 1622, a preliminary photogrammetry processing unit 1623, and an SfM posture information generating unit 1624. The communication unit 1621 is connected to the imaging communication device 1601 and the information processing apparatus 1603 through a network 1404 to be able to communicate with each other and transmits/receives information by performing communication therewith. For example, the communication unit 1621 acquires a preliminary process image (a low-capacity image) transmitted from the imaging communication device 1601 and supplies the preliminary process image to the storage unit 1622 to be stored therein. In addition, the communication unit 1621 reads the preliminary process 3D data from the storage unit 1622 and transmits it to the imaging communication device 1601. Furthermore, the communication unit 1621 reads the SfM posture information from the storage unit 1622 and transmits the read SfM posture information to the information processing apparatus 1603 as parameter information.

The storage unit 1622 stores information that can be transmitted/received by the communication unit 1621. In other words, the storage unit 1622 functions as a buffer of the communication unit 1621. For example, the storage unit 1622 stores a preliminary process image (a low-capacity image) supplied from the communication unit 1621. As is necessary (for example, in response to a request from a preliminary photogrammetry processing unit 1623), the preliminary process image is supplied to the preliminary photogrammetry processing unit 1623. In addition, the storage unit 1622 stores preliminary process 3D data supplied from the preliminary photogrammetry processing unit 1623 (the mesh generating unit 1632). In addition, the storage unit 1622 stores the SfM posture information supplied from the SfM posture information generating unit 1624. Furthermore, as is necessary (for example, in response to a request from the communication unit 1621), the storage unit 1622 supplies such information to the communication unit 1621.

The preliminary photogrammetry processing unit 1623 executes a preliminary photogrammetry process. For example, the preliminary photogrammetry processing unit 1623 has an SfM 1341, an MVS 1342, and a mesh generating unit 1632. The SfM 1341 and the MVS 1342 perform processes similar to those of the case of the photogrammetry processing unit 1334 (Fig. 29). The mesh generating unit 1632 generates a mesh from the point cloud of the second 3D data generated by MVS 1342. In other words, the mesh generating unit 1632 generates a mesh corresponding to a point cloud. The mesh generating unit 1632 supplies the mesh formed from the second 3D data to the storage unit 1622 as preliminary process 3D data to be stored therein. In addition, the SfM 1341 supplies information representing a position and a posture of a camera (the imaging unit 1332 that has captured a preliminary process image) that has been derived to the SfM posture information generating unit 1624. The SfM posture information generating unit 1624 generates parameter information (referred to also as SfM posture information) representing the position and the posture of the imaging unit 1332 on the basis of the information and supplies the generated parameter information to the storage unit 1622.

Fig. 46 is a block diagram illustrating a main configuration example of the information processing apparatus 1603 of this case. As illustrated in Fig. 46, the information processing apparatus 1603 has a drive 1641, a communication unit 1642, a format converting unit 1643, a main photogrammetry processing unit 1644, a display control unit 1645, and a display unit 1646. A drive 1641 can load or unload a removable medium 1604 and read information recorded on the removable medium 1604 mounted therein. For example, the drive 1641 reads a main process image from the removable medium 1604 and supplies the main process image to the format converting unit 1643. The communication unit 1642 is connected to the server 1602 and the like through a network 1404 to be able to communicate with each other and transmits/receives information by performing communication therewith. For example, the communication unit 1642 acquires parameter information (for example, SfM posture information) transmitted from the server 1602 and supplies that to the format converting unit 1643.

The format converting unit 1643 converts the format of such information into a format that can be used in the main photogrammetry processing unit 1644 by associating the parameter information with the supplied main process image as metadata or the like. The format converting unit 1643 supplies the main process image and the parameter information after the format conversion to the main photogrammetry processing unit 1644.

The main photogrammetry processing unit 1644 generates main process 3D data by performing a main photogrammetry process for the main process image. As illustrated in Fig. 46, the main photogrammetry processing unit 1644 has an SfM 1341, an MVS 1342, and a mesh generating unit 1632. These perform processes that are basically the same as those of the case of the preliminary photogrammetry processing unit 1623. The main photogrammetry process may perform a more complex process than the preliminary photogrammetry process to acquire higher-fineness 3D data. In other words, in processes of the SfM 1341, the MVS 1342, and the mesh generating unit 1632 of the preliminary photogrammetry processing unit 1623, parts of the processes executed by the SfM 1341, the MVS 1342, and the mesh generating unit 1632 of the main photogrammetry processing unit 1644 may be omitted, or process details may be simplified.

At that time, the main photogrammetry processing unit 1644 performs a main photogrammetry process using the parameter information (the SfM posture information) associated with the main process image. In other words, the main photogrammetry processing unit 1644 performs the main photogrammetry process reusing the SfM posture information generated in the preliminary photogrammetry process. By performing as such, the main photogrammetry processing unit 1644 can omit the SfM or have initial values of the SfM. In other words, by reusing the SfM posture information, the information processing apparatus 1603 can increase the speed of the main photogrammetry process (shorten the processing time).

The main photogrammetry processing unit 1644 (the mesh generating unit 1632) supplies the main process 3D data generated as the mesh to the display control unit 1645. The display control unit 1645 causes an image of the main process 3D data to be displayed by controlling the display unit 1646.

<Flow of Process>

An example of the flow of a 3D modeling process executed by the imaging communication device 1601 of this case will be described with reference to a flowchart illustrated in Fig. 47.

When the 3D modeling process starts, in Step S1601, the depth sensor 1311, the imaging unit 1312, and the IMU 1313 respectively acquire a depth, a captured image, and inertial information.

In Step S1602, the real-time 3D modeling processing unit 1314 generates first 3D data by executing a real-time 3D modeling process.

In Step S1603, the scoring processing unit 1302 performs scoring of the first 3D data on the basis of the second imaging performed until now.

In Step S1604, the imaging guide output control unit 1308 generates an imaging guide (guide information) for second imaging on the basis of the scoring result, the posture information, and the like. The output unit 1309 outputs the imaging guide (the guide information).

In Step S1605, the imaging control unit 1303 controls photogrammetry imaging (second imaging) on the basis of the scoring result, the posture information, and the like.

In Step S1606, the imaging unit 1332 performs imaging (performs the second imaging) in accordance with the control.

In Step S1607, the low-capacity image generating unit 1611 generates a low-capacity image (a preliminary process image) using a high-quality image (a main process image). In addition, the low-capacity image generating unit 1611 associates the low-capacity image (the preliminary process image) with the high-quality image (the main process image).

In Step S1608, the storage unit 1306 stores the low-capacity image. In addition, the communication unit 1307 transmits the low-capacity image to the server 1602 as a preliminary process image.

In Step S1609, the drive 1613 records the high-quality image on the removable medium 1604 as a main process image. In other words, the main process image is supplied to the information processing apparatus 1603 through the removable medium 1604.

In Step S1610, it is determined whether or not the 3D modeling process is to be ended, and, in a case in which it is determined that the 3D modeling process is not to be ended, the process returns to Step S1601. In other words, until it is determined that the 3D modeling process is to be ended in Step S1610, each of the processes of Step S1601 to Step S1610 is repeatedly executed. Then, in a case in which it is determined that the 3D modeling process is to be ended in Step S1610, the 3D modeling process ends.

Next, an example of the flow of a preliminary 3D modeling process executed by the server 1602 of this case will be described with reference to a flowchart illustrated in Fig. 48.

When the preliminary 3D modeling process starts, the communication unit 1621, in Step S1631, acquires a low-capacity image (a preliminary process image) transmitted from the imaging communication device 1601. In Step S1632, the storage unit 1622 stores the low-capacity image.

In Step S1633, it is determined whether or not a preliminary photogrammetry process is to be performed, and, in a case in which it is determined that the preliminary photogrammetry process is to be performed, each of the processes of Step S1634 to Step S1637 are executed. In addition, in a case in which it is determined that the preliminary photogrammetry process is not to be performed, such processes are skipped (omitted).

In Step S1634, the preliminary photogrammetry processing unit 1623 reads low-capacity images (acquired until now) stored in the storage unit 1622 and performs a preliminary photogrammetry process using them, thereby generating preliminary process 3D data. In Step S1635, the storage unit 1622 stores the preliminary process 3D data.

In addition, in Step S1636, the SfM posture information generating unit 1624 generates SfM posture information. In Step S1637, the storage unit 1622 stores the SfM posture information.

In Step S1638, the communication unit 1621 reads preliminary process 3D data from the storage unit 1622 at a predetermined timing and transmits the read preliminary process 3D data to the imaging communication device 1601.

In Step S1639, it is determined whether or not the preliminary 3D modeling process is to be ended. In a case in which it is determined that the preliminary 3D modeling process is not to be ended, the process returns to Step S1631. In other words, each of processes of Step S1631 to Step S1639 are repeatedly executed until it is determined that the preliminary 3D modeling process is to be ended. Then, in a case in which it is determined that the preliminary 3D modeling process is to be ended in Step S1639, the process proceeds to Step S1640.

In Step S1640, the communication unit 1621 reads the SfM posture information from the storage unit 1622 at a predetermined timing and transmits the read SfM posture information to the information processing apparatus 1603 as parameter information. When the process of Step S1640 ends, the preliminary 3D modeling process ends.

An example of the flow of a display control process executed by the imaging communication device 1601 of this case will be described with reference to a flowchart illustrated in Fig. 49.

When the display control process starts, the communication unit 1307, in Step S1651, acquires the preliminary process 3D data transmitted from the server 1603.

In Step S1652, the display control unit 1612 generates a display image of the preliminary process 3D data in accordance with an instruction from a user or the like. In Step S1653, the output unit 1309 displays the display image.

In Step S1654, it is determined whether or not the display control process is to be ended, and, in a case in which it is determined that the display control process is not to be ended, the process returns to Step S1652. In other words, each of processes of Step S1652 to Step S1654 are repeatedly executed until it is determined that the display control process is to be ended. Then, in a case in which it is determined that the display control process is to be ended in Step S1654, the display control process ends.

An example of the flow of a main 3D modeling process executed by the information processing apparatus 1603 of this case will be described with reference to a flowchart illustrated in Fig. 50.

When the main 3D modeling process starts, the drive 1641, in Step S1671, reads a main process image (a high-quality image) from the removable medium 1604.

In Step S1672, the communication unit 1642 acquires the parameter information (the SfM posture information) transmitted from the server 1602.

In Step S1673, the format converting unit 1643 converts the formats of the main process image and the SfM posture information as described above.

In Step S1674, the main photogrammetry processing unit 1644 performs a main photogrammetry process using the SfM posture information and the main process image (a high-quality image), thereby generating main process 3D data.

In Step S1675, the display control unit 1645, for example, generates a display image of the main process 3D data in accordance with an instruction from a user or the like. In Step S1676, the display unit 1646 displays the display image.

In Step S1677, it is determined whether or not the main 3D modeling process is to be ended, and, in a case in which it is determined that the main 3D modeling process is not to be ended, the process returns to Step S1675. In other words, until it is determined that the main 3D modeling process is to be ended in Step S1677, each of processes of Step S1675 to Step S1677 is repeatedly executed. Then, in a case in which it is determined that the main 3D modeling process is to be ended in Step S1677, the main 3D modeling process ends.

By executing each process in this way, the SfM posture information can be reused, and the main photogrammetry process can be executed at a higher speed.

<Absolute-scale Posture Information>

In addition, for example, absolute-scale posture information generated by the SfM of the preliminary photogrammetry process 332 may be included in the parameter information. Fig. 51 is a block diagram illustrating a main configuration example of the imaging communication device 1601 of this case. As illustrated in Fig. 51, the imaging communication device 1601 of this case has a configuration similar to the case illustrated in Fig. 44 and executes a similar process. However, the IMU 1313 further supplies IMU data to the storage unit 1306. In addition, the SLAM 1321 further supplies posture information to the storage unit 1306. The storage unit 1306 stores such information as well. The communication unit 1307 reads such information (IMU data and posture information) from the storage unit 1306 together with a low-capacity image (a preliminary process image) and transmits the information to the server 1602.

Fig. 52 is a block diagram illustrating a main configuration example of the server 1602 of this case. The server 1602 of this case basically has a configuration similar to that of the case illustrated in Fig. 45 and executes a similar process. However, the server 1602 of this case has an absolute-scale posture information generating unit 1722 in place of the SfM posture information generating unit 1624. In addition, the server 1602 of this case has an SfM 1721, which is in consideration of the scale, in place of the SfM 1341.

In this case, the communication unit 1621 acquires a low-capacity image, posture information, and IMU data transmitted from the imaging communication device 1601. Then, the storage unit 1622 stores them. The SfM 1721 that is in consideration of the scale acquires such information (that is, the low-capacity image, the posture information, and the IMU data transmitted from the imaging communication device 1601 until now) stored in the storage unit 1622. The SfM 1721 that is in consideration of the scale performs SfM with the scale taken into account using such information. In accordance with this, posture information expressed in an absolute scale can be acquired. The absolute-scale posture information generating unit 1722 generates absolute-scale posture information on the basis of the posture information and supplies the absolute-scale posture information to the storage unit 1622 to be stored therein. The communication unit 1621 reads the absolute-scale posture information from the storage unit 1622 and transmits the read absolute-scale posture information to the information processing apparatus 1603 as parameter information.

The configuration of the information processing apparatus 1603 of this case is similar to the case illustrated in Fig. 46, and description thereof will be omitted. Similarly to the case of the SfM posture information, the information processing apparatus 1603 of this case executes a main photogrammetry process using the absolute-scale posture information transmitted from the server 1602 as described above. In accordance with this, similarly to the case of the SfM posture information, the information processing apparatus 1603 can perform the main photogrammetry process at a higher speed.

<Flow of Process>

An example of the flow of a 3D modeling process executed by the imaging communication device 1601 of this case will be described with reference to a flowchart illustrated in Fig. 53. Each of processes of Step S1701 to Step S1707 are executed similarly to each of the processes (Fig. 47) of Step S1601 to Step S1607.

In Step S1708, the storage unit 1306 stores posture information that includes a low-capacity image and IMU data. In addition, the communication unit 1307 reads such information from the storage unit 1306 and transmits the read information to the server 1602.

The process of Step S1709 is executed similar to the process of Step S1609.

In Step S1710, it is determined whether or not the 3D modeling process is to be ended, and, in a case in which it is determined that the 3D modeling process is not to be ended, the process returns to Step S1701. In other words, until it is determined that the 3D modeling process is to be ended in Step S1710, each of the processes of Step S1701 to Step S1710 is repeatedly executed. Then, in a case in which it is determined that the 3D modeling process is to be ended in Step S1710, the 3D modeling process ends.

Next, an example of the flow of a preliminary 3D modeling process executed by the server 1602 of this case will be described with reference to a flowchart illustrated in Fig. 54.

When the preliminary 3D modeling process starts, the communication unit 1621, in Step S1731, acquires posture information including a low-capacity image (a preliminary process image) and IMU data transmitted from the imaging communication device 1601. In Step S1732, the storage unit 1622 stores the low-capacity images and the posture information including the IMU data.

In Step S1733, it is determined whether or not a preliminary photogrammetry process is to be performed, and, in a case in which it is determined that the preliminary photogrammetry process is to be performed, each of the processes of Step S1734 to Step S1737 are executed. In addition, in a case in which it is determined that the preliminary photogrammetry process is not to be performed, such processes are skipped (omitted).

In Step S1734, the preliminary photogrammetry processing unit 1623 reads the low-capacity images and the posture information including IMU data (acquired until now) stored in the storage unit 1622 and performs a preliminary photogrammetry process using them, thereby generating preliminary process 3D data. In Step S1735, the storage unit 1622 stores the preliminary process 3D data.

In addition, in Step S1736, the absolute-scale posture information generating unit 1722 generates absolute-scale posture information. In Step S1737, the storage unit 1622 stores the absolute-scale posture information.

In Step S1738, the communication unit 1621 reads preliminary process 3D data from the storage unit 1622 at a predetermined timing and transmits the read preliminary process 3D data to the imaging communication device 1601.

In Step S1739, it is determined whether or not the preliminary 3D modeling process is to be ended. In a case in which it is determined that the preliminary 3D modeling process is not to be ended, the process returns to Step S1731. In other words, each of processes of Step S1731 to Step S1739 are repeatedly executed until it is determined that the preliminary 3D modeling process is to be ended. Then, in a case in which it is determined that the preliminary 3D modeling process is to be ended in Step S1739, the process proceeds to Step S1740.

In Step S1740, the communication unit 1621 reads the absolute-scale posture information from the storage unit 1622 at a predetermined timing and transmits the read absolute-scale posture information to the information processing apparatus 1603 as parameter information. When the process of Step S1740 ends, the preliminary 3D modeling process ends.

In addition, the display control process of this case is executed similar to the flow of the case of the flowchart illustrated in Fig. 49.

An example of the flow of a main 3D modeling process executed by the information processing apparatus 1603 of this case will be described with reference to a flowchart illustrated in Fig. 55.

When the main 3D modeling process starts, the drive 1641, in Step S1771, reads a main process image (a high-quality image) from the removable medium 1604.

In Step S1772, the communication unit 1642 acquires the parameter information (the absolute-scale posture information) transmitted from the server 1602.

In Step S1773, the format converting unit 1643 converts the formats of the main process image and the absolute-scale posture information as described above.

In Step S1774, the main photogrammetry processing unit 1644 performs a main photogrammetry process using the absolute-scale posture information and the main process image (a high-quality image), thereby generating main process 3D data.

Each of processes of Steps S1775 to S1777 is executed in the same manner as each of the processes (Fig. 50) of Steps S1675 to S1677.

By executing each process in this way, the absolute-scale posture information can be reused, and the main photogrammetry process can be executed at a higher speed.

<Unnecessary Image List/Recommended Input Image Sequence List>

For example, in this parameter information, an unnecessary image list that is a list of second captured images not used in the preliminary photogrammetry process and a recommended input image sequence list that represents a recommended input order of second captured images in the preliminary photogrammetry process may be included. In this case, the imaging communication device 1601 has a configuration similar to the case illustrated in Fig. 44 and performs a similar process.

Fig. 56 is a block diagram illustrating a main configuration example of the server 1602 of this case. The server 1602 of this case has a low-quality image filter unit 1821, an unnecessary image collecting unit 1822, and an image alignment unit 1823 in place of the SfM posture information generating unit 1624 of the case illustrated in Fig. 45.

The low-quality image filter unit 1821 reads preliminary process images stored in the storage unit 1622. Then, the low-quality image filter unit 1821 removes images having an adverse effect at the time of the SfM and images that cannot be aligned well among the acquired preliminary process images. For example, the low-quality image filter unit 1821 removes images with subjects that are blurred, images that are out of focus, images including unnecessary subjects, images with defective exposure or white balance, images with no feature points within the screen, and the like. The low-quality image filter unit 1821 supplies preliminary process images that have not been removed to the preliminary photogrammetry processing unit 1623 (the SfM 1341). In addition, the low-quality image filter unit 1821 supplies information (a low-quality image list) representing the removed images to the unnecessary image collecting unit 1822. Furthermore, the SfM 1341 supplies a list of images that could not be actually aligned well (images failed to be aligned) (an alignment failure image list) to the unnecessary image collecting unit 1822.

The unnecessary image collecting unit 1822 generates an unnecessary image list that represents images not used in the photogrammetry process on the basis of the low-quality image list and the alignment failure image list that have been supplied. In other words, the unnecessary image list represents images that have been removed by the low-quality image filter unit 1821 and images failed to be aligned by the SfM 1341. The unnecessary image collecting unit 1822 supplies the generated unnecessary image list to the storage unit 1622 to be stored therein.

The image alignment unit 1823 performs alignment of second captured images and identifies an optimal order (a recommended input image order) as an order for being input to the photogrammetry process. For example, the image alignment unit 1823 performs alignment such that synthesis can be easily performed from an alignment result regardless of an input sequence such that sequential synthesis can be performed with large overlapping or the like. The image alignment unit 1823 generates a recommended input image sequence list that represents an order of the images. The image alignment unit 1823 supplies the generated recommended input image sequence list to the storage unit 1622 to be stored therein.

The communication unit 1621 reads the unnecessary image list or the recommended input image sequence list, which is stored in the storage unit 1622, or both the lists and transmits the read list to the information processing apparatus 1603 as parameter information.

Fig. 57 is a block diagram illustrating a main configuration example of the information processing apparatus 1603 of this case. The information processing apparatus 1603 of this case has an unnecessary image removing unit 1841 and an image alignment unit 1842 in addition to the components of the example illustrated in Fig. 46.

In this case, the communication unit 1642 acquires the parameter information (for example, the unnecessary image list or the recommended input image sequence list, or both the lists) transmitted from the server 1602 and supplies the parameter information to the format converting unit 1643. The format converting unit 1643 converts the format of such information into a format that can be used in the main photogrammetry processing unit 1644 by associating parameter information with the supplied main process image or the like as metadata. The format converting unit 1643 supplies the main process image and the parameter information after the format conversion to the unnecessary image removing unit 1841.

The unnecessary image removing unit 1841 acquires the main process images and the parameter information. The unnecessary image removing unit 1841 removes images (low-quality images and images, which have failed to be aligned, removed in the preliminary photogrammetry process) not used in the main photogrammetry process from among the main process images in accordance with the unnecessary image list included in the parameter information. The unnecessary image removing unit 1841 supplies the main process images from which unnecessary images have been removed and the parameter information to the image alignment unit 1842. In accordance with this, the information processing apparatus 1603 can reduce the number of images applied to 3D modeling and thus can perform the main photogrammetry process at a higher speed. In addition, since an increase in the process for unnecessary images can be suppressed at that time, the main photogrammetry process can be performed at a high speed, and higher-quality 3D data can be generated using the main photogrammetry process.

The image alignment unit 1842 acquires the main process images from which the unnecessary images have been removed and the parameter information. The image alignment unit 1842 aligns the acquired main process images in order of a recommended input image sequence in accordance with the recommended input image sequence list included in the parameter information and supplies the aligned main process images to the main photogrammetry processing unit 1644. In accordance with this, the information processing apparatus 1603 can generate higher-quality 3D data using the main photogrammetry process.

<Flow of Process>

A 3D modeling process using the imaging communication device 1601 of this case is executed similar to the flow of the case of the flowchart illustrated in Fig. 47.

Next, an example of the flow of a preliminary 3D modeling process executed by the server 1602 of this case will be described with reference to a flowchart illustrated in Fig. 58. Each of processes (Fig. 48) of Step S1831 and Step S1832 are executed similar to each of the processes of Step S1631 and Step S1632.

In Step S1833, it is determined whether or not a preliminary photogrammetry process is to be performed, and, in a case in which it is determined that the preliminary photogrammetry process is to be performed, each of the processes of Step S1834 to Step S1841 are executed. In addition, in a case in which it is determined that the preliminary photogrammetry process is not to be performed, such processes are skipped (omitted).

In Step S1834, the low-quality image filter unit 1821 removes low-quality images from among preliminary process images (low-capacity images until now). In addition, the low-quality image filter unit 1821 generates a low-quality image list.

Each of processes of Step S1835 and Step S1836 are executed similar to each of the processes (Fig. 48) of Step S1634 and Step S1635.

In Step S1837, the SfM 1341 generates an alignment failure image list. In Step S1838, the unnecessary image collecting unit 1822 generates an unnecessary image list on the basis of the low-quality image list and the alignment failure image list. In Step S1839, the storage unit 1622 stores the unnecessary image list.

In Step S1840, the image alignment unit 1823 aligns preliminary process images, identifies a recommended input image order, and generates a recommended input image sequence list. In Step S1841, the storage unit 1622 stores the recommended input image sequence list.

In Step S1842, the communication unit 1621 reads preliminary process 3D data from the storage unit 1622 at a predetermined timing and transmits the read preliminary process 3D data to the imaging communication device 1601.

In Step S1643, it is determined whether or not the preliminary 3D modeling process is to be ended. In a case in which it is determined that the preliminary 3D modeling process is not to be ended, the process returns to Step S1831. In other words, each of processes of Step S1831 to Step S1843 are repeatedly executed until it is determined that the preliminary 3D modeling process is to be ended. Then, in a case in which it is determined that the preliminary 3D modeling process is to be ended in Step S1843, the process proceeds to Step S1844.

In Step S1844, the communication unit 1621 reads an unnecessary image list or a recommended input image sequence list, or both the lists from the storage unit 1622 at a predetermined timing and transmits the list (the lists) to the information processing apparatus 1603 as parameter information. When the process of Step S1844 ends, the preliminary 3D modeling process ends.

A display control process using the imaging communication device 1601 of this case is executed similar to the flow of the case of the flowchart illustrated in Fig. 49.

An example of the flow of the main 3D modeling process using the information processing apparatus 1603 of this case will be described with reference to a flowchart illustrated in Fig. 59.

When the main 3D modeling process starts, the drive 1641 reads main process images (high-quality images) from the removable medium 1604 in Step S1871.

In Step S1872, the communication unit 1642 acquires parameter information (an unnecessary image list or a recommended input image sequence list, or both the lists) transmitted from the server 1602.

In Step S1873, the format converting unit 1643, as described above, converts formats of main process images and parameter information (an unnecessary image list or a recommended input image sequence list, or both the lists).

In Step S1874, the unnecessary image removing unit 1841 removes images (low-quality images and images, which have failed to be aligned, removed in the preliminary photogrammetry process) not used in the main photogrammetry process from among the main process images in accordance with the unnecessary image list included in the parameter information. In accordance with this, the information processing apparatus 1603 can reduce the number of images applied to 3D modeling and thus can perform the main photogrammetry process at a higher speed. In addition, since an increase in the process for unnecessary images can be suppressed at that time, the main photogrammetry process can be performed at a high speed, and higher-quality 3D data can be generated using the main photogrammetry process.

In Step S1875, the image alignment unit 1842 aligns main process images from which unnecessary images have been removed in a recommended input image order in accordance with the recommended input image sequence list included in the parameter information. In accordance with this, the information processing apparatus 1603 can generate higher-quality 3D data using the main photogrammetry process.

In Step S1876, the main photogrammetry processing unit 1644 performs a main photogrammetry process using main process images (high-quality images) to generate main process 3D data.

Processes of Steps S1877 to S1879 are executed in the same manner as processes (Fig. 50) of Steps S1675 to S1677.

By executing each process in this way, an unnecessary image list or a recommended input image sequence list, or both the lists can be reused, and the main photogrammetry process can be executed at a higher speed, and higher-quality 3D data can be generated using the main photogrammetry process.

<Depth Image Information>

For example, a depth image (depth image information) associated with an input frame (a captured image) may be included in this parameter information. Fig. 60 is a block diagram illustrating a main configuration example of the imaging communication device 1601 of this case. As illustrated in Fig. 60, the imaging communication device 1601 of this case has a configuration similar to the case illustrated in Fig. 44 and executes a similar process. The depth sensor 1311 generates a depth image (a depth map) and supplies the generated depth image to the storage unit 1306. The storage unit 1306 stores this depth image. The communication unit 1307 reads this depth image from the storage unit 1306 together with low-capacity images (preliminary process images) and transmits the images to the server 1602.

Fig. 61 is a block diagram illustrating a main configuration example of the server 1602 of this case. The server 1602 of this case basically has a configuration similar to the case illustrated in Fig. 45 and executes a similar process. The server 1602 of this case has a depth up-scaling unit 1921 and a depth image information generating unit 1922 in place of the SfM posture information generating unit 1624.

The communication unit 1621 acquires low-capacity images (preliminary process images) and depth images transmitted from the imaging communication device 1601. The storage unit 1622 stores these. The depth up-scaling unit 1921 reads depth images and low-capacity images stored in the storage unit 1622. The depth up-scaling unit 1921 upscales the depth image to the size of the low-capacity image. The depth up-scaling unit 1921 supplies the depth image after up-scaling to the depth image information generating unit 1922.

The depth image information generating unit 1922 acquires the upscaled depth image. In addition, the MVS 1342 supplies the depth image acquired during the process to the depth image information generating unit 1922. The depth image information generating unit 1922 acquires a depth image from the MVS 1342. The depth image information generating unit 1922 generates depth image information by associating the acquired depth image with an input frame (a captured image). The depth image information generating unit 1922 supplies the depth image information to the storage unit 1622. The storage unit 1622 stores the depth image information. The communication unit 1621 reads depth image information (information representing a depth image associated with an input frame) stored in the storage unit 1622 and transmits the read depth image information to the information processing apparatus 1603.

Fig. 62 is a block diagram illustrating a main configuration example of the information processing apparatus 1603 of this case. The information processing apparatus 1603 of this case has a configuration similar to the case illustrated in Fig. 46. Each processing unit basically performs a process similar to that of the case illustrated in Fig. 46. However, in the case illustrated in Fig. 62, after format conversion, the format converting unit 1643 supplies main process images to the SfM 1341 and supplies the depth image information to the MVS 1342. The MVS 1342 performs MVS using the depth image information. In accordance with this, the information processing apparatus 1603 can generate higher-quality 3D data using the main photogrammetry process.

<Flow of Process>

An example of the flow of a 3D modeling process executed by the imaging communication device 1601 of this case will be described with reference to a flowchart illustrated in Fig. 63. Each of processes of Step S1901 to Step S1907 is executed similar to each of the processes (Fig. 47) of Step S1601 to Step S 1607.

In Step S1908, the storage unit 1306 stores low-capacity images and depth images. In addition, the communication unit 1307 reads such information from the storage unit 1306 and transmits the read information to the server 1602.

A process of Step S1909 is executed similar to the process of Step S1609.

In Step S1910, it is determined whether or not the 3D modeling process is to be ended, and, in a case in which it is determined that the 3D modeling process is not to be ended, the process returns to Step S1901. In other words, until it is determined that the 3D modeling process is to be ended, each of the processes of Step S1901 to Step S1910 is repeatedly executed. Then, in a case in which it is determined that the 3D modeling process is to be ended in Step S1910, the 3D modeling process ends.

Next, an example of the flow of a preliminary 3D modeling process executed by the server 1602 of this case will be described with reference to a flowchart illustrated in Fig. 64.

When the preliminary 3D modeling process starts, the communication unit 1621, in Step S1931, acquires low-capacity images (preliminary process images) and depth images transmitted from the imaging communication device 1601. In Step S1932, the storage unit 1622 stores the low-capacity images and the depth images.

In Step S1933, it is determined whether or not a preliminary photogrammetry process is to be performed, and, in a case in which it is determined that the preliminary photogrammetry process is to be performed, each of the processes of Step S1934 to Step S1938 are executed. In addition, in a case in which it is determined that the preliminary photogrammetry process is not to be performed, such processes are skipped (omitted).

In Step S1934, the preliminary photogrammetry processing unit 1623 reads the low-capacity images (acquired until now) stored in the storage unit 1622 and performs a preliminary photogrammetry process using them, thereby generating preliminary process 3D data. In Step S1935, the storage unit 1622 stores the preliminary process 3D data.

In addition, in Step S1936, the depth up-scaling unit 1921 upscales a depth image as is necessary. In addition, in Step S1937, the depth image information generating unit 1922 generates depth image information using a depth image of the depth sensor that has been upscaled as is necessary and a depth image acquired by the MVS of the preliminary photogrammetry process. In Step S1938, the storage unit 1622 stores the depth image information.

In Step S1939, the communication unit 1621 reads preliminary process 3D data from the storage unit 1622 at a predetermined timing and transmits the read preliminary process 3D data to the imaging communication device 1601.

In Step S1940, it is determined whether or not the preliminary 3D modeling process is to be ended. In a case in which it is determined that the preliminary 3D modeling process is not to be ended, the process returns to Step S1931. In other words, each of processes of Step S1931 to Step S1940 are repeatedly executed until it is determined that the preliminary 3D modeling process is to be ended. Then, in a case in which it is determined that the preliminary 3D modeling process is to be ended in Step S1940, the process proceeds to Step S1941.

In Step S1941, the communication unit 1621 reads the depth image information from the storage unit 1622 at a predetermined timing and transmits the read depth image information to the information processing apparatus 1603 as parameter information. When the process of Step S1941 ends, the preliminary 3D modeling process ends.

A display control process using the imaging communication device 1601 of this case is executed similar to the flow of the case of the flowchart illustrated in Fig. 49.

An example of the flow of the main 3D modeling process using the information processing apparatus 1603 of this case will be described with reference to a flowchart illustrated in Fig. 65.

When the main 3D modeling process starts, the drive 1641 reads main process images (high-quality images) from the removable medium 1604 in Step S1971.

In Step S1972, the communication unit 1642 acquires parameter information (depth image information) transmitted from the server 1602.

In Step S1973, the format converting unit 1643, as described above, converts formats of main process images and parameter information (depth image information).

In Step S1974, the main photogrammetry processing unit 1644 performs a main photogrammetry process using main process images (high-quality images) and depth image information to generate main process 3D data. In other words, in this main photogrammetry process, the MVS 1342 executes the MVS using the depth image information.

Processes of Steps S1875 to S1877 are executed in the same manner as the processes (Fig. 50) of Steps S1675 to S1677.

By executing each process in this way, the depth image information can be reused in the main photogrammetry process, and higher-quality 3D data can be generated.

<ROI Information>

For example, ROI information of second 3D data may be included in this parameter information. Fig. 66 is a block diagram illustrating a main configuration example of an imaging communication device 1601 of this case. As illustrated in Fig. 66, the imaging communication device 1601 of this case has a configuration similar to the case illustrated in Fig. 44 and executes a similar process. However, the mesh generating unit 1323 generates a polygon mesh and supplies the generated polygon mesh to the storage unit 1306. The storage unit 1306 stores not only low-capacity images (preliminary process images) but also this polygon mesh. The communication unit 1307 reads this polygon mesh from the storage unit 1306 together with low-capacity images (preliminary process images) and transmits them to the server 1602.

Fig. 67 is a block diagram illustrating a main configuration example of a server 1602 of this case. The server 1602 of this case basically has a configuration similar to the case illustrated in Fig. 45 and executes a similar process. However, the server 1602 of this case has an ROI setting unit 2021 in place of the SfM posture information generating unit 1624. In addition, the preliminary photogrammetry processing unit 1623 further has an ROI filter unit 2022.

The communication unit 1621 acquires low-capacity images (preliminary process images) and a polygon mesh transmitted from the imaging communication device 1601. The storage unit 1622 stores them. The ROI setting unit 2021 reads the polygon mesh stored in the storage unit 1622. The ROI setting unit 2021 sets an ROI of the second 3D data on the basis of the polygon mesh. The polygon mesh (that is, first 3D data) is generated with being restricted to the inside of a predetermined three-dimensional range on the basis of the depth data and the like acquired by the depth sensor 1311. In other words, by analyzing the polygon mesh, the ROI setting unit 2021 can estimate the predetermined range. This range is also referred to as an ROI of the first 3D data. The ROI setting unit 2021 sets an ROI of the second 3D data on the basis of the estimated ROI of the first 3D data. Basically, an object that is originally represented by the second 3D data is approximately the same as an object represented by the first 3D data. For this reason, by setting an area in which the first 3D data is present (that is, the estimated first ROI) as an ROI, an ROI having an appropriate size enclosing the object that is originally represented can be set. In other words, by setting the ROI information in this way, the ROI setting unit 2021 can more easily set an appropriate ROI for the second 3D data. In addition, the ROI of the second 3D data may completely coincide with the ROI of the first 3D data or may not coincide therewith. For example, a range that is slightly narrower than the ROI of the first 3D data may be set as the ROI of the second 3D data, or a range that is slightly broader than the ROI of the first 3D data may be set as the ROI of the second 3D data.

The ROI setting unit 2021 supplies the set ROI information to the ROI filter unit 2022. The ROI filter unit 2022 acquires second 3D data (a point cloud) supplied from the MVS 1342. In addition, the ROI filter unit 2022 acquires ROI information supplied from the ROI setting unit 2021. The ROI filter unit 2022 extracts data of the inside of the ROI (the point cloud) from the acquired second 3D data (the point cloud) on the basis of the ROI information. The ROI filter unit 2022 supplies the extracted second 3D data of the inside of the ROI to the mesh generating unit 1632.

By configuring as such, the ROI filter unit 2022 can restrict the range of the second 3D data and remove an unnecessary point group. In accordance with this, an increase in the amount of information of the second 3D data can be suppressed. In addition, reduction of the quality of the second 3D data according to an unnecessary point group can be suppressed. In other words, by using the preliminary photogrammetry process, higher-quality 3D data can be generated. In addition, by suppressing an increase in the amount of information of the second 3D data, an increase in the load of mesh generation can be suppressed, and increases in the cost and the processing time can be suppressed. In other words, the preliminary photogrammetry process can be performed at a high speed.

In addition, the ROI setting unit 2021 supplies the set ROI information to the storage unit 1622. The storage unit 1622 stores the ROI information. The communication unit 1621 reads ROI information stored in the storage unit 1622 and transmits the read ROI information to the information processing apparatus 1603 as parameter information.

Fig. 68 is a block diagram illustrating a main configuration example of an information processing apparatus 1603 of this case. The information processing apparatus 1603 of this case has a configuration that is basically the same as that of the case illustrated in Fig. 46. However, the main photogrammetry processing unit 1644 has an ROI filter unit 2022. In addition, after format conversion, the format converting unit 1643 supplies main process images to the SfM 1341 and supplies the ROI information to the ROI filter unit 2022.

Similarly to the case of the preliminary photogrammetry processing unit 1623 of the server 1602, the ROI filter unit 2022 acquires second 3D data (a point cloud) supplied from the MVS 1342. In addition, the ROI filter unit 2022 acquires ROI information supplied from the format converting unit 1643. The ROI filter unit 2022 extracts data of the inside of the ROI (the point cloud) from the acquired second 3D data (the point cloud) on the basis of the ROI information. The ROI filter unit 2022 supplies the extracted second 3D data of the inside of the ROI to the mesh generating unit 1632.

By configuring as such, the ROI filter unit 2022 can remove an unnecessary point group by restricting the range of the second 3D data. In accordance with this, an increase in the amount of information of the second 3D data can be suppressed. In addition, reduction of the quality of the second 3D data according to an unnecessary point group can be suppressed. In other words, by using the main photogrammetry process, higher-quality 3D data can be generated. In addition, by suppressing an increase in the amount of information of the second 3D data, an increase in the load of mesh generation can be suppressed, and increases in the cost and the processing time can be suppressed. In other words, the main photogrammetry process can be performed at a high speed.

In addition, in this way, by reusing the ROI information acquired in the preliminary photogrammetry process in the main photogrammetry process, the setting of this ROI information can be omitted in the main photogrammetry process. Thus, the information processing apparatus 1603 can generate higher-quality 3D data using the main photogrammetry process, and the main photogrammetry process can be performed at a high speed.

<Flow of Process>

An example of the flow of a 3D modeling process executed by the imaging communication device 1601 of this case will be described with reference to a flowchart illustrated in Fig. 69. Each of processes of Step S2001 to Step S2007 are executed similar to each of the processes (Fig. 47) of Step S1601 to Step S1607.

In Step S2008, the storage unit 1306 stores low-capacity images and a polygon mesh. In addition, the communication unit 1307 reads such information from the storage unit 1306 and transmits the information to the server 1602.

A process of Step S2009 is executed similar to the process of Step S1609.

In Step S2010, it is determined whether or not the 3D modeling process is to be ended, and, in a case in which it is determined that the 3D modeling process is not to be ended, the process returns to Step S2001. In other words, until it is determined that the 3D modeling process is to be ended, each of the processes of Step S2001 to Step S2010 is repeatedly executed. Then, in a case in which it is determined that the 3D modeling process is to be ended in Step S2010, the 3D modeling process ends.

Next, an example of the flow of a preliminary 3D modeling process executed by the server 1602 of this case will be described with reference to a flowchart illustrated in Fig. 70.

When the preliminary 3D modeling process starts, the communication unit 1621, in Step S2031, acquires low-capacity images (preliminary process images) and a polygon mesh transmitted from the imaging communication device 1601. In Step S2032, the storage unit 1622 stores the low-capacity images and the polygon mesh.

In Step S2033, it is determined whether or not a preliminary photogrammetry process is to be performed, and, in a case in which it is determined that the preliminary photogrammetry process is to be performed, each of the processes of Step S2034 to Step S2037 are executed. In addition, in a case in which it is determined that the preliminary photogrammetry process is not to be performed, such processes are skipped (omitted).

In Step S2034, the ROI setting unit 2021 sets an ROI on the basis of the polygon mesh and generates ROI information. In Step S2035, the storage unit 1622 stores the ROI information.

In Step S2036, the preliminary photogrammetry processing unit 1623 reads the low-capacity images (acquired until now) stored in the storage unit 1622 and performs a preliminary photogrammetry process using low-capacity information and the ROI information acquired until now, thereby generating preliminary process 3D data. At that time, the preliminary photogrammetry processing unit 1623 performs filtering on the basis of the ROI information and extracts preliminary process 3D data inside of the ROI. In Step S2037, the storage unit 1622 stores the extracted preliminary process 3D data inside of the ROI.

In Step S2038, the communication unit 1621 reads preliminary process 3D data from the storage unit 1622 at a predetermined timing and transmits the read preliminary process 3D data to the imaging communication device 1601.

In Step S2039, it is determined whether or not the preliminary 3D modeling process is to be ended. In a case in which it is determined that the preliminary 3D modeling process is not to be ended, the process returns to Step S2031. In other words, each of processes of Step S2031 to Step S2039 are repeatedly executed until it is determined that the preliminary 3D modeling process is to be ended. Then, in a case in which it is determined that the preliminary 3D modeling process is to be ended in Step S2039, the process proceeds to Step S2040.

In Step S2040, the communication unit 1621 reads the ROI information from the storage unit 1622 at a predetermined timing and transmits the read ROI information to the information processing apparatus 1603 as parameter information. When the process of Step S2040 ends, the preliminary 3D modeling process ends.

A display control process using the imaging communication device 1601 of this case is executed similar to the flow of the case of the flowchart illustrated in Fig. 49.

An example of the flow of the main 3D modeling process using the information processing apparatus 1603 of this case will be described with reference to a flowchart illustrated in Fig. 71.

When the main 3D modeling process starts, the drive 1641 reads main process images (high-quality images) from the removable medium 1604 in Step S2071.

In Step S2072, the communication unit 1642 acquires parameter information (ROI information) transmitted from the server 1602.

In Step S2073, the format converting unit 1643, as described above, converts formats of main process images and parameter information (ROI information).

In Step S2074, the main photogrammetry processing unit 1644 performs a main photogrammetry process using the main process images (high-quality images) and the ROI information to generate main process 3D data. In other words, in this main photogrammetry process, data inside of the ROI, which is represented by the ROI information, is extracted from the second 3D data generated by the MVS 1342, and the second 3D data (the point cloud) inside of the ROI is formed as a mesh.

Processes of Steps S2075 to S2077 are executed in the same manner as the processes (Fig. 50) of Steps S1675 to S1677.

By executing each process in this way, the ROI information can be reused in the main photogrammetry process, higher-quality 3D data can be generated using the main photogrammetry process, and the main photogrammetry process can be performed at a high speed.

<Mask Information>

For example, mask information for removing an unnecessary part of second 3D data may be included in this parameter information. A case in which this mask information is reused as a parameter will be described. In this case, the imaging communication device 1601, as illustrated in Fig. 72, supplies a depth image generated by the depth sensor 1311 and a polygon mesh generated by the mesh generating unit 1323 to the server 1602 together with a low-capacity image.

In contrast to this, the server 1602, as illustrated in Fig. 73, has a mask filter unit 2121, a depth mask generating unit 2122, an image recognition mask generating unit 2123, and a mask information generating unit 2124.

The mask filter unit 2121 removes unnecessary parts (a subject that becomes a noise and the like) of a captured image on the basis of mask information generated by the mask information generating unit 2124. The depth mask generating unit 2122 generates a depth mask using the depth image supplied from the imaging communication device 1601 and the depth image generated by the MVS 1342 and supplies the generated depth mask to the mask information generating unit 2124. The image recognition mask generating unit 2123 identifies unnecessary parts by performing an image recognition process for a low-capacity image, generates mask information (an image recognition mask) for removing the parts, and supplies the generated mask information to the mask information generating unit 2124. The mask information generating unit 2124 generates mask information using at least one of the depth mask supplied from the depth mask generating unit 2122 and the image recognition mask supplied from the image recognition mask generating unit 2123. The mask information generating unit 2124 supplies the generated mask information to the mask filter unit 2121. In addition, the mask information generating unit 2124 supplies the mask information to the information processing apparatus 1603 through the communication unit 1621.

The information processing apparatus 1603, as illustrated in Fig. 74, after converting the format of the mask information, inputs the converted mask information to the mask filter unit 2121. The mask filter unit 2121 removes unnecessary parts (a subject that becomes a noise and the like) of a captured image on the basis of the mask information. In accordance with this, the information processing apparatus 1603 can generate higher-quality 3D data using the main photogrammetry process.

<Flow of Process>

In this case, the imaging communication device 1601, as illustrated in Fig. 75, executes a 3D modeling process. In this case, a low-capacity image, a depth image, and a polygon mesh are supplied to the server 1602 in Step S2108, and a main process image is supplied to the information processing apparatus 1603 in Step S2109.

In addition, the server 1602, as illustrated in Fig. 76, executes a preliminary 3D modeling process. In Step S2134, unnecessary images are removed on the basis of the mask information. In Step S2137, a mask image is generated using a depth image according to the depth sensor and a depth image according to the MVS. In addition, in Step S2138, a mask image is generated using image recognition. Then, in Step S2139, mask information is generated using such information. In Step S2143, the mask information is supplied to the information processing apparatus 1603.

In addition, the information processing apparatus 1603, as illustrated in Fig. 77, executes a main 3D modeling process. In Step S2174, unnecessary images are removed on the basis of the mask information. By executing each process in this way, the mask information can be reused in the main photogrammetry process, and higher-quality 3D data can be generated.

<Development Parameter Information>

For example, development parameter information applied to a developing process of a second captured image may be included in this parameter information. A case in which this development parameter information is reused as parameters will be described. In this case, the imaging communication device 1601, as illustrated in Fig. 78, supplies WB information relating to white balance generated by the imaging unit 1332 and exposure information relating to exposure to the server 1602 together with a low-capacity image.

In contrast to this, the server 1602, as illustrated in Fig. 79, has an equalization processing unit 2221. The equalization processing unit 2221 acquires the low-capacity image, the WB information, and the exposure information supplied from the imaging communication device 1601. In addition, the equalization processing unit 2221 acquires SfM posture information generated by the SfM 1341. By using an alignment result, the equalization processing unit 2221 calculates development parameters of which white balance and exposure have consistency for all the images on the basis of an actual image arrangement. At that time, the equalization processing unit 2221 adjusts an optimal exposure parameter separately for text and for alignment. The equalization processing unit 2221 supplies the generated development parameter information to the information processing apparatus 1603 through the communication unit 1621.

The information processing apparatus 1603, as illustrated in Fig. 80, has a development processing unit 2241. The development processing unit 2241 performs a developing process for a main process image (a second captured image) using the development parameters supplied from the server 1602. In accordance with this, RAW data is converted into YUV data. By reusing the development parameters in this way, the information processing apparatus 1603 can perform a developing process of a second captured image.

<Flow of Process>

In this case, the imaging communication device 1601, as illustrated in Fig. 81, executes a 3D modeling process. In this case, a low-capacity image, WB information, and exposure information are supplied to the server 1602 in Step S2208, and a main process image is supplied to the information processing apparatus 1603 in Step S2209.

In addition, the server 1602, as illustrated in Fig. 82, executes a preliminary 3D modeling process. In Step S2236, an equalization process is performed using the low-capacity image, the WB information, and the exposed information, whereby development parameter information is generated. In Step S2240, the development parameter information is supplied to the information processing apparatus 1603.

In addition, the information processing apparatus 1603, as illustrated in Fig. 83, executes a main 3D modeling process. In Step S2273, by using the development parameter information supplied from the server 1602, a developing process is performed for a high-quality image. By executing each process in this way, a developing process can be executed for a second captured image for which the main photogrammetry process is performed.

<Other Example of Information Processing System>

In addition, in the information processing system 1600, as illustrated in Fig. 84, the main photogrammetry process may be configured to be executed by the server 1602. In that case, the information processing apparatus 1603 may upload main process images to the server 1602. Since the server 1602 executes both the preliminary photogrammetry process and the main photogrammetry process, parameters generated in the preliminary photogrammetry process may be applied to the main photogrammetry process. In that case, the server 1602 may have the configuration of the information processing apparatus 1603 described above in addition to the configuration of the server 1602 described above.

By configuring as such, effects similar to those of a case in which the main photogrammetry process is executed by the information processing apparatus 1603 can be acquired.

<9. Supplements>

<Computer>

The series of processing can be executed by hardware or software. When the series of processing is executed by software, a program that constitutes the software is installed on a computer. In this case, the computer includes, for example, a computer built in dedicated hardware and a general-purpose personal computer on which various programs are installed to enable various functions.

Fig. 85 is a block diagram illustrating a hardware configuration example of a computer that performs the above-described series of Steps of processing according to a program.

In a computer 2900 illustrated in Fig. 85, a CPU (Central Processing Unit) 2901, a ROM (Read Only Memory) 2902, and a RAM (Random Access Memory) 2903 are connected to one another via a bus 2904.

An input/output interface 2910 is also connected to the bus 2904. An input unit 2911, an output unit 2912, a storage unit 2913, a communication unit 2914, and a drive 2915 are connected to the input/output interface 2910.

The input unit 2911 is configured with, for example, a keyboard, a mouse, a microphone, a touch panel, or an input terminal. The output unit 2912 is configured with, for example, a display, a speaker, or an output terminal. The storage unit 2913 is configured with, for example, a hard disk, a RAM disk, or non-volatile memory. The communication unit 2914 is configured with, for example, a network interface. The drive 2915 drives a removable recording medium 2921 such as a magnetic disk, an optical disc, a magneto-optical disk, or a semiconductor memory.

In the computer configured as described above, for example, the CPU 2901 loads a program stored in the storage unit 2913 into the RAM 2903 through the input/output interface 2910 and the bus 2904 and executes the program. In accordance with this, the series of processes described above are performed. In the RAM 2903, necessary data in execution of various processes in the CPU 2901 may be appropriately stored.

A program executed by a computer, for example, may be applied with being recorded on a removable recording medium 2921 as a package medium or the like. In such a case, the program may be read from the removable recording medium 2921 loaded into the drive 2915 and be installed in the storage unit 2913 through the input/output interface 2910.

In addition, this program, for example, may be provided via an arbitrary wired or wireless transmission medium such as a local area network, the Internet, a digital satellite broadcast, or the like. In that case, the program may be received by the communication unit 2914 and be installed in the storage unit 2913 through the input/output interface 2910.

Furthermore, this program may be installed in the ROM 2902 or the storage unit 2913 or both thereof in advance.

<Application of the Present Technique>

The present technology can be applied to any configuration. For example, the present technology can be applied to a variety of electronic devices.

In addition, for example, the present technology can be implemented as a configuration of a part of a device such as a processor (e.g., a video processor) of a system large scale integration (LSI) circuit, a module (e.g., a video module) using a plurality of processors or the like, a unit (e.g., a video unit) using a plurality of modules or the like, or a set (e.g., a video set) with other functions added to the unit.

For example, the present technology can also be applied to a network system configured with a plurality of devices. The present technology may be implemented as, for example, cloud computing for processing shared among a plurality of devices via a network. For example, the present technology may be implemented in a cloud service that provides services regarding images (moving images) to any terminals such as a computer, an Audio Visual (AV) device, a mobile information processing terminal, and an Internet of Things (IoT) device or the like.

In the present specification, a system means a set of a plurality of constituent elements (devices, modules (parts) or the like) regardless of whether all the constituent elements are placed in the same casing. Accordingly, a plurality of devices accommodated in separate casings and connected via a network and a single device accommodating a plurality of modules in a single casing are all referred to as a system.

<Other>

In the present specification, term "associate" means, for example, making it possible to use (or link) one piece of data when another piece of data is processed. In other words, data associated with each other may be one piece of data or individual pieces of data. For example, information associated with certain data may be transmitted on a transmission line different from that of the data. In addition, for example, information associated with data may be recorded on a recording medium different from the data (or another recording area of the same recording medium). Note that this "association" may be for part of the data instead of the entirety of the data. For example, dynamic 3D data and information corresponding to the dynamic 3D data may be associated with each other in an arbitrary unit such as multiple frames, one frame, a part of the frame, or the like.

In the present specification, terms such as "synthesize", "multiplex", "add", "integrate", "include", "store", "put in", "enclose", and "insert" may mean, for example, combining a plurality of objects into one, such as combining coded data and metadata into one piece of data, and means one method of "associating" described above.

Embodiments of the present technology are not limited to the above-described embodiments and can be changed in various ways within the scope of the present technology without departing from the gist of the present technology.

For example, a configuration described as one device (or processing unit) may be split into and configured as a plurality of devices (or processing units). Conversely, configurations described above as a plurality of devices (or processing units) may be integrated and configured as one device (or processing unit). It is a matter of course that configurations other than the aforementioned configurations may be added to the configuration of each device (or each processing unit). Moreover, some of the configurations of a certain device (or processing unit) may be included in a configuration of another device (or another processing unit) as long as the configurations and operations of the overall system are substantially identical to one another.

For example, the foregoing program may be executed by any device. In this case, the device only needs to have necessary functions (such as functional blocks) to obtain necessary information.

Furthermore, for example, each Step of one flowchart may be executed by one device, or may be shared and executed by a plurality of devices. Moreover, when a plurality of processing Steps are included in one Step, one device may execute the plurality of processing Steps, or the plurality of devices may share and execute the plurality of processing Steps. In other words, it is also possible to execute the plurality of processing Steps included in one Step as processing of a plurality of Steps. Reversely, processing described as a plurality of Steps can be collectively executed as one Step.

Furthermore, for example, in a program that is executed by a computer, processing of Steps describing the program may be executed in time series in the order described in the present specification, or may be executed in parallel or individually at a required timing, for example, when a call is made. In other words, the processing of Steps may be executed in an order different from the above-described order if no contradiction arises. Furthermore, the processing of the Steps describing this program may be performed in parallel with processing of another program, or may be performed in combination with the processing of the other program.

Moreover, for example, a plurality of technologies regarding the present technology can be independently implemented if no contradiction arises. As a matter of course, any number of technologies regarding the present technology can also be implemented in combination. For example, the present technology described in any one of the embodiments may be implemented partially or entirely in combination with at least part of the present technology described in other embodiments. Furthermore, some or all of the technologies may be implemented in combination with other technologies that are not described above.

The present technology can also have the following configuration.

(1) An information processing apparatus including: a preliminary 3D modeling processing unit configured to execute a preliminary 3D modeling process prior to a main 3D modeling process; and

a parameter information generating unit configured to generate parameter information used in the main 3D modeling process on the basis of information used in the preliminary 3D modeling process,
in which the preliminary 3D modeling process and the main 3D modeling process are a second 3D modeling process configured to generate second three-dimensional shape information that represents a three-dimensional shape of a 3D object on the basis of a second captured image,
the second captured image is generated using second imaging in which a second imaging unit images the 3D object on the basis of first three-dimensional shape information,
the first three-dimensional shape information is information representing the three-dimensional shape of the 3D object generated on the basis of a first captured image using a first 3D modeling process, and
the first captured image is generated using first imaging in which a first imaging unit images the 3D object.

(2) The information processing apparatus described in (1), in which the parameter information generating unit includes posture information generated in the preliminary 3D modeling process in the parameter information, and
the posture information is information representing a position and a posture of a viewpoint of the second captured image.
(3) The information processing apparatus described in (1) or (2), in which the parameter information generating unit includes absolute-scale posture information generated in the preliminary 3D modeling process in the parameter information, and
the absolute-scale posture information is information representing a position and a posture of a viewpoint of the second captured image on the basis of an absolute scale.
(4) The information processing apparatus described in any one of (1) to (3), in which the parameter information generating unit includes an unnecessary image list that is a list of the second captured images not used in the preliminary 3D modeling process in the parameter information.
(5) The information processing apparatus described in any one of (1) to (4), in which the parameter information generating unit includes a recommended input image sequence list representing a recommended input order of the second captured images in the preliminary 3D modeling process in the parameter information.
(6) The information processing apparatus described in any one of (1) to (5), in which the parameter information generating unit includes depth image information representing a depth image associated with the second captured image in the parameter information.
(7) The information processing apparatus described in any one of (1) to (6), in which the parameter information generating unit includes region of interest information representing a region of interest of the second three-dimensional shape information in the parameter information.

(8) The information processing apparatus described in any one of (1) to (7), in which the parameter information generating unit includes mask information for removing unnecessary parts of the second three-dimensional shape information in the parameter information.

(9) The information processing apparatus described in any one of (1) to (8), in which the parameter information generating unit includes development parameters used in a developing process for the second captured image in the parameter information.

(10) The information processing apparatus described in any one of (1) to (9), further including a communication unit configured to communicate with other apparatuses executing the main 3D modeling process and supplying the parameter information.

(11) The information processing apparatus described in any one of (1) to (10), further including a main 3D modeling processing unit configured to execute the main 3D modeling process using the parameter information.

(12) The information processing apparatus described in any one of (1) to (11), in which the preliminary 3D modeling processing unit executes the preliminary 3D modeling process on the basis of a low-capacity image acquired by lowering the capacity of the second captured image.

(13) The information processing apparatus described in (12), in which the low-capacity image is a reduced image acquired by reducing the second captured image.

(14) The information processing apparatus described in (12) or (13), in which the low-capacity image is a compression image acquired by compressing the second captured image.

(15) The information processing apparatus described in any one of (1) to (14), in which the preliminary 3D modeling process is a photogrammetry process.

(16) An information processing method including: executing a preliminary 3D modeling process prior to a main 3D modeling process;

generating parameter information used in the main 3D modeling process on the basis of information used in the preliminary 3D modeling process;

in which the preliminary 3D modeling process and the main 3D modeling process are a second 3D modeling process configured to generate second three-dimensional shape information that represents a three-dimensional shape of a 3D object on the basis of a second captured image,

the second captured image is generated using second imaging in which a second imaging unit images the 3D object on the basis of first three-dimensional shape information,

the first three-dimensional shape information is information representing the three-dimensional shape of the 3D object generated on the basis of a first captured image using a first 3D modeling process, and

the first captured image is generated using first imaging in which a first imaging unit images the 3D object.

(17) An information processing apparatus including: a preliminary image generating unit configured to generate a preliminary image used in a preliminary 3D modeling process executed prior to a main 3D modeling process on the basis of a second captured image and associating the preliminary image and the second captured image with each other,

in which the preliminary 3D modeling process and the main 3D modeling process are a second 3D modeling process configured to generate second three-dimensional shape information that represents a three-dimensional shape of a 3D object on the basis of the second captured image,

the second captured image is generated using second imaging in which a second imaging unit images the 3D object on the basis of first three-dimensional shape information,

the first three-dimensional shape information is information representing the three-dimensional shape of the 3D object generated on the basis of a first captured image using a first 3D modeling process, and

the first captured image is generated using first imaging in which a first imaging unit images the 3D object.

(18) An information processing method including: generating a preliminary image used in a preliminary 3D modeling process executed prior to a main 3D modeling process on the basis of a second captured image and associating the preliminary image and the second captured image with each other,

in which the preliminary 3D modeling process and the main 3D modeling process are a second 3D modeling process configured to generate second three-dimensional shape information that represents a three-dimensional shape of a 3D object on the basis of the second captured image,

the second captured image is generated using second imaging in which a second imaging unit images the 3D object on the basis of first three-dimensional shape information,

the first three-dimensional shape information is information representing the three-dimensional shape of the 3D object generated on the basis of a first captured image using a first 3D modeling process, and

the first captured image is generated using first imaging in which a first imaging unit images the 3D object.

(19) An information processing apparatus including: an acquisition unit configured to acquire parameter information generated on the basis of

information used in a preliminary 3D modeling process executed prior to a main 3D modeling process; and

a main 3D modeling processing unit configured to execute the main 3D modeling process using the parameter information,

in which the preliminary 3D modeling process and the main 3D modeling process are a second 3D modeling process configured to generate second three-dimensional shape information that represents a three-dimensional shape of a 3D object on the basis of a second captured image,

the second captured image is generated using second imaging in which a second imaging unit images the 3D object on the basis of first three-dimensional shape information,

the first three-dimensional shape information is information representing the three-dimensional shape of the 3D object generated on the basis of a first captured image using a first 3D modeling process, and

the first captured image is generated using first imaging in which a first imaging unit images the 3D object.

(20) An information processing method including: acquiring parameter information generated on the basis of information used in a preliminary 3D modeling process executed prior to a main 3D modeling process; and

executing the main 3D modeling process using the parameter information,

in which the preliminary 3D modeling process and the main 3D modeling process are a second 3D modeling process configured to generate second three-dimensional shape information that represents a three-dimensional shape of a 3D object on the basis of a second captured image,

the second captured image is generated using second imaging in which a second imaging unit images the 3D object on the basis of first three-dimensional shape information,

the first three-dimensional shape information is information representing the three-dimensional shape of the 3D object generated on the basis of a first captured image using a first 3D modeling process, and

the first captured image is generated using first imaging in which a first imaging unit images the 3D object.

[Reference Signs List]

101 First 3D data generating process
102 Scoring process
103 Second 3D modeling imaging control process
104 Second 3D data generating process
105 Second 3D modeling imaging guide output process
106 Feedback process
1300 Image capturing device
1301 First 3D data generating unit
1302 Scoring processing unit
1303 Imaging control unit
1304 Second 3D data generating unit
1305 Encoding unit
1306 Storage unit
1307 Communication unit
1308 Imaging guide output control unit
1309 Output unit
1311 Depth sensor
1312 Imaging unit
1313 IMU
1314 Real-time 3D modeling processing unit
1321 SLAM
1322 TSDF updating unit
1323 Mesh generating unit
1331 Operation unit
1332 Imaging unit
1333 Image processing unit
1334 Photogrammetry processing unit
1341 SfM
1342 MVS
1400 Information processing system
1401 Image capturing device
1402 Imaging communication device
1403 Server
1404 Network
1410 Terminal device
1421 Communication unit
1431 Communication unit
1432 Encoding unit
1433 Storage unit
1441 Communication unit
1442 Decoding unit
1444 Encoding unit
1445 Storage unit
1600 Information processing system
1601 Imaging communication device

1602 Server
1603 Information processing apparatus
1611 Low-capacity image generating unit
1612 Display control unit
1613 Drive
1623 Preliminary photogrammetry processing unit
1624 SfM posture information generating unit
1643 Format converting unit
1644 Main photogrammetry processing unit
2900 Computer

## Claims

**1.** An information processing apparatus comprising:

a preliminary 3D modeling processing unit configured to execute a preliminary 3D modeling process prior to a main 3D modeling process; and
a parameter information generating unit configured to generate parameter information used in the main 3D modeling process on the basis of information used in the preliminary 3D modeling process,
wherein the preliminary 3D modeling process and the main 3D modeling process are a second 3D modeling process configured to generate second three-dimensional shape information that represents a three-dimensional shape of a 3D object on the basis of a second captured image,
wherein the second captured image is generated using second imaging in which a second imaging unit images the 3D object on the basis of first three-dimensional shape information,
wherein the first three-dimensional shape information is information representing the three-dimensional shape of the 3D object generated on the basis of a first captured image using a first 3D modeling process, and
wherein the first captured image is generated using first imaging in which a first imaging unit images the 3D object.

**2.** The information processing apparatus according to claim 1,

wherein the parameter information generating unit includes posture information generated in the preliminary 3D modeling process in the parameter information, and
wherein the posture information is information representing a position and a posture of a viewpoint of the second captured image.

**3.** The information processing apparatus according to claim 1,

wherein the parameter information generating unit includes absolute-scale posture information generated in the preliminary 3D modeling process in the parameter information, and
wherein the absolute-scale posture information is information representing a position and a posture of a viewpoint of the second captured image on the basis of an absolute scale.

**4.** The information processing apparatus according to claim 1, wherein the parameter information generating unit includes an unnecessary image list that is a list of the second captured images not used in the preliminary 3D modeling process in the parameter information.

**5.** The information processing apparatus according to claim 1, wherein the parameter information generating unit includes a recommended input image sequence list representing a recommended input order of the second captured images in the preliminary 3D modeling process in the parameter information.

**6.** The information processing apparatus according to claim 1, wherein the parameter information generating unit includes depth image information representing a depth image associated with the second captured image in the parameter information.

**7.** The information processing apparatus according to claim 1, wherein the parameter information generating unit includes region of interest information representing a region of interest of the second three-dimensional shape information in the parameter information.

**8.** The information processing apparatus according to claim 1, wherein the parameter information generating unit includes mask information for removing unnecessary parts of the second three-dimensional shape information in the parameter information.

**9.** The information processing apparatus according to claim 1, wherein the parameter information generating unit includes development parameters used in a developing process for the second captured image in the parameter information.

**10.** The information processing apparatus according to claim 1, further comprising a communication unit configured to communicate with other apparatuses executing the main 3D modeling process and supplying the parameter information.

**11.** The information processing apparatus according to claim 1, further comprising a main 3D modeling processing unit configured to execute the main 3D modeling process using the parameter information.

**12.** The information processing apparatus according to claim 1, wherein the preliminary 3D modeling processing unit executes the preliminary 3D modeling process on the basis of a low-capacity image acquired by lowering the capacity of the second captured image.

**13.** The information processing apparatus according to claim 12, wherein the low-capacity image is a reduced image acquired by reducing the second captured image.

**14.** The information processing apparatus according to claim 12, wherein the low-capacity image is a compression image acquired by compressing the second captured image.

**15.** The information processing apparatus according to claim 1, wherein the preliminary 3D modeling process is a photogrammetry process.

**16.** An information processing method comprising:

executing a preliminary 3D modeling process prior to a main 3D modeling process;
generating parameter information used in the main 3D modeling process on the basis of information used in the preliminary 3D modeling process;
wherein the preliminary 3D modeling process and the main 3D modeling process are a second 3D modeling process configured to generate second three-dimensional shape information that represents a three-dimensional shape of a 3D object on the basis of a second captured image,
wherein the second captured image is generated using second imaging in which a second imaging unit images the 3D object on the basis of first three-dimensional shape information,
wherein the first three-dimensional shape information is information representing the three-dimensional shape of the 3D object generated on the basis of a first captured image using a first 3D modeling process, and
wherein the first captured image is generated using first imaging in which a first imaging unit images the 3D object.

**17.** An information processing apparatus comprising:

a preliminary image generating unit configured to generate a preliminary image used in a preliminary 3D modeling process executed prior to a main 3D modeling process on the basis of a second captured image and associating the preliminary image and the second captured image with each other,
wherein the preliminary 3D modeling process and the main 3D modeling process are a second 3D modeling process configured to generate second three-dimensional shape information that represents a three-dimensional shape of a 3D object on the basis of the second captured image,
wherein the second captured image is generated using second imaging in which a second imaging unit images the 3D object on the basis of first three-dimensional shape information,
wherein the first three-dimensional shape information is information representing the three-dimensional shape of the 3D object generated on the basis of a first captured image using a first 3D modeling process, and
wherein the first captured image is generated using first imaging in which a first imaging unit images the 3D object.

**18.** An information processing method comprising:

generating a preliminary image used in a preliminary 3D modeling process executed prior to a main 3D modeling process on the basis of a second captured image and associating the preliminary image and the second captured image with each other,
wherein the preliminary 3D modeling process and the main 3D modeling process are a second 3D modeling process configured to generate second three-dimensional shape information that represents a three-dimensional shape of a 3D object on the basis of the second captured image,
wherein the second captured image is generated using second imaging in which a second imaging unit images the 3D object on the basis of first three-dimensional shape information,
wherein the first three-dimensional shape information is information representing the three-dimensional shape of the 3D object generated on the basis of a first captured image using a first 3D modeling process, and
wherein the first captured image is generated using first imaging in which a first imaging unit images the 3D object.

**19.** An information processing apparatus comprising:

an acquisition unit configured to acquire parameter information generated on the basis of information used in a preliminary 3D modeling process executed prior to a main 3D modeling process; and
a main 3D modeling processing unit configured to execute the main 3D modeling process using the parameter information,

wherein the preliminary 3D modeling process and the main 3D modeling process are a second 3D modeling process configured to generate second three-dimensional shape information that represents a three-dimensional shape of a 3D object on the basis of a second captured image,

wherein the second captured image is generated using second imaging in which a second imaging unit images the 3D object on the basis of first three-dimensional shape information,

wherein the first three-dimensional shape information is information representing the three-dimensional shape of the 3D object generated on the basis of a first captured image using a first 3D modeling process, and

wherein the first captured image is generated using first imaging in which a first imaging unit images the 3D object.

**20.** An information processing method comprising:

acquiring parameter information generated on the basis of information used in a preliminary 3D modeling process executed prior to a main 3D modeling process; and

executing the main 3D modeling process using the parameter information,

wherein the preliminary 3D modeling process and the main 3D modeling process are a second 3D modeling process configured to generate second three-dimensional shape information that represents a three-dimensional shape of a 3D object on the basis of the second captured image,

wherein the second captured image is generated using second imaging in which a second imaging unit images the 3D object on the basis of first three-dimensional shape information,

wherein the first three-dimensional shape information is information representing the three-dimensional shape of the 3D object generated on the basis of a first captured image using a first 3D modeling process, and

wherein the first captured image is generated using first imaging in which a first imaging unit images the 3D object.

Fig. 1

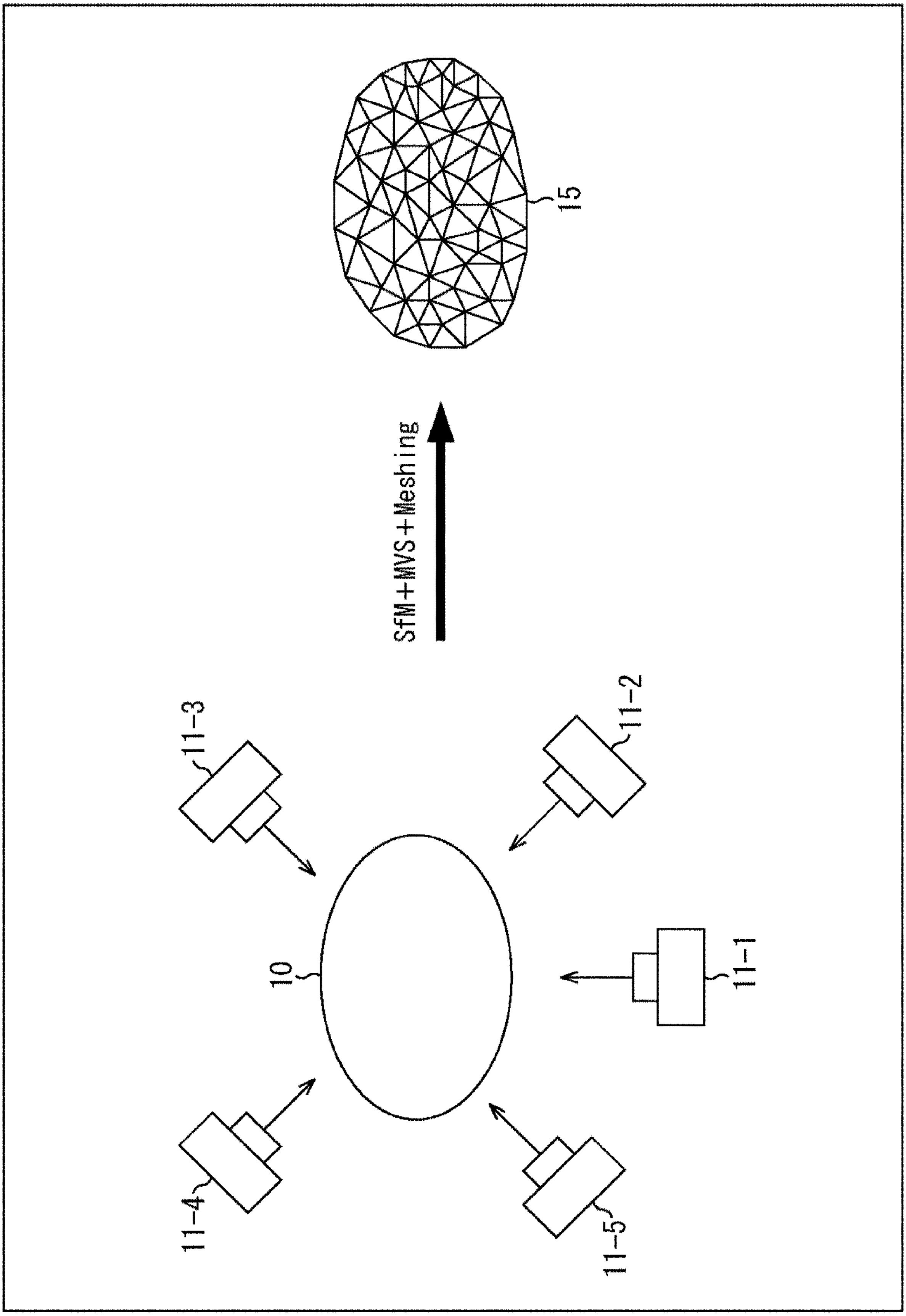

Fig. 2

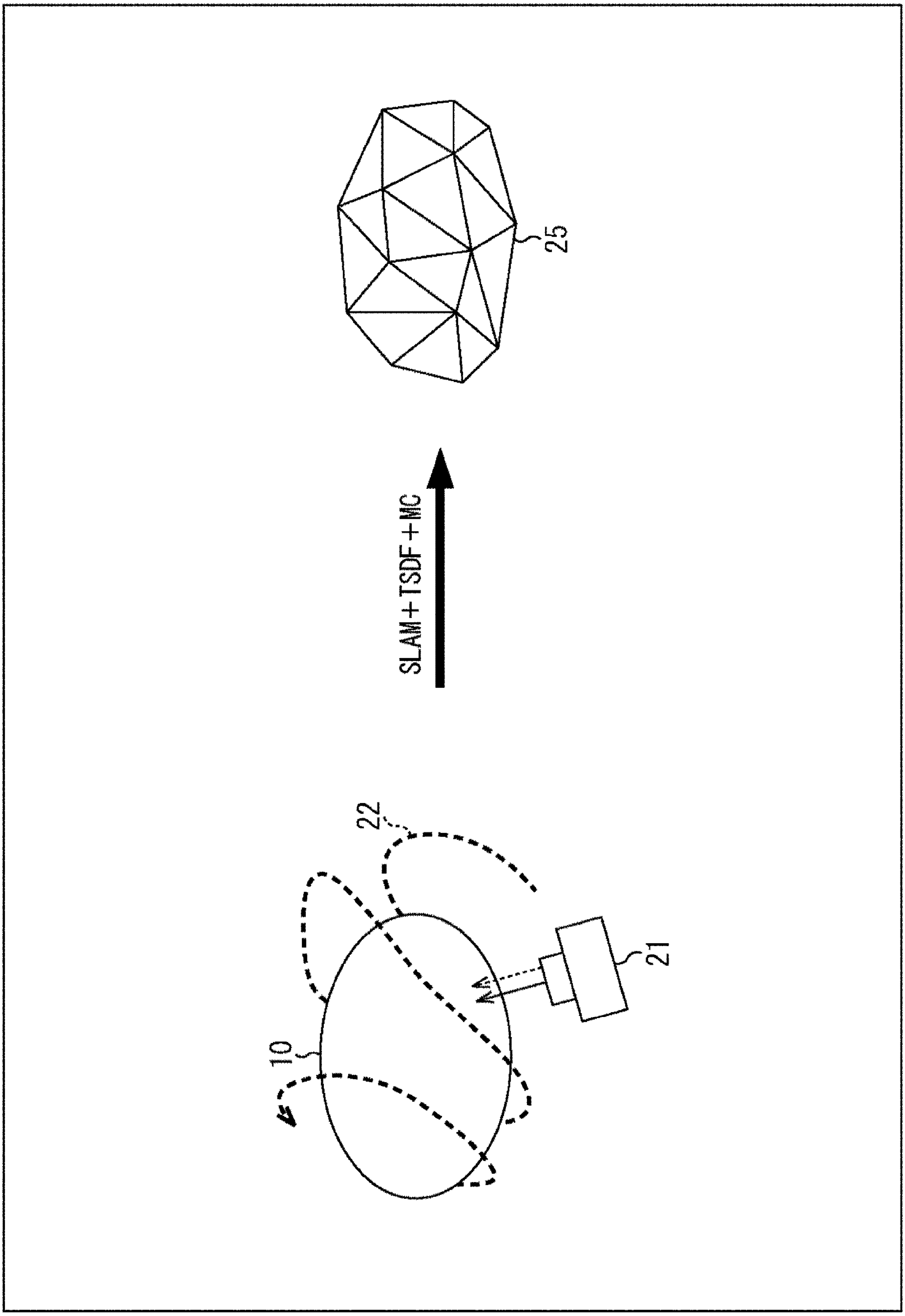

Fig. 3

| | REAL-TIME 3D MODELING | PHOTOGRAMMETRY |
|---|---|---|
| TECHNIQUE | SELF-POSITION ESTIMATION + TSDF | SfM (INCLUDING SELF-POSITION ESTIMATION) + MVS |
| DATA | DEPTH + POSTURE DATA (+ IMAGE) | IMAGE DATA ONLY |
| PROCESSING TIME | REAL-TIME (> 30 fps) | LONG TIME (SEVERAL MINUTES TO SEVERAL TENS OF HOURS) |
| REQUIRED ARITHMETIC OPERATION | MOBILE AP LEVEL | HIGH-END CPU + GPU LEVEL |
| FINENESS OF MODEL | ROUGH (ACCORDING TO SENSOR/SELF-POSITION ESTIMATION ACCURACY) | FINE TO ULTRA-FINE (ACCORDING TO INPUT IMAGE SIZE, NUMBER, AND IMAGING METHOD) |
| INTERNAL REPRESENTATION OF THREE-DIMENSIONAL DATA | Voxel BASE | POINT GROUP BASE |
| CONSTRAINTS ON SUBJECT SIZE/RESOLUTION | PRESENCE/SENSOR DEPENDENCY (ABSOLUTE PHYSICAL AMOUNT) | NONE (RELATIVE ACCORDING TO IMAGE BASE) |
| ABSOLUTE ACCURACY OF MODEL | LOW (ACCORDING TO SENSOR/SELF-POSITION ESTIMATION ACCURACY) | HIGH (OPTIMIZED ACCORDING TO BUNDLE ADJUSTMENT) |
| SCALE | UNIQUE (ABSOLUTE SIZE IS KNOWN) | UNSET (SIZE IS UNKNOWN) |

Fig. 4

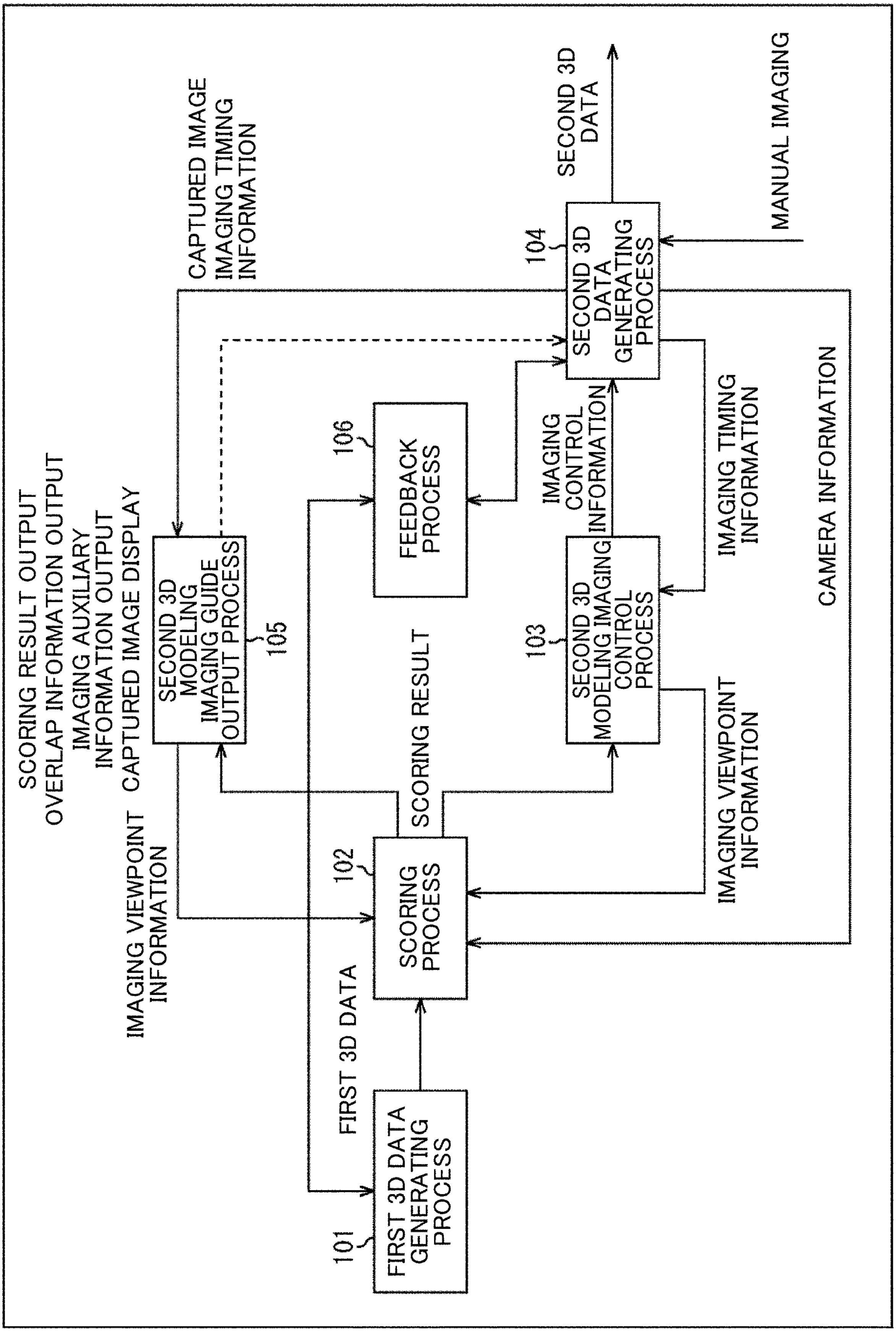
101
FIRST 3D DATA GENERATING PROCESS
FIRST 3D DATA
102
SCORING PROCESS
SCORING RESULT
103
SECOND 3D MODELING IMAGING CONTROL PROCESS
104
SECOND 3D DATA GENERATING PROCESS
SECOND 3D DATA
MANUAL IMAGING
105
SECOND 3D MODELING IMAGING GUIDE OUTPUT PROCESS
106
FEEDBACK PROCESS
SCORING RESULT OUTPUT
OVERLAP INFORMATION OUTPUT
IMAGING AUXILIARY INFORMATION OUTPUT
CAPTURED IMAGE DISPLAY
CAPTURED IMAGE
IMAGING TIMING INFORMATION
IMAGING VIEWPOINT INFORMATION
IMAGING CONTROL INFORMATION
IMAGING TIMING INFORMATION
IMAGING VIEWPOINT INFORMATION
CAMERA INFORMATION

Fig. 5

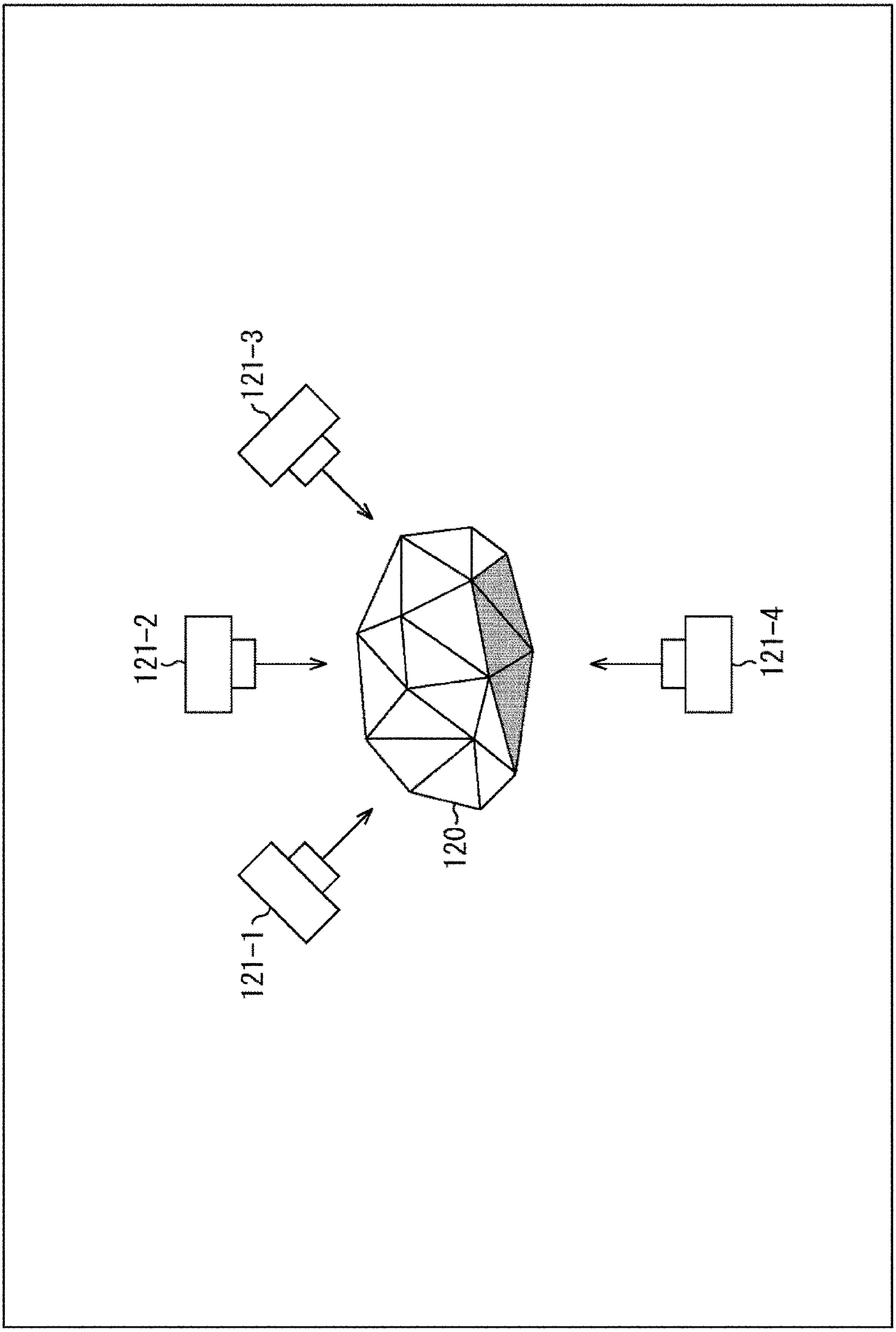

Fig. 6

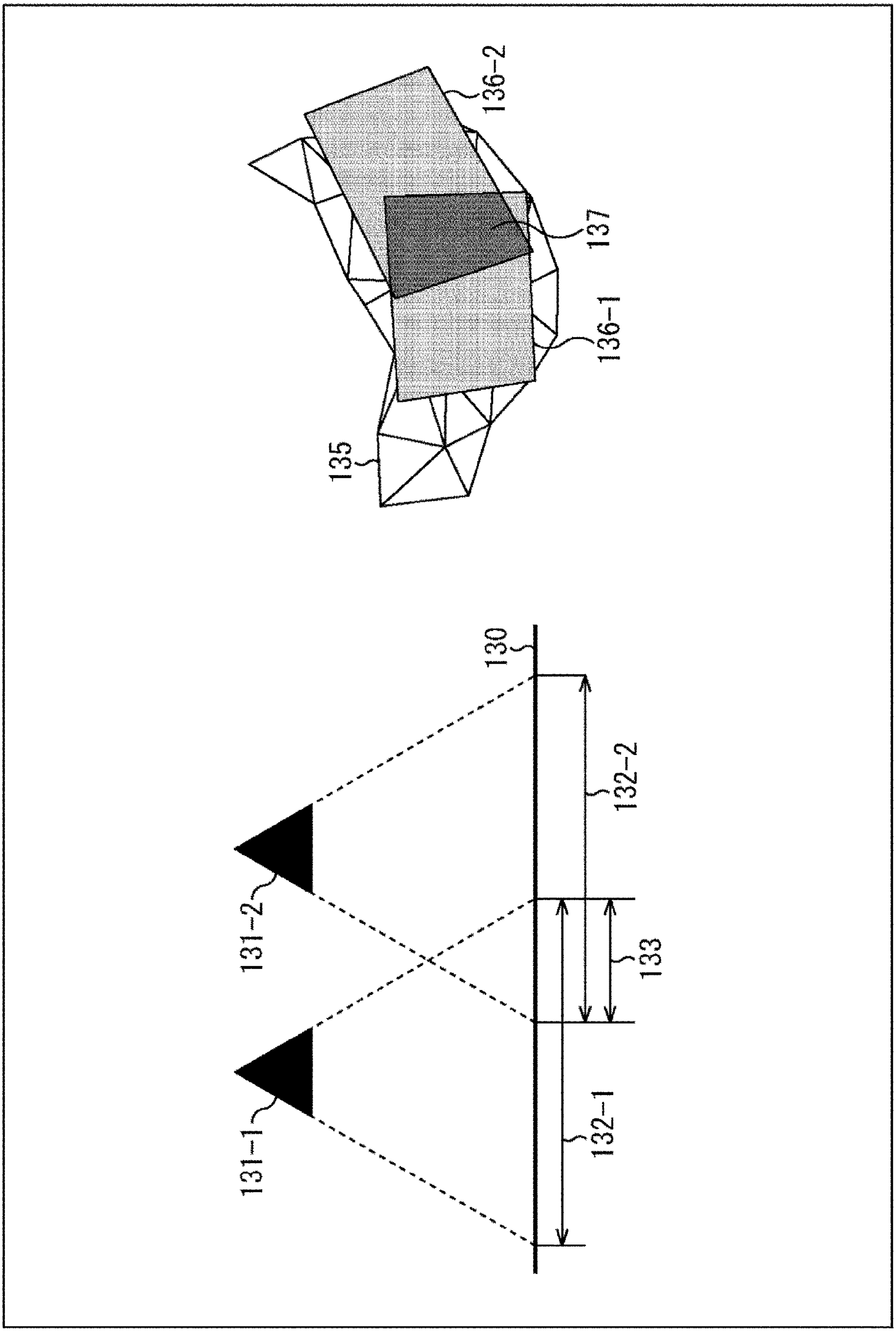

Fig. 7

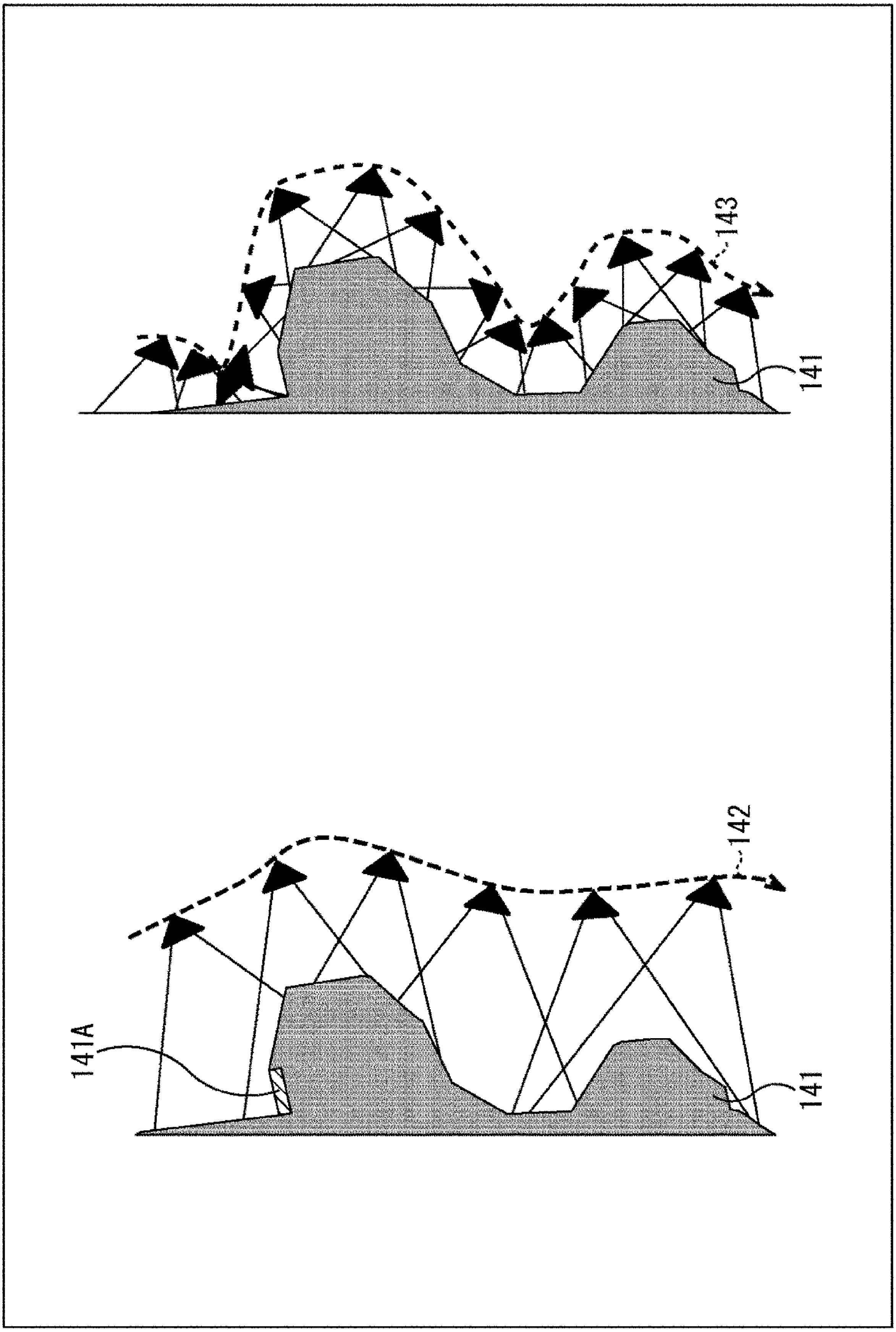

Fig. 8

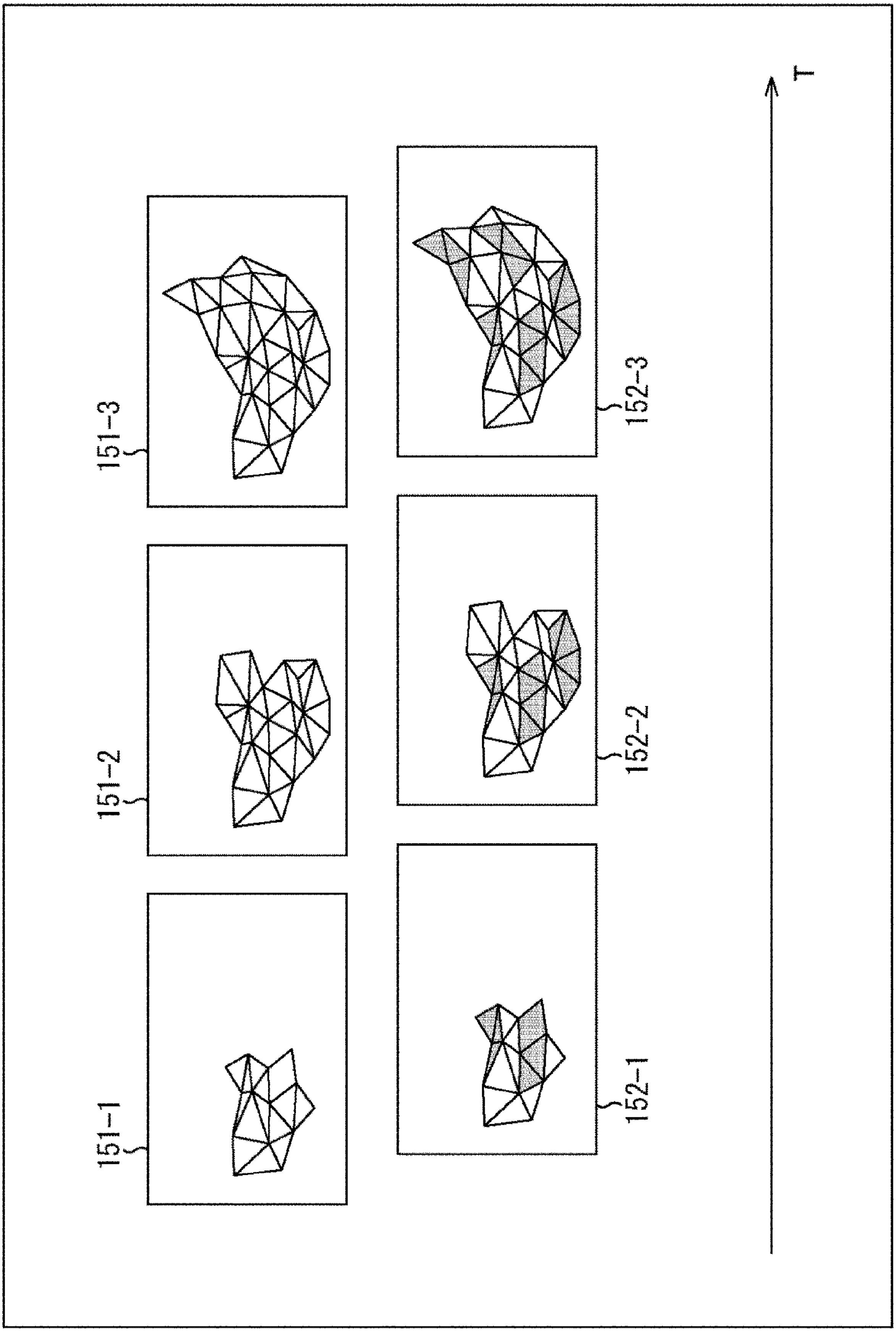

Fig. 9

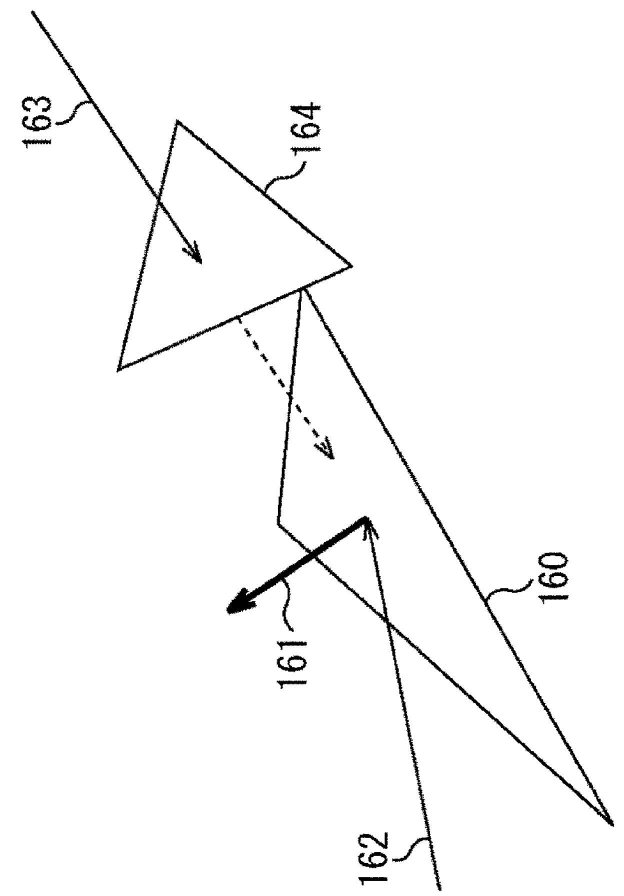

Fig. 10

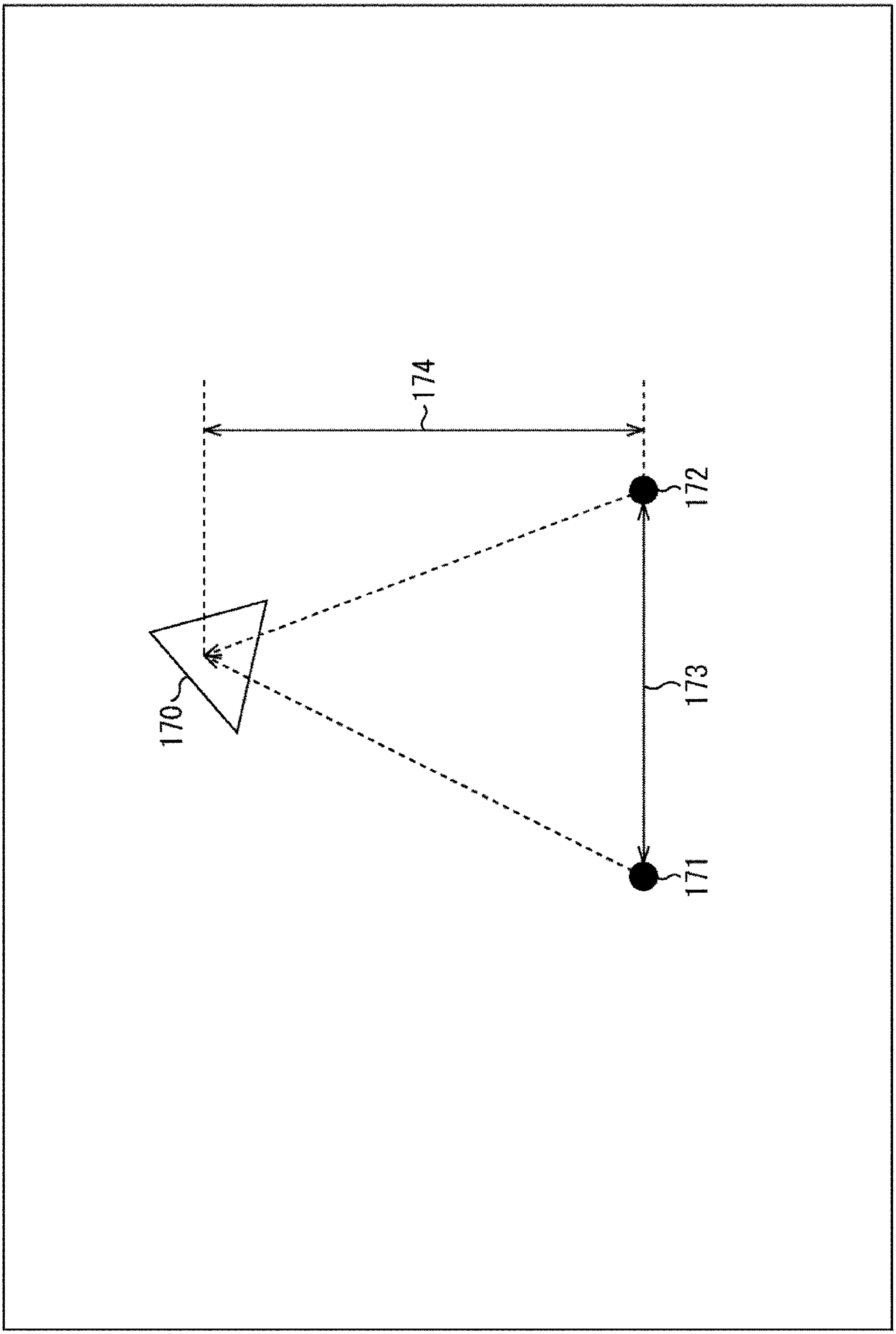

Fig. 11

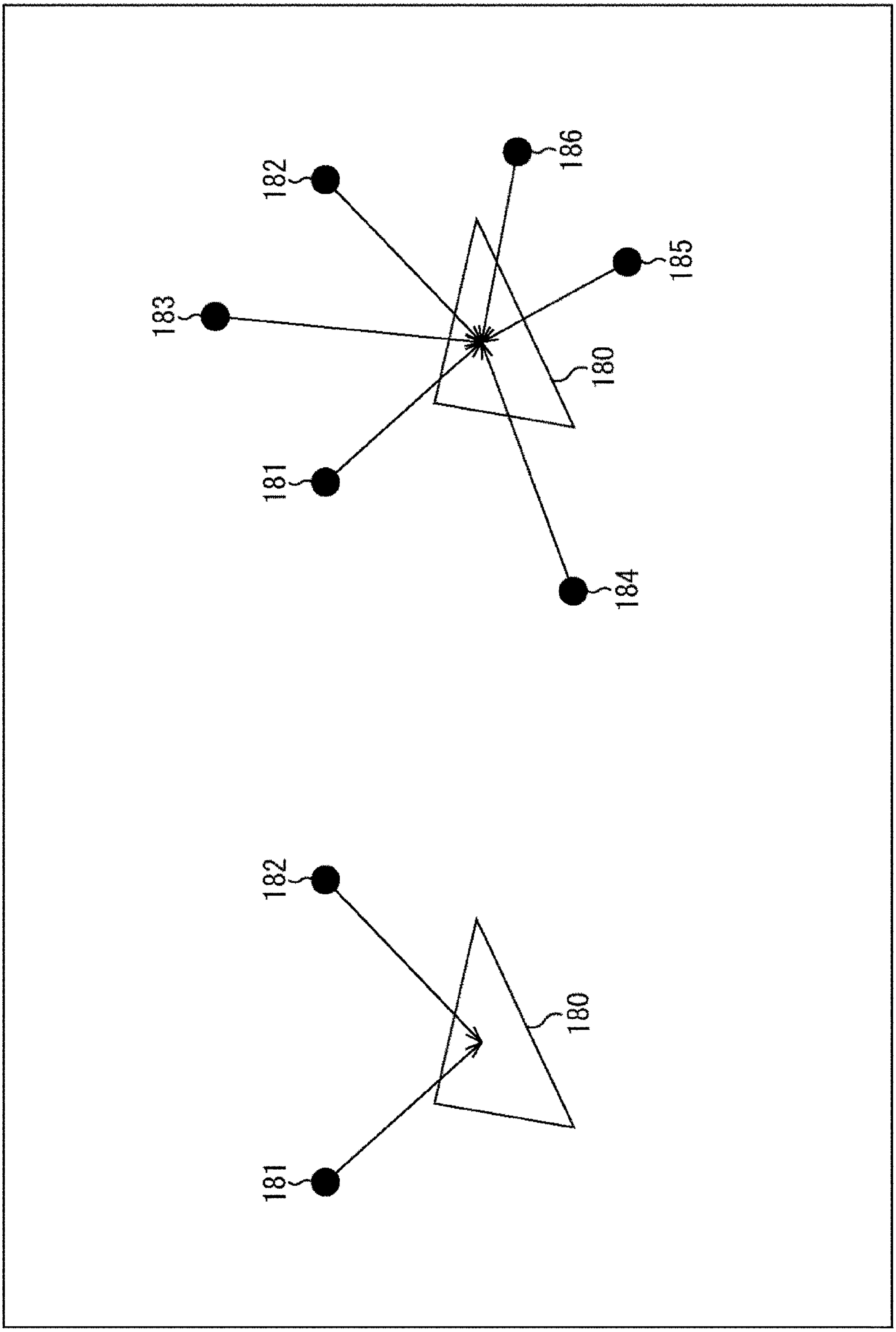

Fig. 12

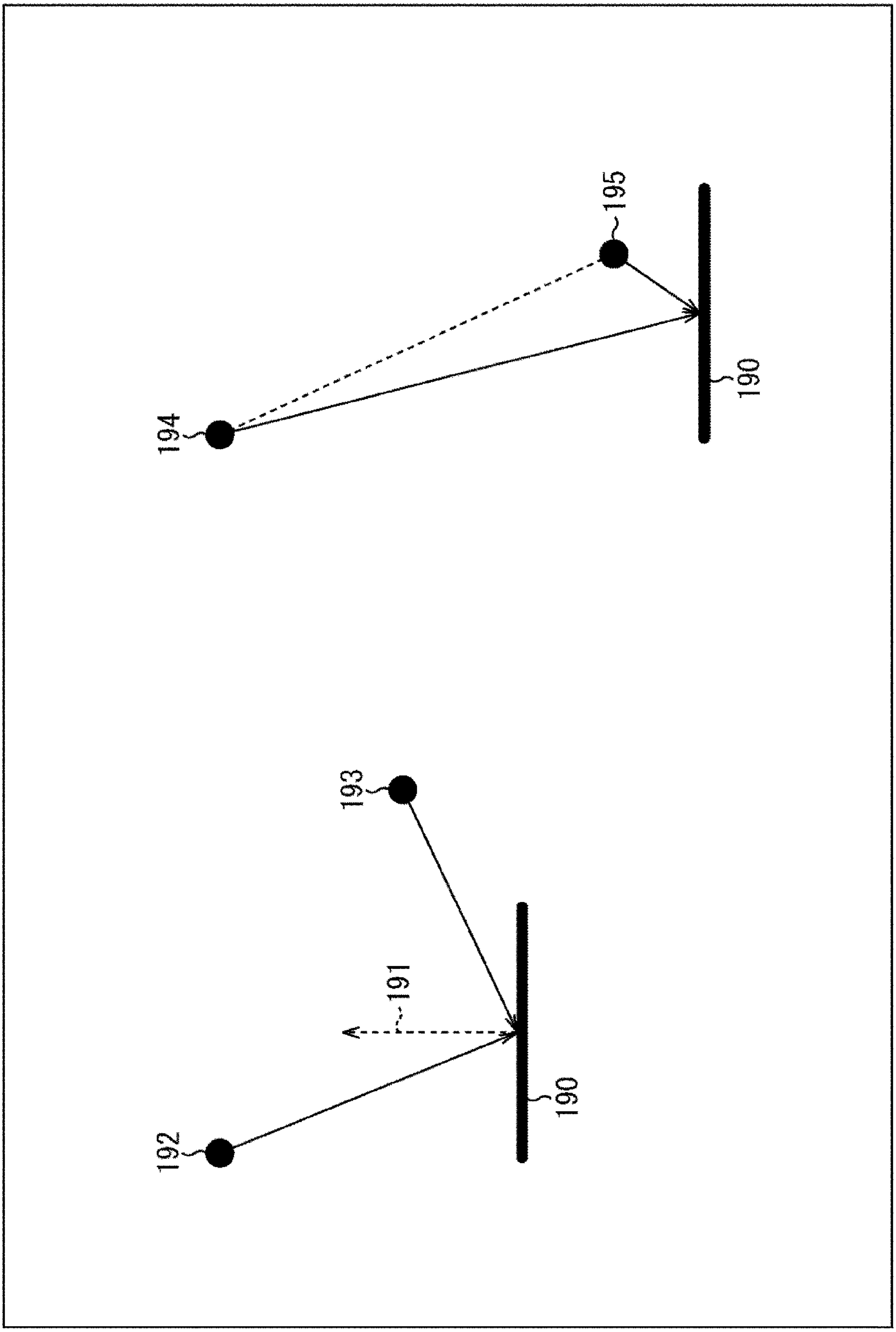

Fig. 13

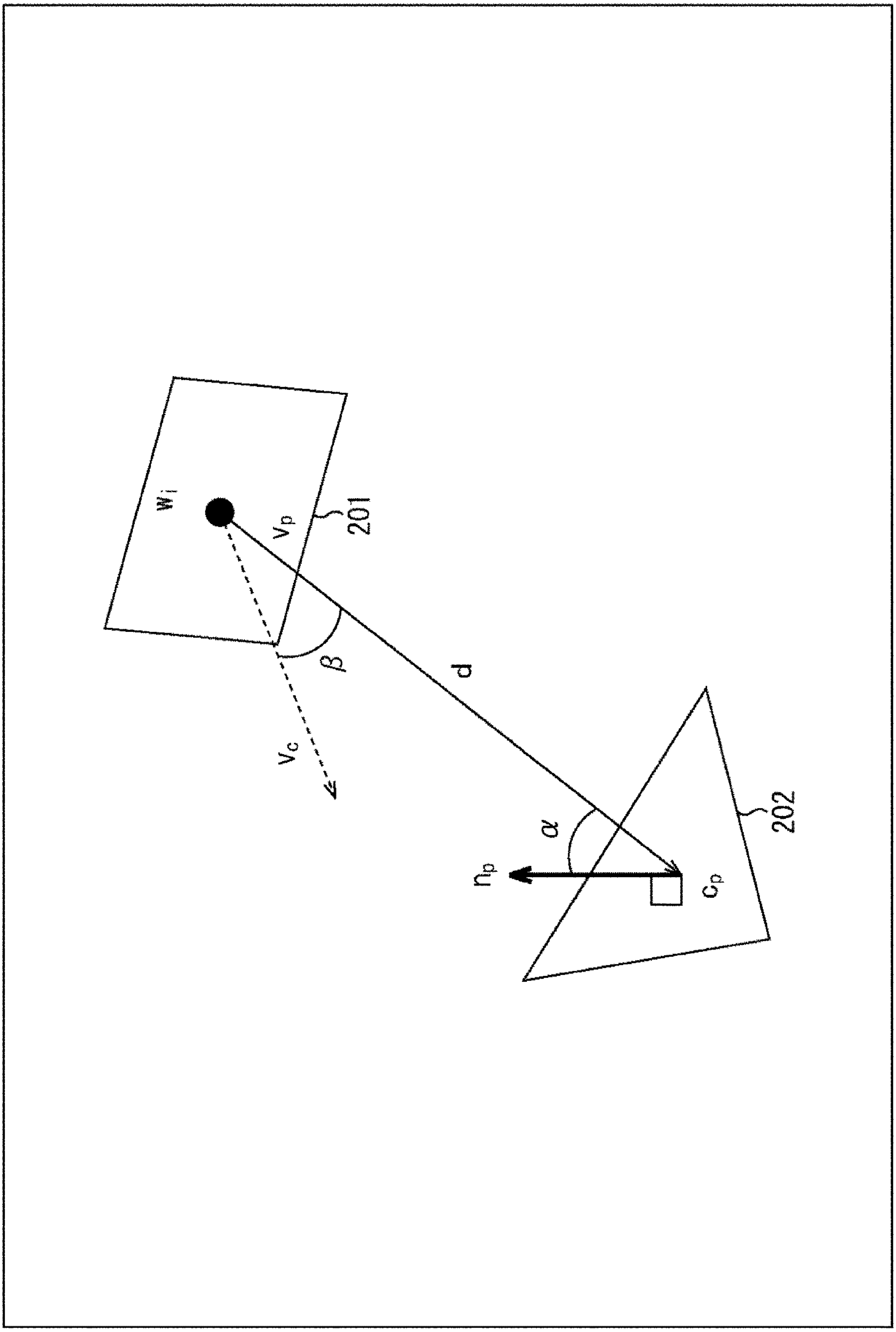

Fig. 14

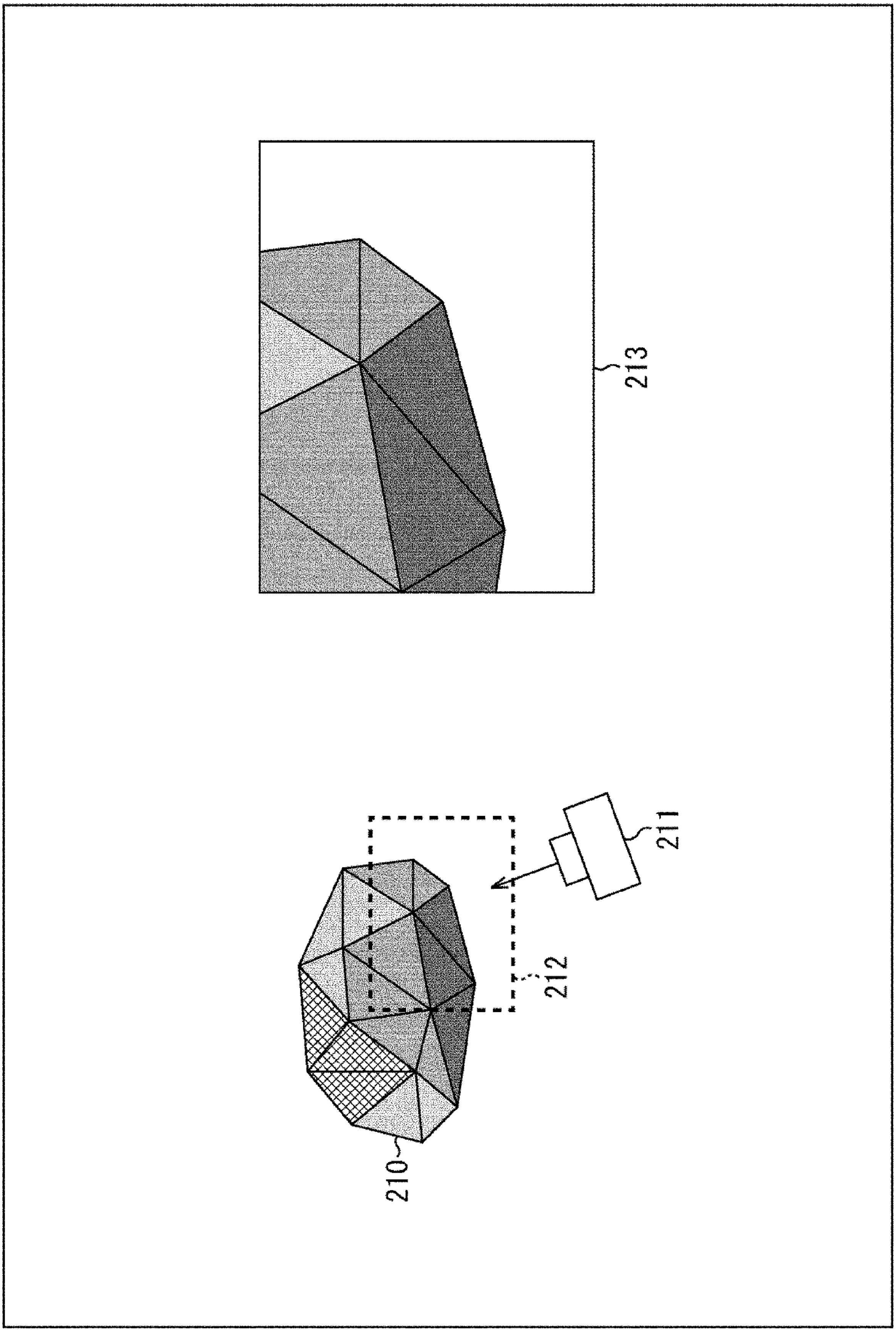

Fig. 15

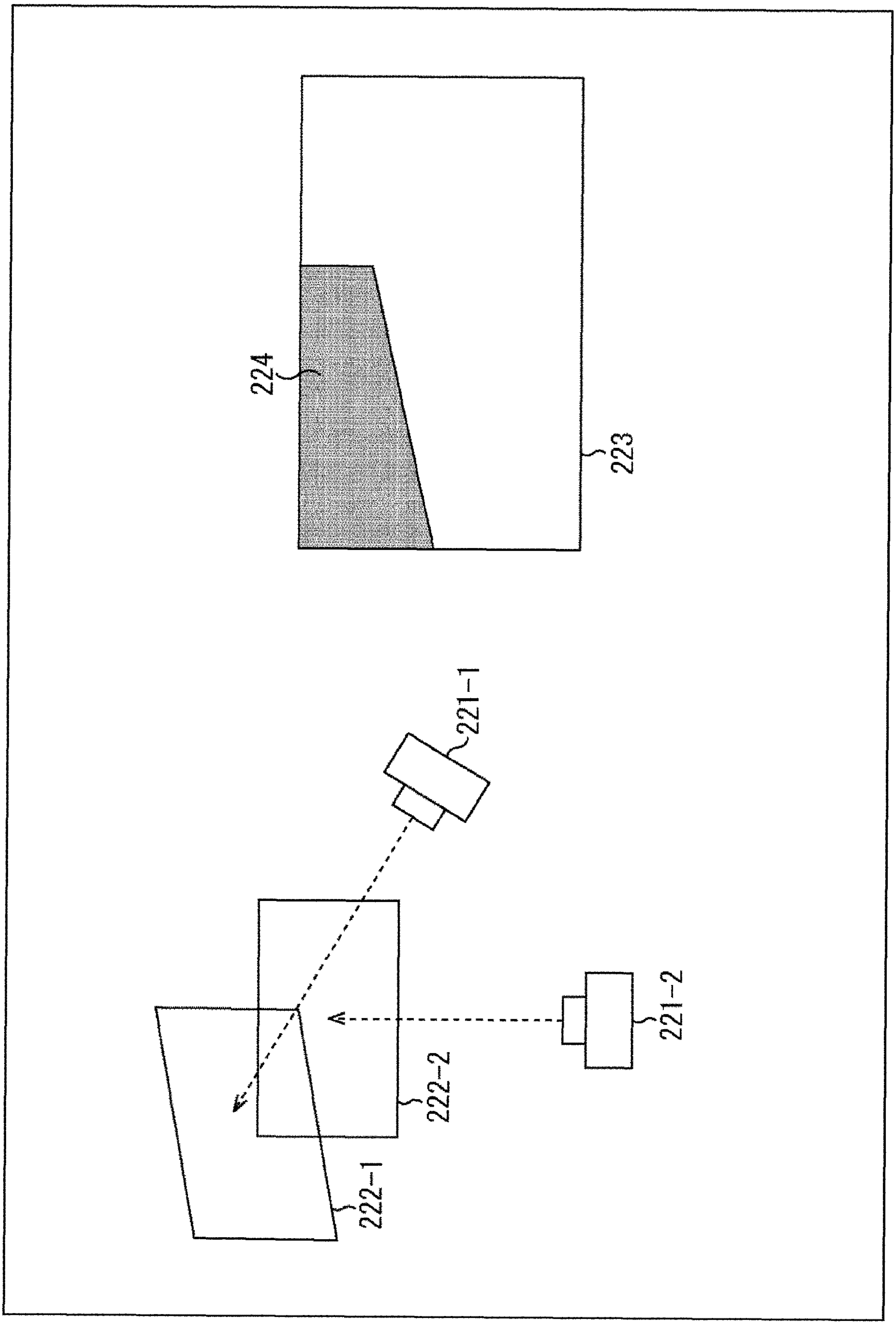

Fig. 16

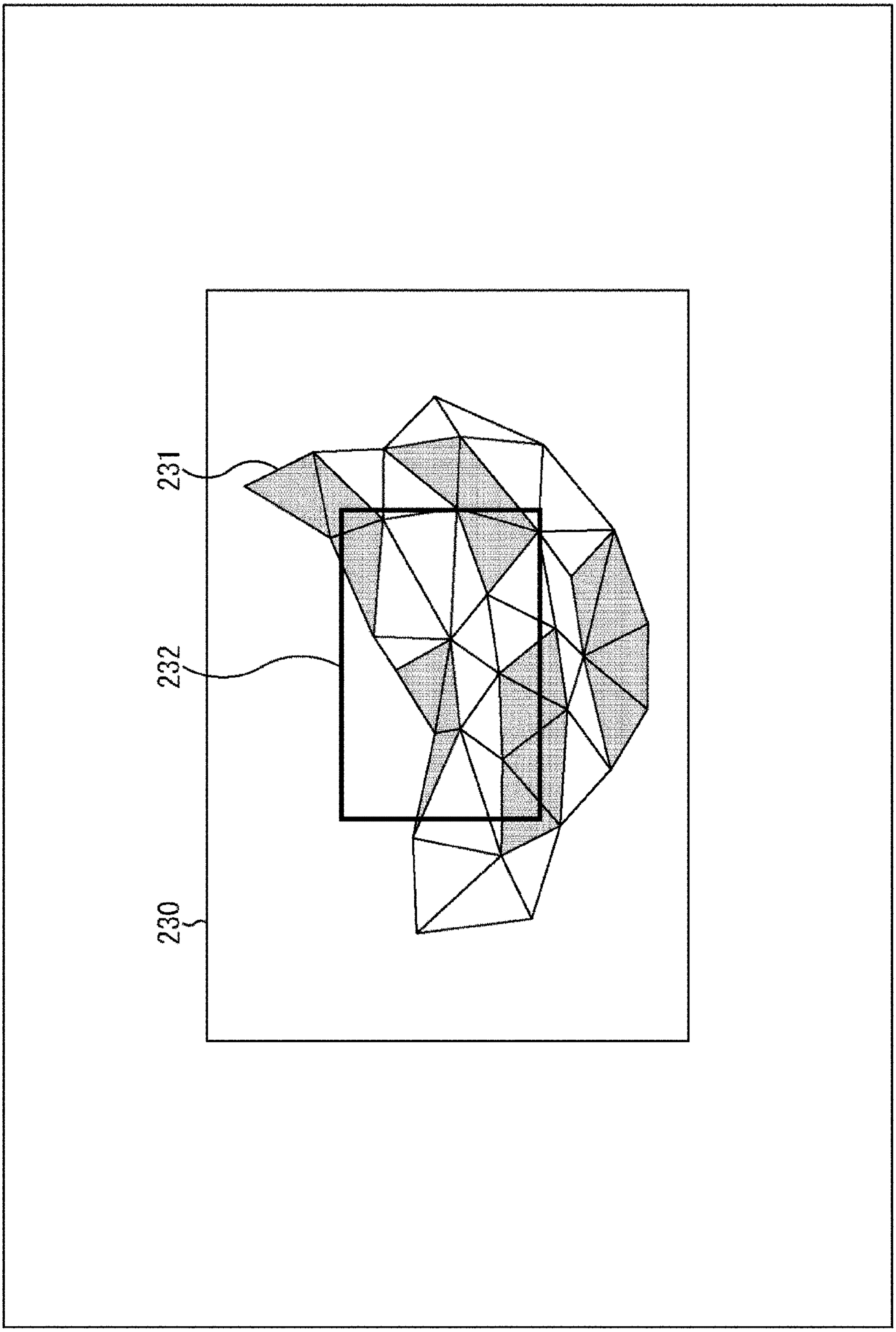

Fig. 17

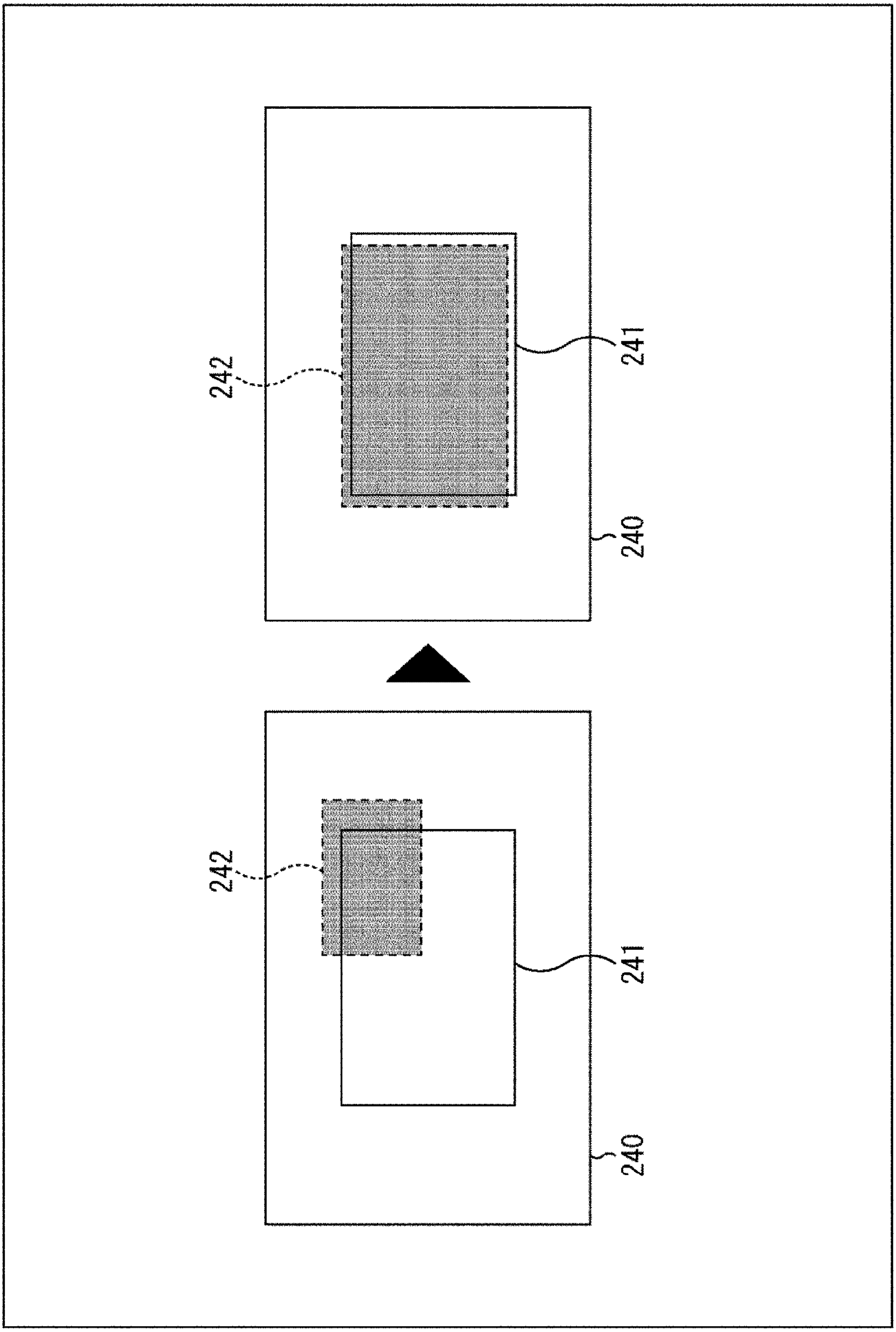

Fig. 18

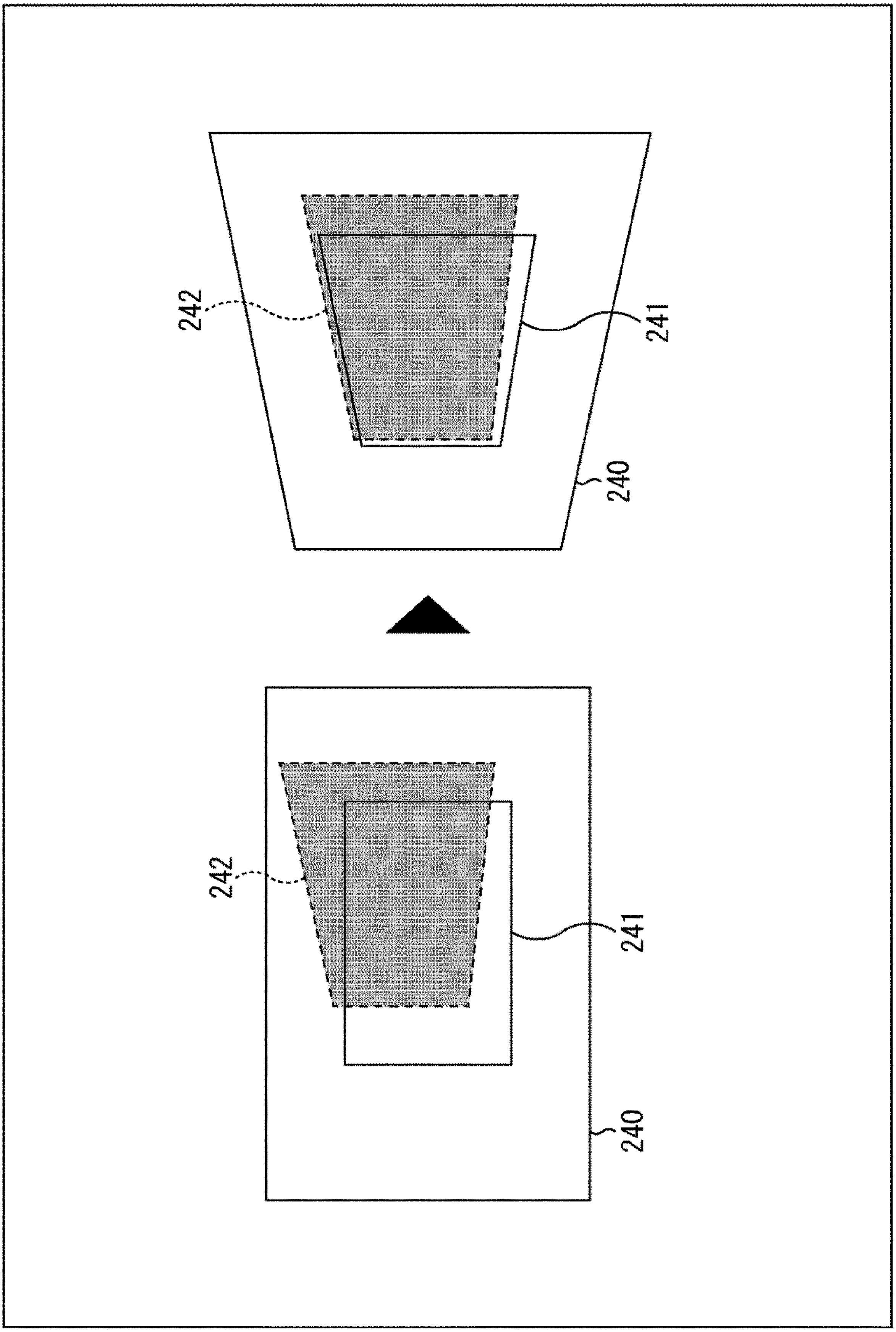

Fig. 19

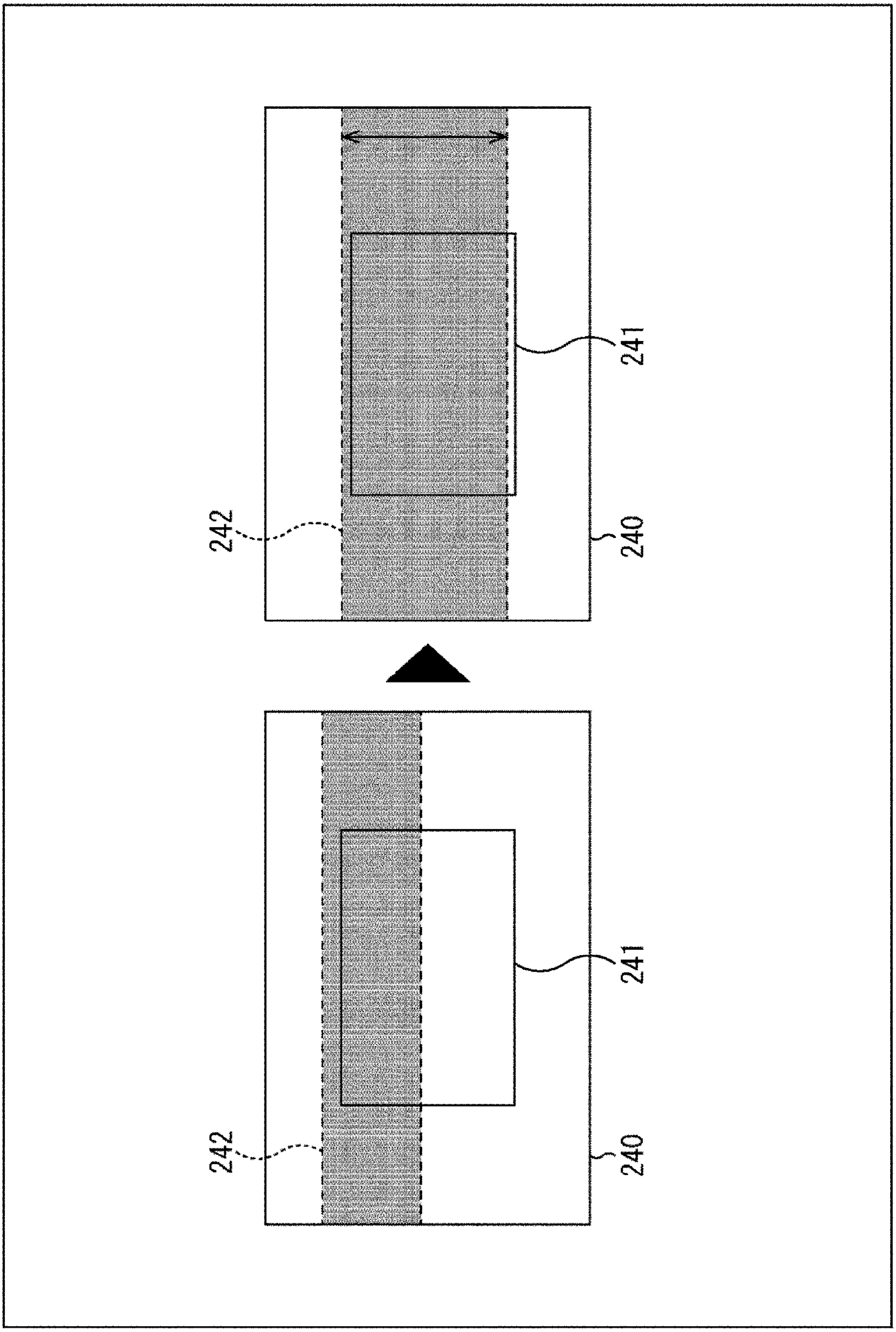

Fig. 20

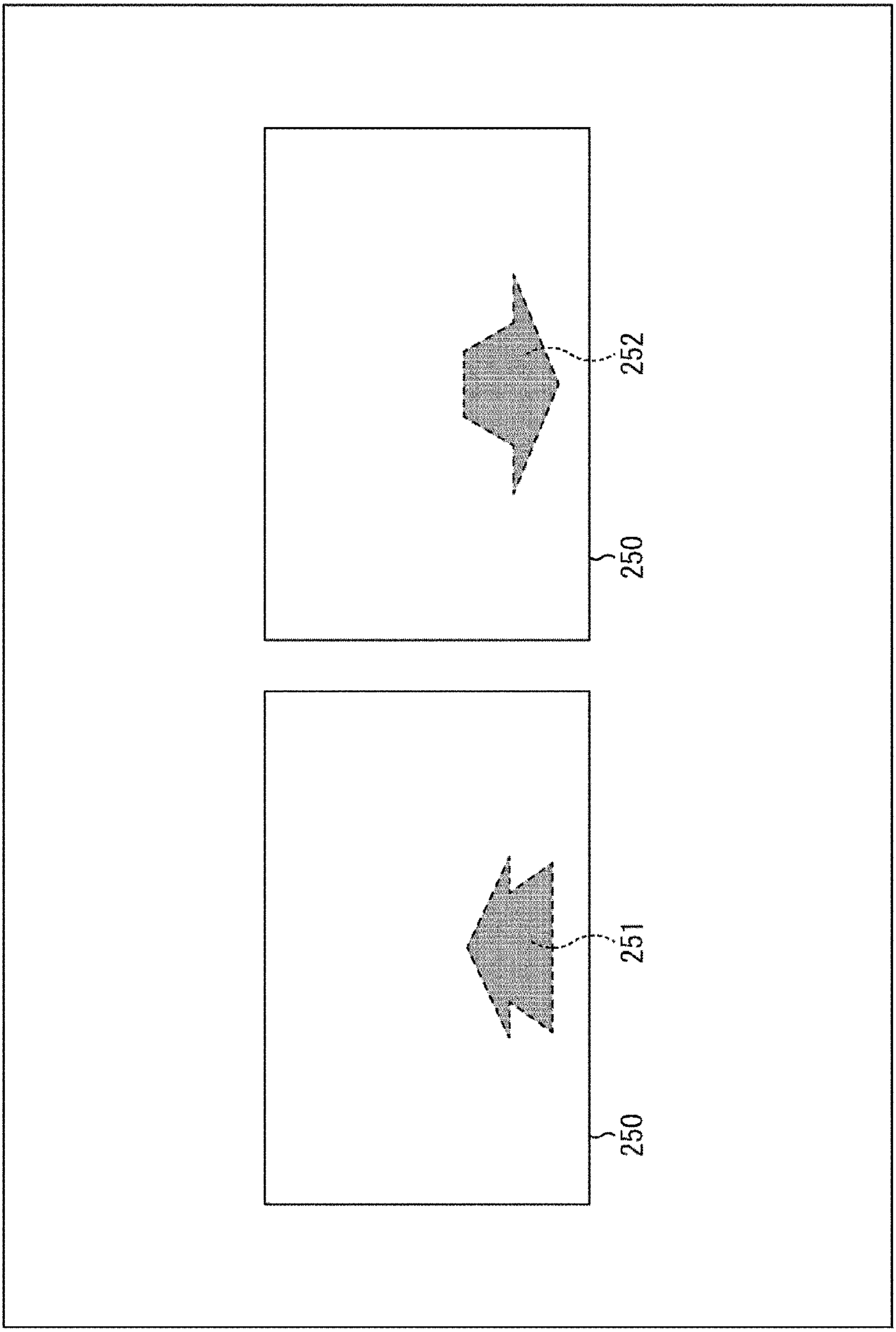

Fig. 21

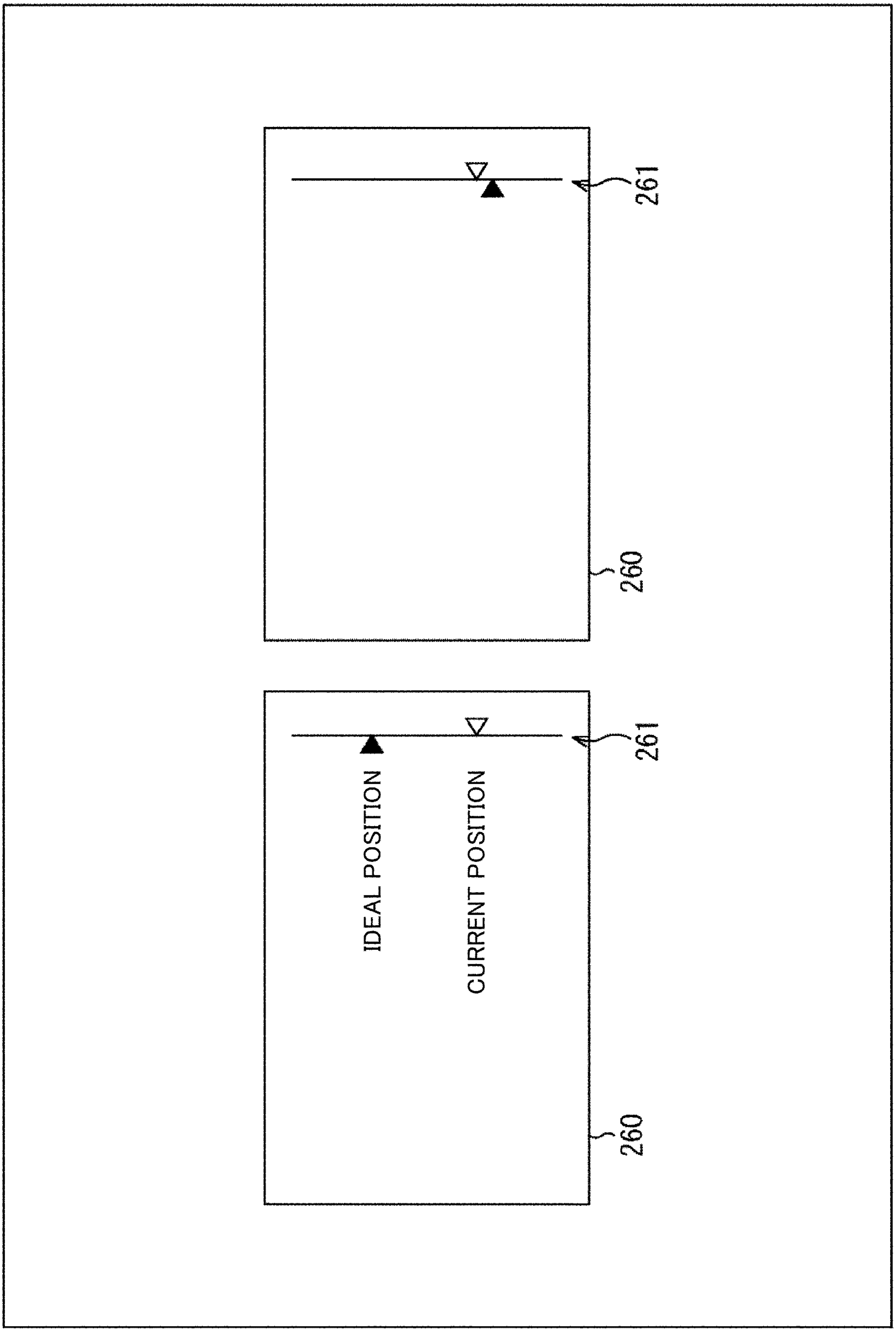

Fig. 22

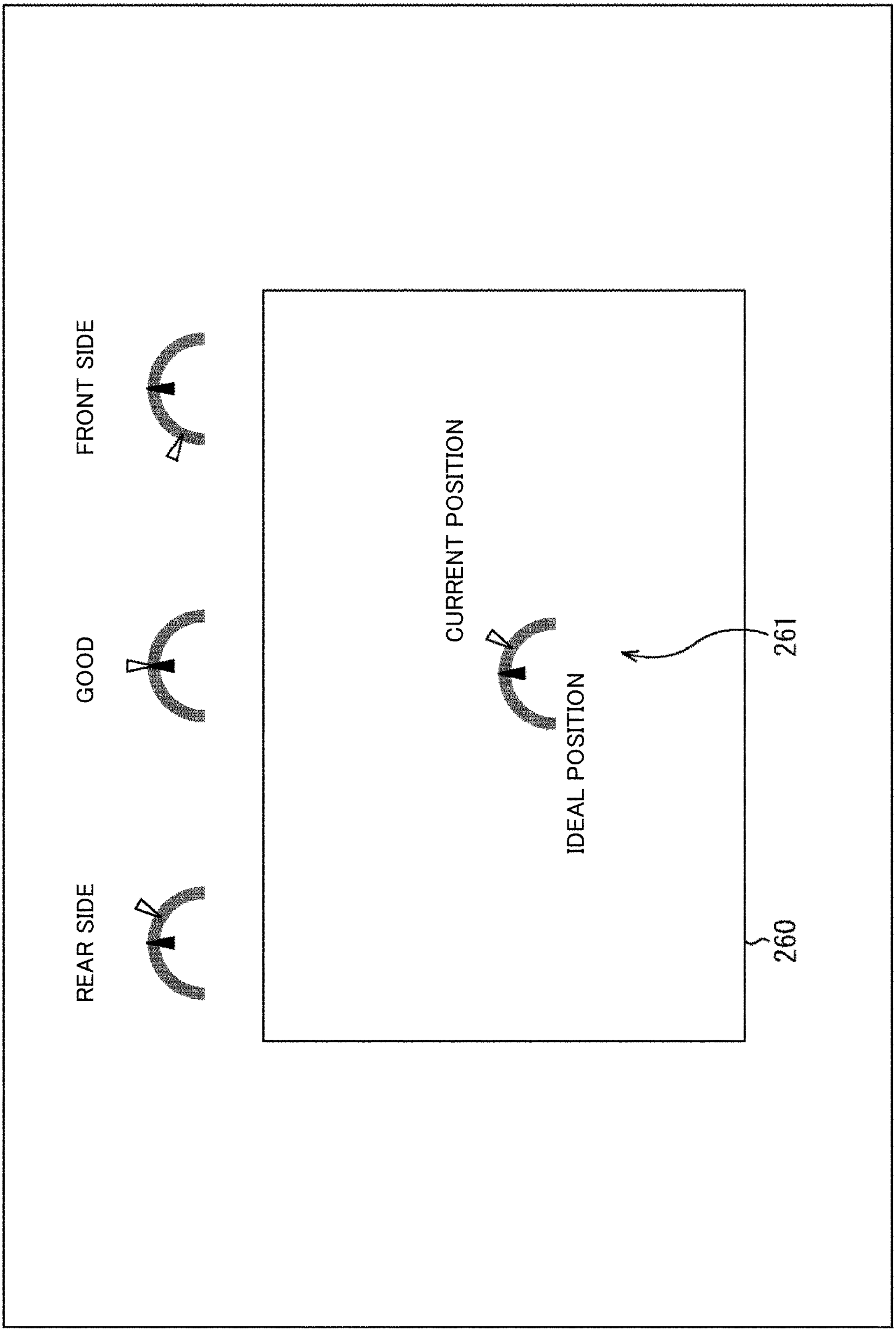
FRONT SIDE
GOOD
REAR SIDE
CURRENT POSITION
IDEAL POSITION
261
260

Fig. 23

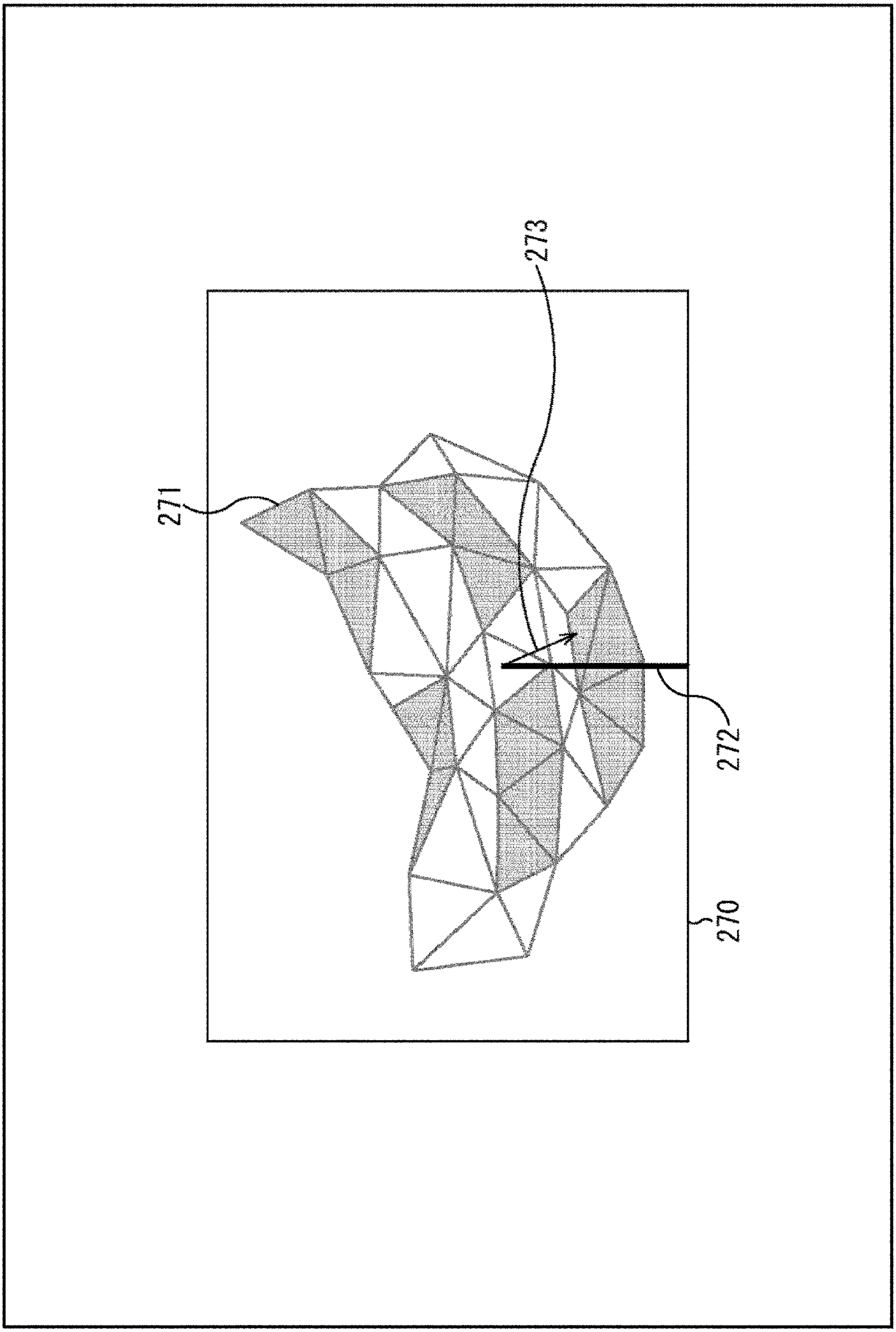

Fig. 24

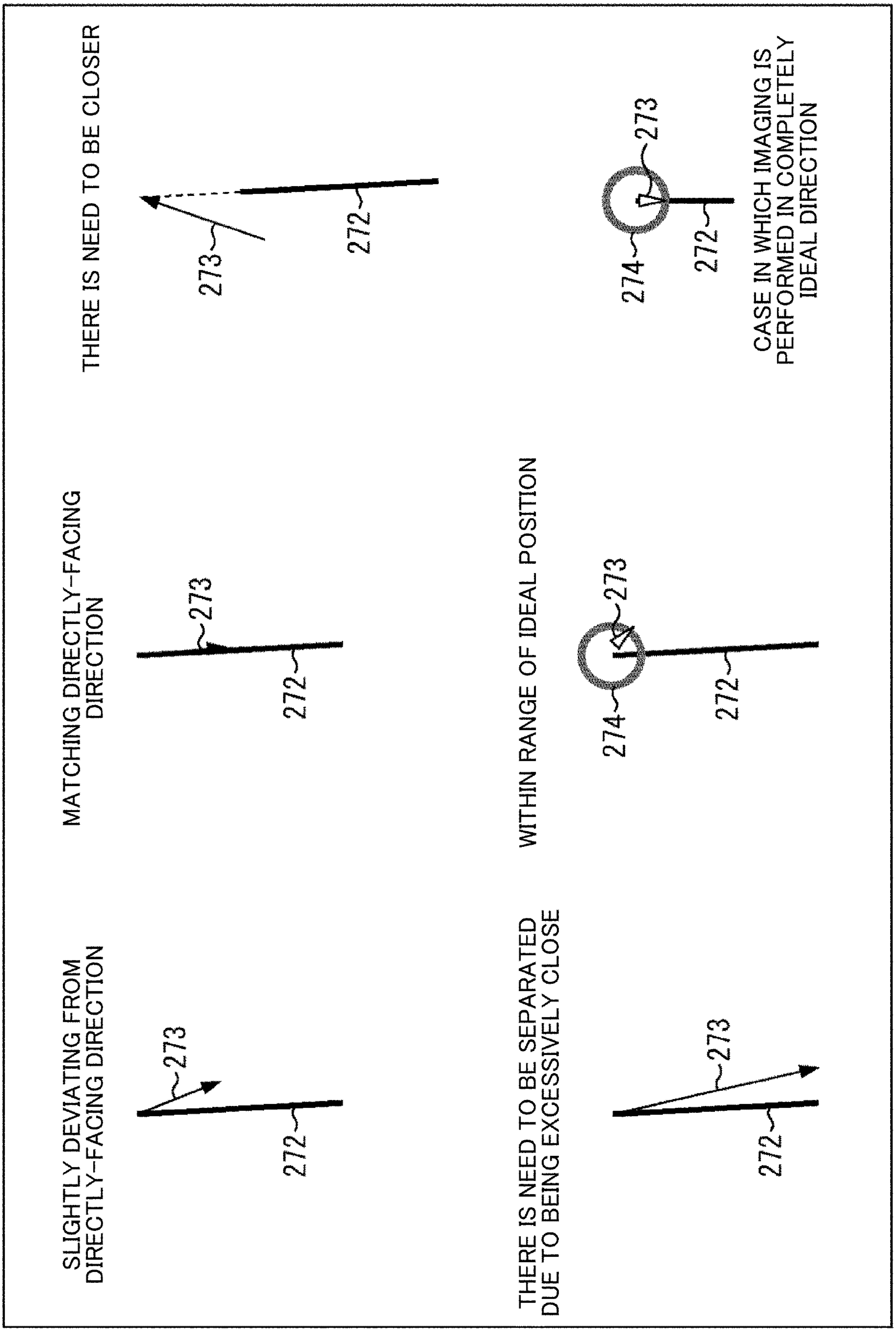
SLIGHTLY DEVIATING FROM DIRECTLY-FACING DIRECTION
273
272
MATCHING DIRECTLY-FACING DIRECTION
273
272
THERE IS NEED TO BE CLOSER
273
272
THERE IS NEED TO BE SEPARATED DUE TO BEING EXCESSIVELY CLOSE
273
272
WITHIN RANGE OF IDEAL POSITION
274
273
272
CASE IN WHICH IMAGING IS PERFORMED IN COMPLETELY IDEAL DIRECTION
274
273
272

Fig. 25

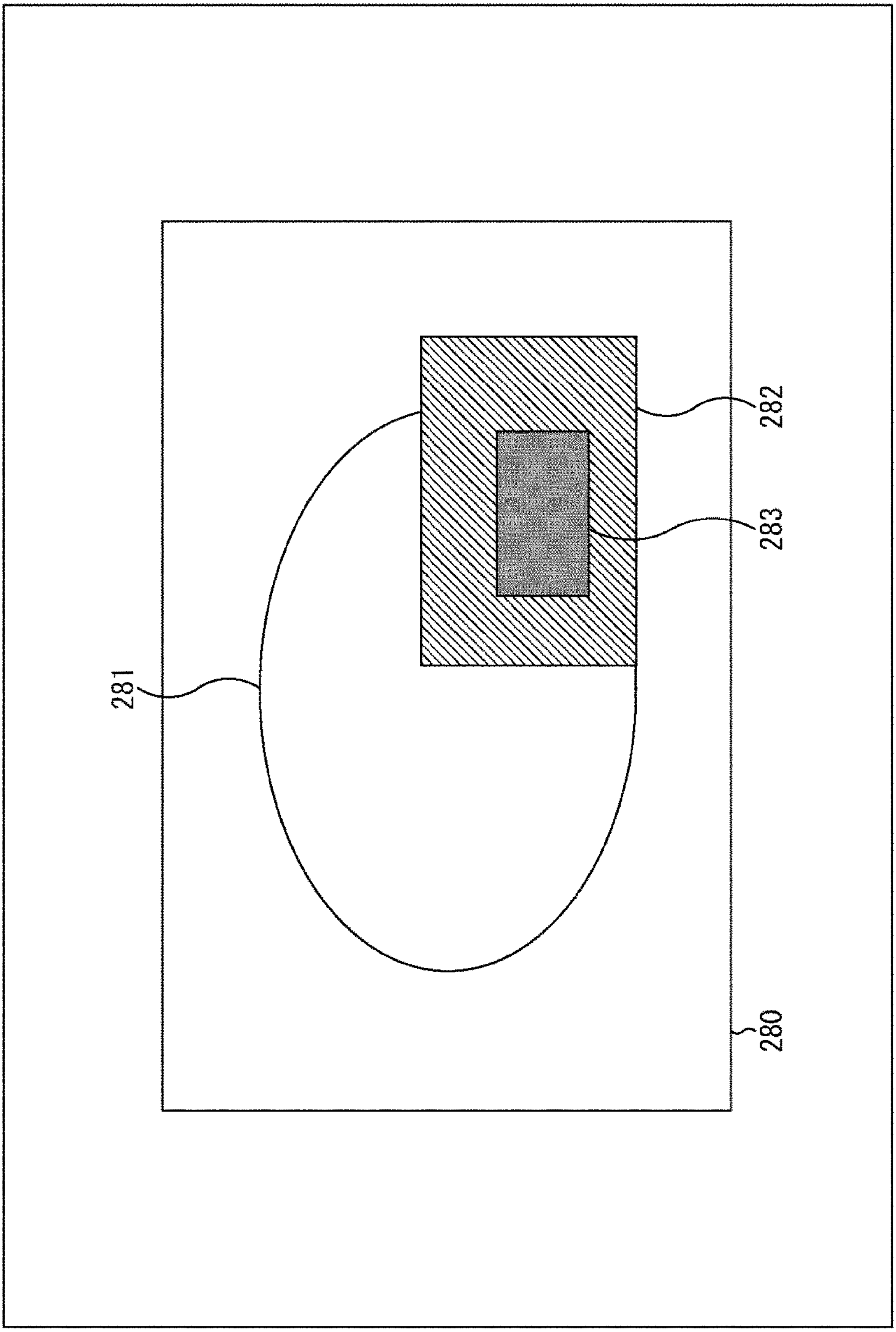

Fig. 26

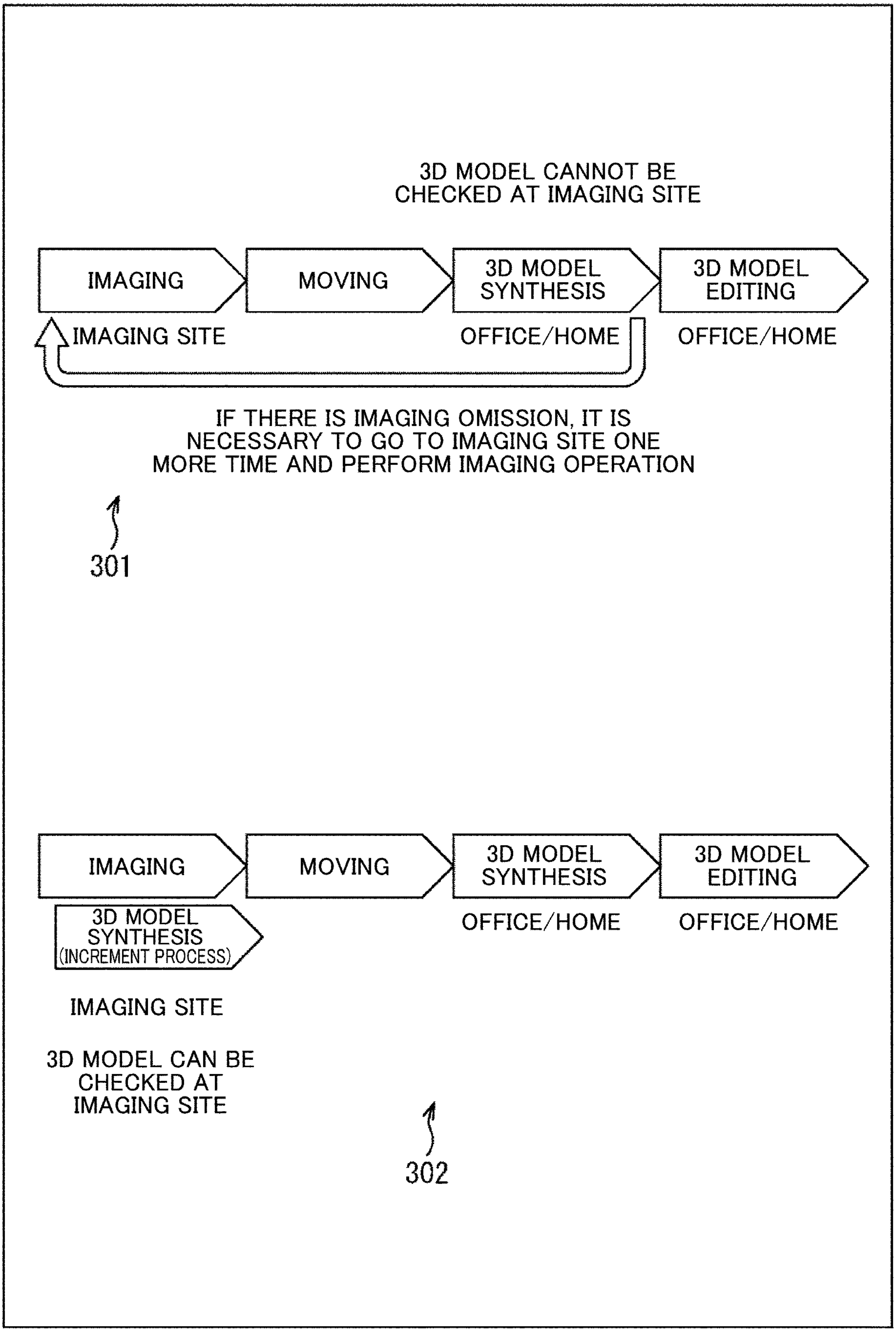
3D MODEL CANNOT BE CHECKED AT IMAGING SITE
IMAGING
MOVING
3D MODEL SYNTHESIS
3D MODEL EDITING
IMAGING SITE
OFFICE/HOME
OFFICE/HOME
IF THERE IS IMAGING OMISSION, IT IS NECESSARY TO GO TO IMAGING SITE ONE MORE TIME AND PERFORM IMAGING OPERATION
301
IMAGING
MOVING
3D MODEL SYNTHESIS
3D MODEL EDITING
3D MODEL SYNTHESIS (INCREMENT PROCESS)
OFFICE/HOME
OFFICE/HOME
IMAGING SITE
3D MODEL CAN BE CHECKED AT IMAGING SITE
302

Fig. 27

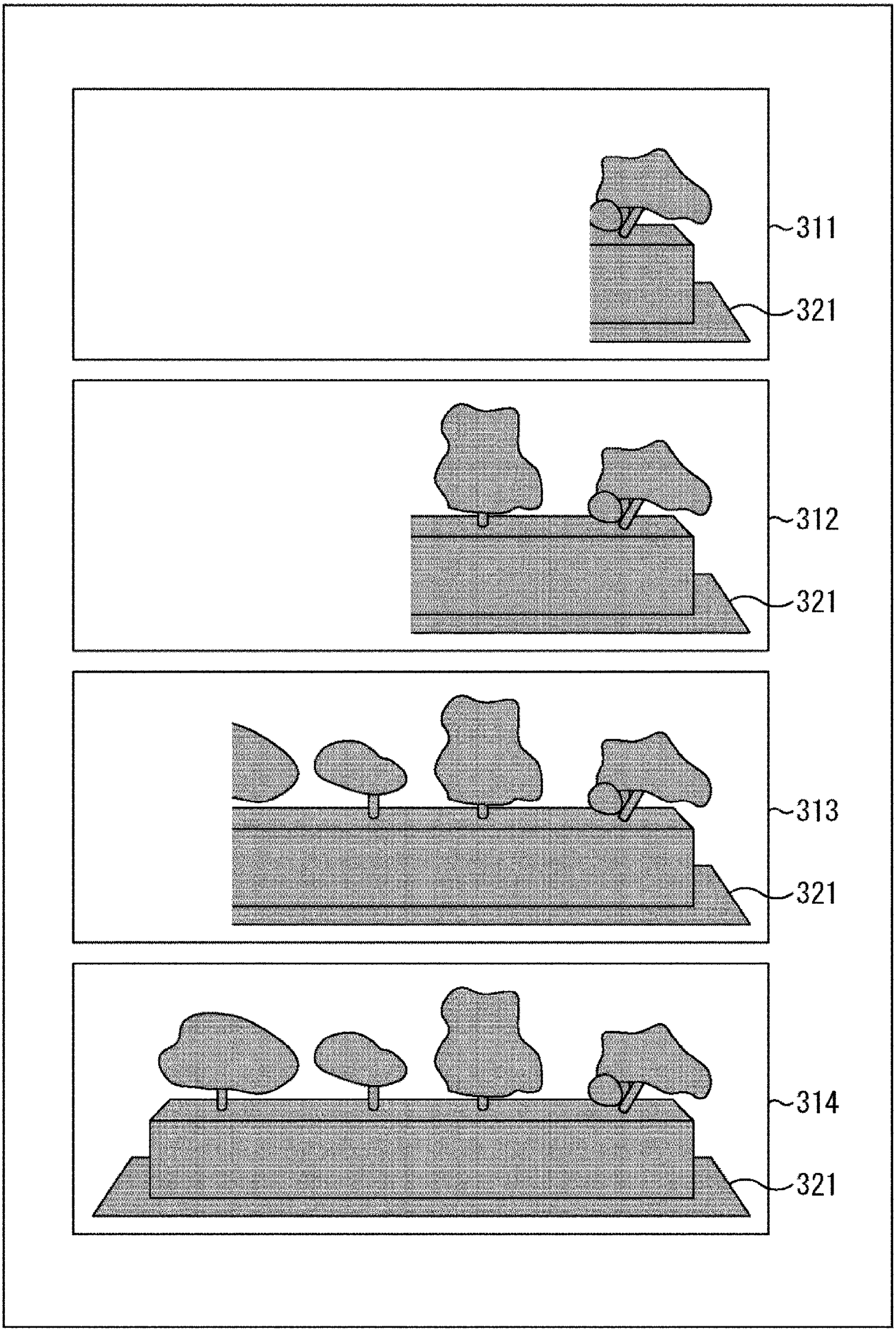

Fig. 28

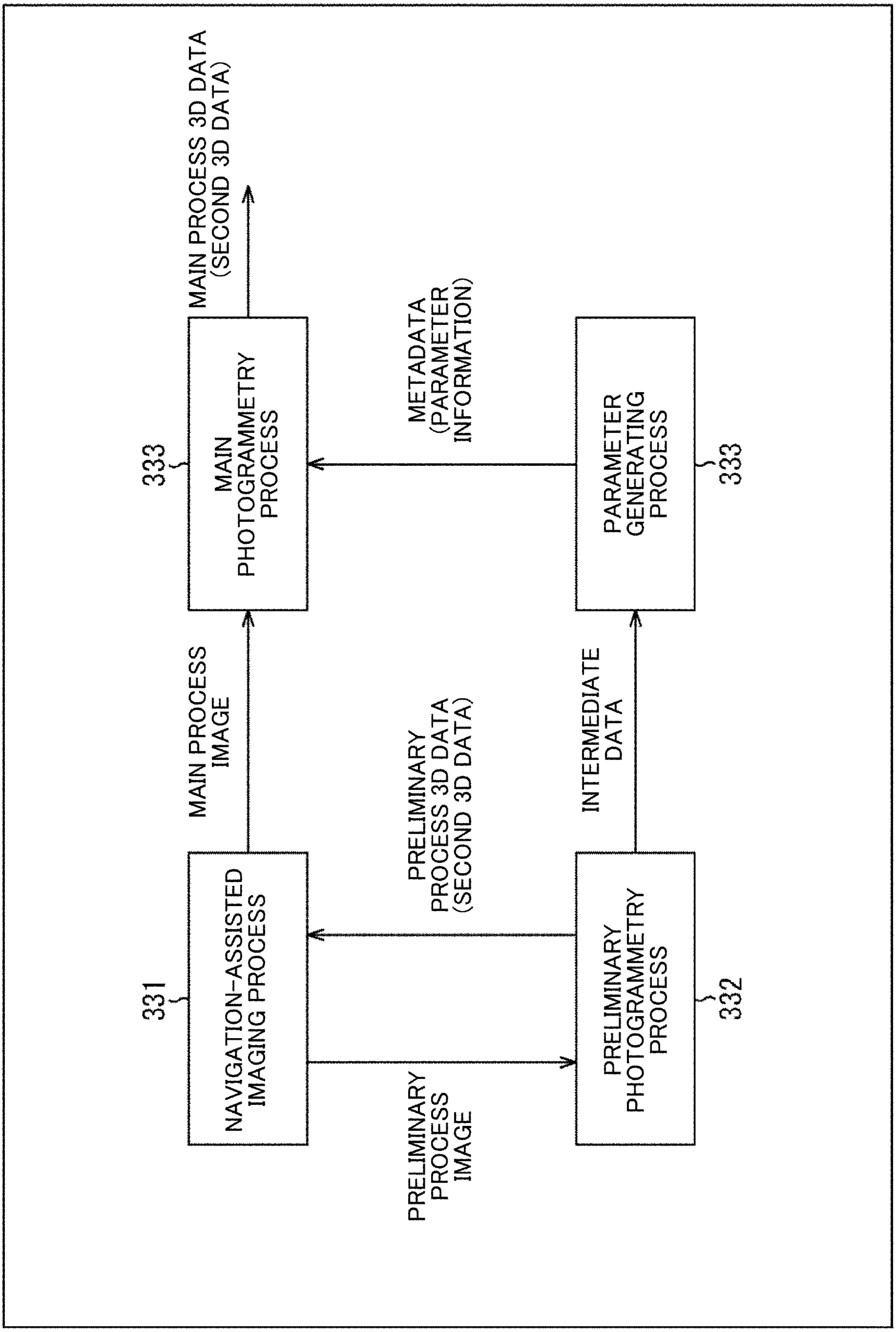
NAVIGATION-ASSISTED IMAGING PROCESS
331
PRELIMINARY PROCESS IMAGE
PRELIMINARY PHOTOGRAMMETRY PROCESS
332
PRELIMINARY PROCESS 3D DATA (SECOND 3D DATA)
MAIN PROCESS IMAGE
INTERMEDIATE DATA
MAIN PHOTOGRAMMETRY PROCESS
333
PARAMETER GENERATING PROCESS
333
METADATA (PARAMETER INFORMATION)
MAIN PROCESS 3D DATA (SECOND 3D DATA)

Fig. 29

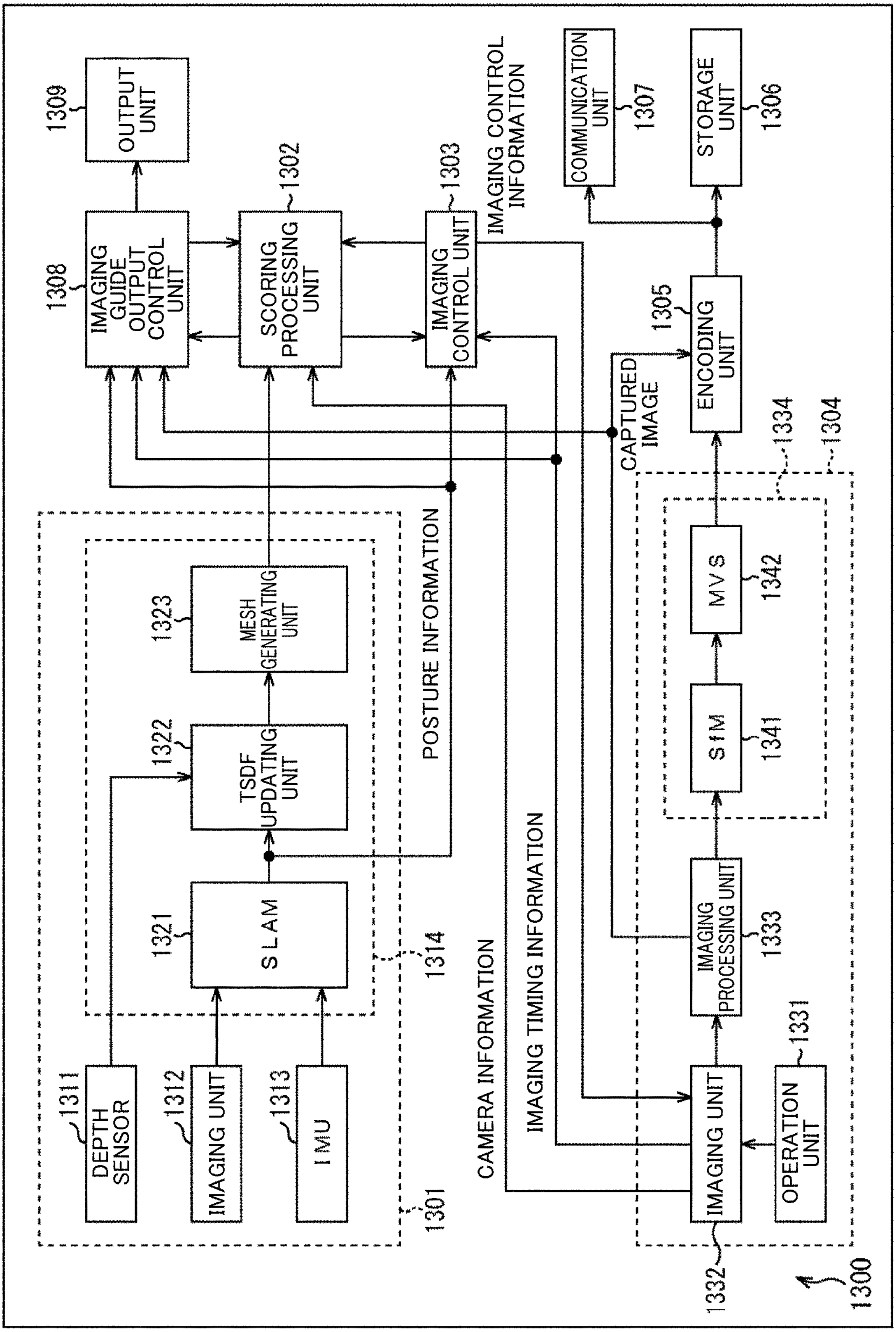
1300
1301
DEPTH SENSOR
1311
IMAGING UNIT
1312
I MU
1313
1314
SLAM
1321
TSDF UPDATING UNIT
1322
MESH GENERATING UNIT
1323
POSTURE INFORMATION
1302
SCORING PROCESSING UNIT
1303
IMAGING CONTROL UNIT
IMAGING CONTROL INFORMATION
1308
IMAGING GUIDE OUTPUT CONTROL UNIT
1309
OUTPUT UNIT
COMMUNICATION UNIT
1307
STORAGE UNIT
1306
1305
ENCODING UNIT
CAPTURED IMAGE
CAMERA INFORMATION
IMAGING TIMING INFORMATION
1304
1334
SfM
1341
MVS
1342
IMAGING PROCESSING UNIT
1333
IMAGING UNIT
1332
OPERATION UNIT
1331

Fig. 30

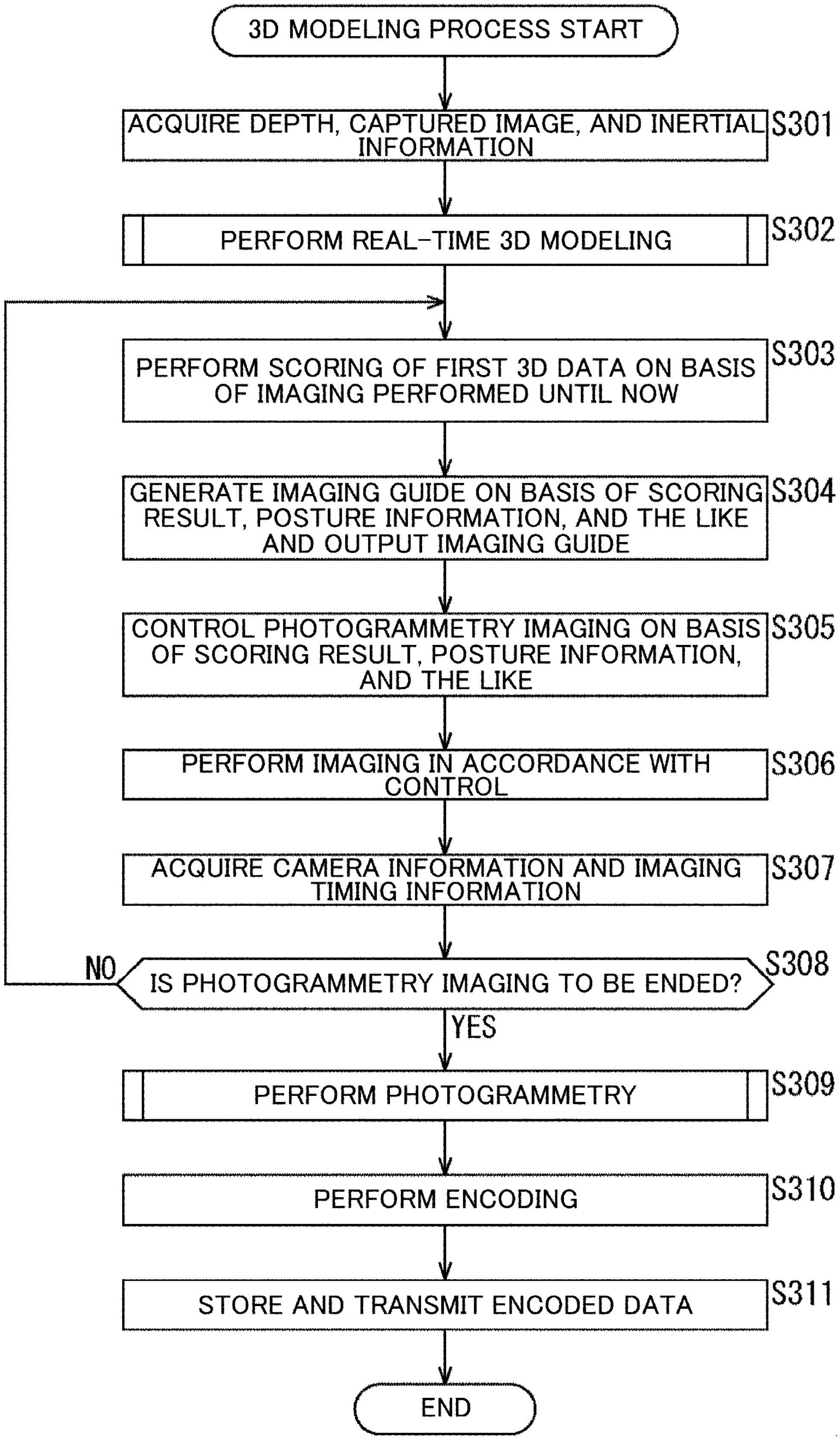
3D MODELING PROCESS START
ACQUIRE DEPTH, CAPTURED IMAGE, AND INERTIAL INFORMATION
S301
PERFORM REAL-TIME 3D MODELING
S302
PERFORM SCORING OF FIRST 3D DATA ON BASIS OF IMAGING PERFORMED UNTIL NOW
S303
GENERATE IMAGING GUIDE ON BASIS OF SCORING RESULT, POSTURE INFORMATION, AND THE LIKE AND OUTPUT IMAGING GUIDE
S304
CONTROL PHOTOGRAMMETRY IMAGING ON BASIS OF SCORING RESULT, POSTURE INFORMATION, AND THE LIKE
S305
PERFORM IMAGING IN ACCORDANCE WITH CONTROL
S306
ACQUIRE CAMERA INFORMATION AND IMAGING TIMING INFORMATION
S307
IS PHOTOGRAMMETRY IMAGING TO BE ENDED?
S308
NO
YES
PERFORM PHOTOGRAMMETRY
S309
PERFORM ENCODING
S310
STORE AND TRANSMIT ENCODED DATA
S311
END

Fig. 31

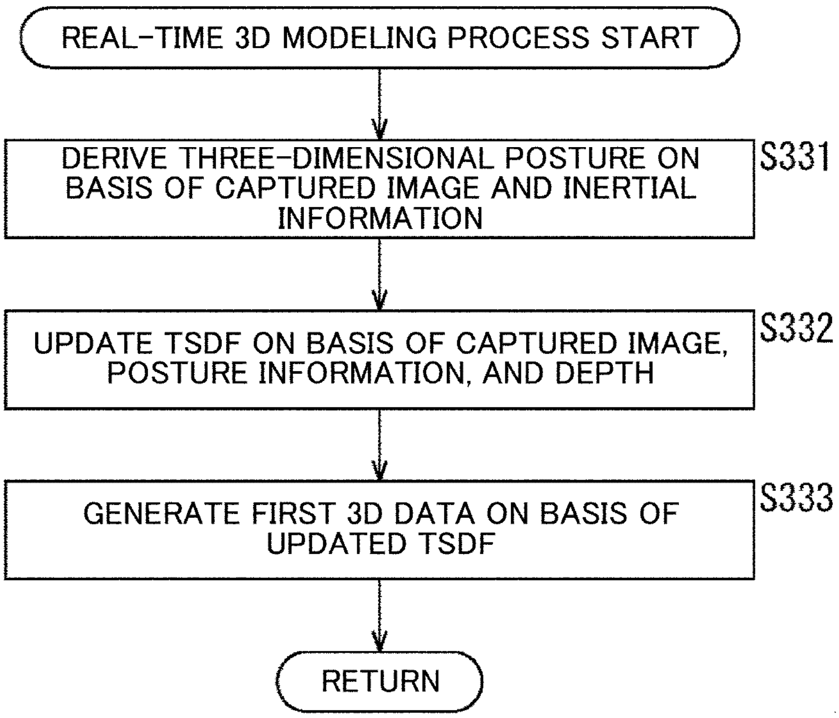
REAL-TIME 3D MODELING PROCESS START
DERIVE THREE-DIMENSIONAL POSTURE ON BASIS OF CAPTURED IMAGE AND INERTIAL INFORMATION
S331
UPDATE TSDF ON BASIS OF CAPTURED IMAGE, POSTURE INFORMATION, AND DEPTH
S332
GENERATE FIRST 3D DATA ON BASIS OF UPDATED TSDF
S333
RETURN

Fig. 32

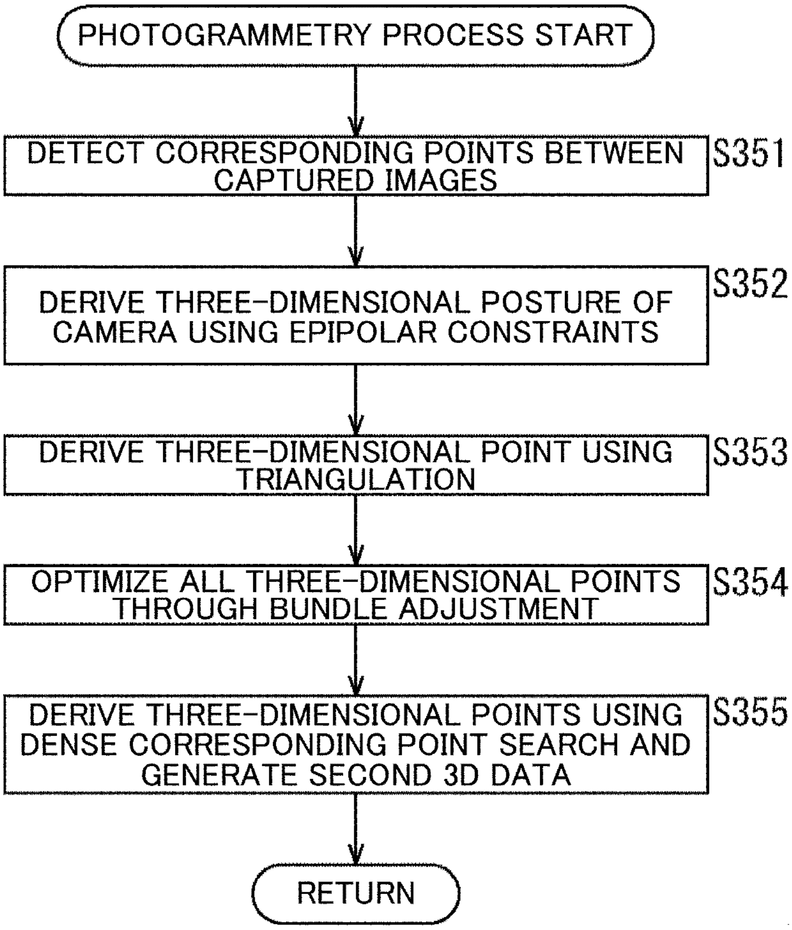
PHOTOGRAMMETRY PROCESS START
DETECT CORRESPONDING POINTS BETWEEN CAPTURED IMAGES
S351
DERIVE THREE-DIMENSIONAL POSTURE OF CAMERA USING EPIPOLAR CONSTRAINTS
S352
DERIVE THREE-DIMENSIONAL POINT USING TRIANGULATION
S353
OPTIMIZE ALL THREE-DIMENSIONAL POINTS THROUGH BUNDLE ADJUSTMENT
S354
DERIVE THREE-DIMENSIONAL POINTS USING DENSE CORRESPONDING POINT SEARCH AND GENERATE SECOND 3D DATA
S355
RETURN

Fig. 33

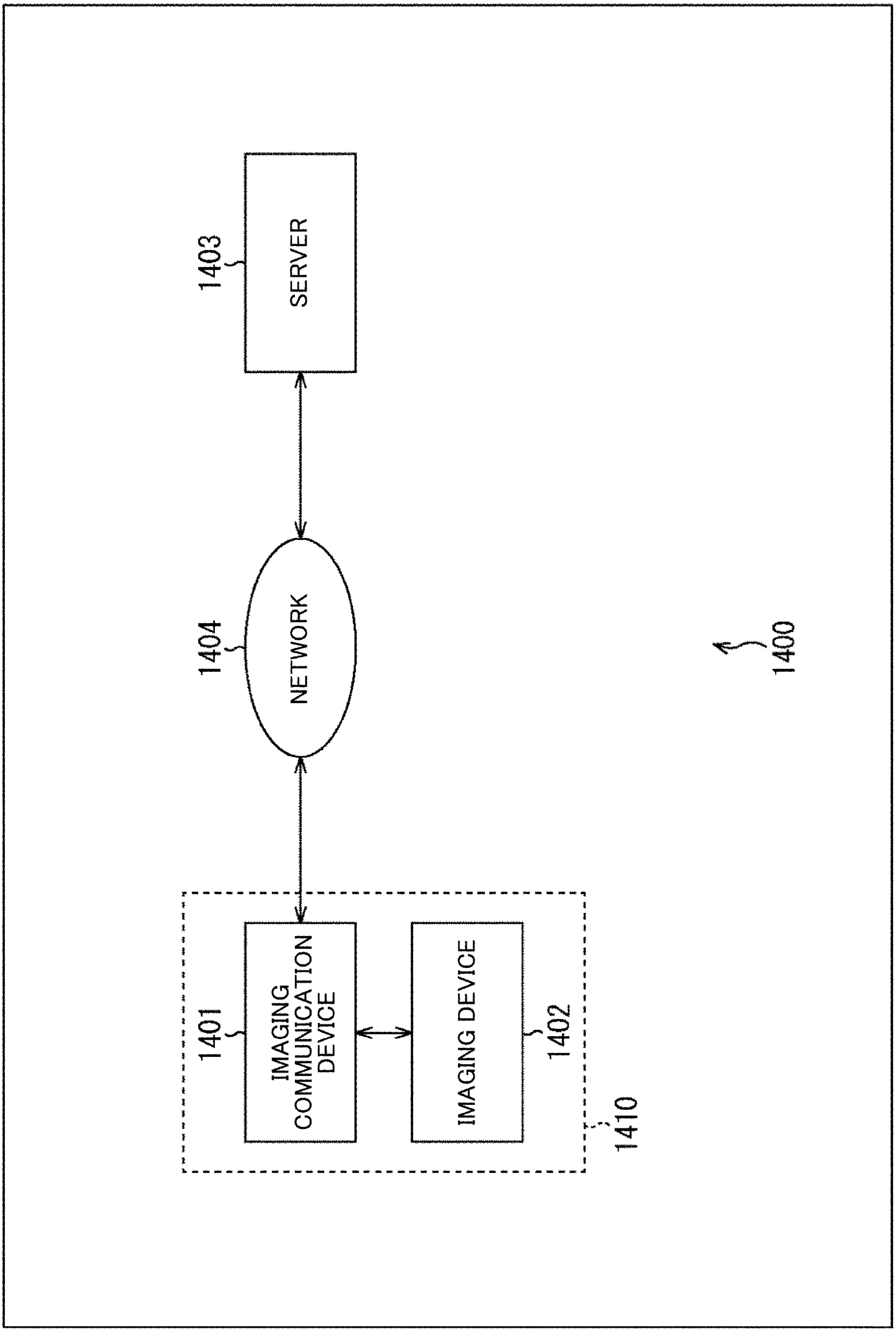
SERVER
1403
NETWORK
1404
IMAGING COMMUNICATION DEVICE
1401
IMAGING DEVICE
1402
1410
1400

Fig. 34

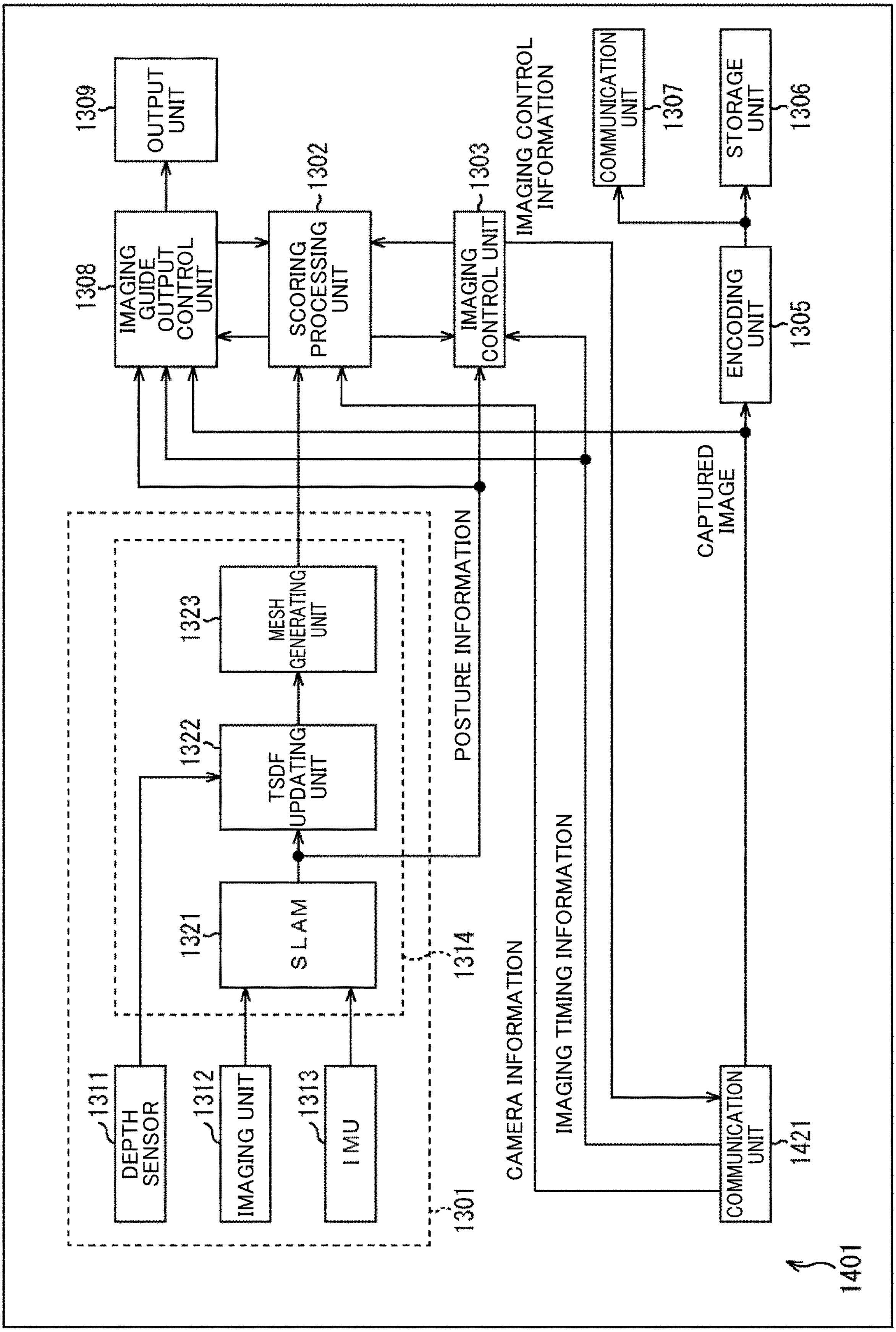
OUTPUT UNIT
1309
IMAGING GUIDE OUTPUT CONTROL UNIT
1308
SCORING PROCESSING UNIT
1302
IMAGING CONTROL UNIT
1303
IMAGING CONTROL INFORMATION
COMMUNICATION UNIT
1307
STORAGE UNIT
1306
ENCODING UNIT
1305
CAPTURED IMAGE
POSTURE INFORMATION
MESH GENERATING UNIT
1323
TSDF UPDATING UNIT
1322
SLAM
1321
1314
DEPTH SENSOR
1311
IMAGING UNIT
1312
IMU
1313
1301
CAMERA INFORMATION
IMAGING TIMING INFORMATION
COMMUNICATION UNIT
1421
1401

Fig. 35

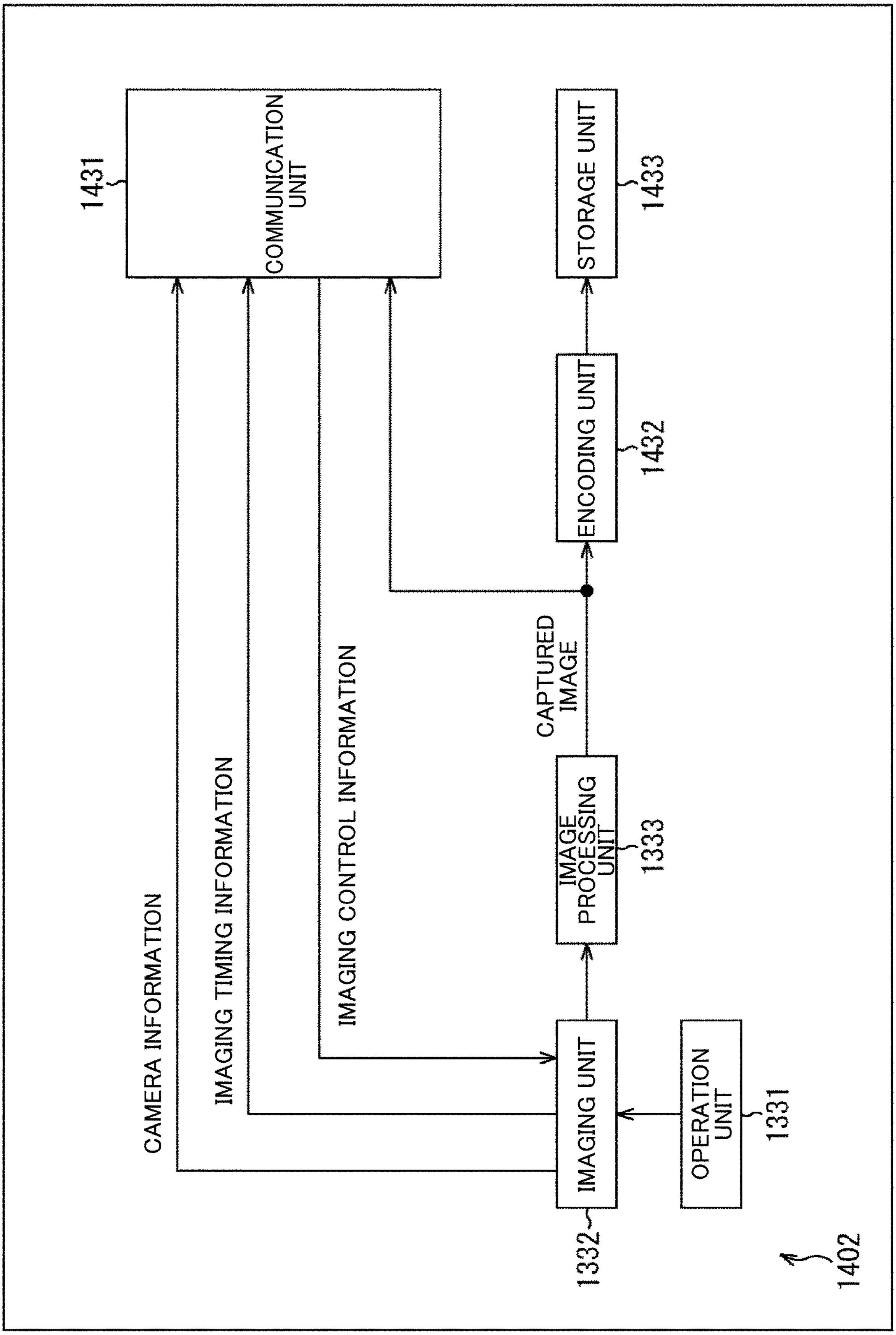
1431
COMMUNICATION UNIT
STORAGE UNIT
1433
ENCODING UNIT
1432
CAPTURED IMAGE
IMAGE PROCESSING UNIT
1333
CAMERA INFORMATION
IMAGING TIMING INFORMATION
IMAGING CONTROL INFORMATION
IMAGING UNIT
1332
OPERATION UNIT
1331
1402

Fig. 36

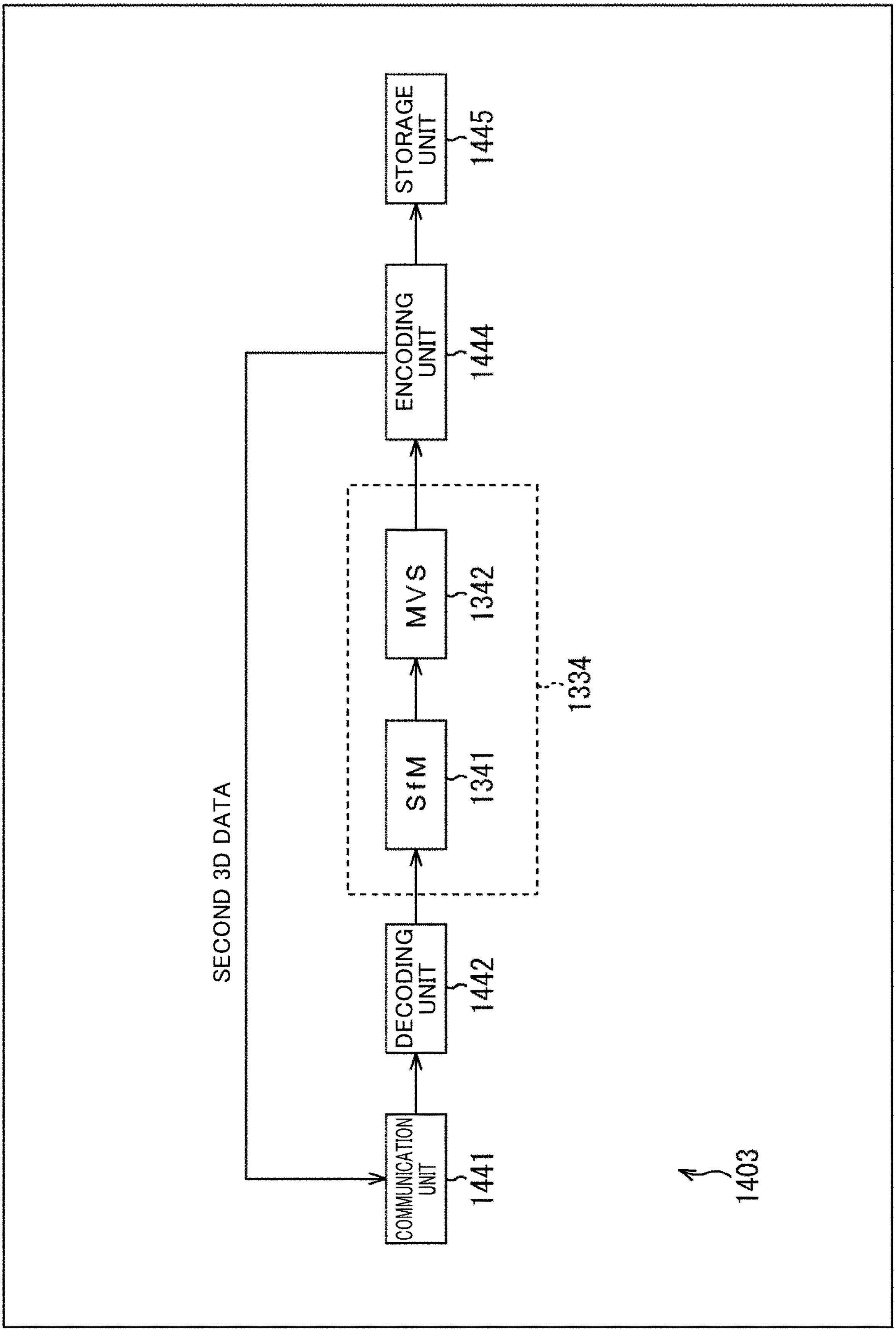
STORAGE UNIT
1445
ENCODING UNIT
1444
MVS
1342
SfM
1341
1334
DECODING UNIT
1442
COMMUNICATION UNIT
1441
SECOND 3D DATA
1403

Fig. 37

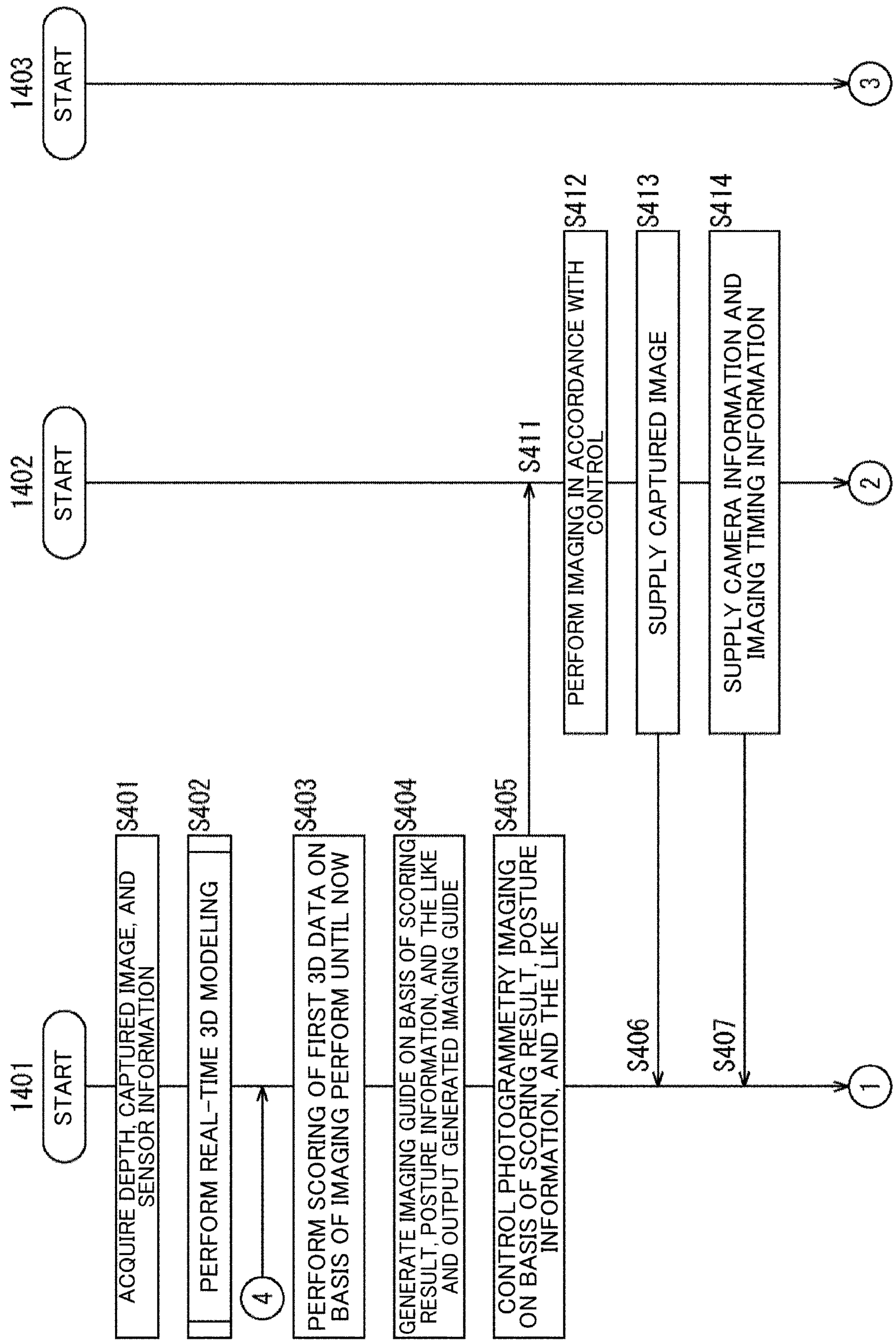
1401
START
ACQUIRE DEPTH, CAPTURED IMAGE, AND SENSOR INFORMATION
S401
PERFORM REAL-TIME 3D MODELING
S402
4
PERFORM SCORING OF FIRST 3D DATA ON BASIS OF IMAGING PERFORM UNTIL NOW
S403
GENERATE IMAGING GUIDE ON BASIS OF SCORING RESULT, POSTURE INFORMATION, AND THE LIKE AND OUTPUT GENERATED IMAGING GUIDE
S404
CONTROL PHOTOGRAMMETRY IMAGING ON BASIS OF SCORING RESULT, POSTURE INFORMATION, AND THE LIKE
S405
S406
S407
1
1402
START
S411
PERFORM IMAGING IN ACCORDANCE WITH CONTROL
S412
SUPPLY CAPTURED IMAGE
S413
SUPPLY CAMERA INFORMATION AND IMAGING TIMING INFORMATION
S414
2
1403
START
3

Fig. 38

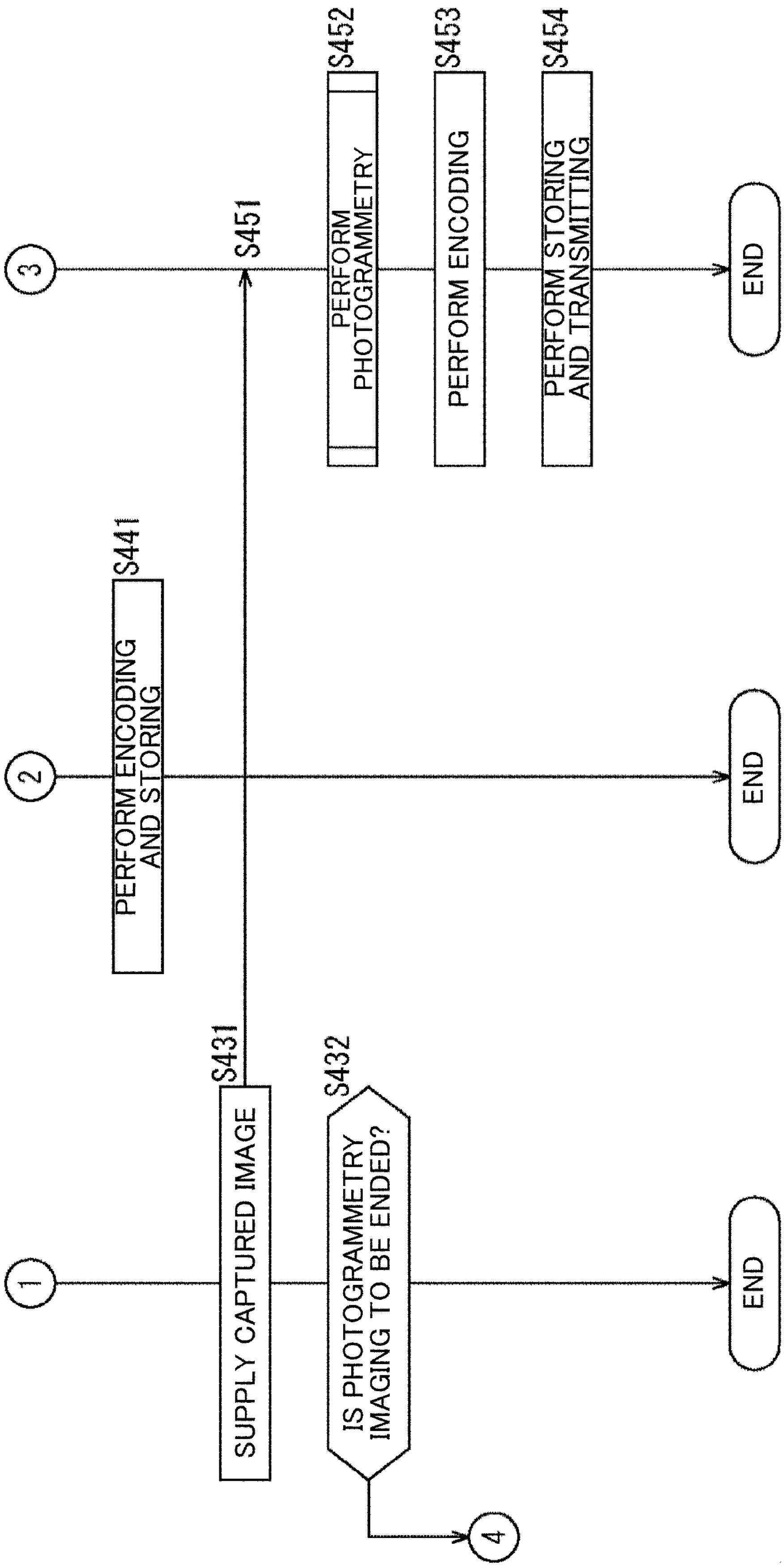
1
S431
SUPPLY CAPTURED IMAGE
S432
IS PHOTOGRAMMETRY IMAGING TO BE ENDED?
4
END
2
S441
PERFORM ENCODING AND STORING
END
3
S451
S452
PERFORM PHOTOGRAMMETRY
S453
PERFORM ENCODING
S454
PERFORM STORING AND TRANSMITTING
END

Fig. 39

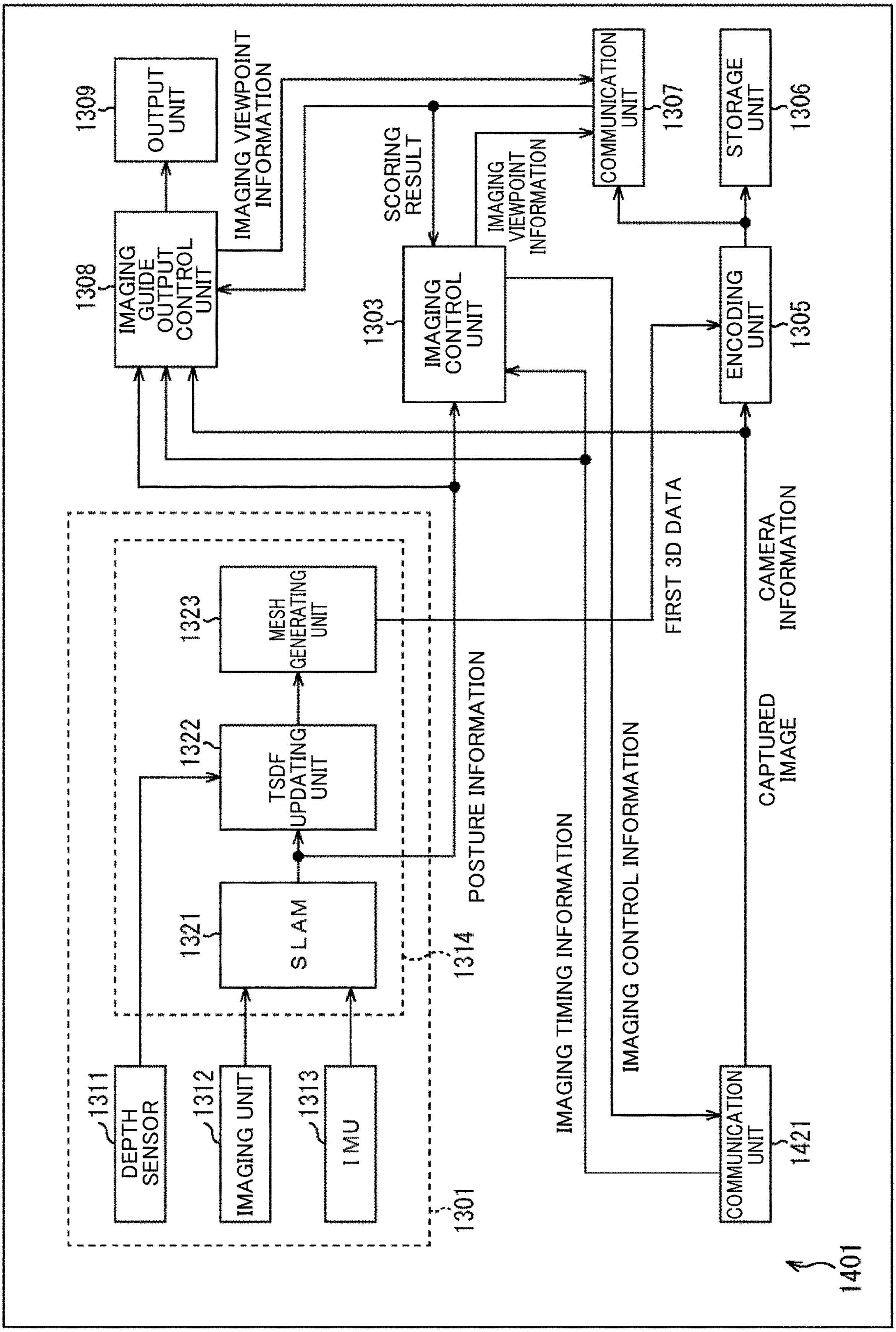
1309
OUTPUT UNIT
1308
IMAGING GUIDE OUTPUT CONTROL UNIT
IMAGING VIEWPOINT INFORMATION
SCORING RESULT
1303
IMAGING CONTROL UNIT
IMAGING VIEWPOINT INFORMATION
COMMUNICATION UNIT
1307
STORAGE UNIT
1306
ENCODING UNIT
1305
1323
MESH GENERATING UNIT
1322
TSDF UPDATING UNIT
1321
SLAM
1314
POSTURE INFORMATION
FIRST 3D DATA
CAMERA INFORMATION
CAPTURED IMAGE
IMAGING TIMING INFORMATION
IMAGING CONTROL INFORMATION
1311
DEPTH SENSOR
1312
IMAGING UNIT
1313
IMU
1301
COMMUNICATION UNIT
1421
1401

Fig. 40

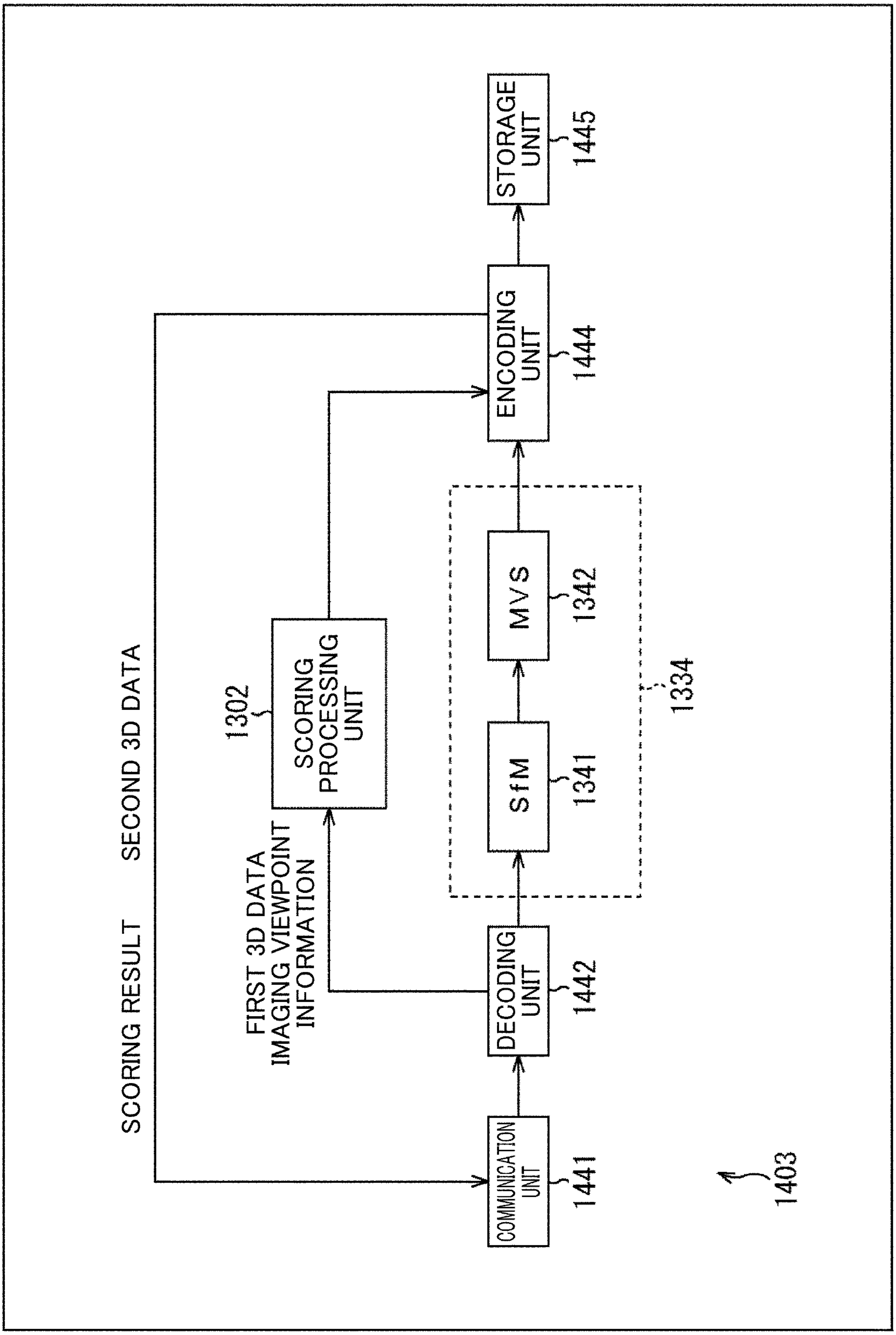
SCORING RESULT
SECOND 3D DATA
FIRST 3D DATA
IMAGING VIEWPOINT
INFORMATION
1302
SCORING
PROCESSING
UNIT
COMMUNICATION
UNIT
1441
DECODING
UNIT
1442
SfM
1341
MVS
1342
1334
ENCODING
UNIT
1444
STORAGE
UNIT
1445
1403

Fig. 41

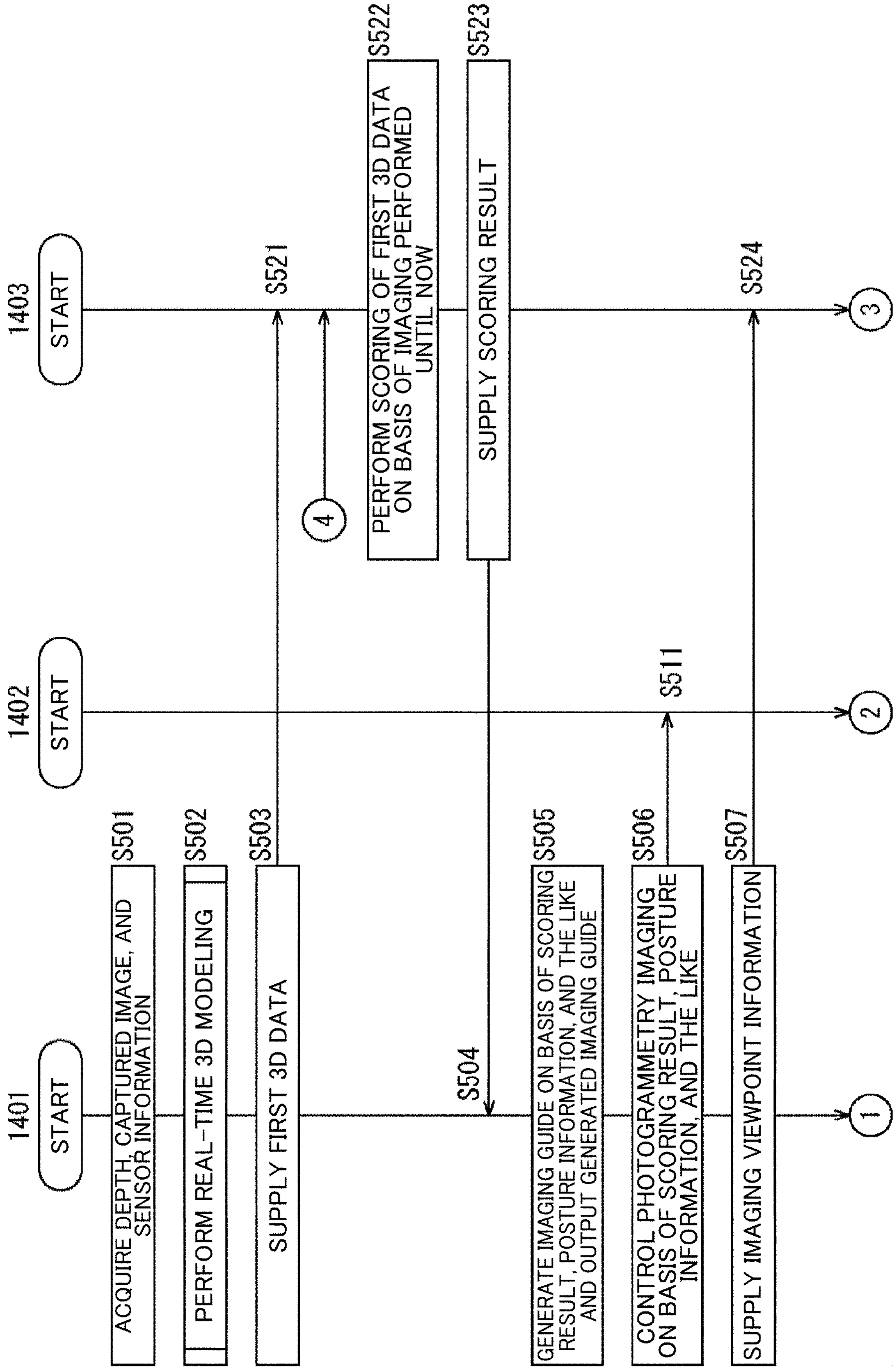
1401
START
S501
ACQUIRE DEPTH, CAPTURED IMAGE, AND SENSOR INFORMATION
S502
PERFORM REAL-TIME 3D MODELING
S503
SUPPLY FIRST 3D DATA
S504
S505
GENERATE IMAGING GUIDE ON BASIS OF SCORING RESULT, POSTURE INFORMATION, AND THE LIKE AND OUTPUT GENERATED IMAGING GUIDE
S506
CONTROL PHOTOGRAMMETRY IMAGING ON BASIS OF SCORING RESULT, POSTURE INFORMATION, AND THE LIKE
S507
SUPPLY IMAGING VIEWPOINT INFORMATION
1
1402
START
S511
2
1403
START
S521
4
S522
PERFORM SCORING OF FIRST 3D DATA ON BASIS OF IMAGING PERFORMED UNTIL NOW
S523
SUPPLY SCORING RESULT
S524
3

Fig. 42

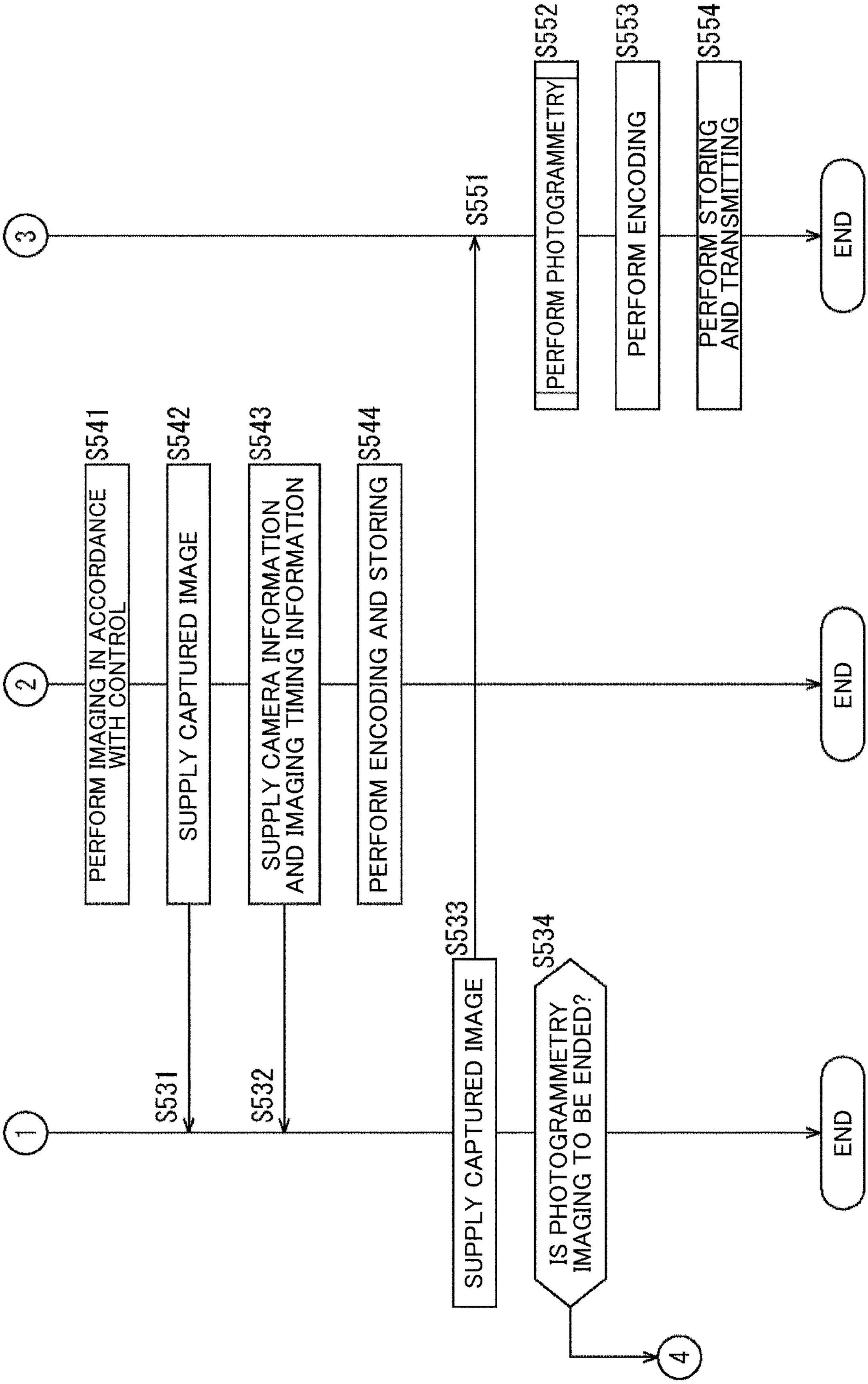
1
S531
S532
S533
SUPPLY CAPTURED IMAGE
S534
IS PHOTOGRAMMETRY IMAGING TO BE ENDED?
4
END
2
S541
PERFORM IMAGING IN ACCORDANCE WITH CONTROL
S542
SUPPLY CAPTURED IMAGE
S543
SUPPLY CAMERA INFORMATION AND IMAGING TIMING INFORMATION
S544
PERFORM ENCODING AND STORING
END
3
S551
S552
PERFORM PHOTOGRAMMETRY
S553
PERFORM ENCODING
S554
PERFORM STORING AND TRANSMITTING
END

Fig. 43

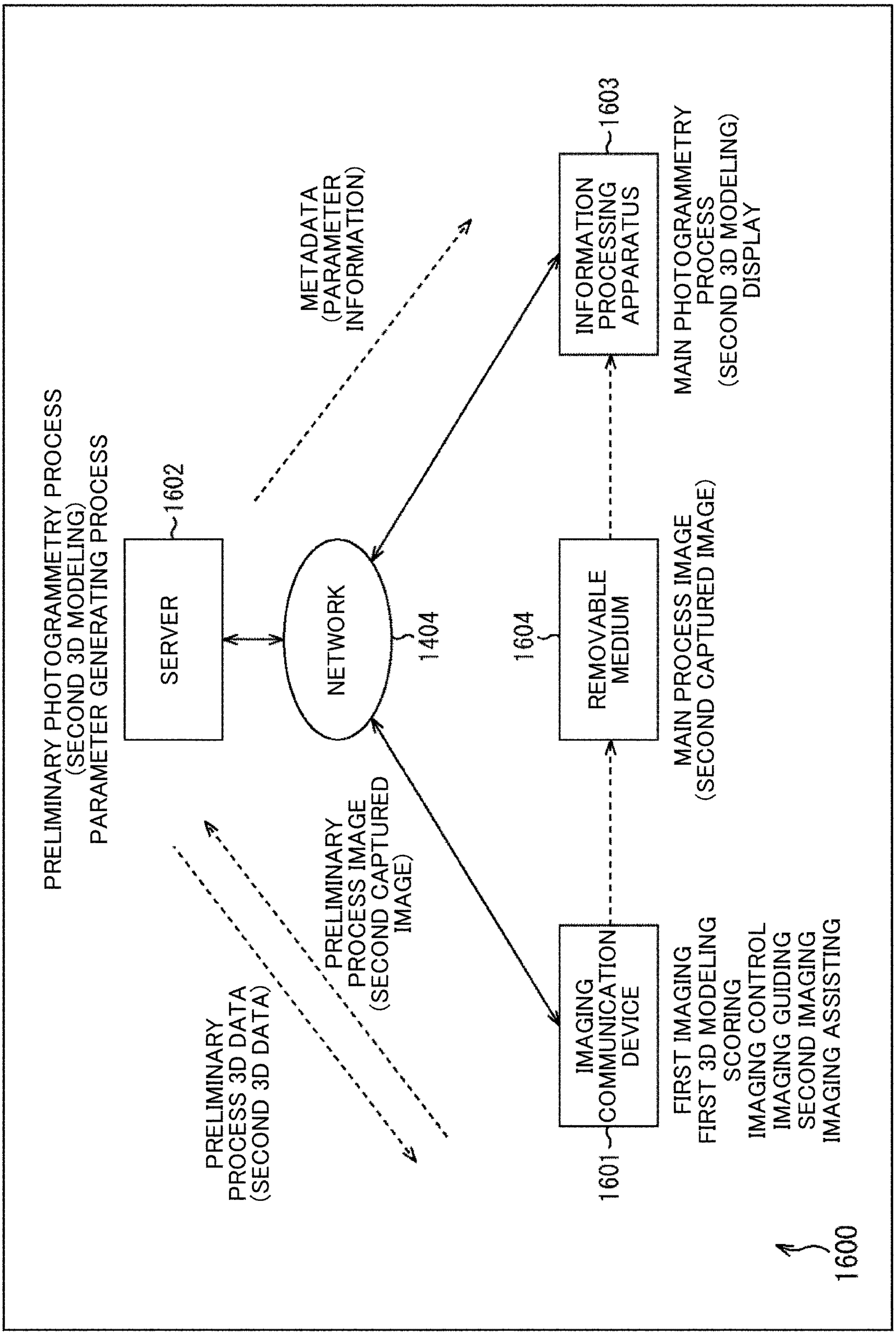
PRELIMINARY PHOTOGRAMMETRY PROCESS
(SECOND 3D MODELING)
PARAMETER GENERATING PROCESS
SERVER
1602
NETWORK
1404
METADATA
(PARAMETER
INFORMATION)
INFORMATION
PROCESSING
APPARATUS
1603
MAIN PHOTOGRAMMETRY
PROCESS
(SECOND 3D MODELING)
DISPLAY
REMOVABLE
MEDIUM
1604
MAIN PROCESS IMAGE
(SECOND CAPTURED IMAGE)
PRELIMINARY
PROCESS IMAGE
(SECOND CAPTURED
IMAGE)
PRELIMINARY
PROCESS 3D DATA
(SECOND 3D DATA)
IMAGING
COMMUNICATION
DEVICE
1601
FIRST IMAGING
FIRST 3D MODELING
SCORING
IMAGING CONTROL
IMAGING GUIDING
SECOND IMAGING
IMAGING ASSISTING
1600

Fig. 44

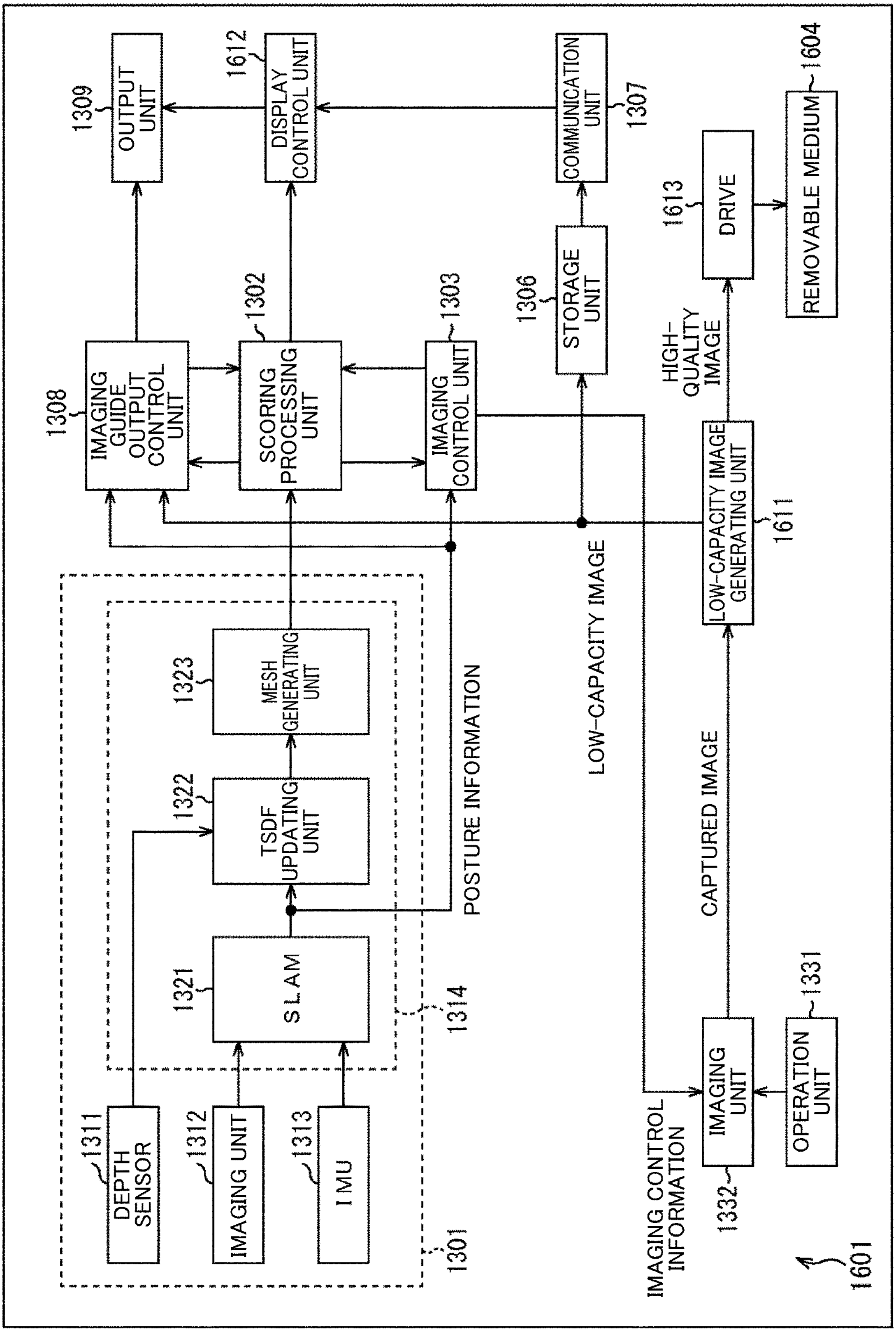
OUTPUT UNIT
1309
DISPLAY CONTROL UNIT
1612
COMMUNICATION UNIT
1307
REMOVABLE MEDIUM
1604
DRIVE
1613
STORAGE UNIT
1306
HIGH-QUALITY IMAGE
IMAGING GUIDE OUTPUT CONTROL UNIT
1308
SCORING PROCESSING UNIT
1302
IMAGING CONTROL UNIT
1303
LOW-CAPACITY IMAGE GENERATING UNIT
1611
LOW-CAPACITY IMAGE
MESH GENERATING UNIT
1323
TSDF UPDATING UNIT
1322
POSTURE INFORMATION
CAPTURED IMAGE
SLAM
1321
1314
DEPTH SENSOR
1311
IMAGING UNIT
1312
IMU
1313
1301
IMAGING CONTROL INFORMATION
IMAGING UNIT
1332
OPERATION UNIT
1331
1601

Fig. 45

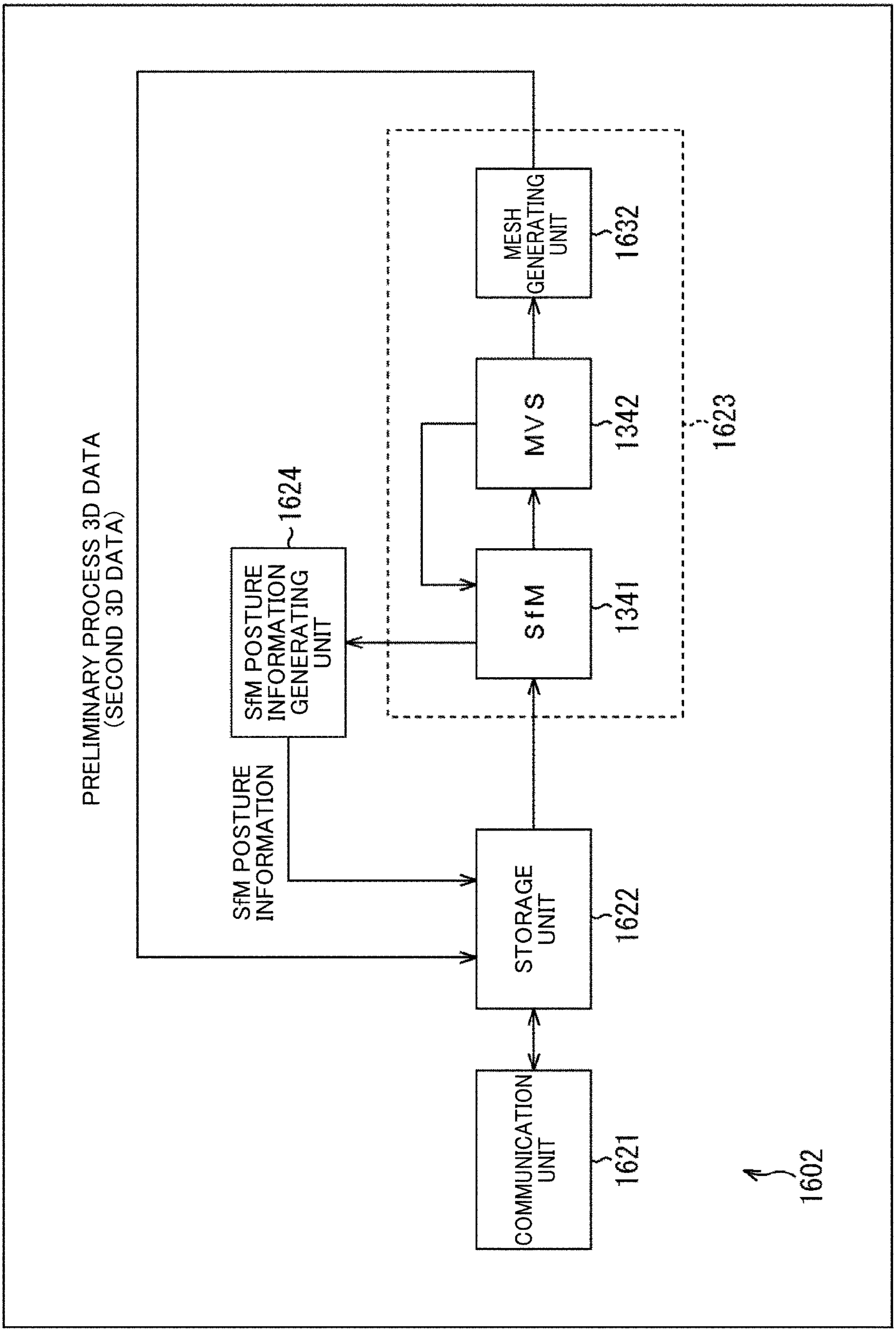
PRELIMINARY PROCESS 3D DATA
(SECOND 3D DATA)
SfM POSTURE INFORMATION
SfM POSTURE INFORMATION GENERATING UNIT
1624
COMMUNICATION UNIT
1621
STORAGE UNIT
1622
SfM
1341
MVS
1342
MESH GENERATING UNIT
1632
1623
1602

Fig. 46

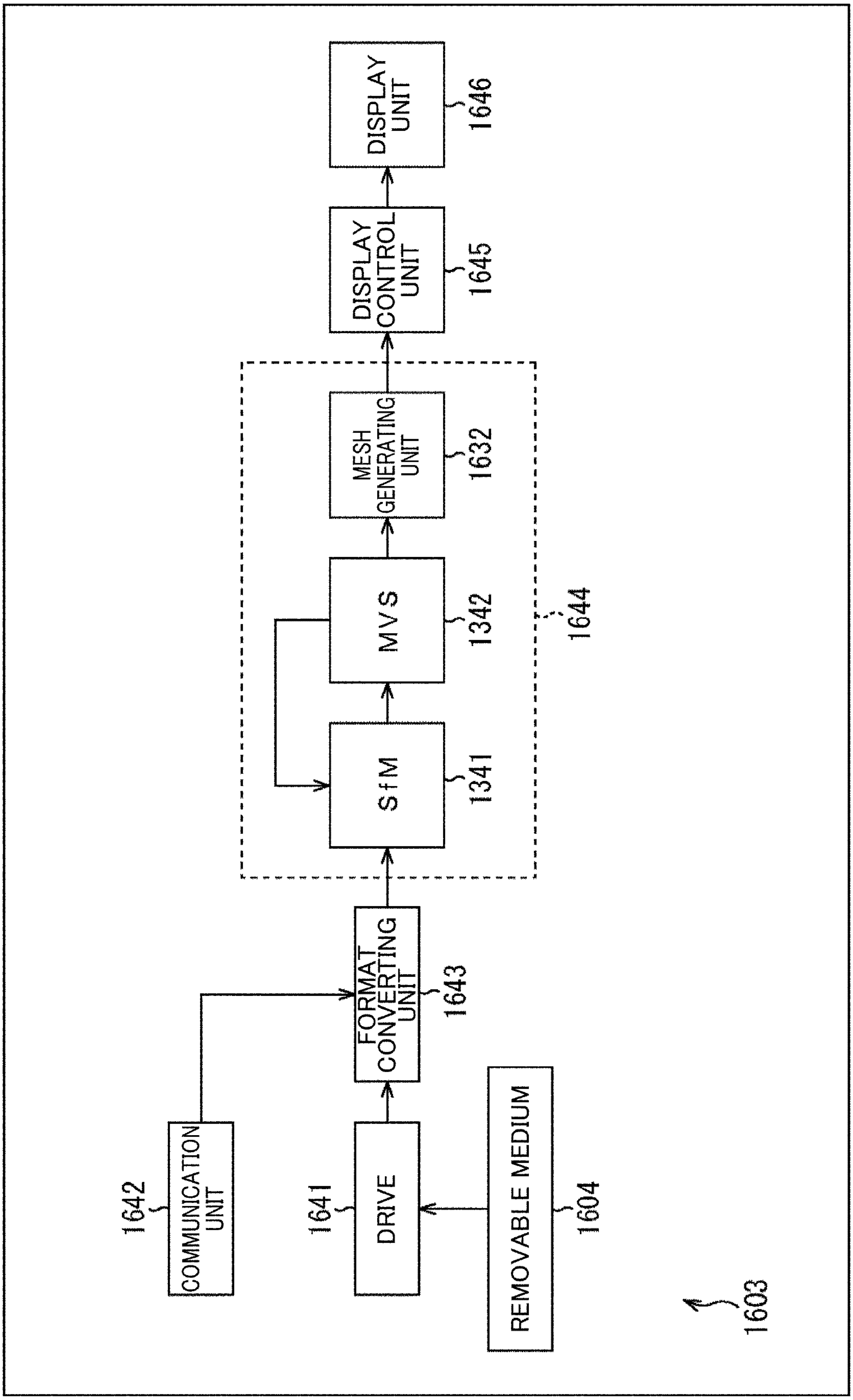
COMMUNICATION UNIT
1642
DRIVE
1641
REMOVABLE MEDIUM
1604
FORMAT CONVERTING UNIT
1643
SfM
1341
MVS
1342
MESH GENERATING UNIT
1632
1644
DISPLAY CONTROL UNIT
1645
DISPLAY UNIT
1646
1603

Fig. 47

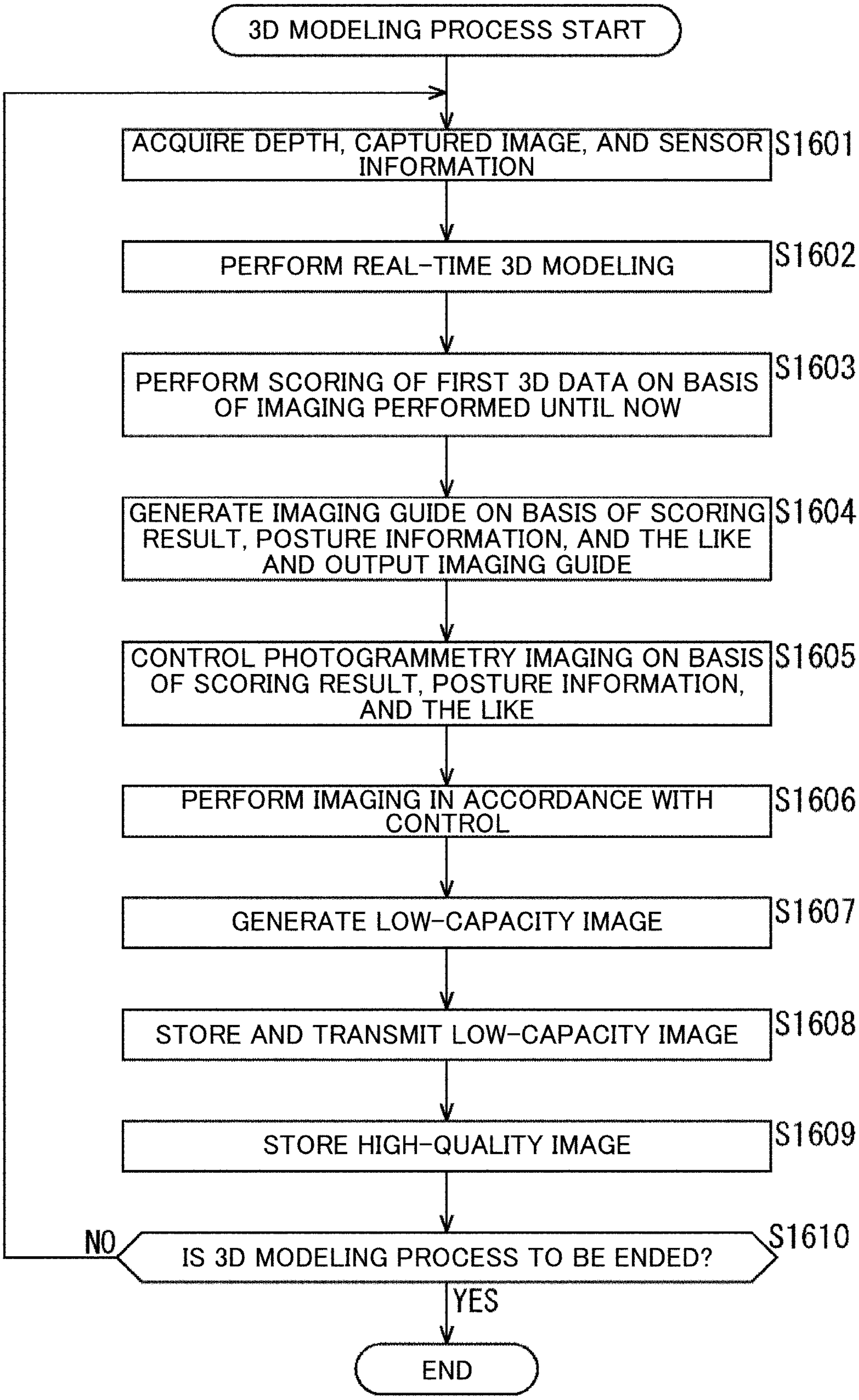
3D MODELING PROCESS START
ACQUIRE DEPTH, CAPTURED IMAGE, AND SENSOR INFORMATION
S1601
PERFORM REAL-TIME 3D MODELING
S1602
PERFORM SCORING OF FIRST 3D DATA ON BASIS OF IMAGING PERFORMED UNTIL NOW
S1603
GENERATE IMAGING GUIDE ON BASIS OF SCORING RESULT, POSTURE INFORMATION, AND THE LIKE AND OUTPUT IMAGING GUIDE
S1604
CONTROL PHOTOGRAMMETRY IMAGING ON BASIS OF SCORING RESULT, POSTURE INFORMATION, AND THE LIKE
S1605
PERFORM IMAGING IN ACCORDANCE WITH CONTROL
S1606
GENERATE LOW-CAPACITY IMAGE
S1607
STORE AND TRANSMIT LOW-CAPACITY IMAGE
S1608
STORE HIGH-QUALITY IMAGE
S1609
IS 3D MODELING PROCESS TO BE ENDED?
S1610
NO
YES
END

Fig. 48

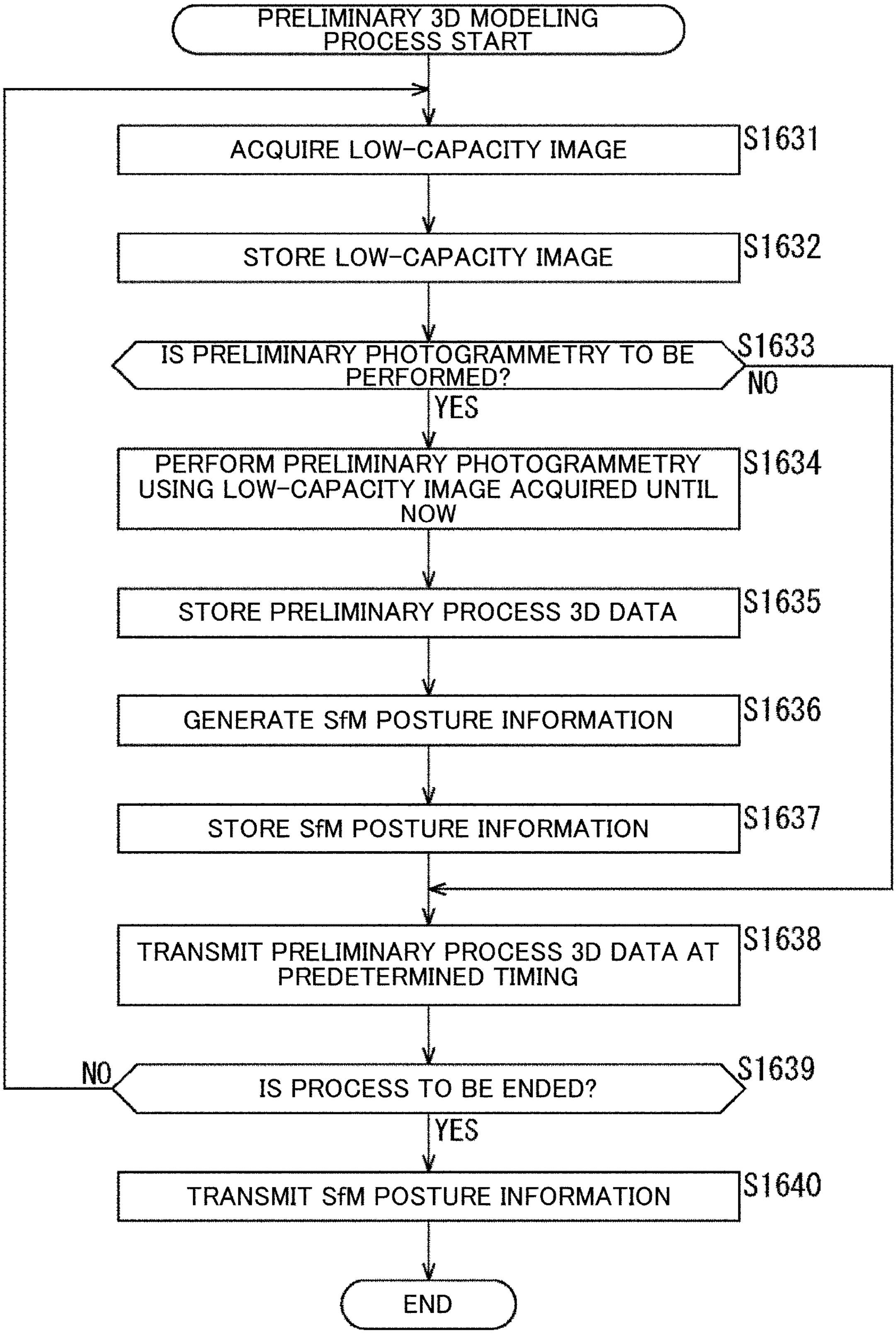
PRELIMINARY 3D MODELING PROCESS START
ACQUIRE LOW-CAPACITY IMAGE
S1631
STORE LOW-CAPACITY IMAGE
S1632
IS PRELIMINARY PHOTOGRAMMETRY TO BE PERFORMED?
S1633
NO
YES
PERFORM PRELIMINARY PHOTOGRAMMETRY USING LOW-CAPACITY IMAGE ACQUIRED UNTIL NOW
S1634
STORE PRELIMINARY PROCESS 3D DATA
S1635
GENERATE SfM POSTURE INFORMATION
S1636
STORE SfM POSTURE INFORMATION
S1637
TRANSMIT PRELIMINARY PROCESS 3D DATA AT PREDETERMINED TIMING
S1638
NO
IS PROCESS TO BE ENDED?
S1639
YES
TRANSMIT SfM POSTURE INFORMATION
S1640
END

Fig. 49

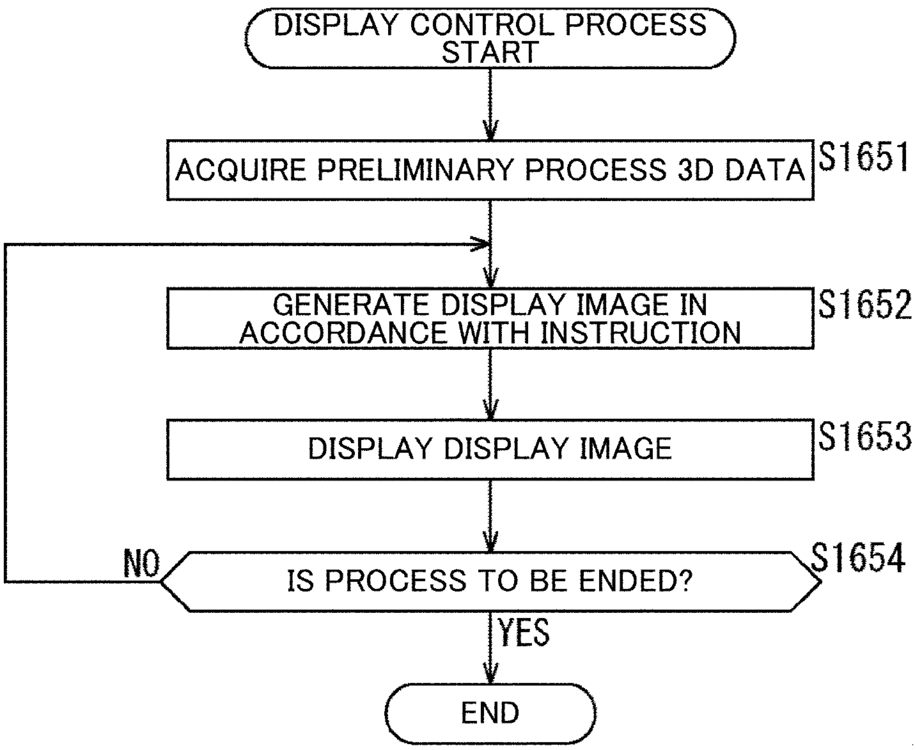
DISPLAY CONTROL PROCESS START
ACQUIRE PRELIMINARY PROCESS 3D DATA
S1651
GENERATE DISPLAY IMAGE IN ACCORDANCE WITH INSTRUCTION
S1652
DISPLAY DISPLAY IMAGE
S1653
IS PROCESS TO BE ENDED?
S1654
NO
YES
END

Fig. 50

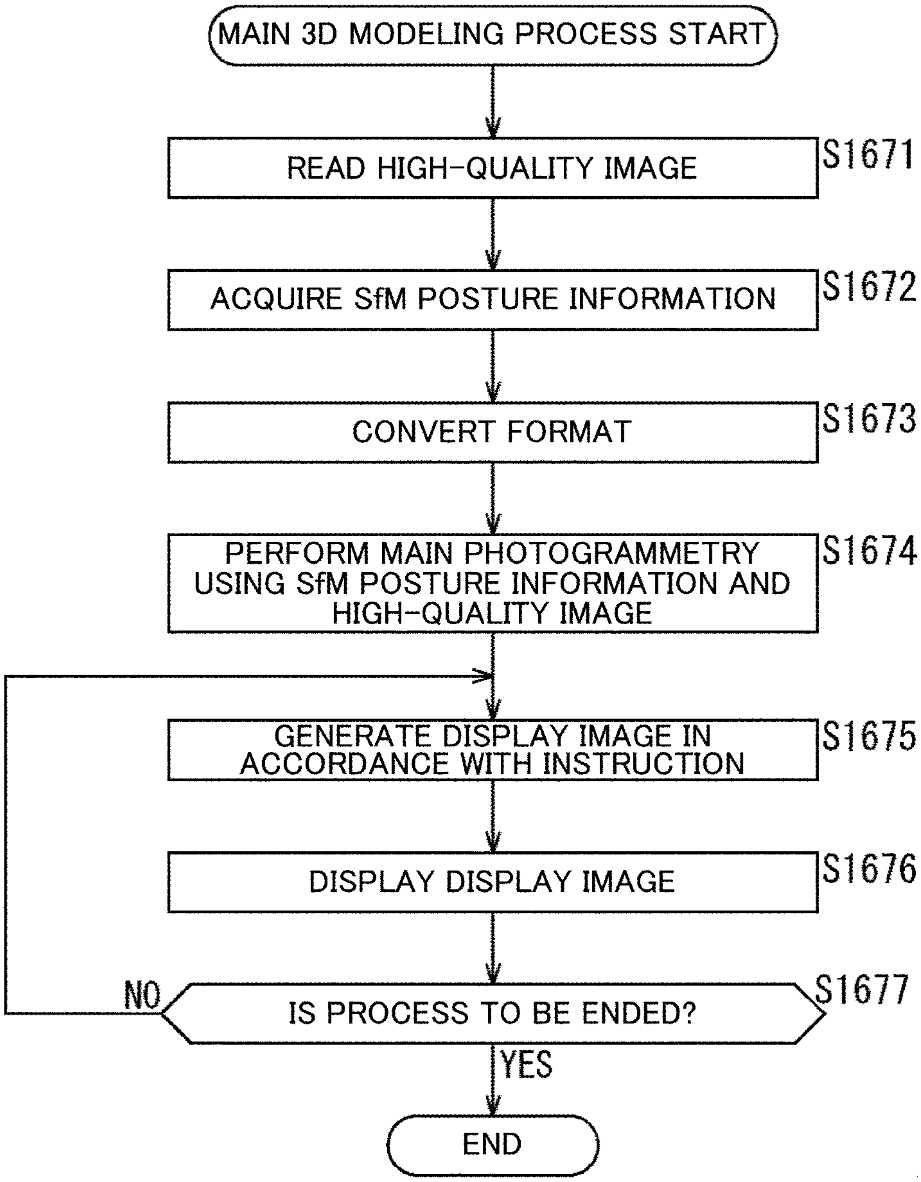
MAIN 3D MODELING PROCESS START
READ HIGH-QUALITY IMAGE
S1671
ACQUIRE SfM POSTURE INFORMATION
S1672
CONVERT FORMAT
S1673
PERFORM MAIN PHOTOGRAMMETRY USING SfM POSTURE INFORMATION AND HIGH-QUALITY IMAGE
S1674
GENERATE DISPLAY IMAGE IN ACCORDANCE WITH INSTRUCTION
S1675
DISPLAY DISPLAY IMAGE
S1676
IS PROCESS TO BE ENDED?
S1677
NO
YES
END

Fig. 51

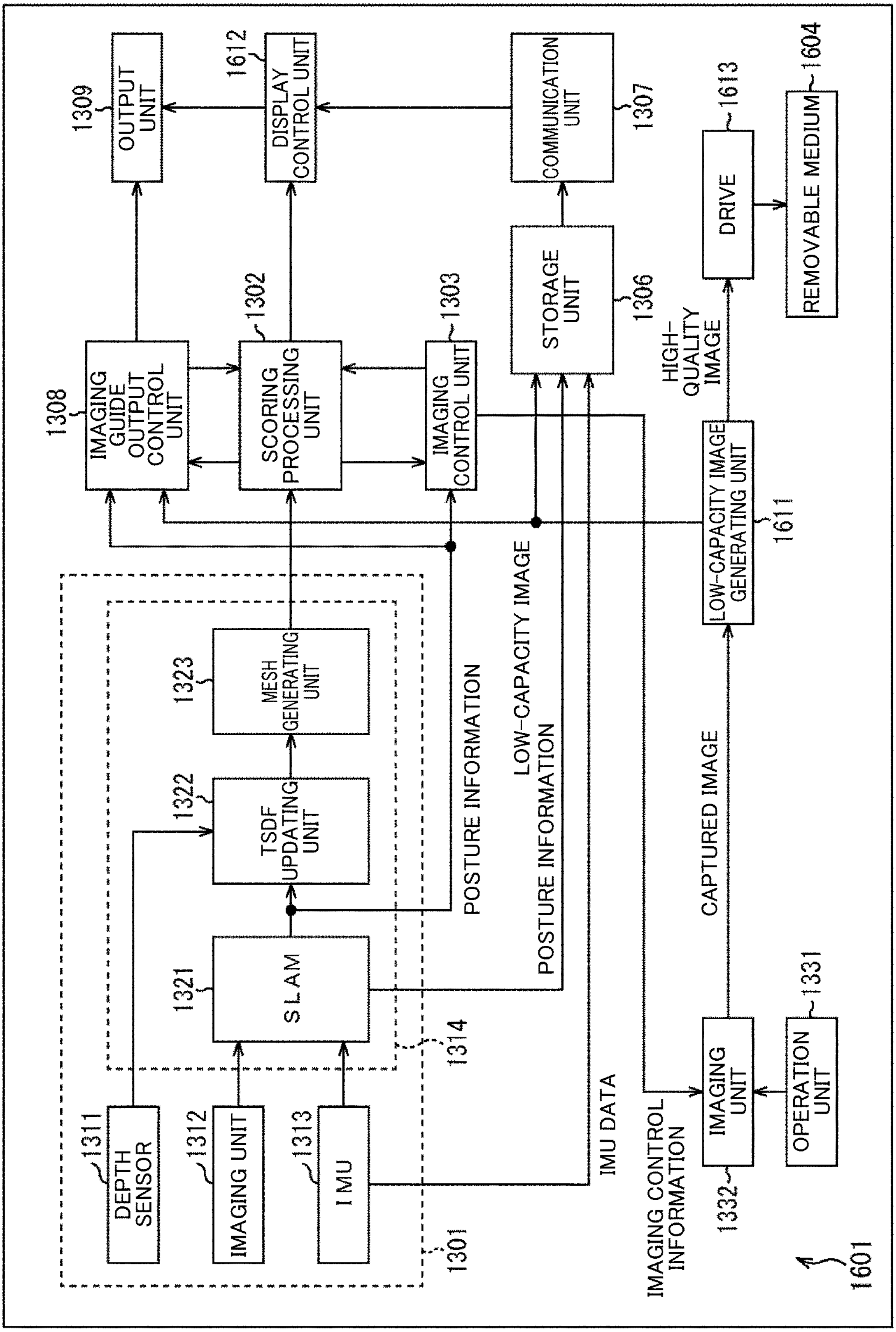
OUTPUT UNIT
1309
DISPLAY CONTROL UNIT
1612
COMMUNICATION UNIT
1307
IMAGING GUIDE OUTPUT CONTROL UNIT
1308
SCORING PROCESSING UNIT
1302
IMAGING CONTROL UNIT
1303
STORAGE UNIT
1306
DRIVE
1613
REMOVABLE MEDIUM
1604
HIGH-QUALITY IMAGE
LOW-CAPACITY IMAGE GENERATING UNIT
1611
LOW-CAPACITY IMAGE
POSTURE INFORMATION
POSTURE INFORMATION
MESH GENERATING UNIT
1323
TSDF UPDATING UNIT
1322
SLAM
1321
1314
CAPTURED IMAGE
DEPTH SENSOR
1311
IMAGING UNIT
1312
IMU
1313
1301
IMU DATA
IMAGING CONTROL INFORMATION
IMAGING UNIT
1332
OPERATION UNIT
1331
1601

Fig. 52

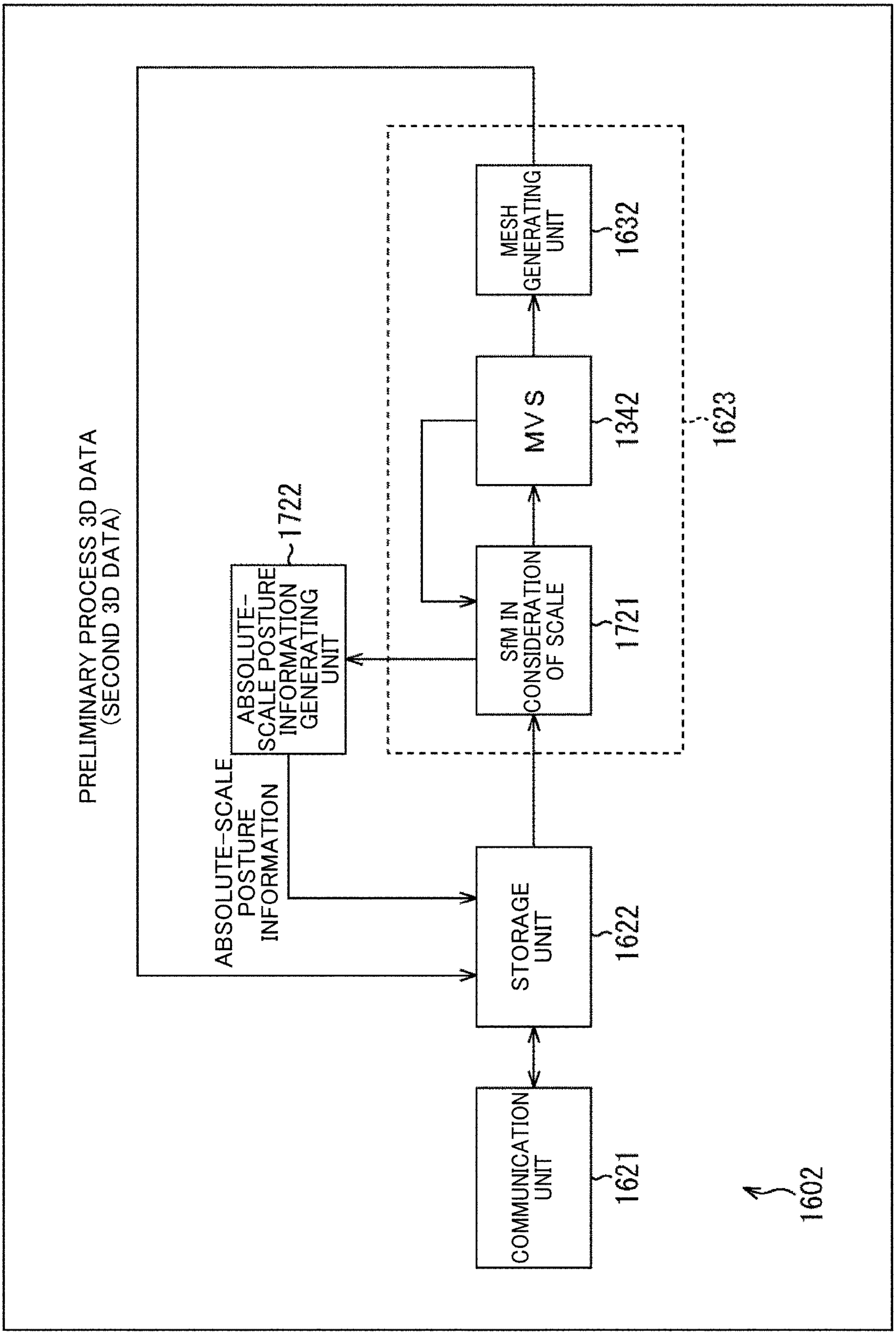
PRELIMINARY PROCESS 3D DATA (SECOND 3D DATA)
ABSOLUTE-SCALE POSTURE INFORMATION GENERATING UNIT
1722
ABSOLUTE-SCALE POSTURE INFORMATION
SfM IN CONSIDERATION OF SCALE
1721
MVS
1342
MESH GENERATING UNIT
1632
1623
COMMUNICATION UNIT
1621
STORAGE UNIT
1622
1602

Fig. 53

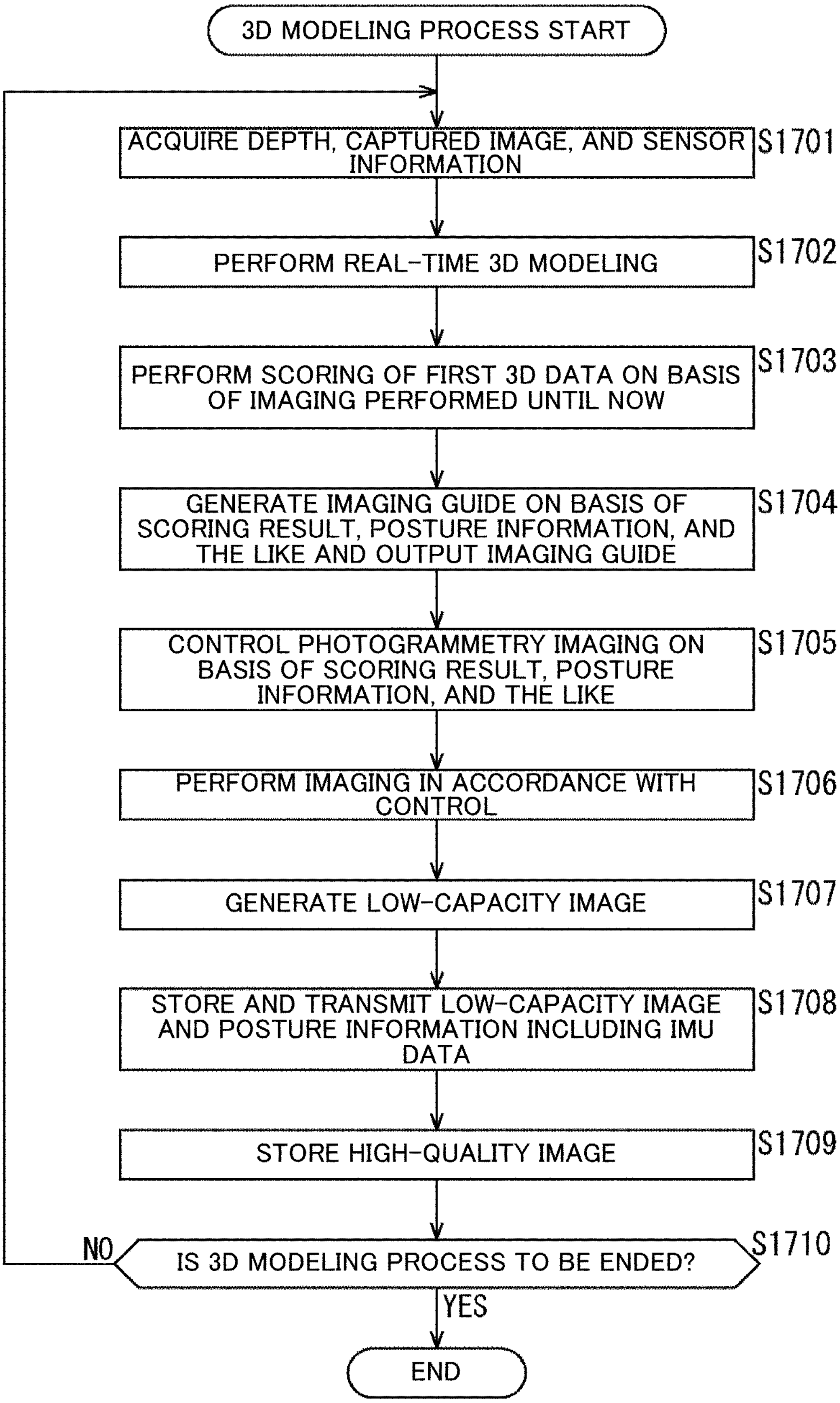
3D MODELING PROCESS START
ACQUIRE DEPTH, CAPTURED IMAGE, AND SENSOR INFORMATION
S1701
PERFORM REAL-TIME 3D MODELING
S1702
PERFORM SCORING OF FIRST 3D DATA ON BASIS OF IMAGING PERFORMED UNTIL NOW
S1703
GENERATE IMAGING GUIDE ON BASIS OF SCORING RESULT, POSTURE INFORMATION, AND THE LIKE AND OUTPUT IMAGING GUIDE
S1704
CONTROL PHOTOGRAMMETRY IMAGING ON BASIS OF SCORING RESULT, POSTURE INFORMATION, AND THE LIKE
S1705
PERFORM IMAGING IN ACCORDANCE WITH CONTROL
S1706
GENERATE LOW-CAPACITY IMAGE
S1707
STORE AND TRANSMIT LOW-CAPACITY IMAGE AND POSTURE INFORMATION INCLUDING IMU DATA
S1708
STORE HIGH-QUALITY IMAGE
S1709
IS 3D MODELING PROCESS TO BE ENDED?
S1710
NO
YES
END

Fig. 54

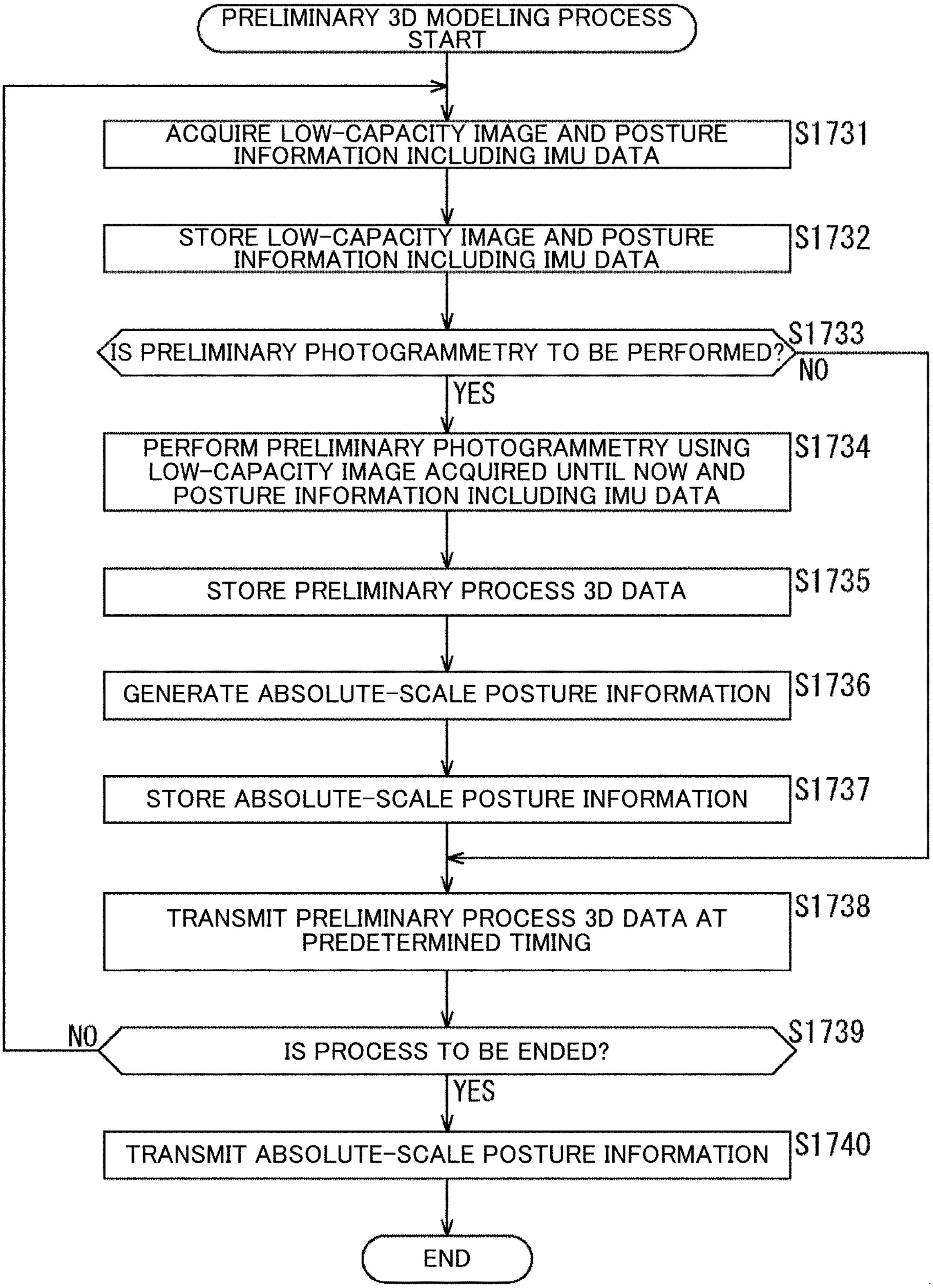
PRELIMINARY 3D MODELING PROCESS START
ACQUIRE LOW-CAPACITY IMAGE AND POSTURE INFORMATION INCLUDING IMU DATA
S1731
STORE LOW-CAPACITY IMAGE AND POSTURE INFORMATION INCLUDING IMU DATA
S1732
IS PRELIMINARY PHOTOGRAMMETRY TO BE PERFORMED?
S1733
NO
YES
PERFORM PRELIMINARY PHOTOGRAMMETRY USING LOW-CAPACITY IMAGE ACQUIRED UNTIL NOW AND POSTURE INFORMATION INCLUDING IMU DATA
S1734
STORE PRELIMINARY PROCESS 3D DATA
S1735
GENERATE ABSOLUTE-SCALE POSTURE INFORMATION
S1736
STORE ABSOLUTE-SCALE POSTURE INFORMATION
S1737
TRANSMIT PRELIMINARY PROCESS 3D DATA AT PREDETERMINED TIMING
S1738
IS PROCESS TO BE ENDED?
S1739
NO
YES
TRANSMIT ABSOLUTE-SCALE POSTURE INFORMATION
S1740
END

Fig. 55

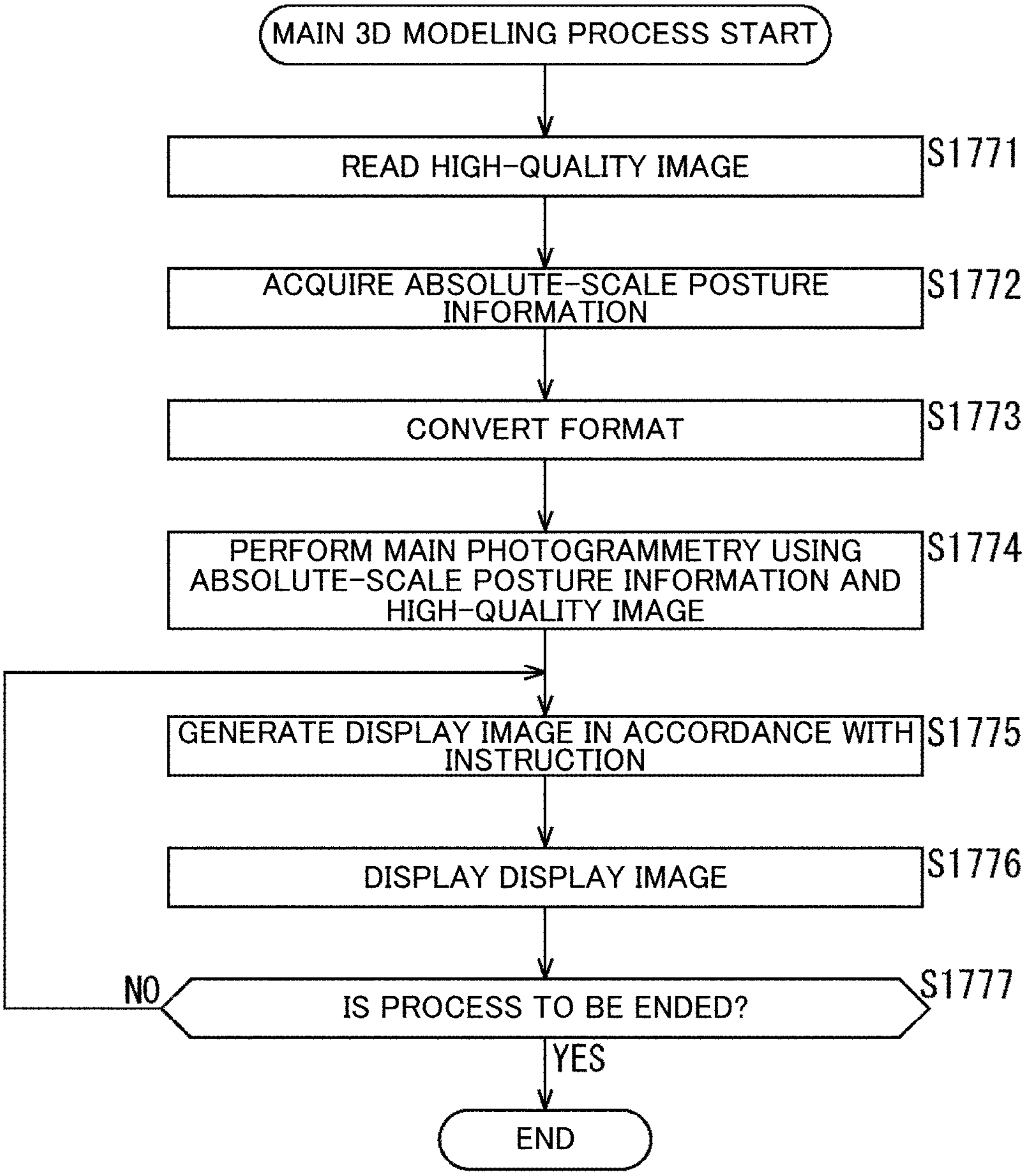
MAIN 3D MODELING PROCESS START
READ HIGH-QUALITY IMAGE
S1771
ACQUIRE ABSOLUTE-SCALE POSTURE INFORMATION
S1772
CONVERT FORMAT
S1773
PERFORM MAIN PHOTOGRAMMETRY USING ABSOLUTE-SCALE POSTURE INFORMATION AND HIGH-QUALITY IMAGE
S1774
GENERATE DISPLAY IMAGE IN ACCORDANCE WITH INSTRUCTION
S1775
DISPLAY DISPLAY IMAGE
S1776
IS PROCESS TO BE ENDED?
S1777
NO
YES
END

Fig. 56

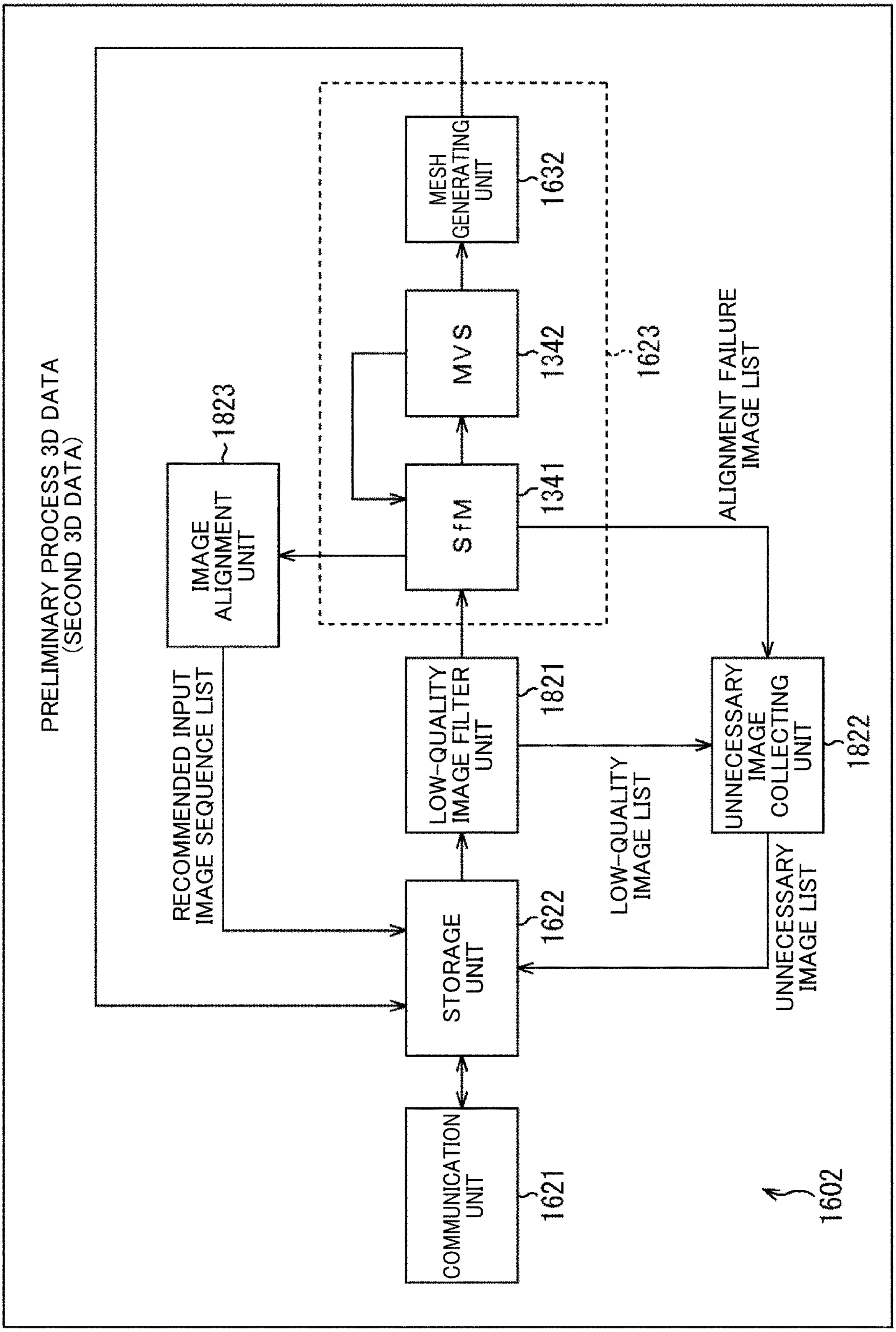

PRELIMINARY PROCESS 3D DATA (SECOND 3D DATA)
IMAGE ALIGNMENT UNIT
1823
MESH GENERATING UNIT
1632
MVS
1342
SfM
1341
1623
ALIGNMENT FAILURE IMAGE LIST
RECOMMENDED INPUT IMAGE SEQUENCE LIST
LOW-QUALITY IMAGE FILTER UNIT
1821
UNNECESSARY IMAGE COLLECTING UNIT
1822
LOW-QUALITY IMAGE LIST
STORAGE UNIT
1622
UNNECESSARY IMAGE LIST
COMMUNICATION UNIT
1621
1602

Fig. 57

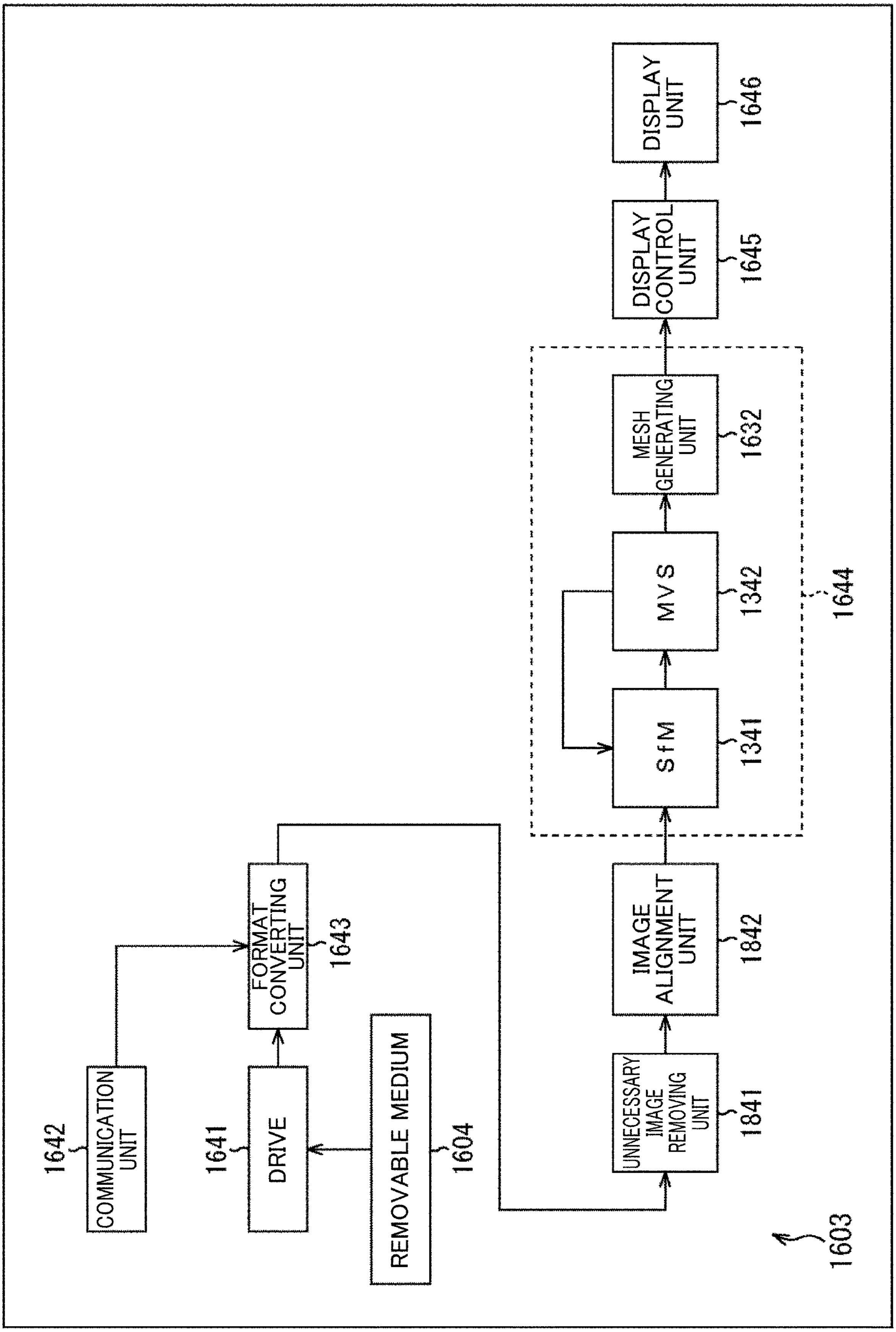
COMMUNICATION UNIT
1642
DRIVE
1641
REMOVABLE MEDIUM
1604
FORMAT CONVERTING UNIT
1643
UNNECESSARY IMAGE REMOVING UNIT
1841
IMAGE ALIGNMENT UNIT
1842
SfM
1341
MVS
1342
MESH GENERATING UNIT
1632
1644
DISPLAY CONTROL UNIT
1645
DISPLAY UNIT
1646
1603

Fig. 58

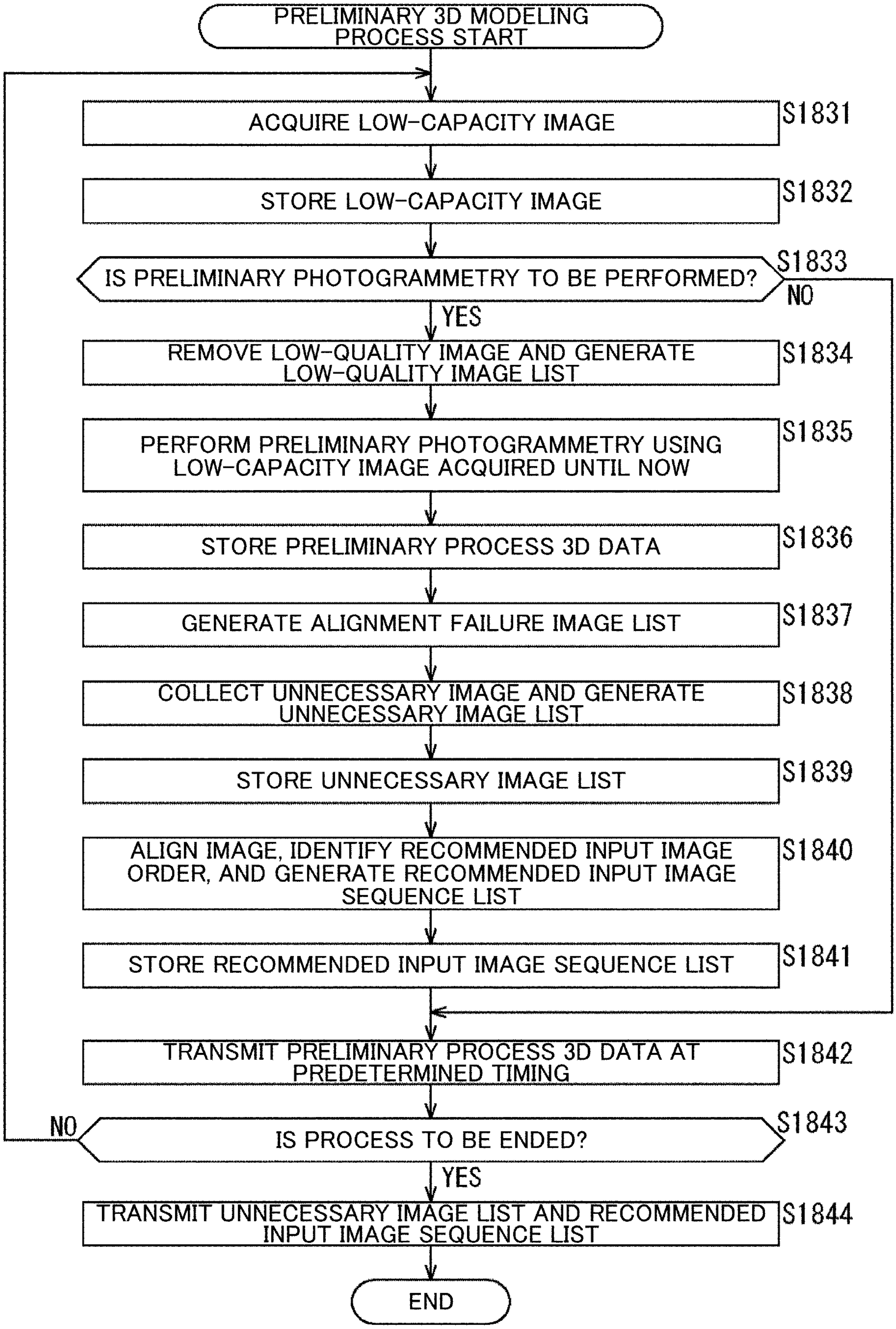
PRELIMINARY 3D MODELING PROCESS START
ACQUIRE LOW-CAPACITY IMAGE
S1831
STORE LOW-CAPACITY IMAGE
S1832
IS PRELIMINARY PHOTOGRAMMETRY TO BE PERFORMED?
S1833
NO
YES
REMOVE LOW-QUALITY IMAGE AND GENERATE LOW-QUALITY IMAGE LIST
S1834
PERFORM PRELIMINARY PHOTOGRAMMETRY USING LOW-CAPACITY IMAGE ACQUIRED UNTIL NOW
S1835
STORE PRELIMINARY PROCESS 3D DATA
S1836
GENERATE ALIGNMENT FAILURE IMAGE LIST
S1837
COLLECT UNNECESSARY IMAGE AND GENERATE UNNECESSARY IMAGE LIST
S1838
STORE UNNECESSARY IMAGE LIST
S1839
ALIGN IMAGE, IDENTIFY RECOMMENDED INPUT IMAGE ORDER, AND GENERATE RECOMMENDED INPUT IMAGE SEQUENCE LIST
S1840
STORE RECOMMENDED INPUT IMAGE SEQUENCE LIST
S1841
TRANSMIT PRELIMINARY PROCESS 3D DATA AT PREDETERMINED TIMING
S1842
NO
IS PROCESS TO BE ENDED?
S1843
YES
TRANSMIT UNNECESSARY IMAGE LIST AND RECOMMENDED INPUT IMAGE SEQUENCE LIST
S1844
END

Fig. 59

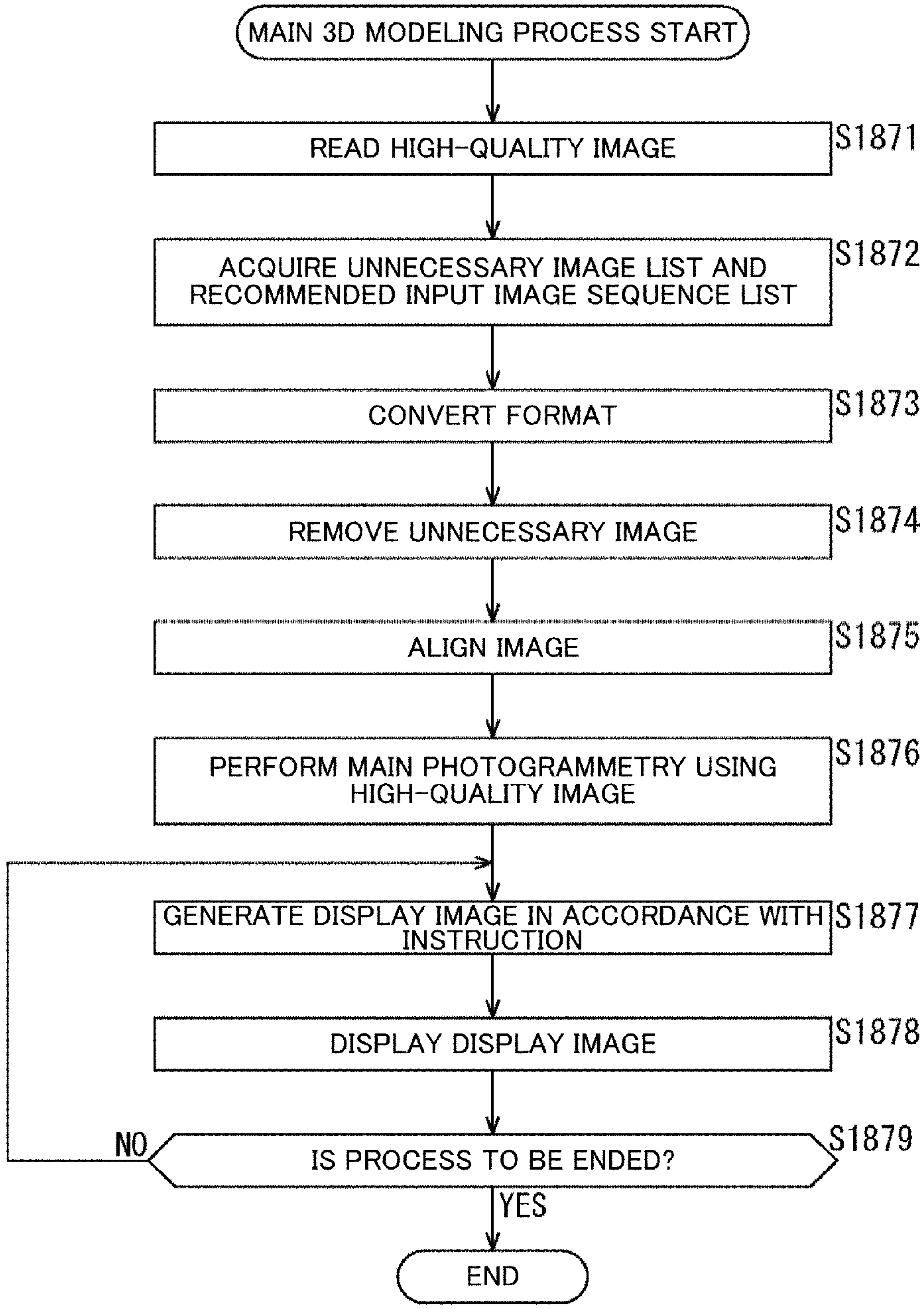
MAIN 3D MODELING PROCESS START
READ HIGH-QUALITY IMAGE
S1871
ACQUIRE UNNECESSARY IMAGE LIST AND RECOMMENDED INPUT IMAGE SEQUENCE LIST
S1872
CONVERT FORMAT
S1873
REMOVE UNNECESSARY IMAGE
S1874
ALIGN IMAGE
S1875
PERFORM MAIN PHOTOGRAMMETRY USING HIGH-QUALITY IMAGE
S1876
GENERATE DISPLAY IMAGE IN ACCORDANCE WITH INSTRUCTION
S1877
DISPLAY DISPLAY IMAGE
S1878
IS PROCESS TO BE ENDED?
S1879
NO
YES
END

Fig. 60

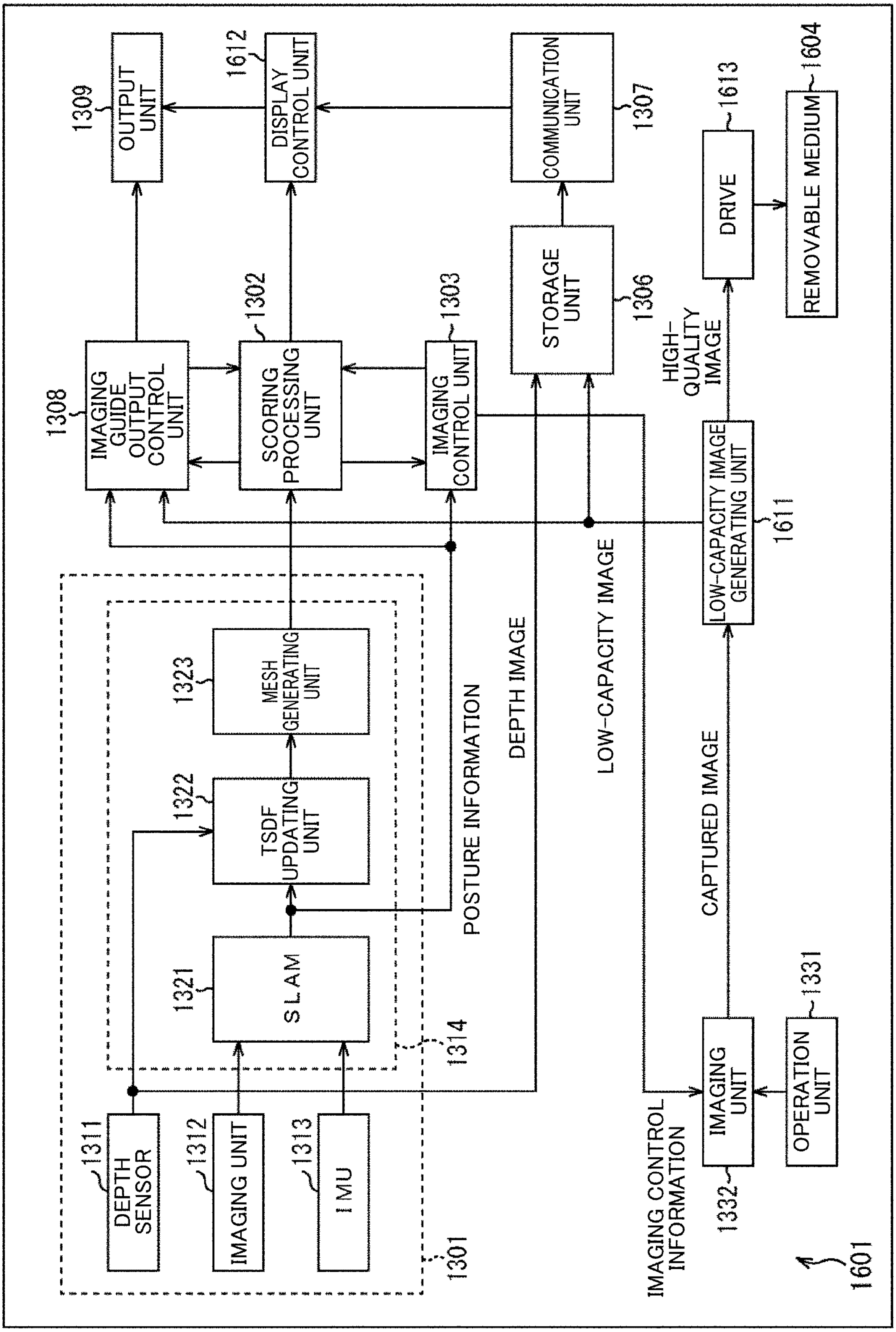
1309
OUTPUT UNIT
1612
DISPLAY CONTROL UNIT
COMMUNICATION UNIT
1307
1613
DRIVE
1604
REMOVABLE MEDIUM
1308
IMAGING GUIDE OUTPUT CONTROL UNIT
1302
SCORING PROCESSING UNIT
1303
IMAGING CONTROL UNIT
STORAGE UNIT
1306
HIGH-QUALITY IMAGE
LOW-CAPACITY IMAGE GENERATING UNIT
1611
POSTURE INFORMATION
DEPTH IMAGE
LOW-CAPACITY IMAGE
CAPTURED IMAGE
1323
MESH GENERATING UNIT
1322
TSDF UPDATING UNIT
1321
SLAM
1314
1311
DEPTH SENSOR
1312
IMAGING UNIT
1313
IMU
1301
IMAGING CONTROL INFORMATION
IMAGING UNIT
1332
OPERATION UNIT
1331
1601

Fig. 61

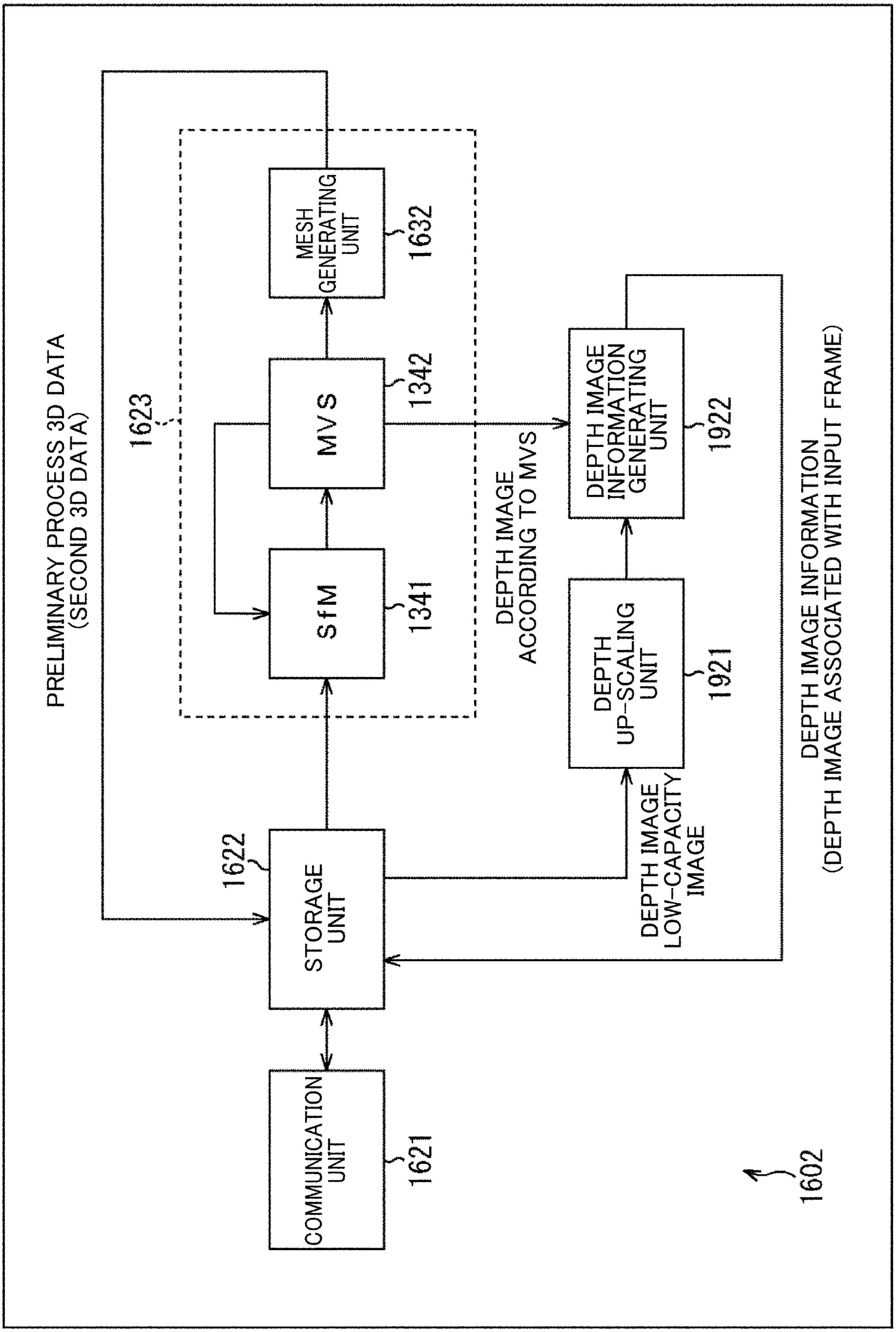
PRELIMINARY PROCESS 3D DATA
(SECOND 3D DATA)
1623
MESH GENERATING UNIT
1632
MVS
1342
SfM
1341
STORAGE UNIT
1622
COMMUNICATION UNIT
1621
DEPTH IMAGE ACCORDING TO MVS
DEPTH IMAGE INFORMATION GENERATING UNIT
1922
DEPTH UP-SCALING UNIT
1921
DEPTH IMAGE LOW-CAPACITY IMAGE
DEPTH IMAGE INFORMATION
(DEPTH IMAGE ASSOCIATED WITH INPUT FRAME)
1602

Fig. 62

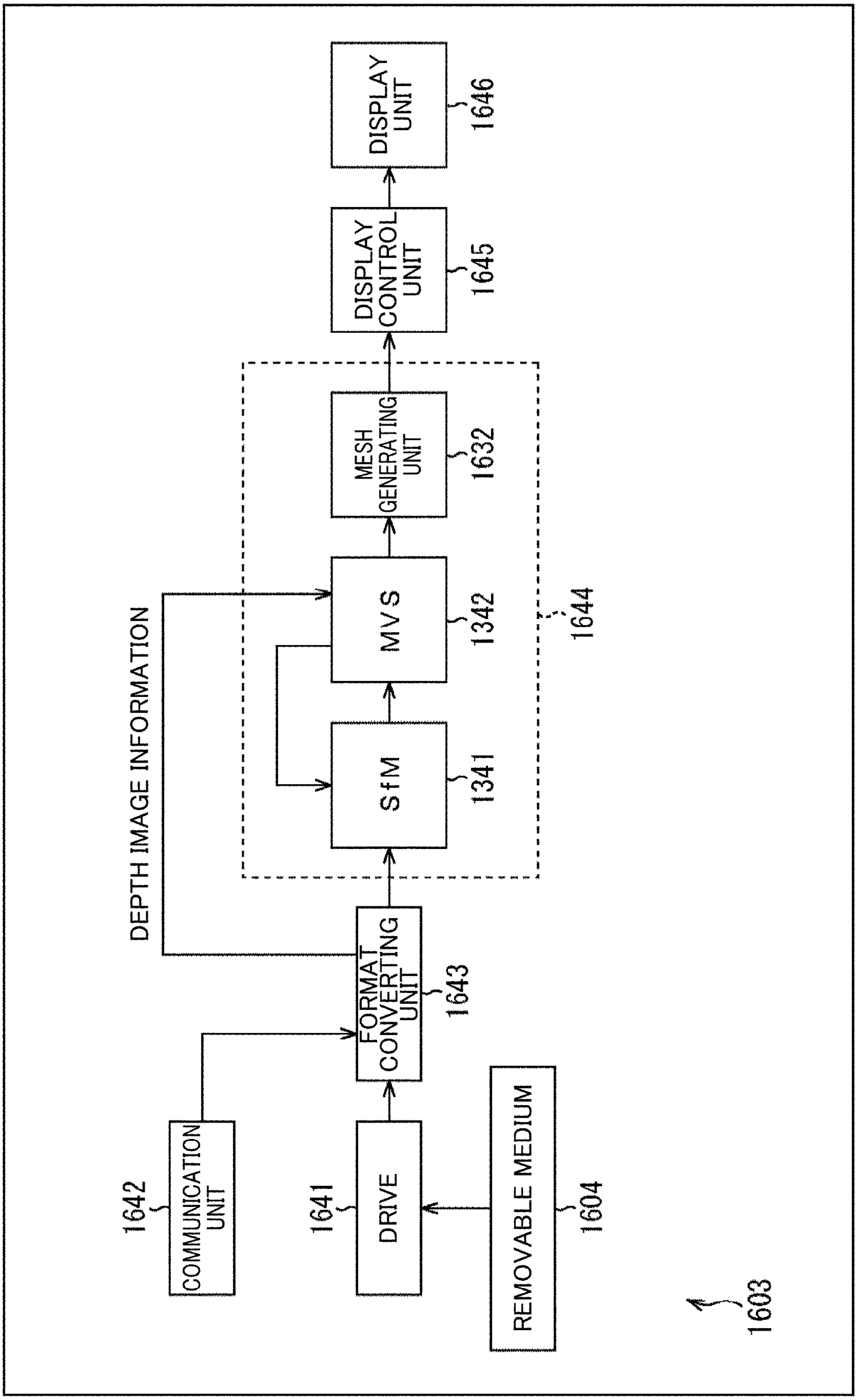
DISPLAY UNIT
1646
DISPLAY CONTROL UNIT
1645
MESH GENERATING UNIT
1632
MVS
1342
SfM
1341
1644
DEPTH IMAGE INFORMATION
FORMAT CONVERTING UNIT
1643
COMMUNICATION UNIT
1642
DRIVE
1641
REMOVABLE MEDIUM
1604
1603

Fig. 63

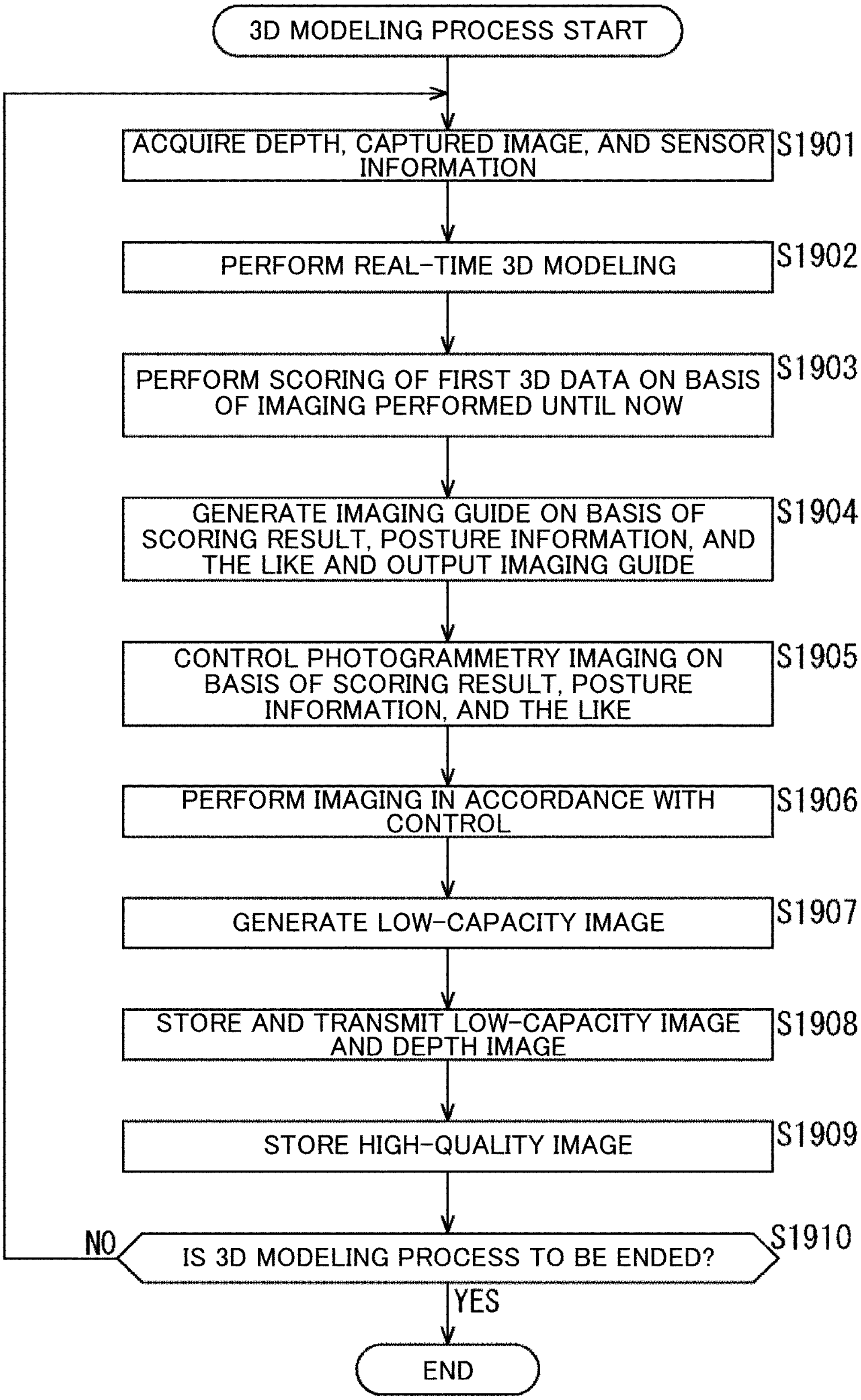
3D MODELING PROCESS START
ACQUIRE DEPTH, CAPTURED IMAGE, AND SENSOR INFORMATION
S1901
PERFORM REAL-TIME 3D MODELING
S1902
PERFORM SCORING OF FIRST 3D DATA ON BASIS OF IMAGING PERFORMED UNTIL NOW
S1903
GENERATE IMAGING GUIDE ON BASIS OF SCORING RESULT, POSTURE INFORMATION, AND THE LIKE AND OUTPUT IMAGING GUIDE
S1904
CONTROL PHOTOGRAMMETRY IMAGING ON BASIS OF SCORING RESULT, POSTURE INFORMATION, AND THE LIKE
S1905
PERFORM IMAGING IN ACCORDANCE WITH CONTROL
S1906
GENERATE LOW-CAPACITY IMAGE
S1907
STORE AND TRANSMIT LOW-CAPACITY IMAGE AND DEPTH IMAGE
S1908
STORE HIGH-QUALITY IMAGE
S1909
IS 3D MODELING PROCESS TO BE ENDED?
S1910
NO
YES
END

Fig. 64

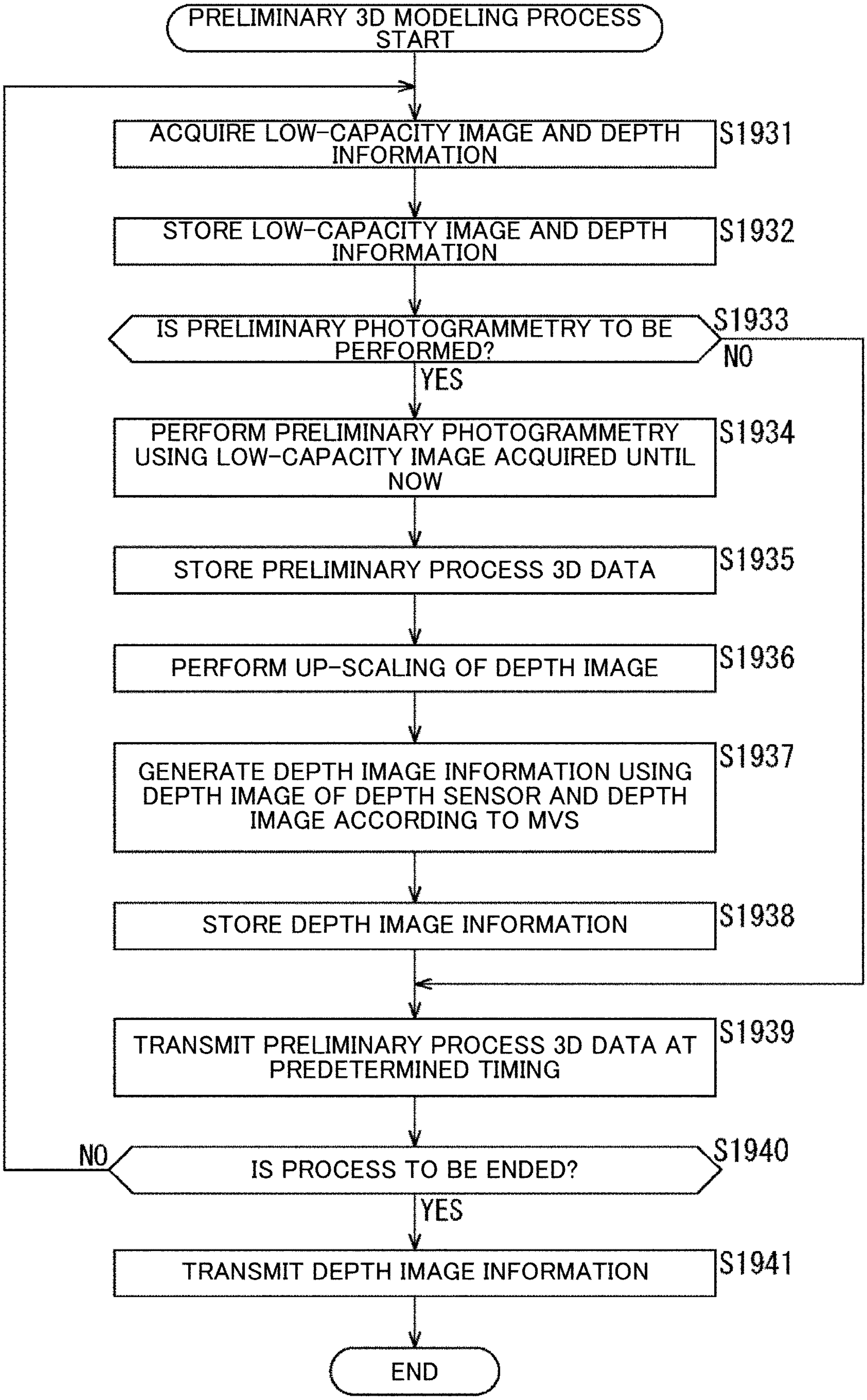
PRELIMINARY 3D MODELING PROCESS START
ACQUIRE LOW-CAPACITY IMAGE AND DEPTH INFORMATION
S1931
STORE LOW-CAPACITY IMAGE AND DEPTH INFORMATION
S1932
IS PRELIMINARY PHOTOGRAMMETRY TO BE PERFORMED?
S1933
NO
YES
PERFORM PRELIMINARY PHOTOGRAMMETRY USING LOW-CAPACITY IMAGE ACQUIRED UNTIL NOW
S1934
STORE PRELIMINARY PROCESS 3D DATA
S1935
PERFORM UP-SCALING OF DEPTH IMAGE
S1936
GENERATE DEPTH IMAGE INFORMATION USING DEPTH IMAGE OF DEPTH SENSOR AND DEPTH IMAGE ACCORDING TO MVS
S1937
STORE DEPTH IMAGE INFORMATION
S1938
TRANSMIT PRELIMINARY PROCESS 3D DATA AT PREDETERMINED TIMING
S1939
IS PROCESS TO BE ENDED?
S1940
NO
YES
TRANSMIT DEPTH IMAGE INFORMATION
S1941
END

Fig. 65

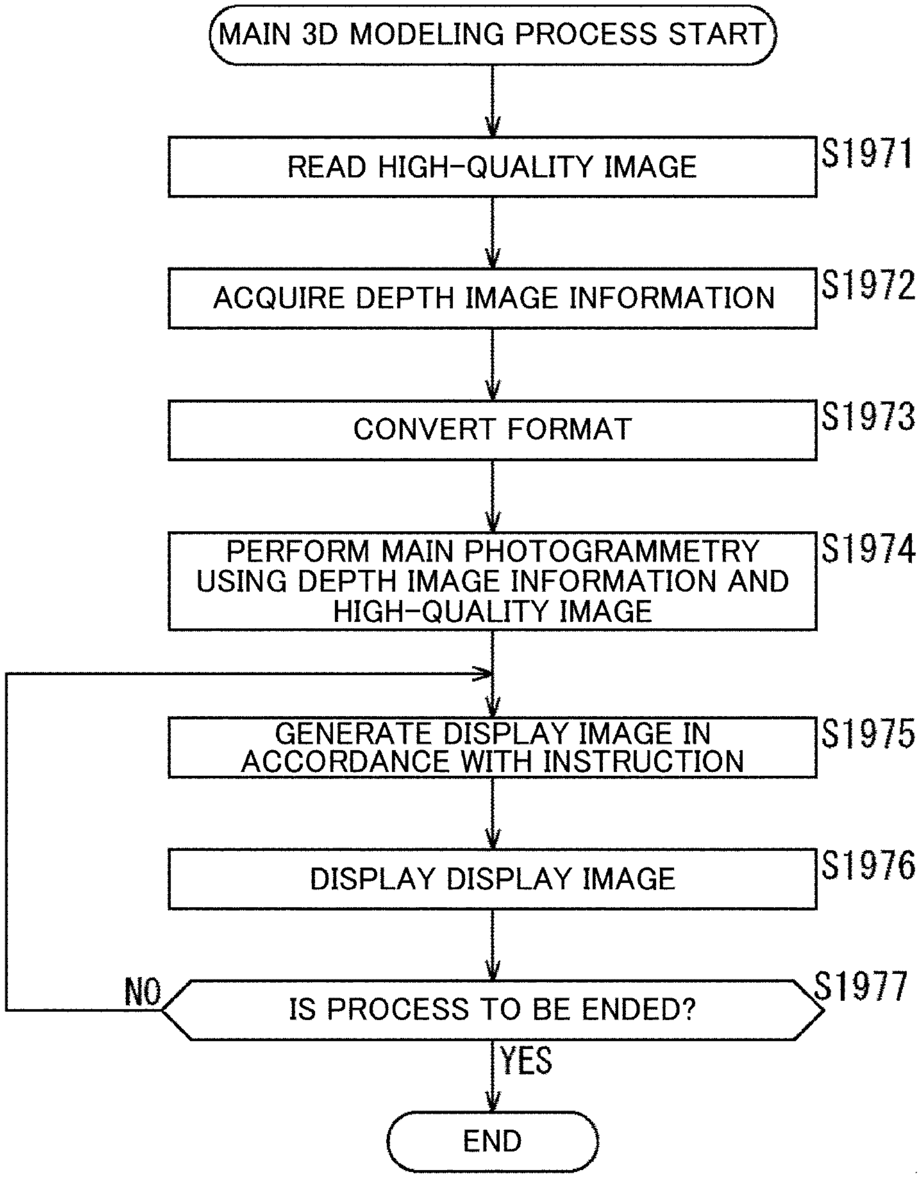
MAIN 3D MODELING PROCESS START
READ HIGH-QUALITY IMAGE
S1971
ACQUIRE DEPTH IMAGE INFORMATION
S1972
CONVERT FORMAT
S1973
PERFORM MAIN PHOTOGRAMMETRY USING DEPTH IMAGE INFORMATION AND HIGH-QUALITY IMAGE
S1974
GENERATE DISPLAY IMAGE IN ACCORDANCE WITH INSTRUCTION
S1975
DISPLAY DISPLAY IMAGE
S1976
IS PROCESS TO BE ENDED?
S1977
NO
YES
END

Fig. 66

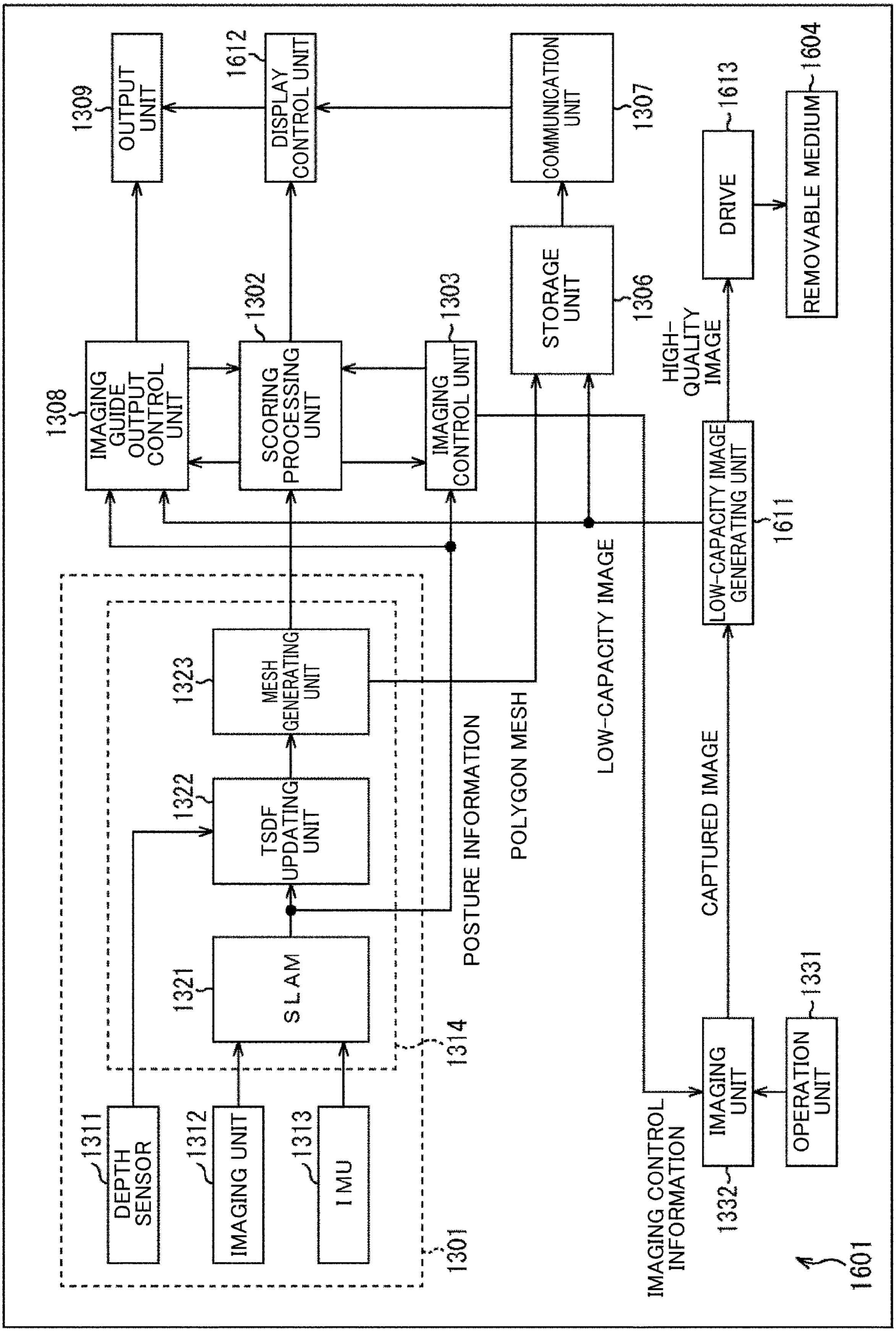
OUTPUT UNIT
1309
DISPLAY CONTROL UNIT
1612
COMMUNICATION UNIT
1307
DRIVE
1613
REMOVABLE MEDIUM
1604
IMAGING GUIDE OUTPUT CONTROL UNIT
1308
SCORING PROCESSING UNIT
1302
IMAGING CONTROL UNIT
1303
STORAGE UNIT
1306
HIGH-QUALITY IMAGE
LOW-CAPACITY IMAGE GENERATING UNIT
1611
LOW-CAPACITY IMAGE
MESH GENERATING UNIT
1323
TSDF UPDATING UNIT
1322
SLAM
1321
1314
POSTURE INFORMATION
POLYGON MESH
CAPTURED IMAGE
DEPTH SENSOR
1311
IMAGING UNIT
1312
IMU
1313
1301
IMAGING CONTROL INFORMATION
IMAGING UNIT
1332
OPERATION UNIT
1331
1601

Fig. 67

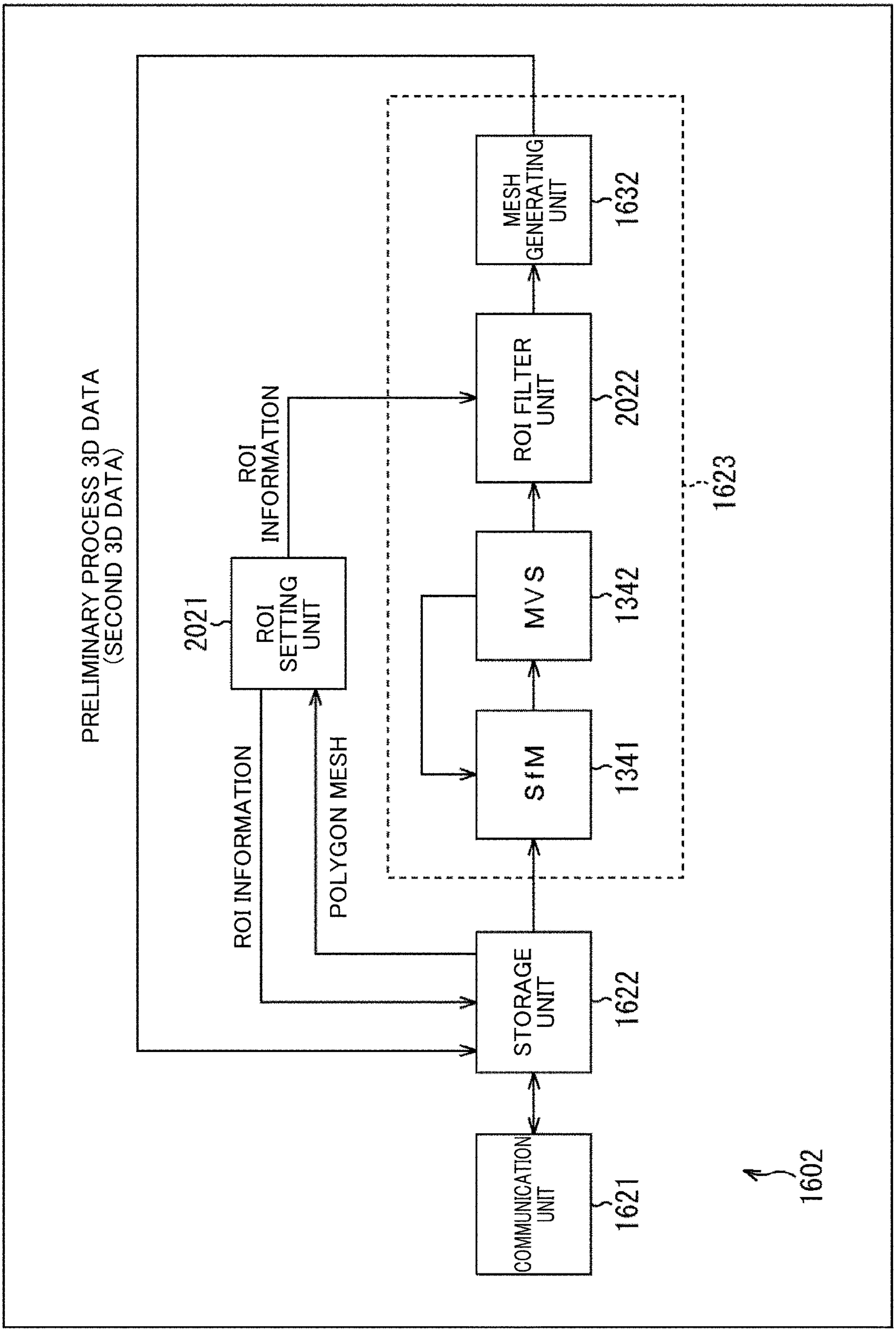
PRELIMINARY PROCESS 3D DATA (SECOND 3D DATA)
ROI INFORMATION
2021
ROI SETTING UNIT
ROI INFORMATION
POLYGON MESH
MESH GENERATING UNIT
1632
ROI FILTER UNIT
2022
1623
MVS
1342
SfM
1341
STORAGE UNIT
1622
COMMUNICATION UNIT
1621
1602

Fig. 68

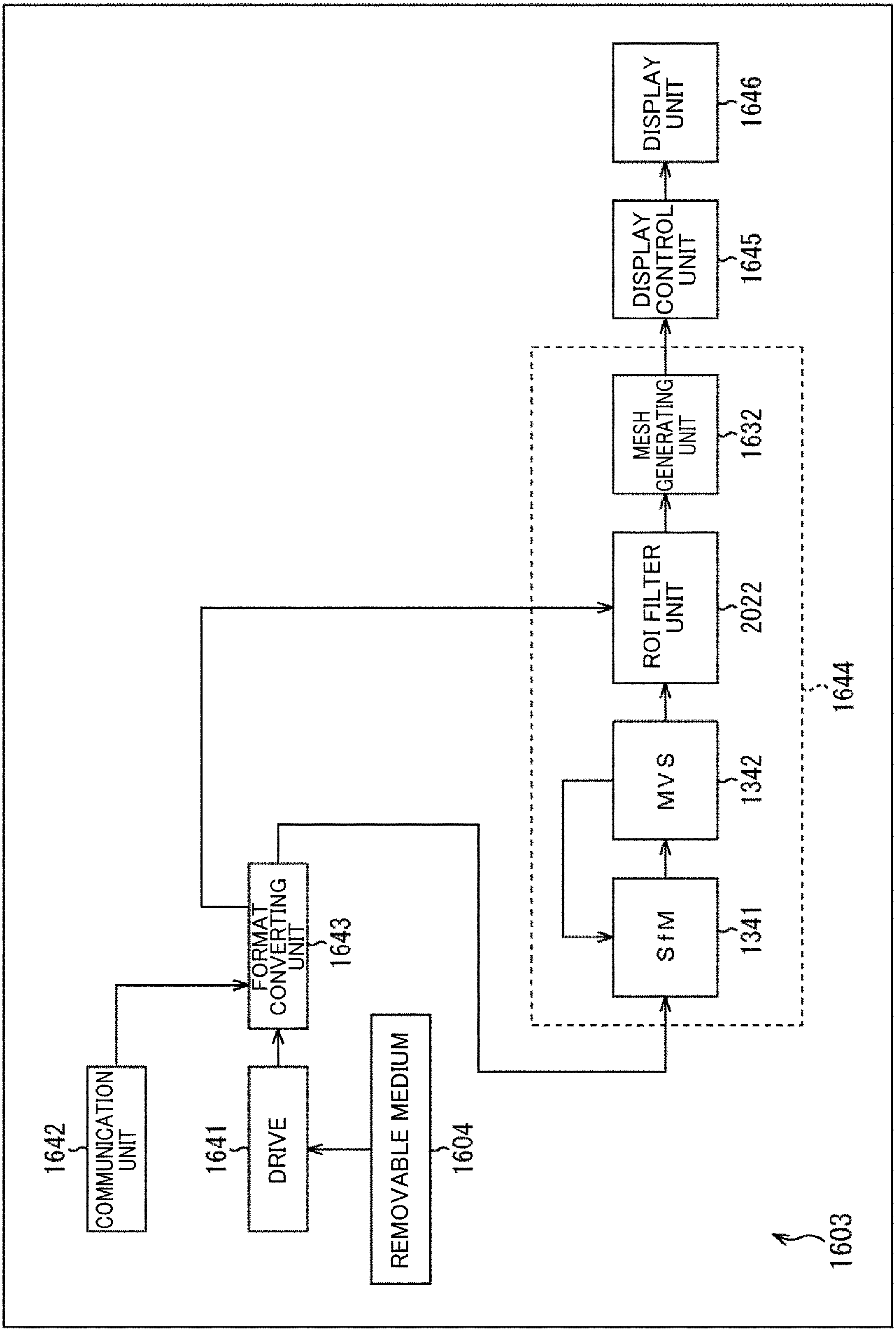
COMMUNICATION UNIT
1642
DRIVE
1641
REMOVABLE MEDIUM
1604
FORMAT CONVERTING UNIT
1643
SfM
1341
MVS
1342
ROI FILTER UNIT
2022
MESH GENERATING UNIT
1632
1644
DISPLAY CONTROL UNIT
1645
DISPLAY UNIT
1646
1603

Fig. 69

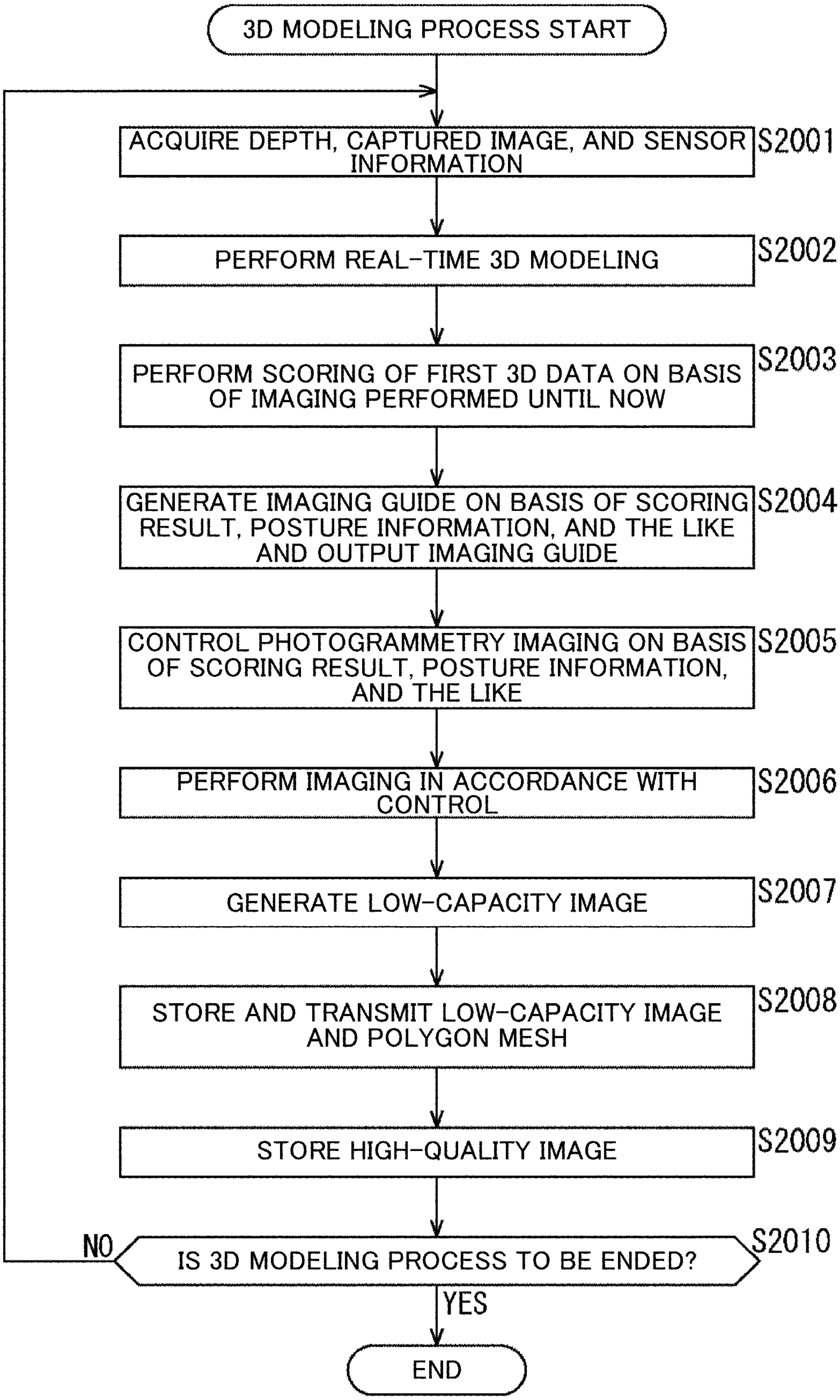
3D MODELING PROCESS START
ACQUIRE DEPTH, CAPTURED IMAGE, AND SENSOR INFORMATION
S2001
PERFORM REAL-TIME 3D MODELING
S2002
PERFORM SCORING OF FIRST 3D DATA ON BASIS OF IMAGING PERFORMED UNTIL NOW
S2003
GENERATE IMAGING GUIDE ON BASIS OF SCORING RESULT, POSTURE INFORMATION, AND THE LIKE AND OUTPUT IMAGING GUIDE
S2004
CONTROL PHOTOGRAMMETRY IMAGING ON BASIS OF SCORING RESULT, POSTURE INFORMATION, AND THE LIKE
S2005
PERFORM IMAGING IN ACCORDANCE WITH CONTROL
S2006
GENERATE LOW-CAPACITY IMAGE
S2007
STORE AND TRANSMIT LOW-CAPACITY IMAGE AND POLYGON MESH
S2008
STORE HIGH-QUALITY IMAGE
S2009
IS 3D MODELING PROCESS TO BE ENDED?
S2010
NO
YES
END

Fig. 70

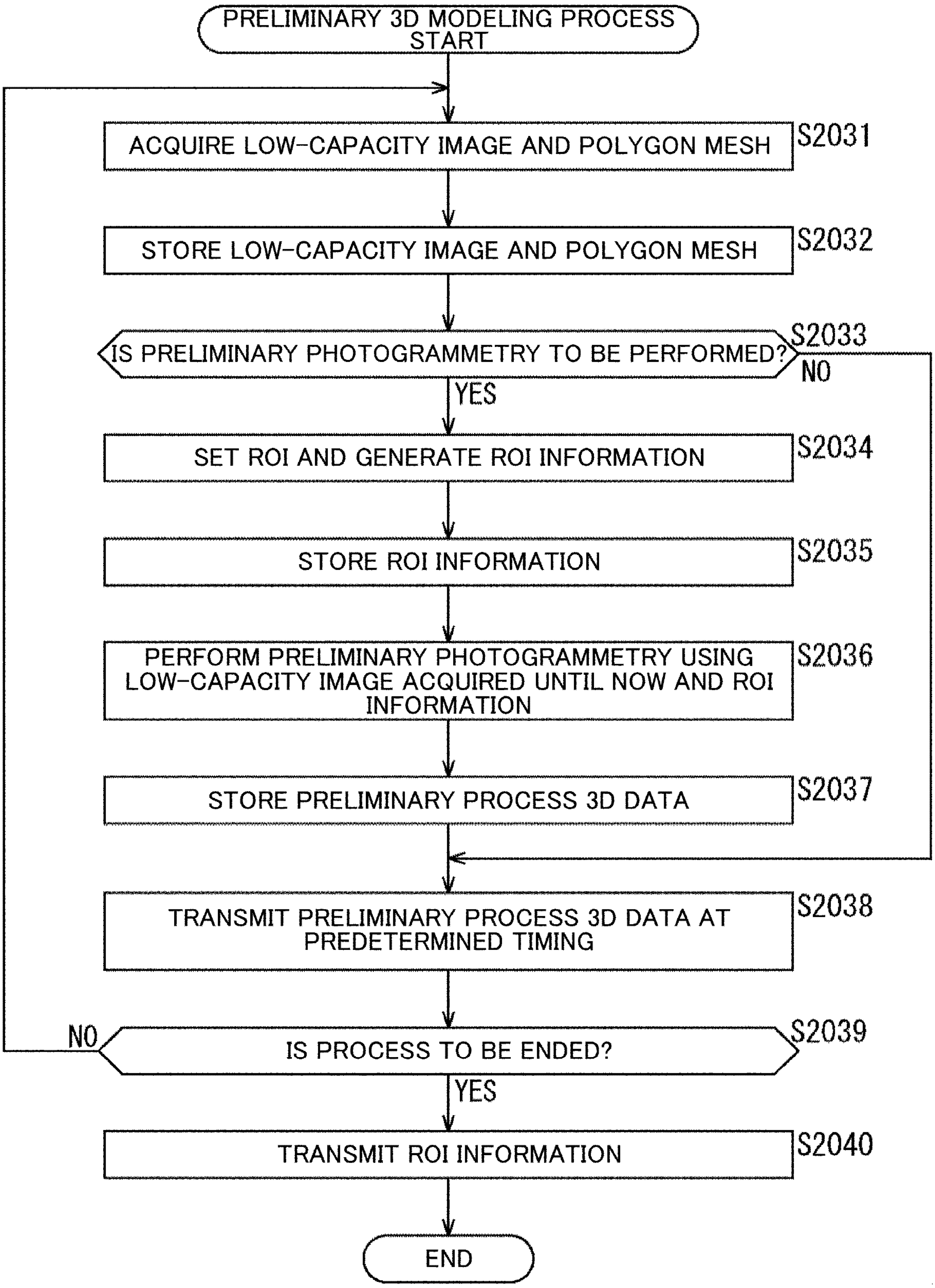
PRELIMINARY 3D MODELING PROCESS START
ACQUIRE LOW-CAPACITY IMAGE AND POLYGON MESH
S2031
STORE LOW-CAPACITY IMAGE AND POLYGON MESH
S2032
IS PRELIMINARY PHOTOGRAMMETRY TO BE PERFORMED?
S2033
NO
YES
SET ROI AND GENERATE ROI INFORMATION
S2034
STORE ROI INFORMATION
S2035
PERFORM PRELIMINARY PHOTOGRAMMETRY USING LOW-CAPACITY IMAGE ACQUIRED UNTIL NOW AND ROI INFORMATION
S2036
STORE PRELIMINARY PROCESS 3D DATA
S2037
TRANSMIT PRELIMINARY PROCESS 3D DATA AT PREDETERMINED TIMING
S2038
IS PROCESS TO BE ENDED?
S2039
NO
YES
TRANSMIT ROI INFORMATION
S2040
END

Fig. 71

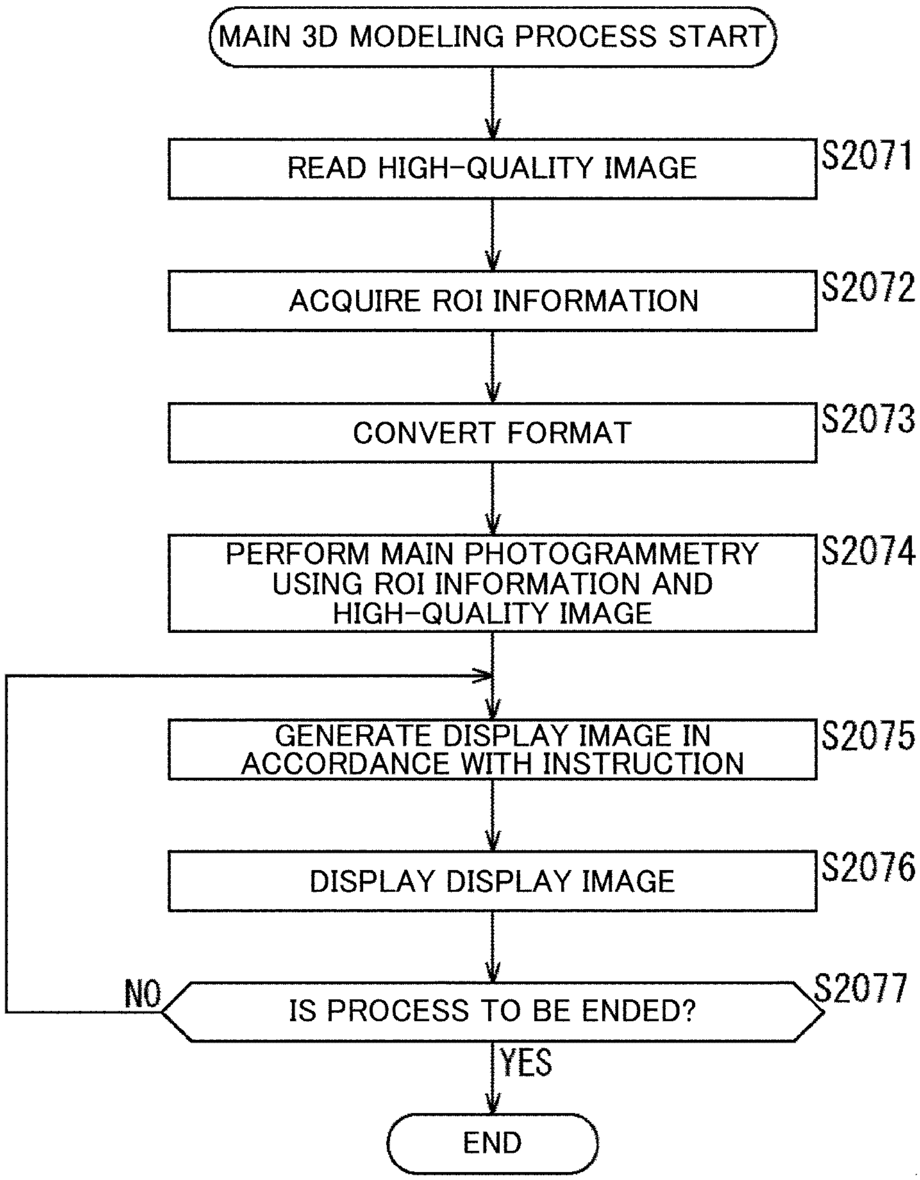
MAIN 3D MODELING PROCESS START
READ HIGH-QUALITY IMAGE
S2071
ACQUIRE ROI INFORMATION
S2072
CONVERT FORMAT
S2073
PERFORM MAIN PHOTOGRAMMETRY USING ROI INFORMATION AND HIGH-QUALITY IMAGE
S2074
GENERATE DISPLAY IMAGE IN ACCORDANCE WITH INSTRUCTION
S2075
DISPLAY DISPLAY IMAGE
S2076
IS PROCESS TO BE ENDED?
S2077
NO
YES
END

Fig. 72

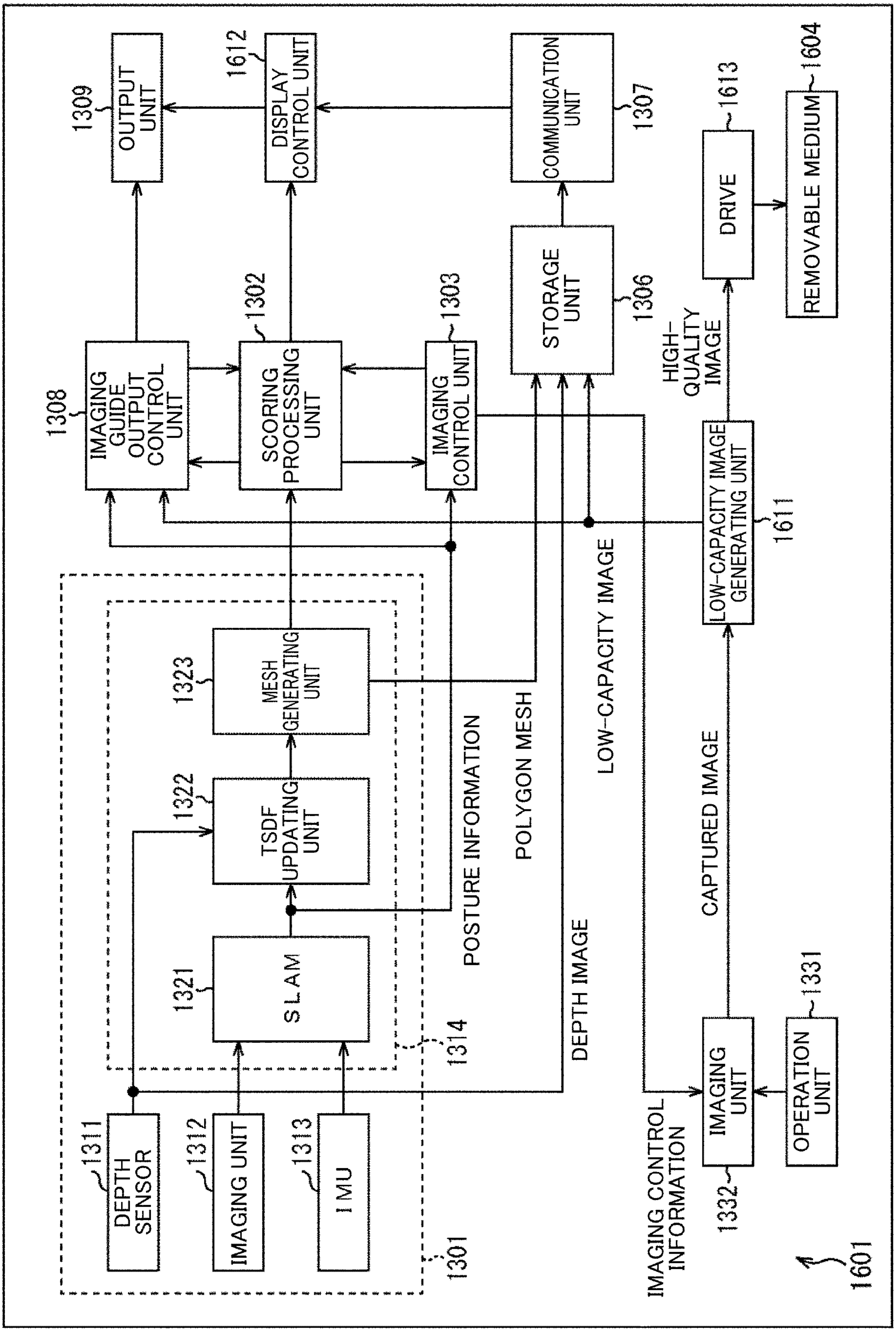
OUTPUT UNIT
1309
DISPLAY CONTROL UNIT
1612
COMMUNICATION UNIT
1307
DRIVE
1613
REMOVABLE MEDIUM
1604
IMAGING GUIDE OUTPUT CONTROL UNIT
1308
SCORING PROCESSING UNIT
1302
IMAGING CONTROL UNIT
1303
STORAGE UNIT
1306
HIGH-QUALITY IMAGE
LOW-CAPACITY IMAGE GENERATING UNIT
1611
MESH GENERATING UNIT
1323
TSDF UPDATING UNIT
1322
SLAM
1321
1314
POSTURE INFORMATION
POLYGON MESH
LOW-CAPACITY IMAGE
DEPTH IMAGE
CAPTURED IMAGE
DEPTH SENSOR
1311
IMAGING UNIT
1312
IMU
1313
1301
IMAGING CONTROL INFORMATION
IMAGING UNIT
1332
OPERATION UNIT
1331
1601

Fig. 73

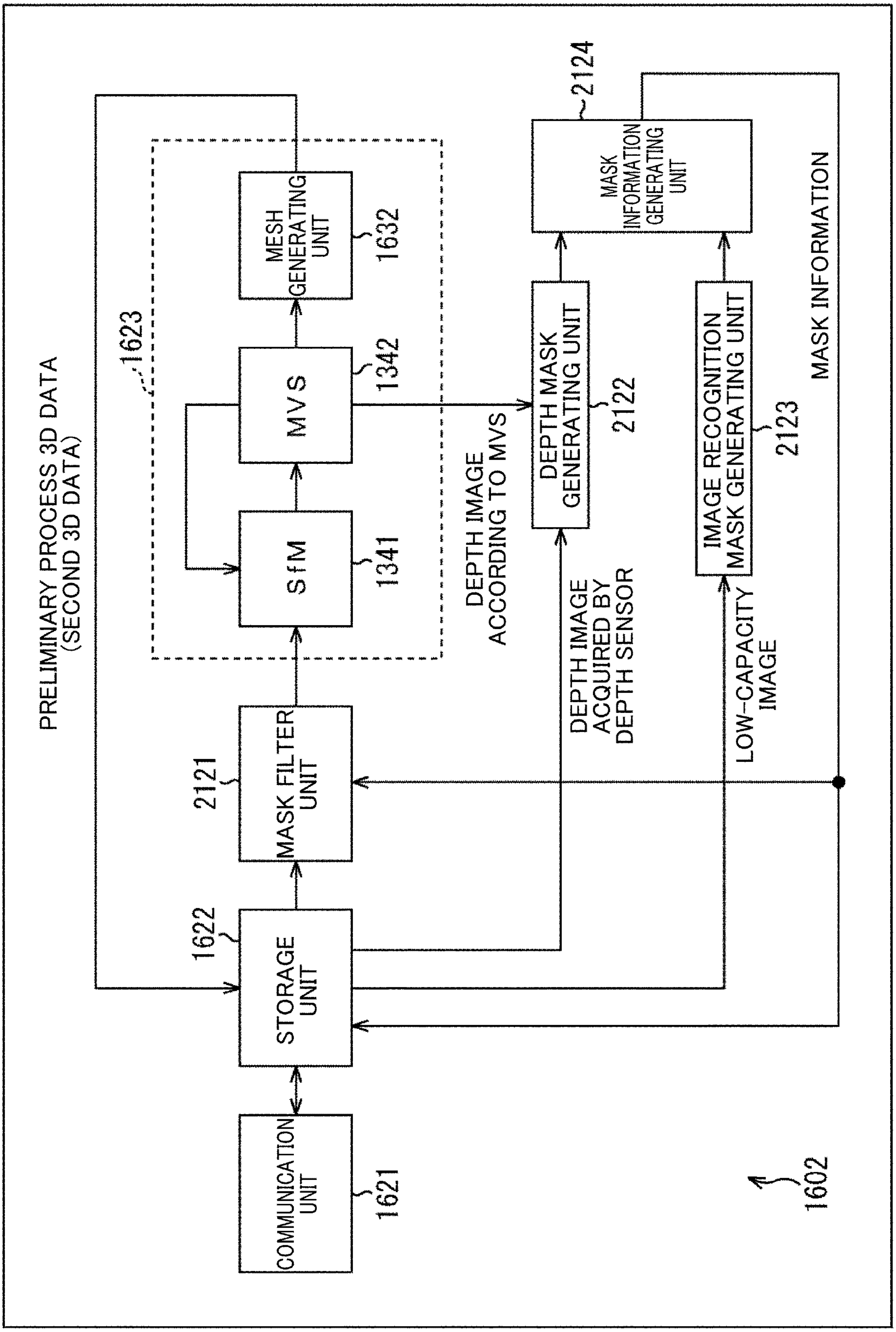
PRELIMINARY PROCESS 3D DATA (SECOND 3D DATA)
1623
MESH GENERATING UNIT
1632
MVS
1342
SfM
1341
MASK FILTER UNIT
2121
STORAGE UNIT
1622
COMMUNICATION UNIT
1621
DEPTH IMAGE ACCORDING TO MVS
DEPTH MASK GENERATING UNIT
2122
DEPTH IMAGE ACQUIRED BY DEPTH SENSOR
MASK INFORMATION GENERATING UNIT
2124
IMAGE RECOGNITION MASK GENERATING UNIT
2123
LOW-CAPACITY IMAGE
MASK INFORMATION
1602

Fig. 74

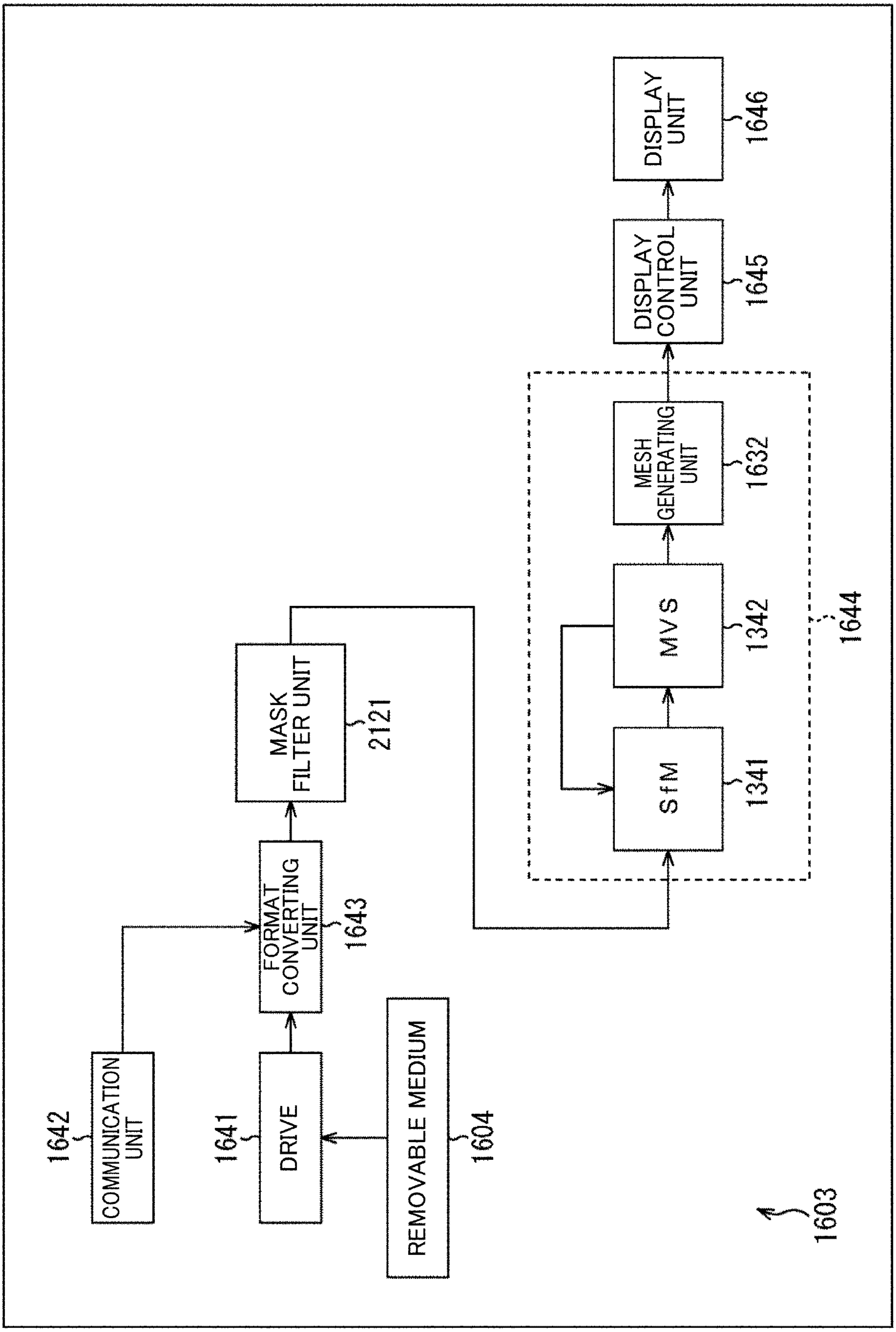
COMMUNICATION UNIT
1642
DRIVE
1641
REMOVABLE MEDIUM
1604
FORMAT CONVERTING UNIT
1643
MASK FILTER UNIT
2121
SfM
1341
MVS
1342
MESH GENERATING UNIT
1632
1644
DISPLAY CONTROL UNIT
1645
DISPLAY UNIT
1646
1603

Fig. 75

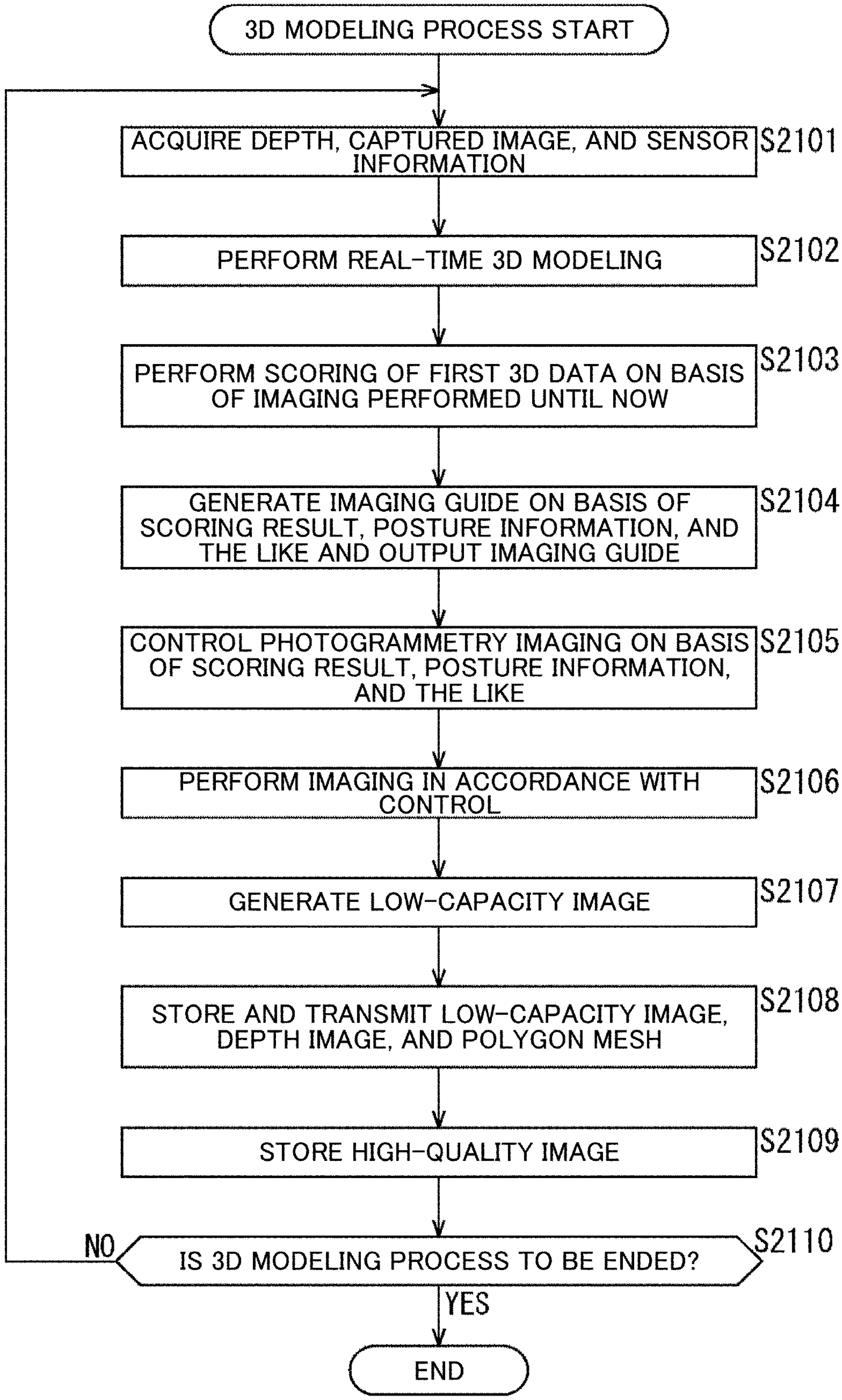
3D MODELING PROCESS START
ACQUIRE DEPTH, CAPTURED IMAGE, AND SENSOR INFORMATION
S2101
PERFORM REAL-TIME 3D MODELING
S2102
PERFORM SCORING OF FIRST 3D DATA ON BASIS OF IMAGING PERFORMED UNTIL NOW
S2103
GENERATE IMAGING GUIDE ON BASIS OF SCORING RESULT, POSTURE INFORMATION, AND THE LIKE AND OUTPUT IMAGING GUIDE
S2104
CONTROL PHOTOGRAMMETRY IMAGING ON BASIS OF SCORING RESULT, POSTURE INFORMATION, AND THE LIKE
S2105
PERFORM IMAGING IN ACCORDANCE WITH CONTROL
S2106
GENERATE LOW-CAPACITY IMAGE
S2107
STORE AND TRANSMIT LOW-CAPACITY IMAGE, DEPTH IMAGE, AND POLYGON MESH
S2108
STORE HIGH-QUALITY IMAGE
S2109
NO
IS 3D MODELING PROCESS TO BE ENDED?
S2110
YES
END

Fig. 76

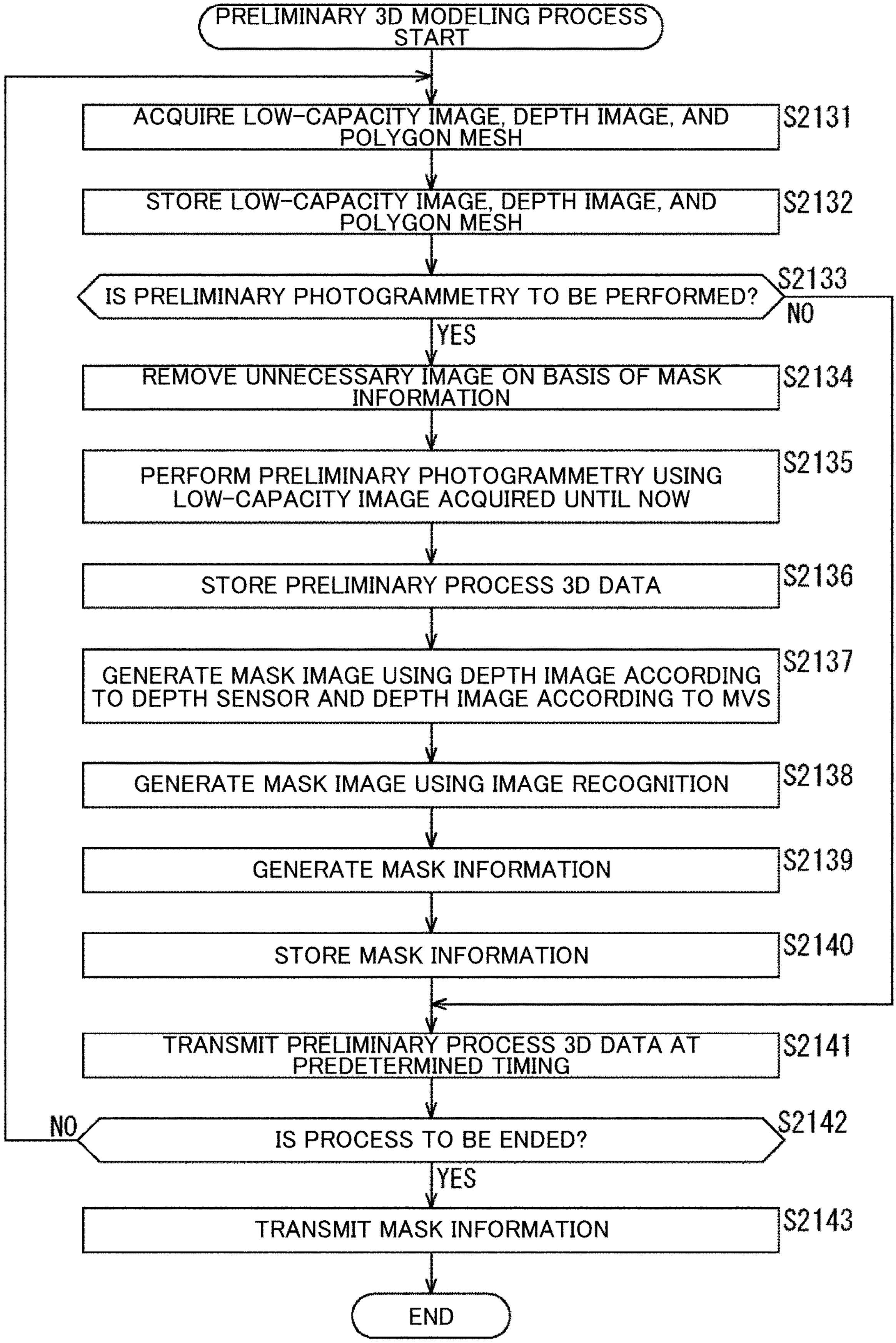
PRELIMINARY 3D MODELING PROCESS START
ACQUIRE LOW-CAPACITY IMAGE, DEPTH IMAGE, AND POLYGON MESH
S2131
STORE LOW-CAPACITY IMAGE, DEPTH IMAGE, AND POLYGON MESH
S2132
IS PRELIMINARY PHOTOGRAMMETRY TO BE PERFORMED?
S2133
NO
YES
REMOVE UNNECESSARY IMAGE ON BASIS OF MASK INFORMATION
S2134
PERFORM PRELIMINARY PHOTOGRAMMETRY USING LOW-CAPACITY IMAGE ACQUIRED UNTIL NOW
S2135
STORE PRELIMINARY PROCESS 3D DATA
S2136
GENERATE MASK IMAGE USING DEPTH IMAGE ACCORDING TO DEPTH SENSOR AND DEPTH IMAGE ACCORDING TO MVS
S2137
GENERATE MASK IMAGE USING IMAGE RECOGNITION
S2138
GENERATE MASK INFORMATION
S2139
STORE MASK INFORMATION
S2140
TRANSMIT PRELIMINARY PROCESS 3D DATA AT PREDETERMINED TIMING
S2141
NO
IS PROCESS TO BE ENDED?
S2142
YES
TRANSMIT MASK INFORMATION
S2143
END

Fig. 77

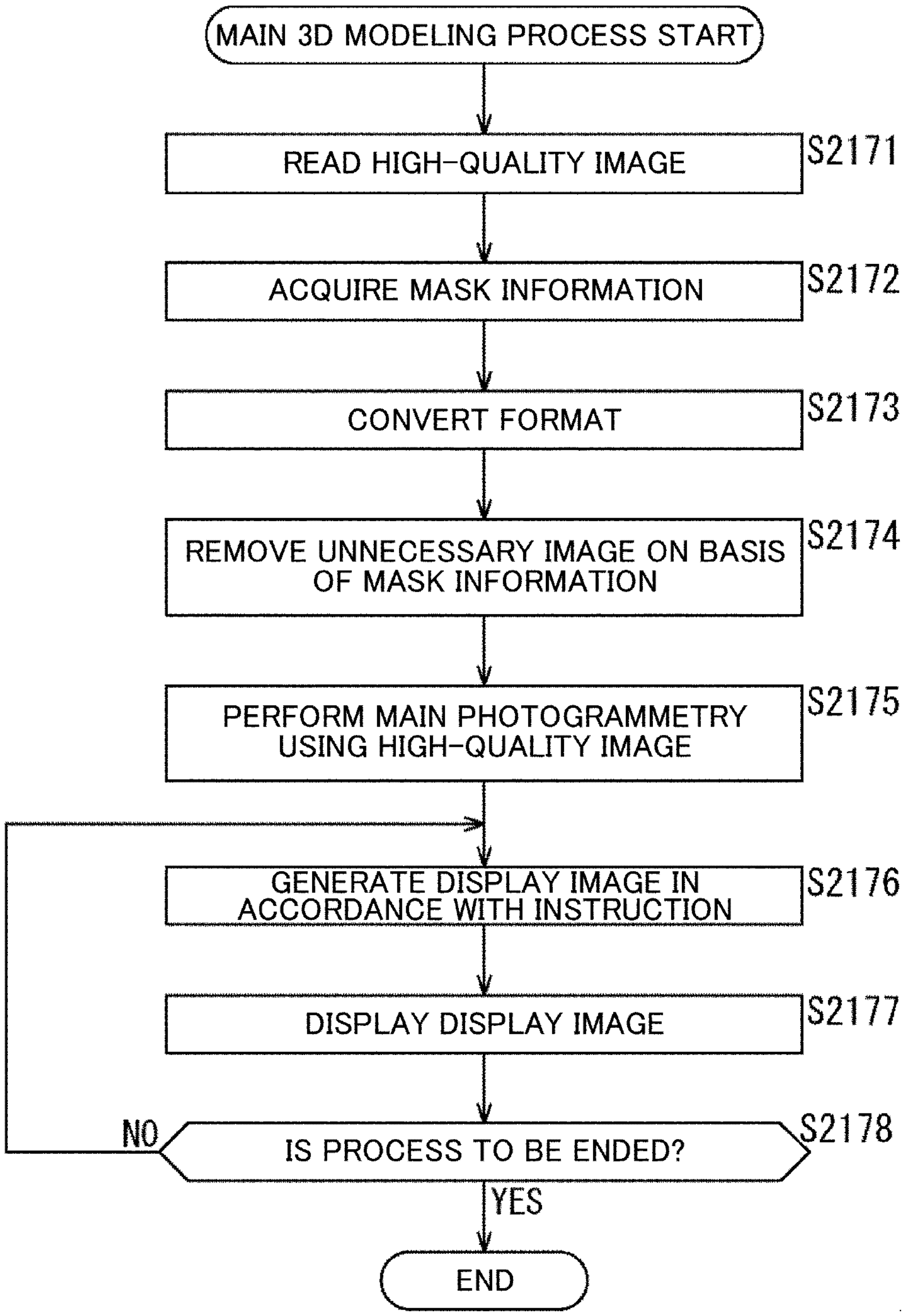
MAIN 3D MODELING PROCESS START
READ HIGH-QUALITY IMAGE
S2171
ACQUIRE MASK INFORMATION
S2172
CONVERT FORMAT
S2173
REMOVE UNNECESSARY IMAGE ON BASIS OF MASK INFORMATION
S2174
PERFORM MAIN PHOTOGRAMMETRY USING HIGH-QUALITY IMAGE
S2175
GENERATE DISPLAY IMAGE IN ACCORDANCE WITH INSTRUCTION
S2176
DISPLAY DISPLAY IMAGE
S2177
IS PROCESS TO BE ENDED?
S2178
NO
YES
END

Fig. 78

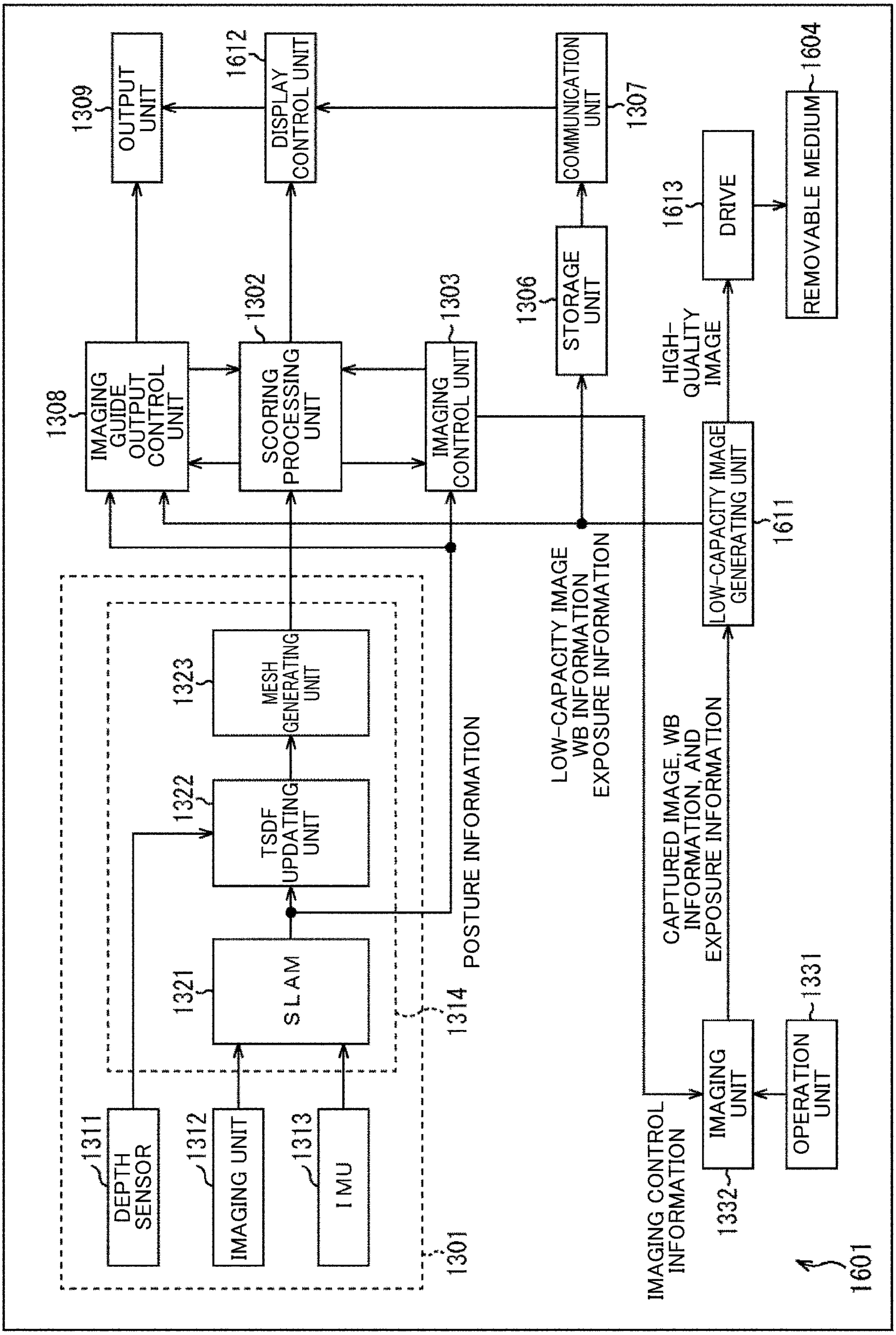
OUTPUT UNIT
1309
DISPLAY CONTROL UNIT
1612
COMMUNICATION UNIT
1307
REMOVABLE MEDIUM
1604
DRIVE
1613
STORAGE UNIT
1306
HIGH-QUALITY IMAGE
IMAGING GUIDE OUTPUT CONTROL UNIT
1308
SCORING PROCESSING UNIT
1302
IMAGING CONTROL UNIT
1303
LOW-CAPACITY IMAGE GENERATING UNIT
1611
LOW-CAPACITY IMAGE
WB INFORMATION
EXPOSURE INFORMATION
MESH GENERATING UNIT
1323
TSDF UPDATING UNIT
1322
SLAM
1321
POSTURE INFORMATION
1314
CAPTURED IMAGE, WB INFORMATION, AND EXPOSURE INFORMATION
DEPTH SENSOR
1311
IMAGING UNIT
1312
IMU
1313
1301
IMAGING CONTROL INFORMATION
IMAGING UNIT
1332
OPERATION UNIT
1331
1601

Fig. 79

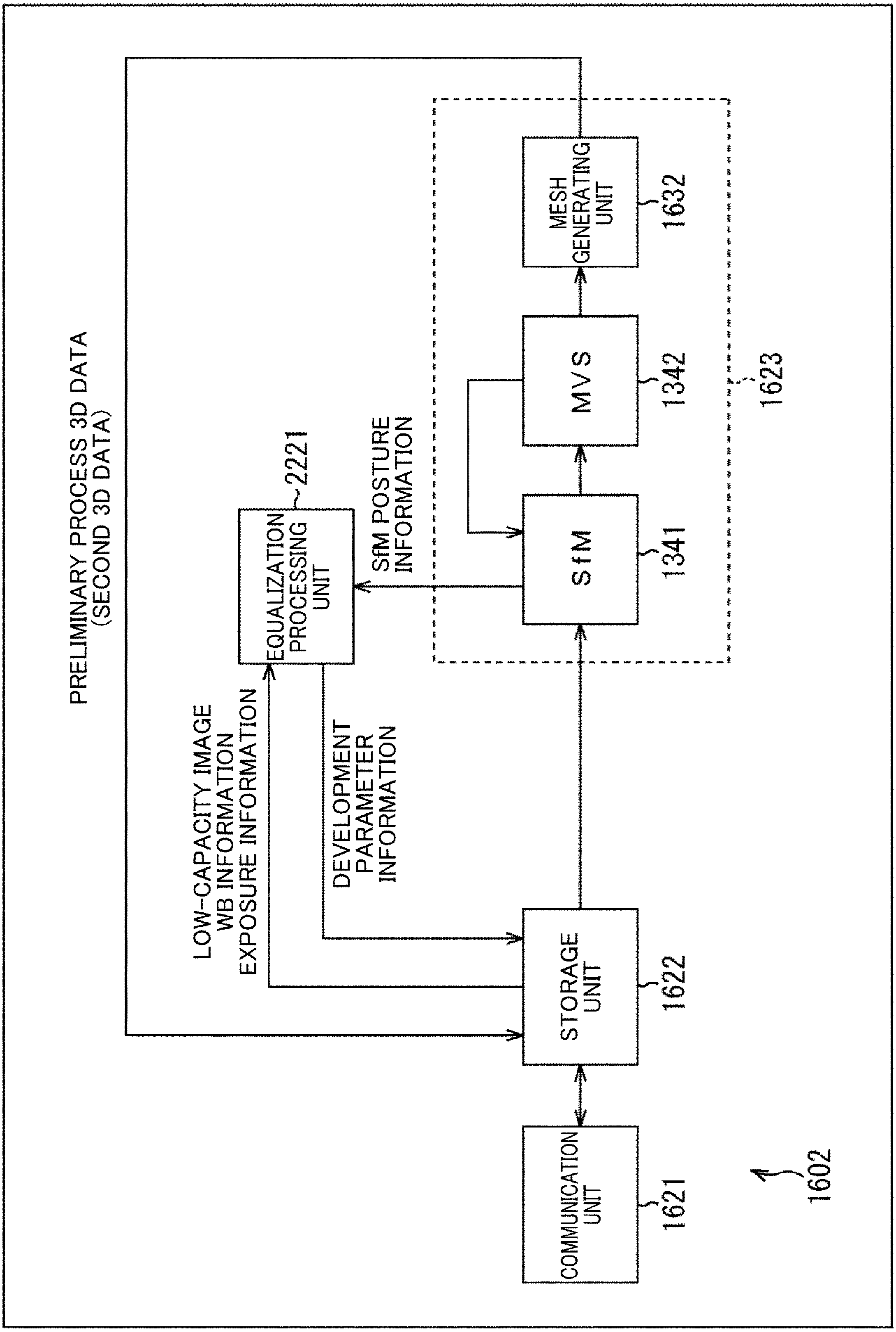
PRELIMINARY PROCESS 3D DATA
(SECOND 3D DATA)
EQUALIZATION PROCESSING UNIT
2221
SfM POSTURE INFORMATION
MESH GENERATING UNIT
1632
MVS
1342
SfM
1341
1623
LOW-CAPACITY IMAGE
WB INFORMATION
EXPOSURE INFORMATION
DEVELOPMENT PARAMETER INFORMATION
STORAGE UNIT
1622
COMMUNICATION UNIT
1621
1602

Fig. 80

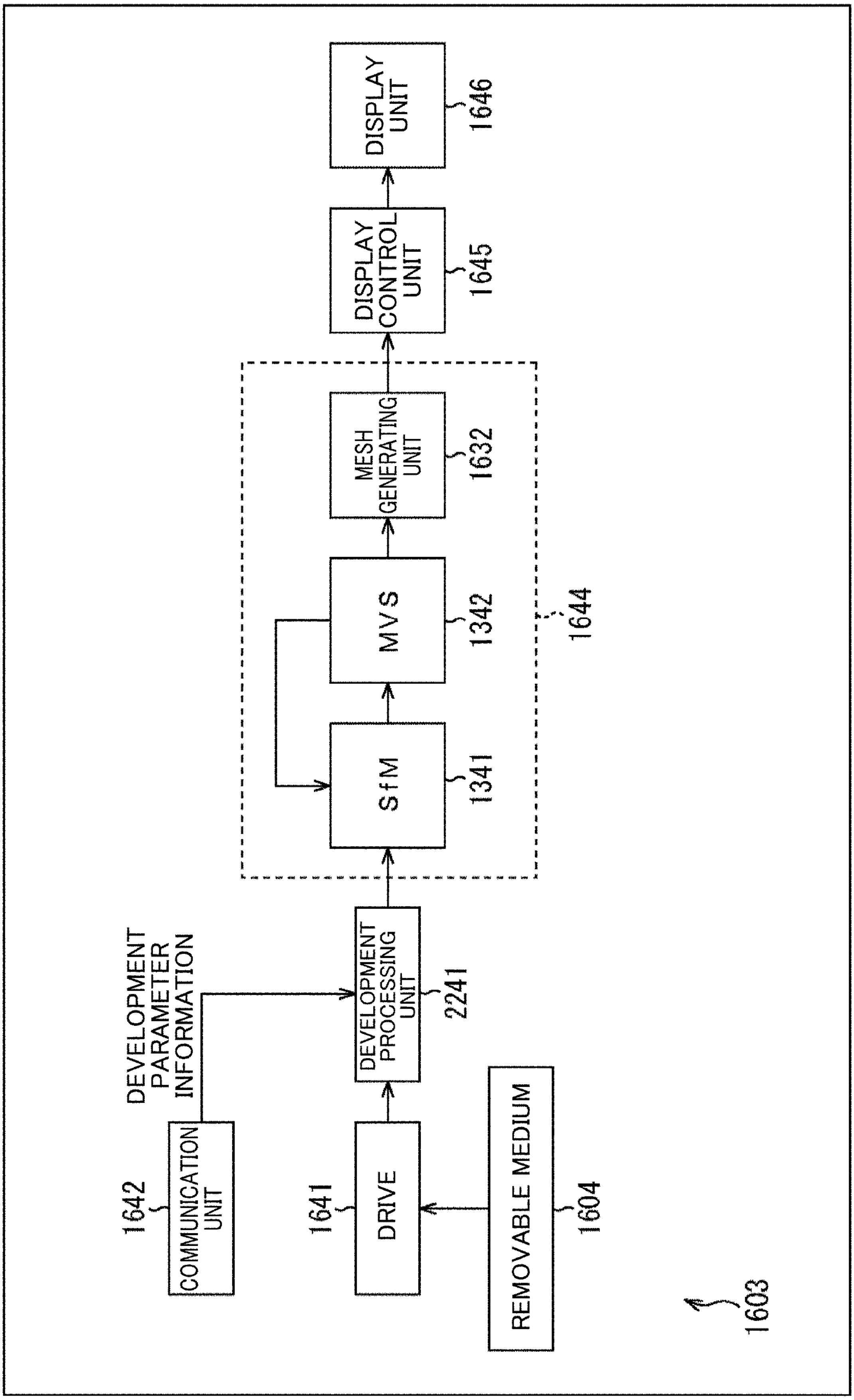
DISPLAY UNIT
1646
DISPLAY CONTROL UNIT
1645
MESH GENERATING UNIT
1632
MVS
1342
SfM
1341
1644
DEVELOPMENT PARAMETER INFORMATION
DEVELOPMENT PROCESSING UNIT
2241
COMMUNICATION UNIT
1642
DRIVE
1641
REMOVABLE MEDIUM
1604
1603

Fig. 81

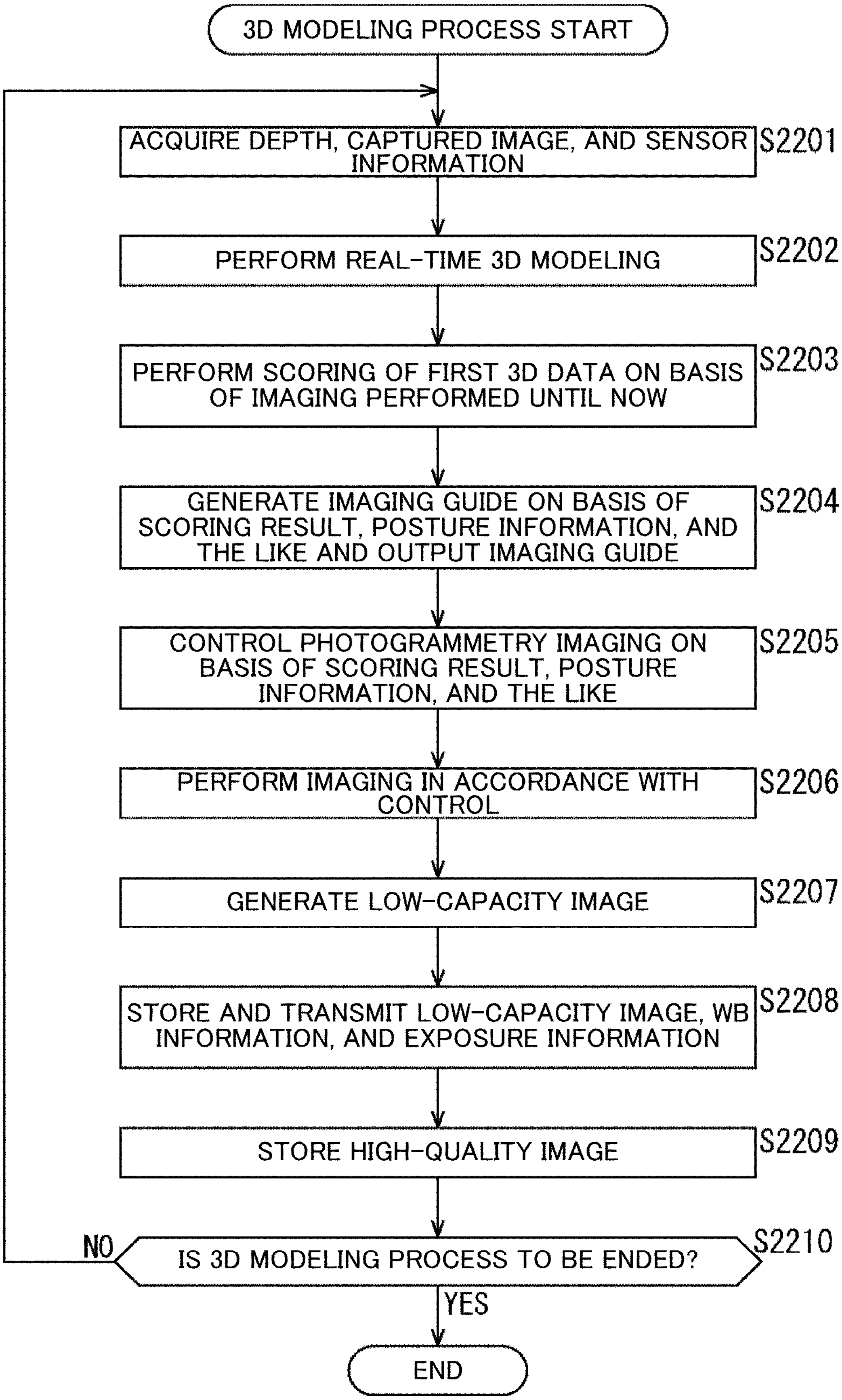
3D MODELING PROCESS START
ACQUIRE DEPTH, CAPTURED IMAGE, AND SENSOR INFORMATION
S2201
PERFORM REAL-TIME 3D MODELING
S2202
PERFORM SCORING OF FIRST 3D DATA ON BASIS OF IMAGING PERFORMED UNTIL NOW
S2203
GENERATE IMAGING GUIDE ON BASIS OF SCORING RESULT, POSTURE INFORMATION, AND THE LIKE AND OUTPUT IMAGING GUIDE
S2204
CONTROL PHOTOGRAMMETRY IMAGING ON BASIS OF SCORING RESULT, POSTURE INFORMATION, AND THE LIKE
S2205
PERFORM IMAGING IN ACCORDANCE WITH CONTROL
S2206
GENERATE LOW-CAPACITY IMAGE
S2207
STORE AND TRANSMIT LOW-CAPACITY IMAGE, WB INFORMATION, AND EXPOSURE INFORMATION
S2208
STORE HIGH-QUALITY IMAGE
S2209
IS 3D MODELING PROCESS TO BE ENDED?
S2210
NO
YES
END

Fig. 82

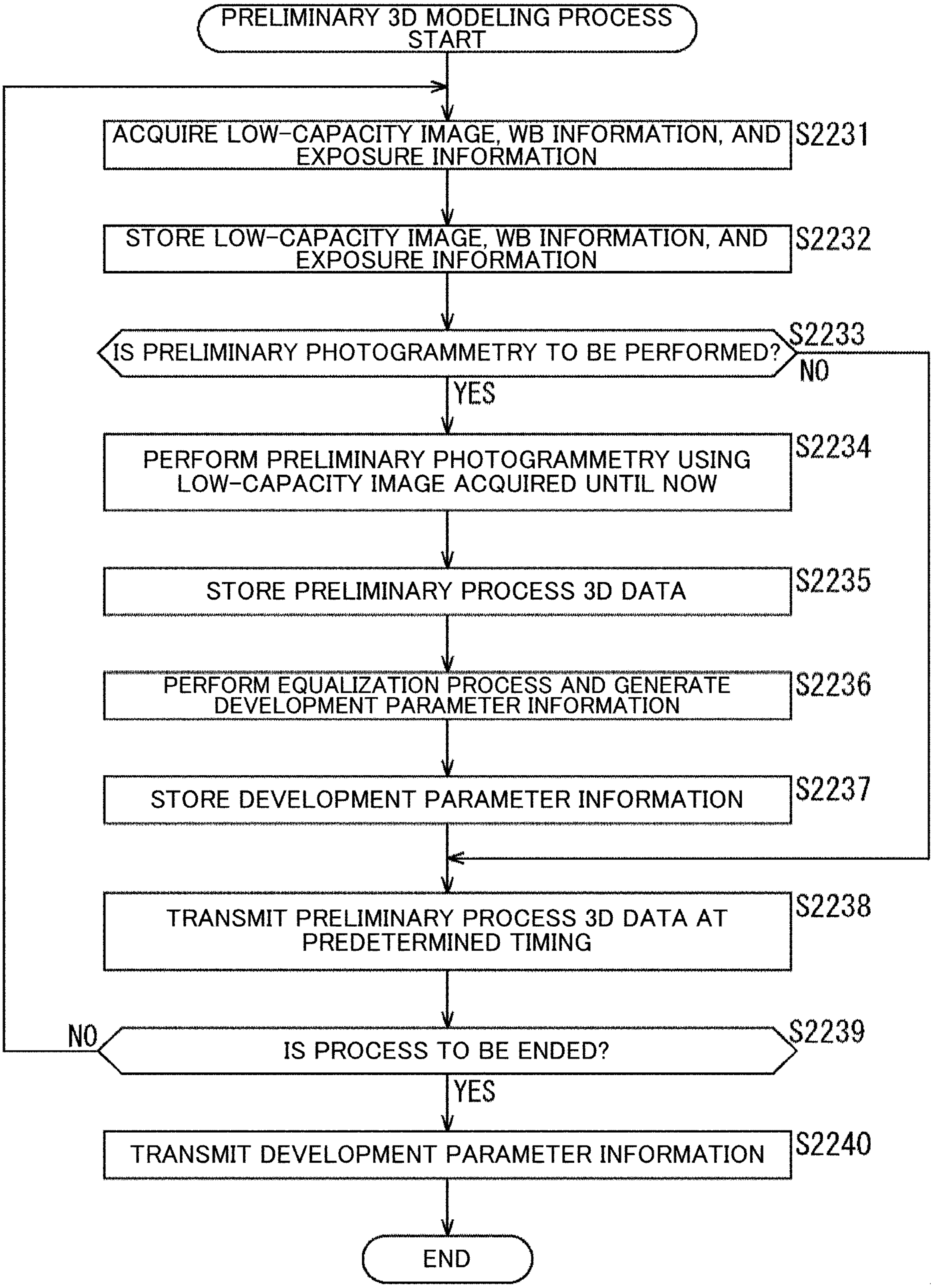
PRELIMINARY 3D MODELING PROCESS START
ACQUIRE LOW-CAPACITY IMAGE, WB INFORMATION, AND EXPOSURE INFORMATION
S2231
STORE LOW-CAPACITY IMAGE, WB INFORMATION, AND EXPOSURE INFORMATION
S2232
IS PRELIMINARY PHOTOGRAMMETRY TO BE PERFORMED?
S2233
NO
YES
PERFORM PRELIMINARY PHOTOGRAMMETRY USING LOW-CAPACITY IMAGE ACQUIRED UNTIL NOW
S2234
STORE PRELIMINARY PROCESS 3D DATA
S2235
PERFORM EQUALIZATION PROCESS AND GENERATE DEVELOPMENT PARAMETER INFORMATION
S2236
STORE DEVELOPMENT PARAMETER INFORMATION
S2237
TRANSMIT PRELIMINARY PROCESS 3D DATA AT PREDETERMINED TIMING
S2238
IS PROCESS TO BE ENDED?
S2239
NO
YES
TRANSMIT DEVELOPMENT PARAMETER INFORMATION
S2240
END

Fig. 83

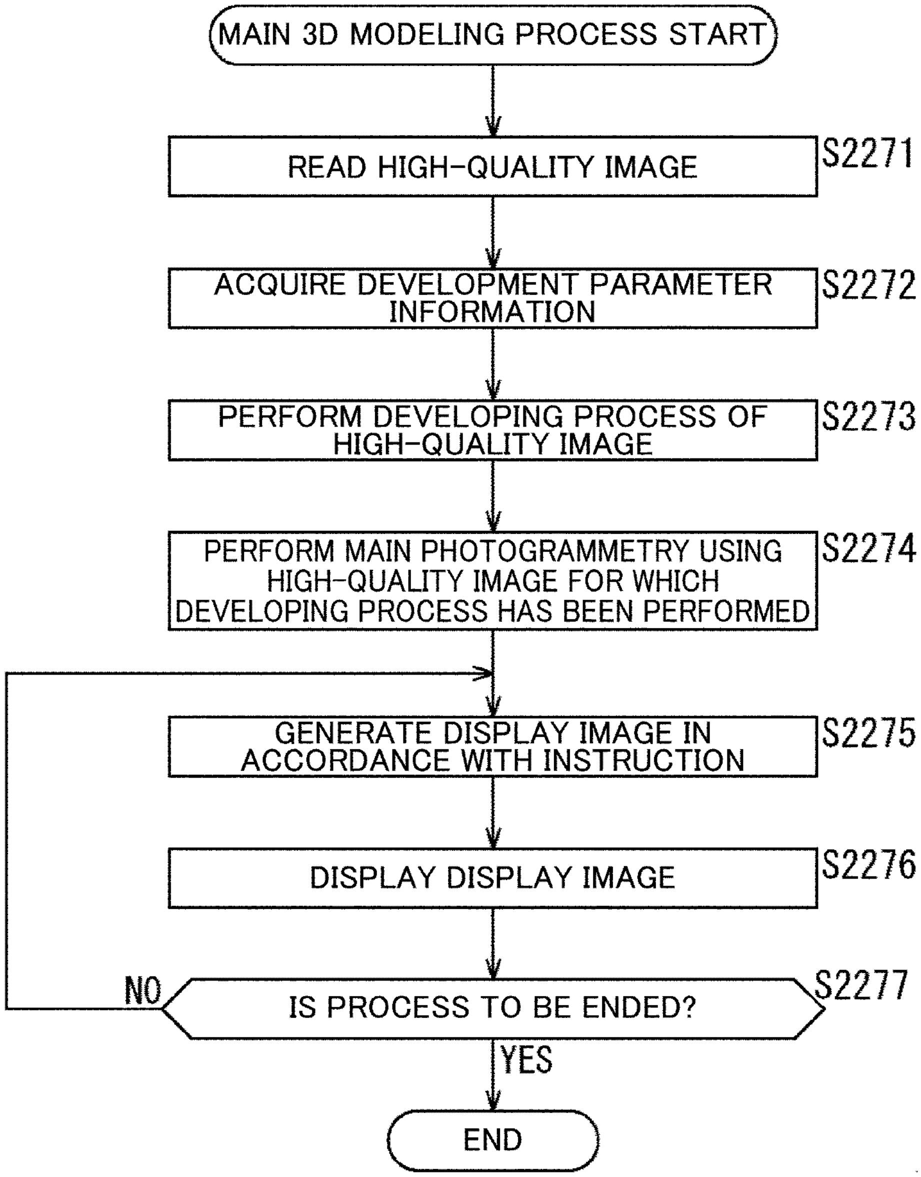
MAIN 3D MODELING PROCESS START
READ HIGH-QUALITY IMAGE
S2271
ACQUIRE DEVELOPMENT PARAMETER INFORMATION
S2272
PERFORM DEVELOPING PROCESS OF HIGH-QUALITY IMAGE
S2273
PERFORM MAIN PHOTOGRAMMETRY USING HIGH-QUALITY IMAGE FOR WHICH DEVELOPING PROCESS HAS BEEN PERFORMED
S2274
GENERATE DISPLAY IMAGE IN ACCORDANCE WITH INSTRUCTION
S2275
DISPLAY DISPLAY IMAGE
S2276
IS PROCESS TO BE ENDED?
S2277
NO
YES
END

Fig. 84

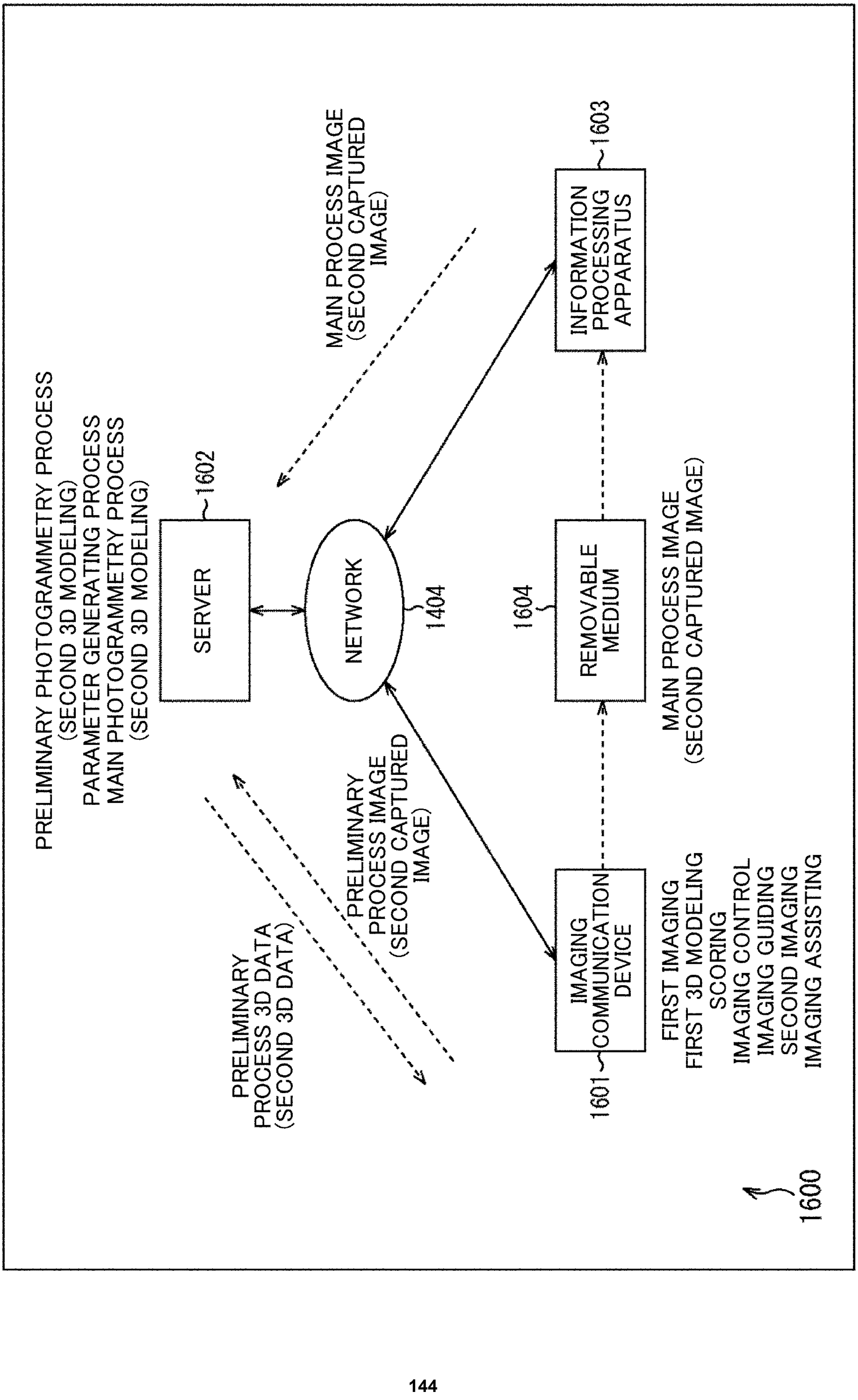
PRELIMINARY PHOTOGRAMMETRY PROCESS
(SECOND 3D MODELING)
PARAMETER GENERATING PROCESS
MAIN PHOTOGRAMMETRY PROCESS
(SECOND 3D MODELING)
SERVER
1602
NETWORK
1404
MAIN PROCESS IMAGE
(SECOND CAPTURED
IMAGE)
INFORMATION
PROCESSING
APPARATUS
1603
REMOVABLE
MEDIUM
1604
MAIN PROCESS IMAGE
(SECOND CAPTURED IMAGE)
PRELIMINARY
PROCESS 3D DATA
(SECOND 3D DATA)
PRELIMINARY
PROCESS IMAGE
(SECOND CAPTURED
IMAGE)
IMAGING
COMMUNICATION
DEVICE
1601
FIRST IMAGING
FIRST 3D MODELING
SCORING
IMAGING CONTROL
IMAGING GUIDING
SECOND IMAGING
IMAGING ASSISTING
1600

Fig. 85

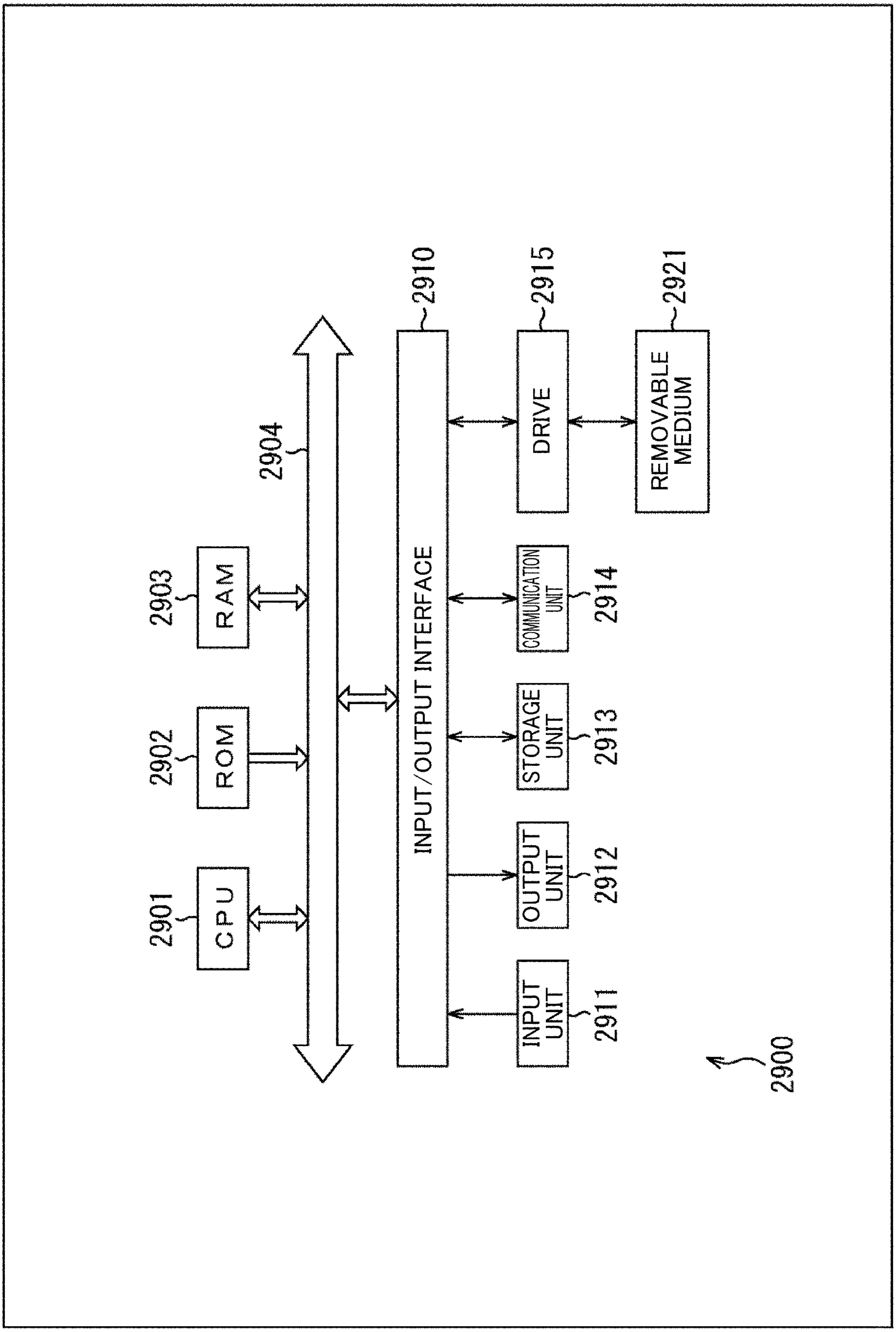
2901
CPU
2902
ROM
2903
RAM
2904
2910
INPUT/OUTPUT INTERFACE
2911
INPUT UNIT
2912
OUTPUT UNIT
2913
STORAGE UNIT
2914
COMMUNICATION UNIT
2915
DRIVE
2921
REMOVABLE MEDIUM
2900

## INTERNATIONAL SEARCH REPORT

International application No.
**PCT/JP2023/043394**

**A. CLASSIFICATION OF SUBJECT MATTER**

***G06T 7/55***(2017.01)i
FI: G06T7/55

According to International Patent Classification (IPC) or to both national classification and IPC

**B. FIELDS SEARCHED**

Minimum documentation searched (classification system followed by classification symbols)

G06T7/55

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-192228 A (CASIO COMPUTER CO., LTD.) 29 September 2011 (2011-09-29) claims 1-8, paragraph [0043] | 1-20 |
| A | JP 2011-209815 A (CASIO COMPUTER CO., LTD.) 20 October 2011 (2011-10-20) claims 1-8, paragraph [0044] | 1-20 |
| A | JP 2012-221128 A (CASIO COMPUTER CO., LTD.) 12 November 2012 (2012-11-12) claims 1-8 | 1-20 |
| A | WO 2022/075073 A1 (SONY GROUP CORPORATION) 14 April 2022 (2022-04-14) claims 1-20, paragraphs [0069], [0209]-[0224] | 1-20 |
| A | US 2020/0051277 A1 (HEWLETT-PACKARD DEVELOPMENT COMPANY, L.P.) 13 February 2020 (2020-02-13) paragraphs [0012], [0015]-[0016], [0029]-[0030], [0035], fig. 1, 3-4 | 1-20 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 February 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/043394**

| Patent document cited in search report | Publication date (day/month/year) | Patent family member(s) | Publication date (day/month/year) |
|---|---|---|---|
| JP 2011-192228 A | 29 September 2011 | US 2011/0227924 A1<br>claims 1-8, paragraph [0052]<br>CN 102236911 A | |
| JP 2011-209815 A | 20 October 2011 | US 2011/0234759 A1<br>claims 1-8, paragraph [0050]<br>CN 102208116 A | |
| JP 2012-221128 A | 12 November 2012 | US 2012/0257016 A1<br>claims 1-8<br>CN 102737406 A | |
| WO 2022/075073 A1 | 14 April 2022 | CN 116250242 A<br>claims 1-20, paragraphs [0113], [0291]-[0307] | |
| US 2020/0051277 A1 | 13 February 2020 | WO 2018/199946 A1<br>paragraphs [0011], [0014]-[0015], [0028]-[0029], [0034], fig. 1, 3-4<br>CN 110268449 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018063693 A